# EUROPEAN PATENT APPLICATION

(11) **EP 4 796 270 A1**
(43) Date of publication of application: **26.08.2026**
(21) Application number: 23954272.3
(22) Date of filing: 28.09.2023
(51) Int. Cl.: B25J 13/08

(54) **CONTROL DEVICE, CONTROL SYSTEM, ROBOT SYSTEM, CONTROL METHOD, AND COMPUTER PROGRAM**

(71) Applicant: NIKON CORPORATION, Tokyo 140-8601 (JP)
(72) Inventor: KOYANAGI, Daisuke, Tokyo 140-8601 (JP); YOKOTA, Shoya, Tokyo 140-8601 (JP); ONODERA, Eiji, Tokyo 140-8601 (JP); SATO, Shinji, Tokyo 140-8601 (JP); MOTOMURA, Yuuta, Tokyo 140-8601 (JP); MORITA, Takayuki, Tokyo 140-8601 (JP); MIYAKAWA, Tomoki, Tokyo 140-8601 (JP)
(74) Representative: Hoffmann Eitle
(86) International application number: PCT/JP2023/035376
(87) International publication number: WO 2025/069296

(57) **Abstract**

A control apparatus controls a robot that moves a process apparatus performing a process on a target object and an imaging system. The control apparatus: generates a first control signal for controlling the robot so that a positional relationship between the target object and the imaging system changes to a second positional relationship, based on second image data generated by the imaging system imaging the target object, in a case where it is determined, based on first image data generated by the imaging system imaging the target object when the positional relationship is the first positional relationship, that there is no target object on which the process apparatus can perform the process; and generates a second control signal, based on position pose data generated based on third image data generated by the imaging system imaging the target object when the positional relationship is the second positional relationship.

## Description

### Technical Field

The present invention relates to a control apparatus, a control system , a robot system, a control method, and a computer program that are configured to generate a control signal for controlling a robot, for example.

### Background Art

A Patent Literature 1 discloses one example of a control apparatus that calculates at least one of a position and a pose of an object, which is a target for a process performed by a robot, and controls the robot based on at least one of the calculated position and pose. This control apparatus is required to calculate at least one of the position and the pose of the object to control the robot to perform the process on the object.

### Citation List

### Patent Literature

Patent Literature 1: US2013/0230235A1

### Summary of Invention

A first aspect provides a control apparatus that generates a control signal for controlling a robot on which a process apparatus that performs a process on a target object and an imaging system are mounted and which moves the process apparatus and the imaging system, wherein the control apparatus includes: a computing apparatus that is configured to generate the control signal; and a communication apparatus that is configured to output the control signal generated by the computing apparatus, the computing apparatus is configured to: generate, as the control signal, a first control signal for controlling the robot so that a positional relationship between the target object and the imaging system changes to a second positional relationship different from a first positional relationship, based on second image data generated by the imaging system imaging the target object, in a case where it is determined, based on first image data generated by the imaging system imaging the target object when the positional relationship is the first positional relationship, that there is no target object on which the process apparatus can perform the process; and generates a second control signal as the control signal, based on position data and pose data indicating a position and a pose of the target object, which are generated based on third image data generated by the imaging system imaging the target object at the second positional relationship.

A second aspect provides a control system including: the control apparatus provided by the first aspect; and the imaging system.

A third aspect provides a robot system including: the control apparatus provided by the first aspect; the imaging system; and the robot.

A fourth aspect provides a control method that generates a control signal for controlling a robot on which a process apparatus that performs a process on a target object and an imaging system are mounted and which moves the process apparatus and the imaging system, wherein the control method includes: generating, as the control signal, a first control signal for controlling the robot so that a positional relationship between the target object and the imaging system changes to a second positional relationship different from a first positional relationship, based on second image data generated by the imaging system imaging the target object, in a case where it is determined, based on first image data generated by the imaging system imaging the target object when the positional relationship is the first positional relationship, that there is no target object on which the process apparatus can perform the process; and generating a second control signal as the control signal, based on position data and pose data indicating a position and a pose of the target object, which are generated based on third image data generated by the imaging system imaging the target object at the second positional relationship.

A fifth aspect provides a computer program that allows a computer to execute the control method provided by the fourth aspect.

A sixth aspect provides a control apparatus that generates a control signal for controlling a robot on which a process apparatus that performs a process on a target object and an imaging system are mounted and which moves the process apparatus and the imaging system, wherein the control apparatus includes: a computing apparatus that generates the control signal; and a communication apparatus that outputs the control signal generated by the computing apparatus, the computing apparatus generates, as the control signal, a first control signal for controlling the robot so that the imaging system changes to a second position and a second pose, which are different from a first position and a first pose, based on second image data generated by the imaging system imaging a second target object group including a plurality of target objects, in a case where it is determined, based on first image data generated by the imaging system imaging a first target object group including a plurality of target objects when the imaging system is at the first position and the first pose, that there is no target object on which the process apparatus can perform the process in the first target object group.

A seventh aspect provides a control system including: the control apparatus provided by the sixth aspect; and the imaging system.

An eighth aspect provides a robot system including: the control apparatus provided by the sixth aspect; the imaging system; and the robot.

A ninth aspect provides a control method that generates a control signal for controlling a robot on which a process apparatus that performs a process on a target object and an imaging system are mounted and which moves the process apparatus and the imaging system, wherein the control method includes: generating, as the control signal, a first control signal for controlling the robot so that the imaging system changes to a second position and a second pose, which are different from a first position and a first pose, based on second image data generated by the imaging system imaging a second target object group including a plurality of target objects, in a case where it is determined, based on first image data generated by the imaging system imaging a first target object group including a plurality of target objects when the imaging system is at the first position and the first pose, that there is no target object on which the process apparatus can perform the process in the first target object group.

A tenth aspect provides a computer program that allows a computer to execute the control method provided by the ninth aspect.

An eleventh aspect provides a control apparatus that generates a control signal for controlling a robot on which a process apparatus that performs a process on a target object and an imaging system are mounted and which moves the process apparatus and the imaging system, wherein the control apparatus includes: a computing apparatus that generates the control signal based on first three-dimensional position data, which is generated from an imaged result of a first object group including a plurality of target objects by an imaging system and which indicates a three-dimensional position of each of a plurality of points of the first object group, and second three-dimensional position data, which has less three-dimensional position data than the first three-dimensional position data and which indicates a three-dimensional position of each of a plurality of points of the first object group; and a communication apparatus that outputs the control signal generated by the computing apparatus, the computing apparatus: generates a plurality of first position data and first pose data, which indicate positions and poses of respective target objects of a second object group including a plurality of target objects of the first object group, respectively, based on the second three-dimensional position data; generates second position data and second pose data, which indicate the position and the pose of one target object of the second object group, based on the plurality of generated first position data and first pose data and the first three-dimensional position data; and generates the control signal based on the generated second position data and second pose data.

A twelfth aspect provides a control system including: the control apparatus provided by the eleventh aspect; and the imaging system.

A thirteenth aspect provides a control system including: the control apparatus provided by the eleventh aspect; the imaging system; and the robot.

A fourteenth aspect provides a control method that generates a control signal for controlling a robot on which a process apparatus that performs a process on a target object and an imaging system are mounted and which moves the process apparatus and the imaging system, wherein the control method includes generating the control signal based on first three-dimensional position data, which is generated from an imaged result of a first object group including a plurality of target objects by an imaging system and which indicates a three-dimensional position of each of a plurality of points of the first object group, and second three-dimensional position data, which has less three-dimensional position data than the first three-dimensional position data and which indicates a three-dimensional position of each of a plurality of points of the first object group, the generating the control signal includes: generating a plurality of first position data and first pose data, which indicate positions and poses of respective target objects of a second object group including a plurality of target objects of the first object group, respectively, based on the second three-dimensional position data; generating second position data and second pose data, which indicate the position and the pose of one target object of the second object group, based on the plurality of generated first position data and first pose data and the first three-dimensional position data; and generating the control signal based on the generated second position data and second pose data.

A fifteenth aspect provides a computer program that allows a computer to execute the control method provided by the fourteenth aspect.

A sixteenth aspect provides a control apparatus that generates a control signal for controlling a robot on which a process apparatus that performs a process on a target object contained in a container and an imaging system are mounted and which moves the process apparatus and the imaging system, wherein the control apparatus includes: a computing apparatus that generates the control signal; and a communication apparatus that outputs the control signal generated by the computing apparatus, the computing apparatus: generates position pose data indicating at least one of a position and a pose of the container, based on first image data that is generated by the imaging system imaging at least a part of the container; generates three-dimensional position data indicating a three-dimensional position of each of a plurality of points of an object group that includes a target object group including at least a part of a plurality of target objects contained in the container, based on second image data that is generated by the imaging system imaging the object group; selects a part of the three-dimensional position data as selection data, based on the position pose data; and generates the control signal for controlling the robot so that the process apparatus approaches one target object of the target object group to perform the process on the one target object by the process apparatus, based on the selection data.

A seventeenth aspect provides a control system including: the control apparatus provided by the seventeenth aspect; and the imaging system.

A eighteenth aspect provides robot system including: the control apparatus provided by the seventeenth aspect; the imaging system; and the robot.

A nineteenth aspect provides a control method that generates a control signal for controlling a robot on which a process apparatus that performs a process on a target object and an imaging system are mounted and which moves the process apparatus and the imaging system, wherein the control method generates the control signal for controlling the robot on which the process apparatus that performs the process on the target object contained in a container and the imaging system are mounted and which moves the process apparatus and the imaging system, the control method includes: generating position pose data indicating at least one of a position and a pose of the container, based on first image data that is generated by the imaging system imaging at least a part of the container; generating three-dimensional position data indicating a three-dimensional position of each of a plurality of points of an object group that includes a target object group including at least a part of a plurality of target objects contained in the container, based on second image data that is generated by the imaging system imaging the object group; selecting a part of the three-dimensional position data as selection data, based on the position pose data; and generating the control signal for controlling the robot so that the process apparatus approaches one target object of the target object group to perform the process on the one target object by the process apparatus, based on the selection data.

A twentieth aspect provides a computer program that allows a computer to execute the control method provided by the nineteenth aspect.

A twenty-first aspect provides a control apparatus that generates a control signal for controlling a robot on which a process apparatus that performs a process on a target object and an imaging system are mounted and which moves the process apparatus and the imaging system, wherein the control apparatus includes: a computing apparatus that generates the control signal; and a communication apparatus that outputs the control signal generated by the computing apparatus, in a case where it is determined, based on an imaged result of a target object group including a plurality of target objects by the imaging system, that the process apparatus cannot perform the process on at least one target object of the target object group, the computing apparatus generates the control signal for controlling the robot so as to change at least one of a position and a pose of the imaging system relative to one target object of the target object group**.**

An operation and another advantage of the present invention will be apparent from an example embodiment described below.

### Brief Description of Drawings

[FIG. 1] FIG. 1 is a block diagram that illustrates a configuration of a robot system in a present example embodiment.
[FIG. 2] FIG. 2 is a side view that illustrates an exterior appearance of a robot in the present example embodiment.
[FIG. 3] FIG. 3 is a block diagram that illustrates a configuration of a control apparatus in the present example embodiment.
[FIG. 4] FIG. 4 is a flowchart that illustrates a flow of a robot control processing.
[FIG. 5] FIG. 5 schematically illustrates a 3D matching processing.
[FIG. 6] Each of FIG. 6(a) to FIG. 6(d) is a side view that illustrates a positional relationship between the robot and a workpiece at a certain time in a period during which a holding process for holding the workpiece placed on a placing apparatus that moves on a support surface is performed.
[FIG. 7] Each of FIG. 7(a) to FIG. 7(d) is a side view that illustrates a positional relationship between the robot and the workpiece at a certain time in a period during which a releasing process for placing the workpiece on the placing apparatus that moves on the support surface is performed.

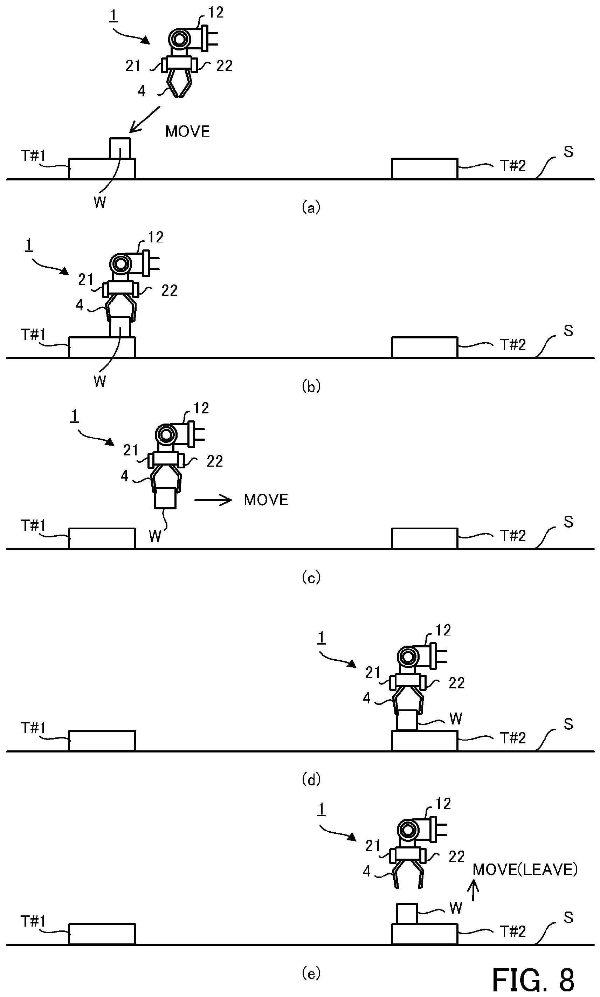

[FIG. 8] Each of FIG. 8(a) to FIG. (b) is a side view that illustrates a positional relationship between the robot and the workpiece at a certain time in a period during which the holding process for holding the workpiece placed on the placing apparatus that is stationary on the support surface is performed, and each of FIG. 8(c) to FIG. 8(e) is a side view that illustrates a positional relationship between the robot and the workpiece at a certain time in a period during which the releasing process for placing the workpiece on the placing apparatus that is stationary on the support surface is performed.
[FIG. 9] Each of FIG. 9(a) to FIG. 9(e) is a side view that illustrates a positional relationship between the robot and the workpiece at a certain time in a period during which the holding process for holding a plurality of workpieces, which are placed on the placing apparatus, one by one in sequence and the releasing process for placing the plurality of workpieces on the placing apparatus one by one in sequence are performed.
[FIG. 10] Each of FIG. 10(a) to FIG. 10(e) is a side view that illustrates a positional relationship between the robot and the workpiece at a certain time in a period during which the holding process for holding a plurality of workpieces, which are placed on the placing apparatus, one by one in sequence and the releasing process for placing the plurality of workpieces on the placing apparatus one by one in sequence are performed.
[FIG. 11] Each of FIG. 11(a) to FIG. 11(b) illustrates one example of a model generation screen.
[FIG. 12] FIG. 12 illustrates a plurality of partial models.
[FIG. 13] Each of FIG. 13(a) and FIG. 13(c) illustrates one example of a target object, and each of FIG. 13(b) and FIG. 13(d) illustrates one example of a template model.
[FIG. 14] FIG. 14 is a block diagram that illustrates a configuration of a control apparatus in a second modified example.
[FIG. 15] FIG. 15 is a flowchart that illustrates a flow of a robot control processing in the second modified example.
[FIG. 16] Each of FIG. 16(a) and FIG. 16(b) illustrates a positional relationship between the target object and an imaging apparatus.
[FIG. 17] FIG. 17(a) illustrates the imaging apparatus that rotationally moves, and FIG. 17(b) illustrates the imaging apparatus that linearly moves.
[FIG. 18] Each of FIG. 18(a) and FIG. 18(b) illustrates the imaging apparatus that moves.
[FIG. 19] FIG. 19(a) illustrates one example of the target object, each of FIG. 19(b) and FIG. 19(c) illustrates one example of point cloud included in point cloud data (three-dimensional position data) generated from image data that is generated by an imaging system imaging the target object illustrated in FIG. 19(a) before it moves, FIG. 19(d) illustrates a whole model of the target object illustrated in FIG. 19(a), and FIG. 19(e) illustrates the partial model of the target object illustrated in FIG. 19(a).
[FIG. 20] Each of FIG. 20(a) to FIG. 20(b) illustrates the imaging system that images a plurality of target objects.
[FIG. 21] Each of FIG. 21(a) to FIG. 21(b) illustrates the imaging system that images the plurality of target objects.
[FIG. 22] FIG. 22 illustrates a plurality of reset positions.
[FIG. 23] FIG. 23 illustrates a plurality of reset poses.
[FIG. 24] FIG. 24(a) and FIG. 24(b) illustrate a method for setting the plurality of reset positions.
[FIG. 25] FIG. 25 is a block diagram that illustrates a configuration of a control apparatus in a third modified example.
[FIG. 26] FIG. 26 conceptionally illustrates a resizing processing.
[FIG. 27] FIG. 27 is a flowchart that illustrates a flow of a robot control processing in the third modified example.
[FIG. 28] Each of FIG. 28(a) and FIG. 28(b) conceptionally illustrates an interested data.
[FIG. 29] FIG. 29 illustrates the imaging system that images the plurality of target objects.
[FIG. 30] FIG. 30 is a flowchart that illustrates the flow of the robot control processing in the third modified example.
[FIG. 31] Each of FIG. 31(a) to FIG. 31(c) conceptionally illustrates a plurality of template models.
[FIG. 32] FIG. 32 is a flowchart that illustrates the flow of the robot control processing in the third modified example.
[FIG. 33] FIG. 33 is a block diagram that illustrates a configuration of a control apparatus in a third modified example.
[FIG. 34] FIG. 34 illustrates an image in which a held object is captured.
[FIG. 35] Each of FIG. 35(a) to FIG. 35(c) illustrates an initial setting operation.
[FIG. 36] Each of FIG. 36(a) to FIG. 36(c) conceptionally illustrates selection data.
[FIG. 37] FIG. 37 illustrates an area designation screen.
[FIG. 38] FIG. 38 is a planar view that illustrates an example in which a position and a pose of a first container are substantially the same as a position and a pose of a second container, respectively, in a situation where a container for containing the target object, on which an end effector should perform a predetermined process, is changed from the first container to the second container.
[FIG. 39] FIG. 39 is a planar view that illustrates an example in which the position of the first container is different from the position of the second container and / or the pose of the first container is different from the pose of the second container in a situation where the container for containing the target object, on which the end effector should perform the predetermined process, is changed from the first container to the second container.
[FIG. 40] FIG. 40 is a planar view that illustrates an example in which the container for containing the target object, on which the end effector should perform the predetermined process, moves.
[FIG. 41] FIG. 41 is a flowchart that illustrates a flow of the robot control processing that includes a processing for changing a designation area set for the first container to a designation area set for the second container.
[FIG. 42] FIG. 42 illustrates an output apparatus that displays the designation area before change and the designation after change.
[FIG. 43] FIG. 43 is a planar view that illustrates an example in which the position of the second container is different from a position of a third container and / or the pose of the second container is different from a pose of the third container in a situation where the container for containing the target object, on which the end effector should perform the predetermined process, is changed from the second container to the third container.
[FIG. 44] FIG. 44 is a planar view that illustrates an example in which a size of the first container is substantially the same as a size of the second container in a situation where the container for containing the target object, on which the end effector should perform the predetermined process, is changed from the first container to the second container.
[FIG. 45] FIG. 45 is a planar view that illustrates an example in which the size of the first container is different from the size of the second container in a situation where the container for containing the target object, on which the end effector should perform the predetermined process, is changed from the first container to the second container.
[FIG. 46] FIG. 46 is a planar view that illustrates an example in which the size of the first container is different from the size of the second container in a situation where the container for containing the target object, on which the end effector should perform the predetermined process, is changed from the second container to the third container.
[FIG. 47] FIG. 47 is a planar view that illustrates one example of the designation area.
[FIG. 48] FIG. 48 is a table that represents one example of a specification of the imaging system.
[FIG. 49] FIG. 49 is a block diagram that illustrates a configuration of the robot system including a measurement system.

### Description of Example embodiments

Next, with reference to drawings, an example embodiment of a control apparatus, a control system, a robot system, a control method, and a computer program will be described. In the below described description, the example embodiment of the control apparatus, the control system, the robot system, the control method, and the computer program will be described by using a robot system SYS.

### (1) Configuration of Robot System SYS

Firstly, a configuration of the robot system SYS will be described.

### (1-1) Entire Configuration of Robot System SYS

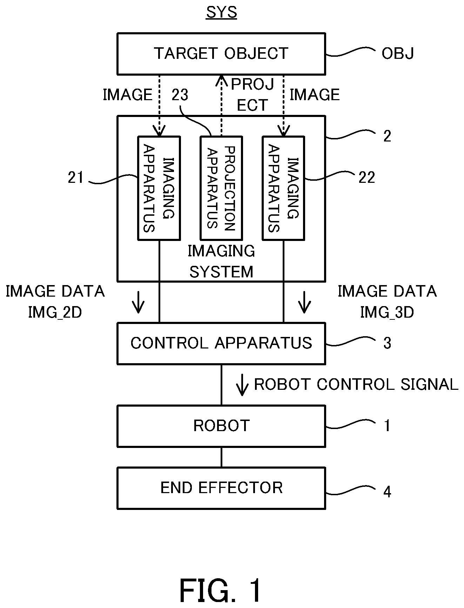

Firstly, with reference to FIG.1, an entire configuration of the robot system SYS will be described. FIG. 1 is a block diagram that illustrates the entire configuration of the robot system SYS.

As illustrated in FIG. 1, the robot system SYS includes: a robot 1; an imaging apparatus 2, a control apparatus 3, and an end effector 4. Note that the imaging system 2 may be referred to as an imaging unit.

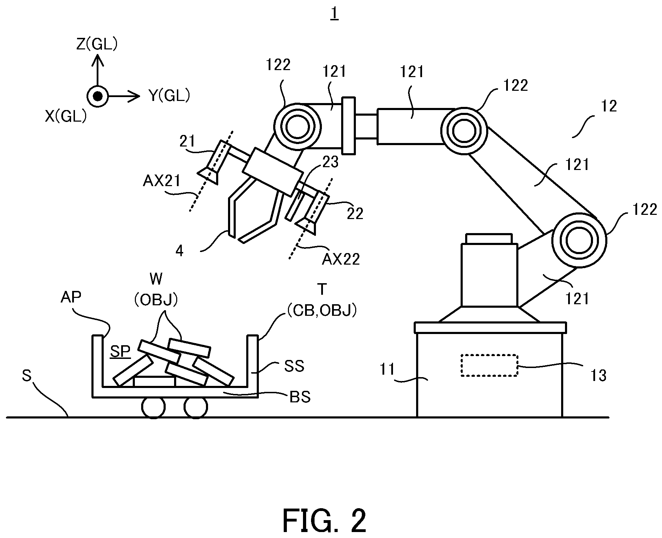

The robot 1 is an apparatus that is configured to perform a predetermined process on a target object OBJ. One example of the robot 1 is illustrated in FIG. 2. FIG. 2 is a side view that illustrates an exterior appearance of the robot 1. As illustrated in FIG. 2, the robot 1 includes: a base 11; a robot arm 12, and a robot control apparatus 13, for example.

The base 11 is a member that is a foundation of the robot 1. The base 11 is placed on a support surface S such as a floor surface. The base 11 may be fixed to the support surface S. Alternatively, the base 11 may be movable relative to the support surface S. As one example, the base 11 may be configured to be self-propelled on the support surface S. In this case, the base 11 may be mounted on an Automatic Guided Vehicle (AGV). In a case where the base 11 is mounted on the Automatic Guided Vehicle, the Automatic Guided Vehicle may be regarded as a part of the robot 1. Alternatively, the Automatic Guided Vehicle (AGV) may be used as the base 11. Note that FIG. 2 illustrates an example in which the base 11 is fixed to the support surface S.

The robot arm 12 is attached to the base 11. The robot arm 12 is an apparatus in which a plurality of links 121 are connected through a joint 122. An actuator is built in the joint 122. The link 121 may be rotatable around an axis defined by the joint 122 by the actuator built in the joint 122. Note that at least one link 121 may be extendable and retractable along a direction along which the link 121 extends. Note that an apparatus including the base 11 and an apparatus in which the plurality of links 121 are connected through the joint 122 may be referred to as the robot arm 12.

The end effector 4 is attached to the robot arm 12. Namely, the end effector 4 is attached to the robot 1. In an example illustrated in FIG. 2, the end effector 4 is attached to an end of the robot arm 12. The end effector 4 is movable by a movement of the robot arm 12. Namely, the robot arm 12 moves the end effector 4. Namely, the robot 1 moves the end effector 4.

The end effector 4 is an apparatus that performs a predetermined process (in other words, a predetermined operation) on the target object OBJ. The end effector 4 that performs the predetermined process on the target object OBJ may be referred to as a process apparatus.

For example, the end effector 4 may perform a holding process for holding the target object OBJ as one example of the predetermined process. In this case, the end effector 4 may be considered to perform the holding process on the target object OBJ that should be held by the end effector 4. The end effector 4 that is configured to perform the holding process may be referred to as a holding apparatus.

For example, holding the target object OBJ may include gripping the target object OBJ. For example, holding the target object OBJ may include gripping the target object OBJ by using a hand gripper that is one example of the end effector 4 and that will be described below. Holding the target object OBJ may include sucking the target object OBJ. For example, holding the target object OBJ may include sucking (vacuum sucking) the target object OBJ by using a vacuum gripper that is one example of the end effector 4 and that will be described below. For example, holding the target object OBJ may include sucking the target object OBJ by using a magnetic suction gripper that is one example of the end effector 4 and that will be described below.

For example, the end effector 4 may perform a releasing process (in other words, a releasing operation) for releasing (in other words, letting off) the held target object OBJ as one example of the predetermined process. In this case, the end effector 4 may be considered to perform the releasing process on the target object OBJ held by the end effector 4. The end effector 4 that is configured to perform the releasing process may be referred to as a releasing apparatus.

The hand gripper is one example of the end effector 4 that is configured to perform the holding process and the releasing process. The hand gripper is an end effector 4 that is configured to hold the target object OBJ by physically clamping the target object OBJ using a plurality of (for example, two, three, or four) finger members or claw members. The vacuum gripper that is configured to hold the target object OBJ by vacuum-sucking the target object OBJ is another example of the end effector 4 that is configured to perform the holding process and the releasing process. The vacuum gripper is an end effector 4 that is configured to hold the target object OBJ by vacuum sucking the target object OBJ. The magnetic suction gripper is another example of the end effector 4 that is configured to perform the holding process and the releasing process. FIG. 2 illustrates an example in which the end effector 4 is the hand gripper. However, the end effector 4 that is configured to perform the holding process and the releasing process may be other existing end effector.

The robot 1 may perform a placing process (in other words, a placing operation) for placing the target object OBJ at a desired position by using the end effector 4 that is configured to perform the holding process and the releasing process. For example, the robot 1 may perform the placing process for holding a first target object OBJ by using the end effector 4, and then placing the first target object OBJ held by the end effector 4 at a desired position of a second target object OBJ that is different from the first target object OBJ. In this case, the end effector 4 may be considered to perform the releasing process on the second target object OBJ on which the end effector 4 should place the first target object OBJ. Similarly, the end effector 4 may be considered to perform the releasing process on the first target object OBJ that should be released by the end effector 4.

The robot 1 may perform, as one example of the placing process (in other words, the placing operation), an embedding process (in other words, an embedding operation) for embedding the first target object OBJ into the second target object OBJ that is different from the first target object OBJ by using the end effector 4 that is configured to perform the holding process and the releasing process. For example, the robot 1 may perform the embedding process for holding the first target object OBJ by using the end effector 4, and then embedding the first target object OBJ held by the end effector 4 into the second target object OBJ that is different from the first target object OBJ. In this case, the end effector 4 may be considered to perform the releasing process on the second target object OBJ into which the end effector 4 should embed the first target object OBJ. Similarly, the end effector 4 may be considered to perform the releasing process on the first target object OBJ that should be released by the end effector 4. Note that the embedding process may be referred to as a processing process.

As one example, the embedding process may include a process for embedding (namely, inserting) the first target object OBJ into a hole formed in the second target object OBJ. For example, the robot 1 may perform the embedding process for holding the first target object OBJ by using the end effector 4, and then embedding (namely, inserting) the first target object OBJ held by the end effector 4 into the hole formed in the second target object OBJ. In this case, the end effector 4 may be considered to perform the releasing process on the second target object OBJ in which the hole, into which the end effector 4 should embed (namely, should insert) the first target object OBJ, is formed. Similarly, the end effector 4 may be considered to perform the releasing process on the first target object OBJ that should be released by the end effector 4.

The robot 1 may perform, as one example of the placing process (in other words, the placing operation), an attachment process (in other words, an attachment operation) for attaching the first target object to the second target object that is different from the first target object by using the end effector 4 that is configured to perform the holding process and the releasing process. For example, the robot 1 may perform the attachment process for holding the first target object OBJ by using the end effector 4, and then attaching the first target object OBJ held by the end effector 4 to the second target object OBJ that is different from the first target object OBJ. In this case, the end effector 4 may be considered to perform the releasing process on the second target object OBJ to which the end effector 4 should attach the first target object OBJ. Similarly, the end effector 4 may be considered to perform the releasing process on the first target object OBJ that should be released by the end effector 4. Note that the attachment process may be referred to as a processing process.

The robot 1 may perform, as one example of the placing process (in other words, the placing operation), an adhesive process (in other words, an adhesive operation) for adhering the first target object to the second target object that is different from the first target object by using the end effector 4 that is configured to perform the holding process and the releasing process. For example, the robot 1 may perform the adhesive process for holding the first target object OBJ by using the end effector 4, and then adhering the first target object OBJ held by the end effector 4 to the second target object OBJ that is different from the first target object OBJ. In this case, the end effector 4 may be considered to perform the releasing process on the second target object OBJ to which the end effector 4 should adhere the first target object OBJ. Similarly, the end effector 4 may be considered to perform the releasing process on the first target object OBJ that should be released by the end effector 4. Note that the adhesive process may be referred to as a processing process.

The robot 1 may perform, as one example of the placing process (in other words, the placing operation), a welding process (in other words, a welding operation) for welding the first target object to the second target object that is different from the first target object by using the end effector 4 that is configured to perform the holding process and the releasing process. For example, the robot 1 may perform the welding process for holding the first target object OBJ by using the end effector 4, and then welding the first target object OBJ held by the end effector 4 to the second target object OBJ that is different from the first target object OBJ. In this case, the end effector 4 may be considered to perform the releasing process on the second target object OBJ to which the end effector 4 should weld the first target object OBJ. Similarly, the end effector 4 may be considered to perform the releasing process on the first target object OBJ that should be released by the end effector 4. Note that the welding process may be referred to as a processing process.

The robot 1 may perform, as one example of the placing process (in other words, the placing operation), a screw tightening process (in other words, a screw tightening operation) for tightening the first target object, which serves as a screw, into a screw hole formed in the second target object that is different from the first target object by using the end effector 4 that is configured to perform the holding process and the releasing process. For example, the robot 1 may perform the screw tightening process for holding the first target object OBJ by using the end effector 4, and then tightening the first target object OBJ held by the end effector 4 into the second target object OBJ that is different from the first target object OBJ. In this case, the end effector 4 may be considered to perform the releasing process on the second target object OBJ into which the end effector 4 should tighten the first target object OBJ. Similarly, the end effector 4 may be considered to perform the releasing process on the first target object OBJ that should be released by the end effector 4. Note that the screw tightening process may be referred to as a processing process.

For example, the end effector 4 may perform the predetermined process on each of a plurality of target objects OBJ. Namely, the end effector 4 may sequentially perform the predetermined process on the plurality of target objects OBJ. In this case, the robot 1 may move the end effector 4 to a first position at which the end effector 4 can perform the predetermined process on a first target object OBJ, and the end effector 4 may perform the predetermined process on the first target object OBJ after the end effector 4 moves to the first position. Then, the robot 1 may move end effector 4 to a second position at which the end effector 4 can perform the predetermined process on a second target object OBJ that is different from the first target object OBJ, and the end effector 4 may perform the predetermined process on the second target object OBJ after the end effector 4 moves to the second position.

For example, the end effector 4 may perform the predetermined process on each of a plurality of parts of the single target object OBJ. Namely, the end effector 4 may sequentially perform the predetermined process on the plurality of parts of the single target object OBJ. In this case, the robot 1 may move the end effector 4 to a third position at which the end effector 4 can perform the predetermined process on a first part of the target object OBJ, and the end effector 4 may perform the predetermined process on the first part of the target object OBJ after the end effector 4 moves to the third position. Then, the robot 1 may move end effector 4 to a fourth position at which the end effector 4 can perform the predetermined process on a second part of the target object OBJ, and the end effector 4 may perform the predetermined process on the second part of the target object OBJ after the end effector 4 moves to the fourth position.

The robot 1 may repeat the embedding process for embedding the first target object OBJ into each hole on the second target object OBJ in which a plurality of holes are formed, as one example of an operation for performing the predetermined process on each of the plurality of parts of the single target object OBJ. Note that a part of the target object OBJ on which the end effector 4 performs the predetermined process may be referred to as a target part or a target member. For example, each part (each member) of the second target object OBJ in which each hole is formed may be referred to as the target part or the target member. Note that each component may be referred to as the target part or the target member in a case where the target object OBJ includes a plurality of components. Each member may be regarded as the target part or the target member in a case where the target object OBJ includes a plurality of members.

The target object OBJ on which the end effector 4 performs the predetermined process may include a workpiece W, as illustrated in FIG. 2. The workpiece W may include a component or a member that is used to manufacture a desired product, for example. The workpiece W may include a component or a member that is processed to manufacture the desired product, for example. The workpiece W may include a component or a member that is transported to manufacture the desired product, for example. The workpiece W may include a component or a member that is moved by a transportation for manufacturing the desired product, for example. The workpiece W may include a component or a member that is moved to manufacture the desired product, for example.

The target object OBJ on which the end effector 4 performs the predetermined processing may include a placing apparatus T on which the workpiece W is placed, as illustrated in FIG. 2. A container (a container box) CB is one example of the placing apparatus T. The container CB may be a placing apparatus T which includes a bottom wall BS and a side wall SS protruding upward from the bottom wall BS and in which the workpiece W is placed on the bottom wall BS in a containing space SP surrounded by the bottom wall BS and the side wall SS. The container CB may be a placing apparatus T which includes the bottom wall BS and the side wall SS protruding upward from the bottom wall BS and which can contain the workpiece W in the containing space SP surrounded by the bottom wall BS and the side wall SS. Note that the containing space SP may include at least a part of a space that is above the opening AP of the container CB, which connects the space surrounded by the bottom wall BS and the side wall SS to a space outside the container CB, in addition to or instead of at least a part of the space surrounded by the bottom wall BS and the side wall SS. However, the container CB may not include the side wall SS. The container CB that does not include the side wall SS may be referred to as a pallet. Note that the placing apparatus T may be the pallet. Moreover, the placing apparatus T is not limited to the container CB or the pallet, and may be an existing object on which the workpiece W is allowed to be placed. Note that the placing apparatus T may be referred to as a placing member. The placing apparatus T may be positioned on the support surface S. The placing apparatus T may be fixed to the support surface S. Alternatively, at least a part of the placing apparatus T may be movable relative to the support surface S.

An example in which the placing apparatus T is supported by a transport apparatus that is configured to move (in other words, that is configured to transport) the placing apparatus T is a first example in which at least a part of the placing apparatus T is movable relative to the support surface S. A transport apparatus that is configured to move by itself on the support surface S is a first example of the transport apparatus. In this case, the placing apparatus T may be placed on the transport apparatus that is configured to move by itself or may be held by the transport apparatus that is configured to move by itself. Note that the transport apparatus that is configured to move by itself may be referred to as an AGV (Automatic Guided Vehicle). A belt conveyer is a second example of the transport apparatus. In this case, the placing apparatus T may be placed on a transport belt that is a part of the belt conveyor and that is movable relative to the support surface S. A flying apparatus that is configured to fly over the support surface S is a third example of the transport apparatus. In this case, the placing apparatus T may be placed on the transport apparatus that is configured to fly or may be held by the transport apparatus that is configured to fly. Note that the transport apparatus that is configured to fly may be referred to as an unmanned aerial vehicle or a drone. Another robot arm which is different from the robot arm 12 and to which an end effector configured to hold the placing apparatus T is attached is a fourth example of the transport apparatus. In this case, the placing apparatus T may be held by the end effector attached to another robot arm.

An example in which the placing apparatus T itself is movable relative to the support surface S is a second example in which at least a part of the placing apparatus T is movable relative to the support surface S. The placing apparatus T that is configured to move by itself on the support surface S is a first example of the movable placing apparatus T. Note that the placing apparatus T that is configured to move by itself may be referred to as an AGV (Automatic Guided Vehicle). A belt conveyer is a second example of the movable placing apparatus T. In this case, a transport belt which is a part of the belt conveyor and on which the workpiece W is placed may move relative to the support surface. The placing apparatus that is configured to fly over the support surface S is a third example of the movable placing apparatus T. In this case, the placing apparatus T may be movable relative to the support surface S by flying over the support surface S. Note that the placing apparatus T that is configured to fly may be referred to as an unmanned aerial vehicle or a drone. Another robot arm which is different from the robot arm 12 and to which an end effector configured to hold the workpiece W is attached is a fourth example of the movable placing apparatus T. In this case, the end effector attached to another robot arm may move relative to the support surface S.

When the transport apparatus moves the placing apparatus T, the workpiece W placed on the placing apparatus T also moves relative to the support surface S. Therefore, the transport apparatus that is configured to move the placing apparatus T may be considered to be equivalent to a transport apparatus that is configured to transport the workpiece W. Similarly, when the placing apparatus T moves, the workpiece W placed on the placing apparatus T also moves relative to the support surface S. Therefore, the movable placing apparatus T may be considered to be equivalent to a movement apparatus that is configured to move the workpiece W (in other words, a transport apparatus that is configured to transport the workpiece W). Note that FIG. 2 illustrates an example in which the placing apparatus T is configured to move by itself on the support surface S.

Note that the a placing apparatus T, on which the workpiece W is placed, may be placed on a second placing apparatus T that is movable relative to the support surface S in a case where at least a part of the placing apparatus T is movable relative to the support surface S. In this case, an apparatus that includes the first placing apparatus T and the second placing apparatus T may be referred to as the placing apparatus T.

However, the target object OBJ may not include the placing apparatus T. Moreover, the workpiece W may not be placed on the placing apparatus T, and the placing apparatus T may not be used. For example, the workpiece W may be placed on the support surface S.

In a case where the target object OBJ includes the workpiece W and the placing apparatus T, the above-described holding process may include a process for holding the workpiece W on the stationary or moving placing apparatus T. The above-described holding process may include a process for holding the workpiece W placed on the support surface S. The above-described releasing process may include a process for releasing the workpiece W held by the end effector 4 in order to place the workpiece W held by the end effector 4 at a desired position on the stationary or moving placing apparatus T. The above-described releasing process may include a process for releasing the workpiece W held by the end effector 4 in order to place the workpiece W held by the end effector 4 at a desired position on the support surface S. The above-described releasing process may include a process for releasing a first workpiece W held by the end effector 4 in order to embed the first workpiece W held by the end effector 4 into a second workpiece W placed on the stationary or moving placing apparatus T. The above-described releasing process may include a process for releasing the first workpiece W held by the end effector 4 in order to embed the first workpiece W held by the end effector 4 into the second workpiece W placed on the support surface S. The above-described releasing process may include a process for releasing a first workpiece W held by the end effector 4 in order to embed (namely, insert) the first workpiece W held by the end effector 4 into a hole formed in a second workpiece W placed on the stationary or moving placing apparatus T. The above-described releasing process may include a process for releasing a first workpiece W held by the end effector 4 in order to embed (namely, insert) the first workpiece W held by the end effector 4 into a hole formed in a second workpiece W placed on the support surface S.

The robot control apparatus 13 controls an operation of the robot 1.

Specifically, the robot control apparatus 13 may control an operation of the robot arm 12. For example, the robot control apparatus 13 may control the operation of the robot arm 12 so that the desired link 121 rotates around an axis defined by the desired joint 122. For example, the robot control apparatus 13 may control the operation of the robot arm 12 so that the end effector 4 attached to the robot arm 12 is positioned at a desired position. For example, the robot control apparatus 13 may control the operation of the robot arm 12 so that the end effector 4 attached to the robot arm 12 moves to a desired position.

The robot control apparatus 13 may control an operation of the end effector 4 attached to the robot 1, in addition to or instead of controlling the operation of the robot 1. For example, the robot control apparatus 13 may control the operation of the end effector 4 so that the end effector 4 holds the target object OBJ at a desired timing. Namely, the robot control apparatus 13 may control the operation of the end effector 4 so that the end effector 4 performs the holding process at the desired timing. For example, the robot control apparatus 13 may control the operation of the end effector 4 so that the end effector 4 releases the held target object OBJ at a desired timing. Namely, the robot control apparatus 13 may control the operation of the end effector 4 so that the end effector 4 performs the releasing process at the desired timing. In a case where the end effector 4 is the hand gripper, the robot control apparatus 13 may control a timing at which the hand gripper opens and closes. In a case where the end effector 4 is the vacuum gripper, the robot control apparatus 13 may control a timing at which a vacuum apparatus of the vacuum gripper is turned on and turned off. In a case where the end effector 4 is the magnetic suction gripper, the robot control apparatus 13 may control a timing at which a magnetic suction apparatus of the magnetic suction gripper is turned on and turned off.

Note that FIG. 2 illustrates an example in which the robot 1 is the robot arm 12 (namely, a vertically articulated robot). However, the robot 1 may be a robot that is different from the vertically articulated of robot. For example, the robot 1 may be a SCARA robot (namely, a horizontally articulated robot). For example, the robot 1 may be a parallel link robot. For example, the robot 1 may be a dual-armed robot including two robot arms 12. For example, the robot 1 may be a Cartesian robot. For example, the robot 1 may be a cylindrical robot. The robot 1 may be referred to as a movable apparatus. The movable apparatus may include at least one of an automated guided vehicle and an unmanned aerial vehicle in addition to the robot 1. For example, the robot 1 may be mounted on at least one of the automatic guided vehicle and the unmanned aerial vehicle.

Again in FIG. 1, the imaging system 2 images the target object OBJ. In order to image the target object OBJ, the imaging system 2 includes an imaging apparatus 21, an imaging apparatus 22, and a projection apparatus 23. Note that the imaging system 2 may be referred to as an imaging unit.

The imaging apparatus 21 is a camera that is configured to images the target object OBJ. In the present example embodiment, the imaging apparatus 21 is a monocular camera. The imaging apparatus 21 generates image data IMG_2D by imaging the target object OBJ. Namely, the imaging apparatus 21 generates image data IMG_2D that is an imaged result of the target object OBJ. The image data IMG_2D generated by the imaging apparatus 21 is output from the imaging apparatus 21 to the control apparatus 3. As a result, the control apparatus 3 acquires the image data IMG_2D acquired by the imaging apparatus 21 imaging the target object OBJ. In the present example embodiment, the imaging apparatus 21 is a monocular camera. Specifically, the imaging apparatus 21 is configured to image the target object OBJ by using the monocular camera (in other words, an imaging element). Specifically, since the imaging apparatus 21 is the monocular camera, the imaging apparatus 21 generates, as the image data IMG_2D, single image data generated by the monocular camera. In this case, the image data IMG_2D that corresponds to the single image data (namely, that indicates a single image) may be referred to as monocular image data. Note that the imaging apparatus 21 is not limited to the monocular camera. The imaging apparatus 21 may be a stereo camera that is configured to image the target object OBJ by using two monocular cameras, or may include three or more monocular cameras. Note that the imaging apparatus 21 may be at least one of a light field camera, a plenoptic camera, and a multispectral camera.

The imaging apparatus 22 is a camera that is configured to images the target object OBJ, as with the imaging apparatus 21. In the present example embodiment, the imaging apparatus 22 is a stereo camera. Specifically, the imaging apparatus 22 is configured to image the target object OBJ by using two monocular cameras (in other words, tow imaging elements). The imaging apparatus 22 generates image data IMG_3D by imaging the target object OBJ. Namely, the imaging apparatus 22 generates the image data IMG_3D that is an imaged result of the target object OBJ. Specifically, since the imaging apparatus 22 is the stereo camera, the imaging apparatus 22 generates the image data IMG_3D that includes two image data generated by the two monocular cameras, respectively. In this case, the image data IMG_3D that includes two image data (namely, that indites two images) may be referred to as stereo image data. The image data IMG_3D generated by the imaging apparatus 22 is output from the imaging apparatus 22 to the control apparatus 3. As a result, the control apparatus 3 acquires the image data IMG_3D acquired by the imaging apparatus 22 imaging the target object OBJ. Note that the imaging apparatus 22 is not limited to the monocular camera. The imaging apparatus 22 may be a monocular camera, or may include three or more monocular cameras. Note that the imaging apparatus 22 may be at least one of a light field camera, a plenoptic camera, and a multispectral camera.

The projection apparatus 23 is an apparatus that is configured to irradiate the target object OBJ with projection light. Especially, the projection apparatus 23 is an apparatus that is configured to project a desired projection pattern on the target object OBJ by irradiating the target object OBJ with the projection light. Note that the projection pattern may be referred to as an intensity distribution of the light projected on the target object OBJ. When the intensity distribution of the projected light changes, the projection pattern also changes. The desired projection pattern may include a random pattern, for example. The random pattern may be a projection pattern having different patterns in unit irradiation areas, respectively. The random pattern may include a random dot pattern. The desired projection pattern may include a onedimensional or two-dimensional grid pattern. The desired projection pattern may include a lineshaped pattern, for example. The desired projection pattern may include a stripe-shaped pattern, for example. The desired projection pattern may include another projection pattern. The imaging apparatus 22 images the target object OBJ on which the projection pattern is projected. In this case, the target object OBJ on which the projection pattern is projected is captured in the image indicated by the image data IMG_3D. On the other hand, the imaging apparatus 21 may not image the target object OBJ on which the projection pattern is projected. The imaging apparatus 21 may image the target object OBJ on which the projection pattern is not projected. In this case, the target object OBJ on which the projection pattern is projected may not be captured in the image indicated by the image data IMG_2D. The target object OBJ on which the projection pattern is not projected may be captured in the image indicated by the image data IMG_2D. Note that the projection light for projecting the desired projection pattern on the target object OBJ may be referred to as pattern light or may be referred to as structure light. In this case, the projection light may include the pattern light or may include the structure light. Moreover, the projection light may be light with a uniform projection pattern (namely, a uniform intensity distribution).

Note that the projection apparatus 23 may be considered to illuminate the target object OBJ with the projection light by irradiating the target object OBJ with the projection light. In this case, the projection apparatus 23 may be configured to serve as an illumination apparatus that illuminates the target object OBJ. In a case where the projection apparatus 23 serves as the illumination apparatus, the projection light may be referred to as illumination light. The projection light (the illumination light) used as the illumination apparatus may be light whose intensity distribution is uniform. In a case where the projection apparatus 23 serves as the illumination apparatus, the projection light may not be the light capable of projecting the desired projection pattern on the target object OBJ. In a case where the projection apparatus 23 serves as the illumination apparatus, the projection light may be any light capable of illuminating the target object OBJ.

The imaging apparatus 21 may image the entire target object OBJ. Alternatively, the imaging apparatus 21 may image a part of the target object OBJ. Namely, the imaging apparatus 21 may image a part of the target object OBJ and may not image another part of the target object OBJ. Similarly, the imaging apparatus 22 may image the entire target object OBJ. Alternatively, the imaging apparatus 22 may image a part of the target object OBJ. Namely, that imaging apparatus 22 may image a part of the target object OBJ and may not image another part of the target object OBJ.

The imaging apparatus 21 may image a single target object OBJ. Namely, the single target object OBJ may be captured in the image indicated by the image data IMG_2D. Alternatively, the imaging apparatus 21 may image a plurality of target objects OBJ. Namely, the plurality of target objects OBJ may be captured in the image illustrated by image data IMG_2D. In this case, the control apparatus 3 may determine (in other words, select) one target object OBJ of the plurality of target objects OBJ captured by the imaging apparatus 21 as the target object OBJ on which the end effector 4 actually performs the predetermined process, as described in detail later. Note that the one target object OBJ of the plurality of objects OBJ captured by the imaging apparatus 21 on which the end effector 4 actually performs the predetermined process may be referred to as a process performed object.

The imaging apparatus 22 may image a single target object OBJ. Namely, the single target object OBJ may be captured in the image indicated by the image data IMG_3D. Alternatively, the imaging apparatus 22 may image a plurality of target objects OBJ. Namely, the plurality of target objects OBJ may be captured in the image illustrated by image data IMG_3D. In this case, the control apparatus 3 may determine (in other words, select) one target object OBJ of the plurality of target objects OBJ captured by the imaging apparatus 22 as the target object OBJ on which the end effector 4 actually performs the predetermined process, as described in detail later. Note that the one target object OBJ of the plurality of objects OBJ captured by the imaging apparatus 22 on which the end effector 4 actually performs the predetermined process may be referred to as a process performed object.

In a case where each of the imaging apparatuses 21 and 22 images the plurality of target objects OBJ, the plurality of target objects OBJ imaged by the imaging apparatus 21 may be the same as the plurality of target objects OBJ imaged by the imaging apparatus 22. Namely, the plurality of target objects OBJ captured in the image indicated by the image data IMG_2D may be the same as the plurality of target objects OBJ captured in the image indicated by image data IMG_3D. Alternatively, at least one of the plurality of target objects OBJ captured by the imaging apparatus 21 may be different from at least one of the plurality of target objects OBJ captured by the imaging apparatus 22. Namely, at least one of the plurality of target objects OBJ captured in the image indicated by the image data IMG_2D may be the same as at least one of the plurality of target objects OBJ captured in the image indicated by the image data IMG_3D.

The plurality of target objects OBJ imaged by the imaging apparatus 21 may be positioned so that at least two of the plurality of target objects OBJ overlap at least partially. As one example, in a case where the target object OBJ is the workpiece W corresponding to the component used to manufacture the desired product, the plurality of workpieces W (namely, the plurality of components) may be positioned so that at least two of the plurality of workpieces W overlap at least partially. In this case, the robot 1 may perform a bin picking for picking the workpiece W one by one from the plurality of workpieces W positioned in a disordered manner.

The imaging system 2 is attached to the robot arm 12, as with the end effector 4. Namely, the imaging apparatuses 21 and 22 and the projection apparatus 23 are attached to the robot arm 12. For example, as illustrated in FIG. 2, the imaging apparatuses 21 and 22 and the projection apparatus 23 may be attached to an end of the robot arm 12, as with the end effector 4. In this case, the imaging apparatuses 21 and 22 and the projection apparatus 23 are movable by the movement of the robot arm 12. Namely, the robot arm 12 moves the imaging apparatuses 21 and 22 and the projection apparatus 23.

However, the imaging system 2 may not be attached to the robot arm 12. The imaging system 2 may be attached to any position that allows the imaging system 2 to irradiate the target object OBJ with the projection light and to image the target object OBJ. In this case, the imaging system 2 may be attached to a structural object such as a pillar so as to irradiate the target object OBJ with the projection light and to image the target object OBJ. Note that at least one of the imaging apparatus 21, the imaging apparatus 22, and the projection apparatus 23 may be attached to the robot arm 12, and at least other one of the imaging apparatus 21, the imaging apparatus 22, and the projection apparatus 23 may be attached to a position (for example, the structural object such as the pillar) that is different from the robot arm 12. In a case where at least one of the imaging apparatus 21 and the imaging apparatus 22 is attached to the position that is different form the robot arm 12, at least one of the imaging apparatus 21 and the imaging apparatus 22 may be attached to the structural object, such as the pillar, that is positioned so that the target object OBJ can be imaged. Moreover, in a case where the projection apparatus 23 is attached to the position that is different from the robot arm 12, the projection apparatus 23 may be attached to the structural object, such as the pillar, that is positioned so that the target object OBJ can be illuminated with the projection light.

The imaging apparatus 21 may image the target object OBJ in a period during which the target object OBJ and the imaging apparatus 21 are being relatively displaced. Note that a state in which the imaging apparatus 21 and the target object OBJ are relatively displaced may mean a state in which a relative positional relationship between the imaging apparatus 21 and the target object OBJ is changing. The state in which the imaging apparatus 21 and the target object OBJ are relatively displaced may mean a state in which the imaging apparatus 21 and the target object OBJ are relatively moving. For example, the state in which the imaging apparatus 21 and the target object OBJ are relatively displaced may include a state in which the target object OBJ is moving with respect to the imaging apparatus 21. For example, the state in which the imaging apparatus 21 and the target object OBJ are relatively displaced may include a state in which the imaging apparatus 21 is moving with respect to the target object OBJ. In this case, the imaging apparatus 21 may not stop in order to image the target object OBJ, and therefore, the robot system SYS can efficiently perform the predetermined process on the target object OBJ by using the end effector 4.

Alternatively, the imaging apparatus 21 may image the target object OBJ in a period during which the imaging apparatus 21 and the target object OBJ are not being relatively displaced. Note that a state in which the imaging apparatus 21 and the target object OBJ are not being relatively displaced may mean a state in which the relative positional relationship between the imaging apparatus 21 and the target object OBJ is not changed. The state in which the imaging apparatus 21 and the target object OBJ are not being relatively displaced may mean a state in which the imaging apparatus 21 and the target object OBJ are not relatively moving. The state in which the imaging apparatus 21 and the target object OBJ are not being relatively displaced may mean a state in which the imaging apparatus 21 and the target object OBJ stop. The state in which the imaging apparatus 21 and the target object OBJ are not being relatively displaced may mean a state in which the imaging apparatus 21 and the target object OBJ are moving toward the same movement direction at the same movement speed.

The imaging apparatus 22 may image the target object OBJ in a period during which the target object OBJ and the imaging apparatus 22 are being relatively displaced. Note that a state in which the imaging apparatus 22 and the target object OBJ are relatively displaced may mean a state in which a relative positional relationship between the imaging apparatus 22 and the target object OBJ is changing. The state in which the imaging apparatus 22 and the target object OBJ are relatively displaced may mean a state in which the imaging apparatus 22 and the target object OBJ are relatively moving. For example, the state in which the imaging apparatus 22 and the target object OBJ are relatively displaced may include a state in which the target object OBJ is moving with respect to the imaging apparatus 22. For example, the state in which the imaging apparatus 22 and the target object OBJ are relatively displaced may include a state in which the imaging apparatus 22 is moving with respect to the target object OBJ. In this case, the imaging apparatus 22 may not stop in order to image the target object OBJ, and therefore, the robot system SYS can efficiently perform the predetermined process on the target object OBJ by using the end effector 4.

Alternatively, the imaging apparatus 22 may image the target object OBJ in a period during which the imaging apparatus 22 and the target object OBJ are not being relatively displaced. Note that a state in which the imaging apparatus 22 and the target object OBJ are not being relatively displaced may mean a state in which the relative positional relationship between the imaging apparatus 22 and the target object OBJ is not changed. The state in which the imaging apparatus 22 and the target object OBJ are not being relatively displaced may mean a state in which the imaging apparatus 22 and the target object OBJ are not relatively moving. The state in which the imaging apparatus 22 and the target object OBJ are not being relatively displaced may mean a state in which the imaging apparatus 22 and the target object OBJ stop. The state in which the imaging apparatus 22 and the target object OBJ are not being relatively displaced may mean a state in which the imaging apparatus 22 and the target object OBJ are moving toward the same movement direction at the same movement speed.

The imaging apparatuses 21 and 22 may image the target object OBJ in synchronization with each other. For example, the imaging apparatuses 21 and 22 may image the target object OBJ simultaneously. Namely, the imaging apparatuses 21 and 22 may image the target object OBJ so that a 2D imaging time at which the imaging apparatus 21 images the target object OBJ and a 3D imaging time at which the imaging apparatus 22 images the target object OBJ are the same time. The imaging apparatuses 21 and 22 may image the target object OBJ so that the 2D imaging time at which the imaging apparatus 21 images the target object OBJ to generate the image data IMG_2D and the 3D imaging time at which the imaging apparatus 22 images the target object OBJ to generate the image data IMG_3D are the same time.

The imaging apparatuses 21 and 22 may image the target object OBJ under the control of the control apparatus 3. In this case, a time (in other words, a timing) at which each of the imaging apparatuses 21 and 22 images the target object OBJ may be controlled by the control apparatus 3. For example, the control apparatus 3 may control the imaging apparatuses 21 and 22 so that the imaging apparatuses 21 and 22 image the target object OBJ in synchronization with each other. For example, the control apparatus 3 may control the imaging apparatuses 21 and 22 so that the imaging apparatuses 21 and 22 image the target object OBJ simultaneously. Namely, the control apparatus 3 may control the imaging apparatuses 21 and 22 so that the 2D imaging time are the same as the 3D imaging time are the same time.

Here, a state in which "the 2D imaging time and the 3D imaging time are the same time" may include a state in which "the 2D imaging time and the 3D imaging time are exactly the same time literally". The state in which "the 2D imaging time and the 3D imaging time are the same time" may include a state in which "the 2D imaging time and the 3D imaging time are not exactly the same time, but the 2D imaging time and the 3D imaging time are allowed to be considered to be substantially the same time because a difference in time between the 2D imaging time and the 3D imaging time is smaller than a first allowable upper limit value". Here, the first allowable upper limit value may be an allowable upper limit value based on a control error of the robot arm 12. For example, there is a possibility that the difference in time between the 2D imaging time and the 3D imaging time causes an error in a calculated result of at least one of a position and a pose of the target object OBJ described below (namely, decreases an accuracy of at least one of the calculated position and pose of the target object OBJ). In this case, there is a possibility that the error in the calculated result of at least one of the position and the pose of the target object OBJ causes the control error of the robot arm 12. There is a possibility that the control error of the robot arm 12 results in a movement error of the end effector 4, and the end effector 4 cannot properly perform the predetermined process on the target object OBJ. The first allowable value may be set to a proper value for avoiding a state in which the end effector 4 cannot properly perform the predetermined process on the target object OBJ due to the control error of the robot arm 12. Note that the first allowable upper limit value may be considered to be equivalent to an allowable upper limit value of the movement error of the end effector 4 by the robot arm 12. Moreover, for example, even in a case where a synchronization error in the imaging processing of the imaging apparatuses 21 and 22 causes the difference in time between the 2D imaging time and the 3D imaging time, the 2D imaging time and the 3D imaging time may be considered to be substantially the same time. Note that the synchronization error in the imaging processing of the imaging apparatuses 21 and 22 may be a synchronization control error in the imaging processing of the imaging apparatuses 21 and 22 by the control apparatus 3.

However, the imaging apparatuses 21 and 22 may not image the target object OBJ simultaneously. Namely, the imaging apparatuses 21 and 22 may image the target object OBJ so that the 2D imaging time at which the imaging apparatus 21 images the target object OBJ and the 3D imaging time at which the imaging apparatus 22 images the target object OBJ are different times. Note that a state in which "the 2D imaging time and the 3D imaging time are the different times" may include a state in which "the 2D imaging time and the 3D imaging time are not allowed to be considered to be substantially the same time because the difference in time between the 2D imaging time and the 3D imaging time is larger than the first allowable upper limit value".

In the present example embodiment, in a case where the imaging apparatuses 21 and 22 image the target object OBJ in a period during which the target object OBJ and each of the imaging apparatuses 21 and 22 are being relatively displaced, the imaging apparatuses 21 and 22 may image the target object OBJ so that the 2D imaging time and the 3D imaging time are the same time. Namely, in a case where the imaging apparatuses 21 and 22 image the target object OBJ in the period during which the target object OBJ and each of the imaging apparatuses 21 and 22 are being relatively displaced, the control apparatus 3 may control the imaging apparatuses 21 and 22 so that the 2D imaging time and the 3D imaging time are the same time.

On the other hand, in a case where the imaging apparatuses 21 and 22 image the target object OBJ in a period during which the target object OBJ and each of the imaging apparatuses 21 and 22 are not being relatively displaced, the imaging apparatuses 21 and 22 may not image the target object OBJ so that the 2D imaging time and the 3D imaging time are the same time. Namely, the control apparatus 3 may not control the imaging apparatuses 21 and 22 so that the 2D imaging time and the 3D imaging time are the same time. For example, the imaging apparatuses 21 and 22 may image the target object OBJ so that the 2D imaging time and the 3D imaging time are the different times. Namely, the control apparatus 3 may control the imaging apparatuses 21 and 22 so that the 2D imaging time and the 3D imaging time are the different times. However, in a case where the imaging apparatuses 21 and 22 image the target object OBJ in the period during which the target object OBJ and each of the imaging apparatuses 21 and 22 are not being relatively displaced, the imaging apparatuses 21 and 22 may image the target object OBJ so that the 2D imaging time and the 3D imaging time are the same time. Namely, the control apparatus 3 may control the imaging apparatuses 21 and 22 so that the 2D imaging time and the 3D imaging time are the same time.

The control apparatus 3 performs a robot control processing. The robot control processing includes a processing for generating a robot control signal for controlling the robot 1. Specifically, the control apparatus 3 generates the robot control signal based on at least one of the image data IMG_2D and IMG_3D output from the imaging unit 2. In the present example embodiment, the control apparatus 3 calculates at least one of a position and a pose of the target object OBJ in a global coordinate system of the robot system SYS based on at least one of the image data IMG_2D and IMG_3D, and generates the robot control signal based on at least one of the calculated position and pose of the target object OBJ.

The global coordinate system is a coordinate system that is a basis for the robot system SYS. For example, the global coordinate system may be a coordinate system that is a basis for the robot 1. Note that it can be said that the global coordinate system is a coordinate system that is used to control the robot 1. A world coordinate system that is defined relative to the support surface S on which the robot 1 is positioned may be used as the global coordinate system. Namely, the world coordinate system that is fixed relative to the support surface S may be used as the global coordinate system.

However, the control apparatus 3 may calculate at least one of the position and the pose of the target object OBJ in a coordinate system that is different from the global coordinate system based on at least one of the image data IMG_2D and IMG_3D.

As a first example, the control apparatus 3 may calculate at least one of the position and the pose of the target object OBJ in a robot coordinate system based on at least one of the image data IMG_2D and IMG_3D. The robot coordinate system may be a coordinate system that is defined relative to the robot 1. Namely, the robot coordinate system may be a coordinate system that is fixed relative to the robot 1 (for example, that is fixed relative to the base 11 of the robot 1). Note that the robot coordinate system may be referred to as the global coordinate system because it is defined relative to the robot 1. Note that it can be said that the robot coordinate system is a coordinate system that is used to control the robot 1.

As a second example, the control apparatus 3 may calculate at least one of the position and the pose of the target object OBJ in a 2D imaging coordinate system based on at least one of the image data IMG_2D and IMG_3D. The 2D imaging coordinate system may be a coordinate system that is defined relative to the imaging apparatus 21. Namely, the 2D imaging coordinate system may be a coordinate system that is fixed relative to the imaging apparatus 21. A coordinate system that is defined based on an optical axis AX21 (see FIG. 2) of an optical system (especially, a terminal optical element such as an objective lens) of the imaging apparatus 21 is one example of the 2D imaging coordinate system. A coordinate system in which one of three axes defining the 2D imaging coordinate system is an axis that is along the optical axis AX21 (see FIG. 2) of the optical system (especially, the terminal optical element such as the objective lens) of the imaging apparatus 21 is another example of the 2D imaging coordinate system.

As a third example, the control apparatus 3 may calculate at least one of the position and the pose of the target object OBJ in a 3D imaging coordinate system based on at least one of the image data IMG_2D and IMG_3D. The 3D imaging coordinate system may be a coordinate system that is defined relative to the imaging apparatus 22. Namely, the 3D imaging coordinate system may be a coordinate system that is fixed relative to the imaging apparatus 22. A coordinate system that is defined based on an optical axis AX22 (see FIG. 2) of an optical system (especially, a terminal optical element such as an objective lens) of the imaging apparatus 22 is one example of the 3D imaging coordinate system. A coordinate system in which one of three axes defining the 3D imaging coordinate system is an axis that is along the optical axis AX22 (see FIG. 2) of the optical system (especially, the terminal optical element such as the objective lens) of the imaging apparatus 22 is another example of the 3D imaging coordinate system.

The control apparatus 3 may perform an end effector control processing, in addition to performing the robot control processing. The end effector control processing may include a processing for generating an end effector control signal for controlling the end effector 4. Specifically, the control apparatus 3 may generate the end effector control signal based on at least one of the calculated position and pose of the target object OBJ.

Note that the end effector control processing may be included or may not be included in the robot control processing. Namely, the end effector control signal generated by the control apparatus 3 may be included in the robot control signal or may not be included in the robot control signal. In the below-described description, an example in which the end effector control processing is included in the robot control processing (namely, the end effector control signal is included in the robot control signal) will be described. Therefore, in the below-described description, the robot control processing may mean a processing for generating at least one of the robot control signal and the end effector control signal. Moreover, in the below-described description, the robot control signal may mean at least one of the signal for controlling the robot 1 and the signal for controlling the end effector 4. Note that the robot control signal may be simply referred to as a control signal.

In this manner, the control apparatus 3 and the imaging system 2 are used to control the robot 1. Therefore, a system including the control apparatus 3 and the imaging system 2 may be referred to as a robot control system or a control system.

The robot control signal generated by the control apparatus 3 is output to the robot control apparatus 13 of the robot 1. The robot control apparatus 13 controls the operation of the robot 1 based on the robot control signal generated by the control apparatus 3. Therefore, the robot control signal may include a signal for controlling the operation of the robot 1.

In a case where the robot control signal includes the signal for controlling the robot arm 12 as described above, the robot control apparatus 13 may control the robot arm 12 based on the robot control signal. For example, the robot control apparatus 13 may control the operation of the robot arm 12 by controlling an operation of the actuator built into the joint 122 based on the robot control signal.

For example, the robot arm 12 moves the end effector 4 as described above. In this case, the robot control signal may include a signal for controlling the robot arm 12 so that the end effector 4 is positioned at a desired position. The robot control signal may include a signal for controlling the robot arm 12 so that the end effector 4 moves to the desired position. The robot control signal may include a signal for controlling the robot arm 12 so that a positional relationship between the end effector 4 and the target object OBJ is a desired positional relationship. In this case, the robot control apparatus 13 may control the robot arm 12 based on the robot control signal so that the end effector 4 is positioned at the desired position. The robot control apparatus 13 may control the robot arm 12 based on the robot control signal so that the end effector 4 moves to the desired position. The robot control apparatus 13 may control the robot arm 12 based on the robot control signal so that the positional relationship between the end effector 4 and the target object OBJ is the desired positional relationship.

As one example, in a case where the end effector 4 performs the holding process for holding the target object OBJ, the robot control signal may include a signal for controlling the robot arm 12 so that the end effector 4 moves toward (namely, approaches) a hold position at which the end effector 4 can hold the target object OBJ. Namely, the robot control signal may include a signal for controlling the robot arm 12 so that the end effector 4 is positioned at the hold position. In this case, the robot control apparatus 13 may control the robot arm 12 based on the robot control signal so that the end effector 4 moves toward (namely, approaches) the hold position. Namely, the robot control signal may control the robot arm 12 so that the end effector 4 is positioned at the hold position.

As another example, in a case where the end effector 4 performs the releasing process for releasing the held target object OBJ, the robot control signal may include a signal for controlling the robot arm 12 so that the end effector 4 moves toward (namely, approaches) a release position at which the end effector 4 should release the held target object OBJ. Namely, the robot control signal may include a signal for controlling the robot arm 12 so that the end effector 4 is positioned at the release position. In this case, the robot control apparatus 13 may control the robot arm 12 based on the robot control signal so that the end effector 4 moves toward (namely, approaches) the release position. Namely, the robot control signal may control the robot arm 12 so that the end effector 4 is positioned at the release position.

In a case where the robot control signal includes the signal for controlling the end effector 4 as described above, the robot control apparatus 13 may control the end effector 4 based on the robot control signal. For example, the robot control apparatus 13 may control the operation of the end effector 4 by controlling an operation of the actuator that moves the hand gripper constituting the end effector 4 based on the robot control signal. For example, the robot control apparatus 13 may control the operation of the end effector 4 by controlling an operation of the vacuum apparatus of the vacuum gripper constituting the end effector 4 based on the robot control signal.

As one example, in a case where the end effector 4 performs the holding process for holding the target object OBJ, the robot control signal may include a signal for controlling the end effector 4 so that the end effector 4 positioned at the above-described hold position holds the target object OBJ. In this case, the robot control apparatus 13 may control the end effector 4 based on the robot control signal so that the end effector 4 positioned at the hold position holds the target object OBJ.

As another example, in a case where the end effector 4 performs the releasing process for releasing the held target object OBJ, the robot control signal may include a signal for controlling the end effector 4 so that the end effector 4 positioned at the above-described release position releases the held target object OBJ. In this case, the robot control apparatus 13 may control the end effector 1 based on the robot control signal 3 so that the end effector 4 positioned at the above-described release position releases the held target object OBJ.

The robot control signal may include a signal that is usable as it is by the robot control apparatus 13 to control the operation of the robot 1. The robot control signal may include a signal that is usable as it is as a robot driving signal that is used by the robot control apparatus 13 to control the operation of the robot 1. In this case, the robot control apparatus 13 may use the robot control signal as it is to control the operation of the robot 1. Specifically, for example, the control apparatus 3 may generate a driving signal of the actuator built in the joint 122 of the robot arm 12 as the robot control signal, and the robot control apparatus 13 may use the robot control signal generated by the control apparatus 3 as it is to control the actuator built in the joint 122 of the robot arm 12. The robot control signal may include a signal that is usable as it is by the robot control apparatus 13 to control the operation of the end effector 4. The robot control signal may include a signal that is usable as it is as an end effector driving signal that is used by the robot control apparatus 13 to control the operation of the end effector 4. In this case, for example, the control apparatus 3 may generate a driving signal (the end effector driving signal) of the actuator that moves the hand gripper constituting the end effector 4 as the robot control signal, and the robot control apparatus 13 may use the robot control signal generated by the control apparatus 3 as it is to control the actuator of the end effector 4. For example, the control apparatus 3 may generate a driving signal (the end effector driving signal) of the vacuum apparatus of the vacuum gripper constituting the end effector 4 as the robot control signal, and the robot control apparatus 13 may use the robot control signal generated by the control apparatus 3 as it is to control the vacuum apparatus of the end effector 4.

Note that the robot 1 may not include the robot control apparatus 13 in a case where the robot control signal includes the signal that is usable as it is by the robot control apparatus 13 to control the operation of at least one of the robot 1 and the end effector 4 as described above.

Alternatively, the robot control signal may include a signal that is usable by the robot control apparatus 13 to generate the robot driving signal for controlling the operation of the robot 1. In this case, the robot control apparatus 13 may generate the robot driving signal for controlling the operation of the robot 1 based on the robot control signal, and control the operation of the robot 1 based on the generated robot driving signal. For example, the robot control apparatus 13 may generate the driving signal of the actuator built in the joint 122 of the robot arm 12 based on the robot control signal, and control the actuator built in the joint 122 of the robot arm 12 based on the generated signal.

The robot control signal may include a signal that is usable by the robot control apparatus 13 to generate the end effector driving signal for controlling the operation of the end effector 4. In this case, the robot control apparatus 13 may generate the end effector driving signal for controlling the operation of the end effector 4 based on the end effector control signal, and control the operation of the end effector based on the generated end effector driving signal. For example, in a case where the end effector 4 is the hand gripper, the robot control apparatus 13 may generate the end effector driving signal for driving the actuator of the hand gripper based on the robot control signal, and control the actuator of the hand gripper based on the generated end effector driving signal. For example, in a case where the end effector 4 is the magnetic suction gripper, the robot control apparatus 13 may generate the end effector driving signal for driving the magnetic suction apparatus of the magnetic suction gripper based on the robot control signal, and control the magnetic suction apparatus of the magnetic suction gripper based on the generated end effector driving signal.

Note that the signal that is usable by the robot control apparatus 13 to generate the robot driving signal may include a signal indicating at least one of the position and the pose of the target object OBJ in the global coordinate system. In this case, for example, the robot control apparatus 13 may generate the robot driving signal for driving the actuator built in the joint 122 of the robot arm 12 based on the robot control signal so that the end effector 4 approaches the target object OBJ at least one of the position and the pose in the global coordinate system of which is calculated by the robot control signal (namely, the positional relationship between the robot 1 (the end effector 4) and the target object OBJ is the desired positional relationship), and control the operation of the robot arm 12 based on the generated robot driving signal.

The signal that is usable by the robot control apparatus 13 to generate the robot driving signal may include a signal indicating the desired positional relationship between the robot 1 and the target object OBJ in the global coordinate system. In this case, for example, the robot control apparatus 13 may generate the robot driving signal for driving the actuator built in the joint 122 of the robot arm 12 based on the robot control signal so that the positional relationship between the robot 1 (the end effector 4) and the target object OBJ is the desired positional relationship indicated by the robot control signal, and control the operation of the robot arm 12 based on the generated robot driving signal.

The signal that is usable by the robot control apparatus 13 to generate the robot driving signal may include a signal indicating the desired position of the end effector 4 in the global coordinate system. In this case, for example, the robot control apparatus 13 may generate the robot driving signal for driving the actuator built in the joint 122 of the robot arm 12 based on the robot control signal so that the end effector 4 is positioned at the desired position indicated by the robot control signal (namely, the positional relationship between the robot 1 (the end effector 4) and the target object OBJ is the desired positional relationship), and control the operation of the robot arm 12 based on the generated robot driving signal. A process position at which the end effector 4 should perform the process on the target object OBJ is one example of the desired position. The hold position at which the end effector 4 should hold the target object OBJ is one specific example of the desired position. In this case, the robot control apparatus 13 may generate the robot driving signal for driving the actuator built in the joint 122 of the robot arm 12 based on the robot control signal so that the end effector 4 moves to the hold position indicated by the robot control signal, and control the operation of the robot arm 12 based on the generated robot driving signal. The release position at which the end effector 4 should release the target object OBJ is one specific example of the desired position. In this case, the robot control apparatus 13 may generate the robot driving signal for driving the actuator built in the joint 122 of the robot arm 12 based on the robot control signal so that the end effector 4 moves to the release position indicated by the robot control signal, and control the operation of the robot arm 12 based on the generated robot driving signal.

Note that the signal that is usable by the robot control apparatus 13 to generate the robot driving signal may include a signal indicating a desired position of an end part (for example, a tool center point) of the robot arm 12 in the global coordinate system, or may include a signal indicating a desired position of the imaging system 2 in the global coordinate system. Note that the signal that is usable by the robot control apparatus 13 to generate the robot driving signal may be a signal indicating a movement distance and a movement direction from a current position of the end effector 4 to the desired position of the end effector 4.

Note that the coordinate system used as a basis in the robot control signal may be a coordinate system (for example, the robot coordinate system, the 2D imaging coordinate system, or the 3D imaging coordinate system) other than the global coordinate system.

### (1-2) Configuration of Control Apparatus 3

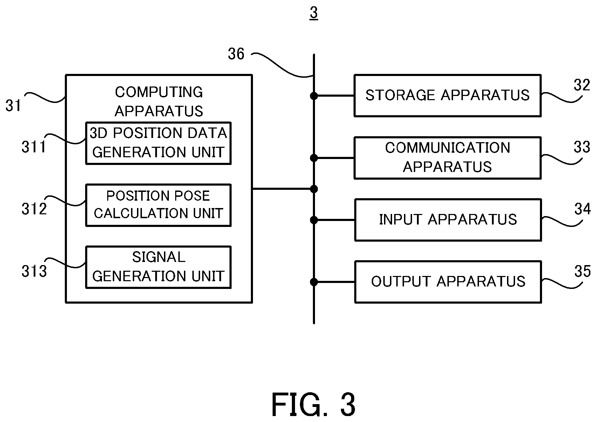

Next, with reference to FIG. 3, a configuration of the control apparatus 3 will be described. FIG. 3 is a block diagram that illustrates the configuration of the control apparatus 3.

As illustrated in FIG. 3, the control apparatus 3 includes a computing apparatus 31, a storage apparatus 32, and a communication apparatus 33. Furthermore, the control apparatus 3 may include an input apparatus 34 and an output apparatus 35. However, the control apparatus 3 may not include at least one of the input apparatus 34 and the output apparatus 35. The computing apparatus 31, the storage apparatus 32, the communication apparatus 33, the input apparatus 34, and the output apparatus 35 may be connected through a data bus 36.

The computing apparatus 31 may include at least one of a CPU (Central Processing Unit), a GPU (Graphic Processing Unit), and a FPGA (Field Programmable Gate Array), for example. The computing apparatus 31 reads a computer program. For example, the computing apparatus 31 may read the computer program recorded in the storage apparatus 32. For example, the computing apparatus 31 may read the computer program recorded in a non-transitory computerreadable recording medium by using a non-illustrated recording medium reading apparatus of the control apparatus 3. The computing apparatus 31 may acquire (namely, download or read) the computer program from a non-illustrated apparatus external to the control apparatus 3 through the communication apparatus 33 (alternatively, other communication apparatus). The computing apparatus 31 executes the read computer program. As a result, a logical functional block for performing a processing that should be performed by the control apparatus 3 (for example, the above-described robot control processing) is implemented in the computing apparatus 31. Namely, the computing apparatus 31 is configured to serve as a controller for implementing the logical functional block for performing the processing that should be performed by the control apparatus 3.

An arithmetic model that is buildable by machine learning may be implemented in the computing apparatus 31 by the computing apparatus 31 executing the computer program. One example of the arithmetic model that is buildable by the machine learning is an arithmetic model including a neural network (so-called Artificial Intelligence (AI)), for example. In this case, the learning of the arithmetic model may include learning of parameters of the neural network (for example, at least one of weights and biases). The computing apparatus 31 may perform the robot control processing by using the arithmetic model. Namely, an operation for performing the robot control processing may include an operation for performing the robot control processing by using the arithmetic model. Note that the arithmetic model that has been built by off-line machine learning using training data may be implemented in the computing apparatus 31. Moreover, the arithmetic model implemented in the computing apparatus 31 may be updated by online machine learning on the computing apparatus 31. Alternatively, the computing apparatus 31 may perform the robot control processing by using the arithmetic model implemented in an apparatus external to the computing apparatus 31 (namely, an apparatus external to the control apparatus 3), in addition to or instead of the arithmetic model implemented in the computing apparatus 31.

Note that at least one of an optical disc such as a CD-ROM, a CD-R, a CD-RW, a flexible disc, a MO, a DVD-ROM, a DVD-RAM, a DVD-R, a DVD+R, a DVD-RW, a DVD+RW and a Blu-ray (registered trademark), a magnetic disc such as a magnetic tape, an optical-magnetic disc, a semiconductor memory such as a USB memory, and another medium that is configured to store the program may be used as the recording medium recording therein the computer program that should be executed by the computing apparatus 31. Moreover, the recording medium may include a device that is configured to record the computer program (for example, a device for a universal use or a device for an exclusive use in which the computer program is embedded to be executable in a form of at least one of a software, a firmware and the like). Moreover, various arithmetic processing or functions included in the computer program may be realized by a logical processing block that is realized in the computing apparatus 31 by means of the computing apparatus 31 (namely, a computer) executing the computer program, may be realized by a hardware such as a predetermined gate array (a FPGA, an ASIC) of the computing apparatus 31, or may be realized in a form in which the logical process block and a partial hardware module that realizes a partial element of the hardware are combined.

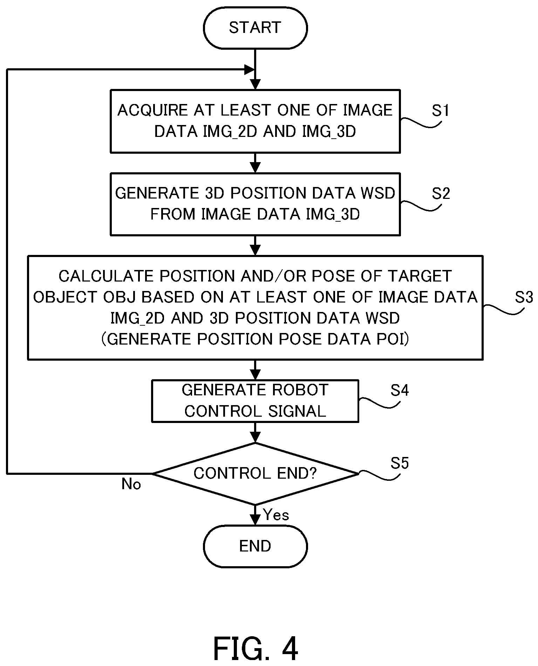

FIG. 3 illustrates one example of the logical functional block implemented in the computing apparatus 31 to perform the robot control processing. As illustrated in FIG. 3, a three-dimensional position data generation unit 311, a position pose calculation unit 312, and a signal generation unit 313 are implemented in the computing apparatus 31. Note that a processing performed by each of the three-dimensional position data generation unit 311, the position pose calculation unit 312, and the signal generation unit 313 will be described in detail later with reference to FIG. 4 and so on, and a description thereof is omitted here. Note that the computing apparatus 31 may be a computing unit.

The storage apparatus 32 is configured to store desired data. For example, the storage apparatus 32 may temporarily store the computer program that is executed by the computing apparatus 31. The storage apparatus 32 may temporarily store data temporarily used by the computing apparatus 31 in a case where the computing apparatus 31 executes the computer program. The storage apparatus 32 may store data stored for a long term by the control apparatus 3. The storage apparatus 32 may include at least one of a RAM, a ROM, a hard disk apparatus, a magneto-optical disc, a SSD and a disk array apparatus. Namely, the storage apparatus 32 may include a non-transitory recording medium.

The communication apparatus 33 is configured to communicate with each of the robot 1 and the imaging system 2 through a no-illustrated communication network. Alternatively, the communication apparatus 33 may be configured to communicate with other apparatus that is different from the robot 1 and the imaging unit 2, in addition to or instead of at least one of the robot 1 and the imaging unit 2, through a non-illustrated communication network. In the present example embodiment, the communication apparatus 33 may receive (namely, acquire) at least one of the image data IMG_2D and IMG_3D from the imaging unit 2. Furthermore, the communication apparatus 33 may transmit (namely, output) the robot control signal to the robot 1. Note that the communication apparatus 33 that output the robot control signal to the robot 1 may be referred to as an output unit.

The input apparatus 34 is an apparatus that is configured to receive an input of information from an outside of the control apparatus 3 to the control apparatus 3. For example, the input apparatus 34 may include an operating apparatus (for example, at least one of a keyboard, a mouse, and a touch panel) that is operable by a user of the control apparatus 3. For example, the input apparatus 34 may include a recording medium reading apparatus that is configured to read information recorded as data on a recording medium that is attachable to the control apparatus 3.

Note that information is allowed to be input to the control apparatus 3 as data from the apparatus external to the control apparatus 3 through the communication apparatus 33. In this case, the communication apparatus 33 may serve as an input apparatus that receives an input of information to the control apparatus 3 from outside of the control apparatus 3.

The output apparatus 35 is an apparatus that outputs information to the outside of the control apparatus 3. For example, the output apparatus 35 may output the information as an image. Namely, the output apparatus 35 may include a display apparatus (a so-called display) that is configured to display an image. For example, the output apparatus 35 may output the information as audio. Namely, the output apparatus 35 may include an audio apparatus (so-called a speaker) that is configured output the audio. For example, the output apparatus 35 may output the information on a paper. Namely, the output apparatus 35 may include a printing apparatus (so-called a printer) that is configured to print desired information on the paper. For example, the output apparatus 35 may output the information as data on a recording medium that is attachable to the control apparatus 3.

Incidentally, the control apparatus 3 is allowed to output the information as the data to the apparatus external to the control apparatus 3 through the communication apparatus 33. In this case, the communication apparatus 33 may serve as an output apparatus that outputs the information to the apparatus external to the control apparatus 3.

### (2) Robot Control Processing

Next, the robot control processing performed by the control apparatus 3 will be described.

### (2-1) Flow of Robot Control Processing

Firstly, with reference to FIG. 4, a flow of the robot control processing will be described. FIG. 4 is a flowchart that illustrates the flow of the robot control processing.

As illustrated in FIG. 4, the control apparatus 3 acquires the image data IMG_3D from the imaging apparatus 22 by using the communication apparatus 33 (a step S1). Specifically, the imaging apparatus 22 images the target object OBJ at a predetermined 3D imaging rate. For example, the imaging apparatus 22 may image the target object OBJ at the 3D imaging rate, at which the target object OBJ is imaged tens of times to hundreds of times (as one example, 500 times) per second. As a result, the imaging apparatus 22 generates the image data IMG_3D in a cycle based on the predetermined 3D imaging rate. For example, the imaging apparatus 22 may generate tens to hundreds of (as one example, 500) image data IMG_3D per second. The control apparatus 3 acquires the image data IMG_3D each time the imaging apparatus 22 generates the image data IMG_3D. Namely, the control apparatus 3 may acquire tens to hundreds of (as one example, 500) image data IMG_3D per second.

However, the imaging apparatus 22 may not periodically image the target object OBJ at the desired 3D imaging rate. For example, the imaging apparatus 22 may image the target object OBJ when the imaging apparatus 22 receives a control signal for controlling the imaging apparatus 22 to image the target object OBJ from the control apparatus 3.

The imaging apparatus 22 may image another object that is different from the target object OBJ, in addition to the target object OBJ on which the robot 1 performs the predetermined process. Note that another object that is different from the target object OBJ is referred to as a non-target object in the below-described description, because since another objects is not a target on which the robot 1 performs the predetermined process. At least one of at least a part of the end effector 4, at least a part of the robot arm 12, and a surrounding object that is positioned around the robot 1 is one example of the non-target object. At least one of the placing apparatus T and the container CB is one example of the surrounding object. For example, in a case where both the target object OBJ and the non-target object are included in an imaging range (a field of view) of the imaging apparatus 22, the imaging apparatus 22 may image both the target object OBJ and the non-target object. As a result, the imaging apparatus 22 may generate the image data IMG_3D indicating an image in which both the target object OBJ and the non-target object are captured. However, the imaging apparatus 22 may image the target object OBJ and may not image the non-target object. Namely, the imaging apparatus 22 may generate the image data IMG_3D indicating an image in which the target object OBJ is captured and the non-target object is not captured. In both cases, the imaging apparatus 22 generates the image data IMG_3D indicating an image in which at least the target object OBJ is captured. Namely, the imaging apparatus 22 generates the image data IMG_3D that includes at least image data of the target object OBJ.

As described above, the imaging apparatus 22 may image the plurality of target objects OBJ on which the end effector 4 sequentially performs the predetermined process. In this case, the end effector 4 may perform the predetermined process on a first target object OBJ of the plurality of target objects OBJ in a first period, and then perform the predetermined process on a second target object OBJ, which is different from the first target object OBJ, of the plurality of target objects OBJ in a second period following the first period. In this case, other target object OBJ, which is different from the first target object OBJ on which the end effector 4 performs the predetermined process, of the plurality of target objects OBJ may be regarded as the target object OBJ that is not the process performed object, on which the robot 1 performs the predetermined process in the first period, (alternatively, the non-target object) in the first period. Similarly, other target object OBJ, which is different from the second target object OBJ on which the end effector 4 performs the predetermined process, of the plurality of target objects OBJ may be regarded as the target object OBJ that is not the process performed object, on which the robot 1 performs the predetermined process in the second period, (alternatively, the non-target object) in the second period. Note that each of the first target object OBJ and the second target object OBJ may be different target objects OBJ of the plurality of target objects OBJ.

The control apparatus 3 acquires the image data IMG_2D from the imaging apparatus 21 by using the communication apparatus 33 in addition to or instead of acquiring the image data IMG_3D from the imaging apparatus 22 (the step S1). Specifically, the imaging apparatus 21 images the target object OBJ at a predetermined 2D imaging rate. The 2D imaging rate may be the same as the 3D imaging rate. However, the 2D imaging rate may be different from the 3D imaging rate. For example, the imaging apparatus 21 may image the target object OBJ at the 2D imaging rate, at which the target object OBJ is imaged tens of times to hundreds of times (as one example, 500 times) per second. As a result, the imaging apparatus 21 generates the image data IMG_2D in a cycle based on the predetermined 2D imaging rate. For example, the imaging apparatus 21 may generate tens to hundreds of (as one example, 500) image data IMG_2D per second. The control apparatus 3 acquires the image data IMG_2D each time the imaging apparatus 21 generates the image data IMG_2D. Namely, the control apparatus 3 may acquire tens to hundreds of (as one example, 500) image data IMG_2D per second.

However, the imaging apparatus 21 may not periodically image the target object OBJ at the desired 2D imaging rate. For example, the imaging apparatus 21 may image the target object OBJ when the imaging apparatus 21 receives a control signal for controlling the imaging apparatus 21 to image the target object OBJ from the control apparatus 3.

Note that the image data IMG_2D may be referred to as two-dimensional position data that indicates a two-dimensional position of the target object OBJ captured in the image data IMG_2D. The image data IMG_2D (the two-dimensional position data) may be data that indicates a two-dimensional position of at least a part of a surface of the target object OBJ. Especially, the image data IMG_2D (the two-dimensional position data) is data that indicates a two-dimensional position of each of a plurality of points on the target object OBJ. For example, the image data IMG_2D (the two-dimensional position data) may be data that indicates a two-dimensional position of each of the plurality of points on the surface of the target object OBJ. For example, the image data IMG_2D (the two-dimensional position data) may be data that indicates the two-dimensional position of each of the plurality of points that correspond to a plurality of parts of the surface of the target object OBJ, respectively.

The imaging apparatus 21 may image the non-target object that is different from the target object OBJ, in addition to the target object OBJ on which the robot 1 performs the predetermined process. For example, in a case where both the target object OBJ and the non-target object are included in an imaging range (a field of view) of the imaging apparatus 21, the imaging apparatus 21 may image both the target object OBJ and the non-target object. As a result, the imaging apparatus 21 may generate the image data IMG_2D indicating an image in which both the target object OBJ and the non-target object are captured. However, the imaging apparatus 21 may image the target object OBJ and may not image the non-target object. Namely, the imaging apparatus 21 may generate the image data IMG_2D indicating an image in which the target object OBJ is captured and the non-target object is not captured. In both cases, the imaging apparatus 21 generates the image data IMG_2D indicating an image in which at least the target object OBJ is captured. Namely, the imaging apparatus 21 generates the image data IMG_2D that includes at least image data of the target object OBJ.

As described above, the imaging apparatus 21 may image the plurality of target objects OBJ on which the end effector 4 sequentially performs the predetermined process. In this case, the end effector 4 may perform the predetermined process on a third target object OBJ of the plurality of target objects OBJ in a third period, and then perform the predetermined process on a fourth target object OBJ, which is different from the third target object OBJ, of the plurality of target objects OBJ in a fourth period following the third period. In this case, other target object OBJ, which is different from the third target object OBJ on which the end effector 4 performs the predetermined process, of the plurality of target objects OBJ may be regarded as the target object OBJ that is not the process performed object, on which the robot 1 performs the predetermined process in the third period, (alternatively, the non-target object) in the third period. Similarly, other target object OBJ, which is different from the fourth target object OBJ on which the end effector 4 performs the predetermined process, of the plurality of target objects OBJ may be regarded as the target object OBJ that is not the process performed object, on which the robot 1 performs the predetermined process in the fourth period, (alternatively, the non-target object) in the fourth period. Note that each of the third target object OBJ and the fourth target object OBJ may be different target objects OBJ of the plurality of target objects OBJ.

In a case where the control apparatus 3 acquires the image data IMG_3D, the three-dimensional position data generation unit 311 generates three-dimensional position data WSD based on the acquired image data IMG_3D each time the control apparatus 3 acquires the image data IMG_3D (a step S2). Furthermore, the three-dimensional position data generation unit 311 outputs the generated three-dimensional position data WSD to the position pose calculation unit 312 However, in a case where the control apparatus 3 does not acquire the image data IMG_3D (for example, the control apparatus 3 acquires the image data IMG_2D), the three-dimensional position data generation unit 311 may not generate the three-dimensional position data WSD. Namely, the control apparatus 3 may not perform an operation at the step S2.

Note that the control apparatus 3 may generate the three-dimensional position data WSD based on each of a part of the plurality of image data IMG_3D generated by the imaging apparatus 22. The control apparatus 3 may generate the three-dimensional position data WSD without using other part of the plurality of image data IMG_3D generated by the imaging apparatus 22.

The three-dimensional position data WSD is data that indicates a three-dimensional position of the target object OBJ captured in the image data IMG_3D. For example, the three-dimensional position data WSD may be data that indicates a three-dimensional position of at least a part of a surface of the target object OBJ. Especially, the three-dimensional position data WSD is data that indicates a three-dimensional position of each of a plurality of points of the target object OBJ. For example, the three-dimensional position data WSD may be data that indicates a three-dimensional position of each of the plurality of points on the surface of the target object OBJ. For example, the three-dimensional position data WSD may be data that indicates a three-dimensional position of each of the plurality of points, which correspond to a plurality of parts of the surface of the target object OBJ, respectively. Note that the three-dimensional position of the target object OBJ may mean at least one of the three-dimensional position of at least a part of the surface of the target object OBJ, the three-dimensional position of each of the plurality of points of the target object OBJ, the three-dimensional position of each of the plurality of points of the surface of the target object OBJ, and the three-dimensional position of each of the plurality of points, which correspond to the plurality of parts of the surface of the target object OBJ, respectively, in the below-described description in a case where there is no specific notation.

Specifically, as described above, the target object OBJ on which the projection pattern is projected is captured in the image indicated by the image data IMG_3D. In this case, the projection pattern in the image indicated by the image data IMG_3D reflects a three-dimensional shape of at least a part of the surface of the target object OBJ on which the projection pattern is projected. A shape of the projection pattern captured in the image indicated by the image data IMG_3D reflects the three-dimensional shape of at least a part of the surface of the target object OBJ on which the projection pattern is projected. Therefore, the three-dimensional position data generation unit 311 may calculate the three-dimensional shape of at least a part of the surface of the target object OBJ based on the projection pattern captured in the image indicated by the image data IMG_3D. The three-dimensional shape of at least a part of the surface of target object OBJ substantially indicates the three-dimensional position of each of the plurality of points of the target object OBJ. This is because each of the plurality of points of the target object OBJ is included in the surface of the target object OBJ. Therefore, a processing for calculating the three-dimensional shape of at least a part of the surface of the target object OBJ may be considered to be substantially equivalent to a processing for calculating the three-dimensional position of each of the plurality of points of the target object OBJ. Therefore, the three-dimensional position data generation unit 311 can generate the three-dimensional position data WSD based on the image data IMG_3D.

Incidentally, considering that each of the plurality of points of the target object OBJ is included in the surface of the target object OBJ, the three-dimensional position data WSD indicating the three-dimensional position of each of the plurality of points of the target object OBJ may be considered to be substantially equivalent to three-dimensional shape data indicating the three-dimensional shape of at least a part of the target object OBJ (especially, the three-dimensional shape of at least a part of the surface of the target object OBJ).

In order to generate the three-dimensional position data WSD, the three-dimensional position data generation unit 311 may calculate parallax by performing a matching for each part (for example, each pixel) between the images indicated by the two image data included in the image data IMG_3D, respectively. Specifically, in this matching, the three-dimensional position data generation unit 311 may calculate the parallax by performing the matching for each part of the projection pattern included in the images indicated by the two image data, respectively (namely, each part between the projection patterns included in the images, respectively). The three-dimensional position data generation unit 311 may calculate the three-dimensional position of each of the plurality of points of the target object OBJ by using a well-known method based on a principle of triangulation using the calculated parallax. As a result, the three-dimensional position data WSD indicating the three-dimensional position of each of the plurality of points of the target object OBJ is generated. In this case, a calculation accuracy of the parallax is higher in a case where the matching for each part between images in which the projection pattern is included (namely, for each part between the projection patterns) is performed, compared to a case where the matching for each part between images in which the projection pattern is not included is performed. Therefore, an accuracy of the generated three-dimensional position data WSD (namely, a calculation accuracy of the three-dimensional position of each of the plurality of points of the target object OBJ) is higher.

The three-dimensional position data WSD may be any data as long as it can indicate the three-dimensional position of each of the plurality of points of the target object OBJ. Namely, the three-dimensional position data WSD may be any data that directly or indirectly indicates the three-dimensional position of each of the plurality of points of the target object OBJ. For example, the three-dimensional position data WSD may include coordinate information indicating the three-dimensional position of each of the plurality of points of the target object OBJ. For example, the three-dimensional position data WSD may include information indicating the three-dimensional shape of at least a part of the target object OBJ.

Depth image data is one example of the three-dimensional position data WSD. The depth image data is image data in which depth information is associated with each pixel of a depth image indicated by the depth image data in addition to or instead of brightness information. The depth information is information that indicates a distance between each part of the target object OBJ captured in each pixel and the imaging apparatus 22 (namely, a depth). The distance between each part of the target object OBJ captured in each pixel and the imaging apparatus 22 (namely, the depth) can be calculated from the parallax described above. Note that the depth image data may be image data in which the brightness information of each pixel indicates the depth of each part of the target object OBJ (namely, the distance between each part of the target object OBJ and the imaging apparatus 22). The three-dimensional position data generation unit 311 may calculate the distance between the imaging apparatus 22 and each part of the target object OBJ captured in the image indicated by the image data IMG_3D based on the projection pattern captured in the image indicated by the image data IMG_3D, and associates, as the depth information, the calculated distance to each pixel of the image indicated by the image data IMG_3D to generate the depth image.

Point cloud data is another example of the three-dimensional position data WSD. The point cloud data is data indicating a set of points, each of which corresponds to each part of the target object OBJ captured in the image indicated by the image data IMG_3D, in a three-dimensional space. The three-dimensional position data generation unit 311 may generate the point cloud data based on the depth image data and a camera parameter of the imaging apparatus 22. Note that an example in which the point cloud data is used as the three-dimensional position data WSD will be described in the below-described description.

As described above, in a case where not only the target object OBJ on which the robot 1 performs the predetermined process but also the non-target object that is different from the target object OBJ is included in the imaging range (the field of view) of the imaging apparatus 22, the image data IMG_3D indicates the image in which both the target object OBJ and the non-target object are captured. In this case, the three-dimensional position data WSD may be data indicating not only the three-dimensional position of the target object OBJ captured in the image data IMG_3D but also a three-dimensional position of the non-target object captured in the image data IMG_3D. Namely, the three-dimensional position data WSD may include data indicating a three-dimensional position of each of a plurality of points of the non-target object imaged by the imaging apparatus 22. Even in this case, the three-dimensional position data WSD may be considered to be the data indicating the three-dimensional position of each of the plurality of points of the target object OBJ as long as the three-dimensional position data WSD includes the data indicating the three-dimensional position of the target object OBJ. This is because the fact remains that the three-dimensional position data WSD includes the data indicating the three-dimensional position of the target object OBJ even in a case where the three-dimensional position data WSD includes the data indicating the three-dimensional position of the non-target object.

Then, the position pose calculation unit 312 calculates at least one of the position and the pose of the target object OBJ based on at least one of the image data IMG_2D acquired at the step S1 and the three-dimensional position data WSD generated at the step S2 (a step S3). As a result, the position pose calculation unit 312 generates position pose information POI indicating at least one of the position and the pose of the target object OBJ (the step S3). The position pose data POI may include position data indicating the position of the target object OBJ. The position pose data POI may include pose data indicating the pose of the target object OBJ, in addition to or instead of the position data indicating the position of the target object OBJ. Namely, the position-attitude data POI may include at least one of the position data and the pose data.

At the step S3, the position pose calculation unit 312 calculates at least one of the position and the pose of the target object OBJ in the global coordinate system. Namely, the position pose calculation unit 312 generates the position pose information POI indicating at least one of the position and the pose of the target object OBJ in the global coordinate system. For example, the robot control apparatus 13 may control the robot arm 12 so that the end effector 4 is positioned at a desired position in the global coordinate system. The global coordinate system is a coordinate system that is defined by an X-axis(GL), a Y-axis(GL) and a Z-axis(GL) that are orthogonal to one another. The X-axis(GL) may be an axis along a horizontal plane. The Y-axis(GL) may be an axis along the horizontal plane. The Z-axis(GL) may be an axis orthogonal to the horizontal plane. The Z-axis(GL) may be an axis extending along a gravity direction. Note that an X-axis, a Y-axis, and a Z-axis illustrated in FIG. 2 may be the X-axis(GL), the Y-axis(GL), and the Z-axis(GL), respectively. Note that an origin of the global coordinate system may not be an origin of the X-axis(GL), the Y-axis(GL), and the Z-axis(GL) illustrated in FIG. 2. For example, the origin of the global coordinate system may be set to any position of the base 11 in FIG. 2. For example, the origin of the global coordinate system may be set to any position of the support surface S. For example, the origin of the global coordinate system may be set to any position of a contact surface of the base 11 relative to the support surface S (for example, a center or a center of gravity of the contact surface).

The position pose calculation unit 312 may calculate, as the position of the target object OBJ in the global coordinate system, at least one of a position Tx(GL) of the target object OBJ in a X-axis direction(GL) parallel to the X-axis(GL), a position Ty(GL) of the target object OBJ in a Y-axis direction(GL) parallel to the Y-axis(GL), a position Tz(GL) of the target object OBJ in a Z-axis direction(GL) parallel to the Z-axis(GL). The position pose calculation unit 312 may calculate, as the pose of the target object OBJ in the global coordinate system, a rotational amount Rx(GL) of the target object OBJ around the X-axis(GL), a rotational amount Ry(GL) of the target object OBJ around the Y-axis(GL), and a rotational amount Rz(GL) of the target object OBJ around the Z-axis(GL). This is because the rotational amount Rx(GL) of the target object OBJ around the X-axis(GL), the rotational amount Ry(GL) of the target object OBJ around the Y-axis(GL), and the rotational amount Rz(GL) of the target object OBJ around the Z-axis(GL) are equivalent to a parameter representing the pose of the target object OBJ around the X-axis(GL), a parameter representing the pose of the target object OBJ around the Y-axis(GL), and a parameter representing the pose of the target object OBJ around the Z-axis(GL), respectively. Therefore, in the below-described description, the rotational amount Rx(GL) of the target object OBJ around the X-axis(GL), the rotational amount Ry(GL) of the target object OBJ around the Y-axis(GL), and the rotational amount Rz(GL) of the target object OBJ around the Z-axis(GL) are referred to as the pose RX(GL) of the target object OBJ around the X-axis(GL), the pose RY(GL) of the target object OBJ around the Y-axis(GL), and the pose Rz(GL) of the target object OBJ around the Z-axis(GL), respectively.

Note that the pose Rx(GL) of the target object OBJ around the X-axis(GL), the pose Ry(GL) of the target object OBJ around the Y-axis(GL), and the pose Rz(GL) of the target object OBJ around the Z-axis(GL) may be considered to represent a position of the target object OBJ in a rotational direction around the X-axis(GL), a position of the target object OBJ in a rotational direction around the Y-axis(GL), and a position of the target object OBJ in a rotational direction around the Z-axis(GL), respectively. Namely, each of the pose Rx(GL) of the target object OBJ around the X-axis(GL), the pose Ry(GL) of the target object OBJ around the Y-axis(GL), and the pose Rz(GL) of the target object OBJ around the Z-axis(GL) may be regarded as a parameter representing the position of the target object OBJ.

Thus, the position pose calculation unit 312 may calculates at least one of the position Tx(GL), the position Ty(GL), the position Tz(GL), the pose Rx(GL), the pose Ry(GL), and the pose Rz(GL), as at least one of the position and the pose of the target object OBJ in the global coordinate system, at the step S3 in FIG. 4.

At the step S3 in FIG. 4, the position pose calculation unit 312 may calculate at least one of the position and the pose of the target object OBJ by performing a matching processing using at least one of the image data IMG_2D and the three-dimensional position data WSD. In the below-described description, an example in which the position pose calculation unit 312 calculate at least one of the position and the pose of the target object OBJ by performing the matching processing using the three-dimensional position data WSD will be described, for convenience of description. Note that the matching processing using the three-dimensional position data WSD is referred to as a 3D matching processing in the below-described description.

Specifically, the position pose calculation unit 312 may perform the 3D matching processing using the three-dimensional position data WSD and three-dimensional model data WMD indicating a three-dimensional model that is a reference for the target object OBJ. In this case, the 3D matching processing may be regarded as a matching processing using the point cloud indicated by the three-dimensional position data WSD and a three-dimensional model indicated by the three-dimensional model data. Note that the 3D matching processing itself may be the same as an existing matching processing. For example, the position pose calculation unit 312 may perform the 3D matching processing by using a known method including at least one of a RANSAC (Random Sample Consensus), a SIFT (Scale-Invariant Feature Transform), a ICP (Iterative Closest Point), and a DSO (Direct Sparse Odometry) may be used, for example

The three-dimensional model based on the three-dimensional position data WSD may include a point cloud model that is a three-dimensional model indicating a three-dimensional shape of the target object OBJ by using a point cloud indicated by the three-dimensional position data WSD. The three-dimensional model based on the three-dimensional position data WSD may include a polygon model or a mesh model that is generated by connecting the plurality of points, which are included in the point cloud indicated by the three-dimensional position data WSD, with surfaces (especially, polygonal surfaces in which each point is a vertex thereof). The three-dimensional model based on the three-dimensional position data WSD may include a solid model that is generated by connecting the plurality of points, which are included in the point cloud indicated by the three-dimensional position data WSD, with smooth surfaces.

The three-dimensional model data WMD is data indicating a template model TM3 that is a three-dimensional model of the target object OBJ. Namely, the three-dimensional model data WMD is data indicating the template model TM3 having a standard three-dimensional shape of the target object OBJ. The template model may be a CAD model of the target object OBJ. The template model may be a three-dimensional model having a shape that is the same as the three-dimensional shape of the target object OBJ acquired by measuring the three-dimensional shape of the actual target object OBJ in advance. The template model may be a polygon model, a mesh model, or a solid model. The three-dimensional model data WMD may be point cloud data indicating the template model TM3 of the target object OBJ. The three-dimensional model data WMD may be polygon model data, mesh model data, or solid model data generated from the point cloud data. Note that the actual target object OBJ that is measured in advance to generate the three-dimensional model data WMD may be a standard or good target object OBJ.

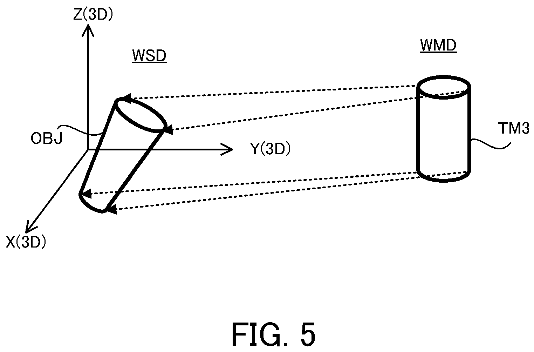

In this case, the position pose calculation unit 312 may perform, on the three-dimensional position data WSD, the 3D matching processing (in other words, a template matching processing) that using the template model TM3 indicated by the three-dimensional model data WMD as a template, as illustrated in FIG. 5. Specifically, the position pose calculation unit 312 may translate, scale and / or rotate the template model TM3 in the 3D imaging coordinate system so that a feature part (for example, at least one of a feature point and an edge) of the template model TM3 indicated by the three-dimensional model data WMD is closer to (typically, matches) a feature part of the target object OBJ whose three-dimensional position is indicated by the three-dimensional position data WSD (for example, a point cloud corresponding to the target object OBJ indicated by the three-dimensional position data WSD, or a three-dimensional model (for example, a point cloud model) reflecting the actual three-dimensional position of the target object OBJ). Namely, the position pose calculation unit 312 may change a positional relationship between a coordinate system of the three-dimensional model data WMD (for example, a coordinate system of the CAD model) and the 3D imaging coordinate system so that the feature part of the target object OBJ whose three-dimensional position is indicated by the three-dimensional position data WSD (for example, the point cloud corresponding to the target object OBJ indicated by the three-dimensional position data WSD, or the three-dimensional model (for example, the point cloud model) reflecting the actual three-dimensional position of the target object OBJ) is closer to (typically, matches) the feature part of the template model TM3 indicated by the three-dimensional model data WMD. As a result, the position pose calculation unit 312 can determine the positional relationship between the coordinate system of the three-dimensional model data WMD and the 3D imaging coordinate system. Then, the position pose calculation unit 312 may calculate at least one of the position and the pose of the target object OBJ in the 3D imaging coordinate system from at least one of the position and the pose of the target object OBJ in the coordinate system of the three-dimensional model data WMD based on the positional relationship between the coordinate system of the three-dimensional model data WMD and the 3D imaging coordinate system.

Then, the position pose calculation unit 312 transform at least one of the position and the pose of the target object OBJ in the 3D imaging coordinate system to at least one of the position and the pose of the target object OBJ in the robot coordinate system based on a transformation matrix for transforming a three-dimensional coordinate in one of the robot coordinate system and the 3D imaging coordinate system to a three-dimensional coordinate in the other one of the robot coordinate system and the 3D imaging coordinate system. In a case where the robot coordinate system is used as the global coordinate system, at least one of the position and the pose of the target object OBJ in the robot coordinate system corresponds to at least one of the position and the pose of the target object OBJ in the global coordinate system. However, in a case where the coordinate system that is different from the robot coordinate system is used as the global coordinate system, the position pose calculation unit 312 may calculate at least one of the position and the pose of the target object OBJ in the global coordinate system from at least one of the position and the pose of the target object OBJ in the robot coordinate system based on a transformation matrix for transforming a three-dimensional coordinate in one of the robot coordinate system and the global coordinate system to a three-dimensional coordinate in the other one of the robot coordinate system and the global coordinate system.

In making the feature part of the three-dimensional model indicated by the three-dimensional model data WMD be closer to the feature part of the target object OBJ whose three-dimensional position is indicated by the three-dimensional position data WSD, the position pose calculation unit 312 may calculates a matching similarity that is a degree of similarity between the three-dimensional model of the target object OBJ indicated by the three-dimensional model data WMD and the target object OBJ whose three-dimensional position is indicated by the three-dimensional position data WSD (for example, the point cloud of the target object OBJ). Note that the matching similarity, which is the similarity between the three-dimensional model of the target object OBJ indicated by the three-dimensional model data WMD and the target object OBJ whose three-dimensional position is indicated by the three-dimensional position data WSD (for example, the point cloud of the target object OBJ), may be simply referred to as the matching similarity of the target object OBJ. The position pose calculation unit 312 may translate, scale, and / or rotate the three-dimensional model indicated by the three-dimensional model data WMD to maximize the matching similarity. Note that the matching similarity may be considered to be equivalent to a correlation degree that indicates a correlation between the three-dimensional model indicated by the three-dimensional model data WMD and the target object OBJ whose three-dimensional position is indicated by the three-dimensional position data WSD. Note that it can be said that the correlation degree is an index value that indicates the correlation between the three-dimensional model indicated by the three-dimensional model data WMD and the target object OBJ whose three-dimensional position is indicated by the three-dimensional position data WSD. Note that the matching similarity may be referred to as a matching score.

In a case where the target object OBJ whose calculated matching similarity is higher than a predetermined matching determination threshold value is detected by the 3D matching processing, the position pose calculation unit 312 may select this target object OBJ as one target object OBJ on which the end effector 4 should perform the predetermined process (namely, the process performed object). On the other hand, in a case where the target object OBJ whose calculated matching similarity is lower than the predetermined matching determination threshold value is detected by the 3D matching processing, the position pose calculation unit 312 may not select this target object OBJ as one target object OBJ on which the end effector 4 should perform the predetermined process (namely, the process performed object).

Depending on the three-dimensional position data WSD, there is a possibility that the three-dimensional position data WSD indicates the position of each of the plurality of target objects OBJ. For example, in a case where the plurality of workpieces W are placed on the placing apparatus T in the disordered or ordered manner, there is a possibility that the imaging apparatus 22 images the plurality of workpieces W and generates the image data IMG_3D in which the plurality of workpieces W are captured as the plurality of target objects OBJ. For example, in a case where the plurality of workpieces W are contained in the container (the container box) CB, which is one example of the placing apparatus T, in the disordered or ordered manner, there is a possibility that the imaging apparatus 22 images the plurality of workpieces W and generates the image data IMG_3D in which the plurality of workpieces W are captured as the plurality of target objects OBJ. As a result, there is a possibility that the position pose calculation unit 312 generates the three-dimensional position data WSD that indicates the position of each of the plurality of target objects OBJ. In this case, the position pose calculation unit 312 may perform the above-described 3D matching processing on each of the plurality of target objects OBJ. For example, the position pose calculation unit 312 may sequentially perform the 3D matching processing on the plurality of target objects OBJ. Alternatively, the position pose calculation unit 312 may perform a plurality of 3D matching processing, which are for the plurality of target objects OBJ, respectively, simultaneously in parallel. Then, the position pose calculation unit 312 may select one target object OBJ, whose matching similarity is higher than the matching determination threshold value and whose matching similarity is maximum, from among the plurality of target objects OBJ as the process performed object on which the end effector 4 should perform the predetermined process. Alternatively, the position pose calculation unit 312 may select one target object OBJ, whose matching similarity is higher than the matching determination threshold value and whose matching similarity is the N-th (wherein, N is a constant value representing an integer that is equal to or larger than 2) highest, from among the plurality of target objects OBJ as the process performed object on which the end effector 4 should perform the predetermined process. Alternatively, the position pose calculation unit 312 may select one target object OBJ, which corresponds to the matching similarity higher than the matching determination threshold value, from among the plurality of target objects OBJ as the process performed object. Alternatively, the position pose calculation unit 312 may select one target object OBJ, which corresponds to the matching similarity higher than the matching determination threshold value and which is the closest to the end effector 4, from among the plurality of target objects OBJ as the process performed object. Alternatively, for example, in a case where the plurality of target objects OBJ are contained in the container CB (the placing apparatus T) (for example, in a case where the plurality of objects are randomly stacked), the position pose calculation unit 312 may select one target object OBJ, which corresponds to the matching similarity higher than the matching determination threshold value and whose Z coordinate along the Z-axis is the greatest (which is positioned at the highest position), from among the plurality of target objects OBJ as the process performed object. Note that the Z-coordinate of each of the plurality of target objects OBJ may be the Z-position along the Z-axis of the global coordinate system of the that is calculated by the above-described 3D matching processing. Alternatively, the position pose calculation unit 312 may select one target object OBJ, which corresponds to the matching similarity higher than the matching determination threshold value and on which the end effector 4 can perform the predetermined process, from among the plurality of target objects OBJ as the process performed object.

However, in a case where the end effector 4 can simultaneously perform the predetermined process on two or more target objects OBJ, the position posture calculation unit 312 may select each of at least two of the plurality of target objects OBJ as the process performed objects. Namely, the position posture calculation unit 312 may select at least two process performed objects on which the end effector 4 should perform the predetermined process simultaneously. Note that an example in which the position posture calculation unit 312 selects one target object OBJ of the plurality of target objects OBJ as the process performed object will be described in the below-described description for convenience of description.

Note that the position pose calculation unit 312 may calculate the matching similarities of the plurality of target objects OBJ, then select one target object OBJ on which the end effector 4 should perform the predetermined process based on the matching similarities of the plurality of target objects OBJ, and then calculate at least one of the position and the pose of the selected one target object OBJ. In this case, the position pose calculation unit 312 may not calculate the position and the pose of other target object OBJ that is not selected as one target object OBJ on which the end effector 4 should perform the predetermined process. Alternatively, since at least one of the position and the pose of the target object OBJ is calculated as a result of the 3D matching processing as described above, the position pose calculation unit 312 may be considered to calculate the above-described matching similarity together with at least one of the position and the pose of the target object OBJ. In this case, the position pose calculation unit 312 may calculate the matching similarities of the plurality of target objects OBJ together with at least one of the position and the pose of each of the plurality of target objects OBJ, and then select one target object OBJ on which the end effector 4 should perform the predetermined process based on the matching similarities of the plurality of target objects OBJ. Alternatively, the position pose calculation unit 312 may calculate at least one of the positions and poses of the plurality of target objects OBJ, then calculate the matching similarities of the plurality of target objects OBJ, and then select one target object OBJ on which the end effector 4 should perform the predetermined process based on the calculated matching similarities.

However, at the step S3 in FIG. 4, the position pose calculation unit 312 may calculate at least one of the position and the pose of the target object OBJ by performing a matching processing using the image data IMG_2D, in addition to or instead of performing the 3D matching processing using the three-dimensional position data WSD. Note that the matching processing using the image data IMG_2D is referred to as a 2D matching processing in the below-described description.

Specifically, the position pose calculation unit 312 may perform the 2D matching processing using the image data IMG_2D (the two-dimensional position data) and two-dimensional model data indicating a two-dimensional model that is a reference for the target object OBJ. Specifically, the position pose calculation unit 312 may perform, as the 2D matching processing, an object detection processing for detecting the target object OBJ indicated by a template image in the image indicated by the image data IMG_2D by using the two-dimensional model indicated by the two-dimensional model data as the template image. In other words, the position pose calculation unit 312 may perform, as the matching processing, the object detection processing for detecting the target object OBJ in the image indicated by the image data IMG_2D by detecting a similar image part that is similar to the template image in the image indicated by the image data IMG_2D. Note that the 2D matching processing (in this case, the object detection processing) itself may be the same as an existing matching processing. For example, the position pose calculation unit 312 may perform the 2D matching processing by using a known method such as a SIFT (Scale-Invariant Feature Transform) or a SURF (Speed-Upped Robust Feature).

The two-dimensional model data may be data based on the three-dimensional model data of the target object OBJ. Here, the two-dimensional model data may be generated from CAD (Computer Aided Design) model data of the target object OBJ, or may be generated from model data (data indicating a polygon model or a mesh model) of the target object OBJ generated based on a pre-measurement result using a known three-dimensional shape measurement apparatus or the imaging apparatus 22. For example, the two-dimensional model data may be two-dimensional image data representing at least a part of a two-dimensional model of the target object OBJ that is generated by virtually projecting at least a part of the three-dimensional model indicated by the three-dimensional model data of the target object OBJ on a virtual plane. For example, the two-dimensional model data may be two-dimensional image data representing at least a part of an edge of the two-dimensional model of the target object OBJ that is generated by virtually projecting at least a part of the three-dimensional model indicated by the three-dimensional model data of the target object OBJ on the virtual plane. Note that the two-dimensional model data may not be the data based on the three-dimensional model data of the target object OBJ. For example, the two-dimensional model data may be image data IMG_2D generated by the imaging apparatus 21 imaging the target object OBJ in advance. For example, the two-dimensional model data may be a feature part on the image indicated by the image data IMG_2D generated by the imaging apparatus 21 imaging the target object OBJ in advance. For example, the feature part on the image indicated by the image data IMG_2D may be at least one of a feature point and an edge of the target object OBJ captured in the image indicated by the image data IMG_2D. Note that the two-dimensional model may be regarded as a model of at least a part of the edge of the target object OBJ (an edge model) in a case where the feature part indicated by the image data IMG_2D includes the edge of the target object OBJ. The feature part on the image indicated by the image data IMG_2D may be at least one of at least one of a plurality of feature points of the target object OBJ captured in the image indicated by the image data IMG_2D and at least partial edge of the edges of the target object OBJ. Note that the feature part on the image indicated by the image data IMG_2D may be detected by a known image processing.

The position pose calculation unit 312 may translate, scale and / or rotate the two-dimensional model of the target object OBJ included in the template image so that a feature part (for example, at least one of a feature point and an edge) of the two-dimensional model of the target object included in the template image is closer to (typically, matches) a feature part of the target object OBJ captured in the image indicated by the image data IMG_2D. As a result, the position pose calculation unit 312 can determine a positional relationship between the coordinate system of the two-dimensional model data and the 2D imaging coordinate system. Then, the position pose calculation unit 312 may calculate at least one of the position and the pose of the target object OBJ in the 2D imaging coordinate system from at least one of the position and the pose of the target object OBJ in the coordinate system of the two-dimensional model data based on the positional relationship between the coordinate system of the two-dimensional model data WMD and the 2D imaging coordinate system.

Then, the position pose calculation unit 312 transform at least one of the position and the pose of the target object OBJ in the 2D imaging coordinate system to at least one of the position and the pose of the target object OBJ in the robot coordinate system based on a transformation matrix for transforming a three-dimensional coordinate in one of the robot coordinate system and the 2D imaging coordinate system to a three-dimensional coordinate in the other one of the robot coordinate system and the 2D imaging coordinate system. In a case where the robot coordinate system is used as the global coordinate system, at least one of the position and the pose of the target object OBJ in the robot coordinate system corresponds to at least one of the position and the pose of the target object OBJ in the global coordinate system. However, in a case where the coordinate system that is different from the robot coordinate system is used as the global coordinate system, the position pose calculation unit 312 may calculate at least one of the position and the pose of the target object OBJ in the global coordinate system from at least one of the position and the pose of the target object OBJ in the robot coordinate system based on a transformation matrix for transforming a three-dimensional coordinate in one of the robot coordinate system and the global coordinate system to a three-dimensional coordinate in the other one of the robot coordinate system and the global coordinate system.

In a case where 2D matching processing is performed, the position pose calculation unit 312 may calculate a matching similarity, as in a case where the 3D matching processing is performed. The matching similarity calculated in the 2D matching processing is a similarity between the template image (namely, the two-dimensional model of the target object OBJ) and the image indicated by the image data IMG_2D (especially, an image part with which the target object OBJ in the template image is aligned). Note that the matching similarity, which is the similarity between the template image (namely, the two-dimensional model of the target object OBJ) and the image indicated by the image data IMG_2D (especially, the image part with which the target object OBJ in the template image is aligned), may be simply referred to as the matching similarity of the target object OBJ in the below-described description. Note that a usage of the matching similarity calculated in the 2D matching processing may be the same as a usage of the matching similarity calculated in the 3D matching processing, and therefore, a detailed description thereof is omitted.

In a case where the 2D matching processing is performed, the position pose calculation unit 312 may perform the 2D matching processing sequentially or in parallel on the plurality of target objects OBJ captured in the image indicated by the image data IMG_2D, as in a case where the 3D matching processing is performed. Then, the position pose calculation unit 312 may select at least one of the plurality of target objects OBJ as the process performed object, as in a case where the 3D matching processing is performed. In this case, the position pose calculation unit 312 may select at least one of the plurality of target objects OBJ as the process performed object based on the matching similarity. Note that the robot control processing illustrated in FIG. 4 may not include the step S2 in FIG. 4 in a case where the position pose calculation unit 312 calculates at least one of the position and the pose of the target object OBJ by performing the matching processing using the image data IMG_2D instead of performing the 3D matching processing using the three-dimensional position data WSD at the step S3 in FIG. 4.

Alternatively, at the step S3 in FIG. 4, the position pose calculation unit 312 may calculate at least one of the position and the pose of the target object OBJ by performing the matching processing using both the three-dimensional position data WSD and the image data IMG_2D, in addition to or instead of performing at least one of the 3D matching processing using the three-dimensional position data WSD and the 2D matching processing using the image data IMG_2D.

For example, the position pose calculation unit 312 may calculate at least one of the position and the pose of the target object OBJ in the global coordinate system from a part of the position and the pose of the target object OBJ in the 2D imaging coordinate system calculated based on the image data IMG_2D and a part of the position and the pose of the target object OBJ in the 3D imaging coordinate system calculated based on the image data IMG_3D. For example, the position pose calculation unit 312 may set at least one of an initial position and an initial pose of the three-dimensional model (the template model TM3) used for the 3D matching processing based on at least one of the position and the pose of the target object OBJ in the 2D imaging coordinate system calculated based on the image data IMG_2D, and then calculate at least one of the position and the pose of the target object OBJ in the 3D imaging coordinate system by performing the 3D matching processing using the three-dimensional model positioned at the set initial position and / or positioned with the set initial the pose, and then calculate at least one of the position and the pose of the target object OBJ in the global coordinate system from at least one of the position and the pose of the target object OBJ in the 3D imaging coordinate system.

In a case where at least one of the position and the pose of the target object OBJ is calculated by using both the image data IMG_2D and the three-dimensional position data WSD, the position pose calculation unit 312 may select one target object OBJ, which satisfies a condition that a sum or a product of the matching similarity calculated by the 2D matching processing (it is referred to as a 2D matching similarity in the below-described description) and the matching similarity calculated by the 3D matching processing (it is referred to as a 3D matching similarity in the below-described description) is maximum, as one target object OBJ on which the end effector 4 should perform the predetermined process. The position pose calculation unit 312 may select one target object OBJ, which satisfies a condition that the 2D matching similarity is higher than the matching determination threshold value and the 2D matching similarity is maximum, as one target object OBJ on which the end effector 4 should perform the predetermined process. The position pose calculation unit 312 may select one target object OBJ, which satisfies a condition that the 3D matching similarity is higher than the matching determination threshold value and the 3D matching similarity is maximum, as one target object OBJ on which the end effector 4 should perform the predetermined process. The position pose calculation unit 312 may select one target object OBJ, which satisfies a condition that both the 2D matching similarity and the 3D matching similarity are higher than the matching determination threshold, as one target object OBJ on which the end effector 4 should perform the predetermined process. The position pose calculation unit 312 may select one target object OBJ, which satisfies a condition that both the 2D matching similarity and the 3D matching similarity are higher than the matching determination threshold and which is the closest to the end effector 4, as one target object OBJ on which the end effector 4 should perform the predetermined process. The position pose calculation unit 312 may select one target object OBJ, which satisfies a condition that both the 2D matching similarity and the 3D matching similarity are higher than the matching determination threshold and whose Z coordinate along the Z-axis is the greatest (which is positioned at the highest position), as one target object OBJ on which the end effector 4 should perform the predetermined process.

Note that the control apparatus 3 may not acquire the image data IMG_2D at the step S1 in a case where the position pose calculation unit 312 performs the matching processing using the three-dimensional position data WSD and does not perform the matching processing using the image data IMG_2D. The imaging apparatus 21 may not image the target object OBJ in a case where the control apparatus 3 does not acquire the image data IMG_2D. The imaging system 2 may not include the imaging apparatus 21 in a case where the control apparatus 3 does not acquire the image data IMG_2D.

The control apparatus 3 may not acquire the image data IMG_3D at the step S1 in a case where the position pose calculation unit 312 performs the matching processing using the image data IMG_2D and does not perform the matching processing using the three-dimensional position data WSD. The imaging apparatus 22 may not image the target object OBJ in a case where the control apparatus 3 does not acquire the image data IMG_3D. The imaging system 2 may not include the imaging apparatus 22 in a case where the control apparatus 3 does not acquire the image data IMG_3D. The control apparatus 3 may not include the three-dimensional position data generation unit 311 in a case where the control apparatus 3 does not acquire the image data IMG_3D.

Note that an example in which the position pose calculation unit 312 performs the 3D matching processing at the step S3 in FIG. 4 will be described in the below-described description.

Then, the signal generation unit 313 generates the robot control signal by using the position pose information POI generated at the step S3 (a step S4). For example, the signal generation unit 313 may generate the robot control signal so that the end effector 4 performs the predetermined process on the target object OBJ. For example, the signal generation unit 313 may generate the robot control signals so that the end effector 4 approaches the target object OBJ to perform the predetermined process on the target object OBJ. For example, the signal generation unit 313 may generate the robot control signal so that the positional relationship between the end effector 4 and the target object OBJ is the desired positional relationship. For example, the signal generation unit 313 may generate the robot control signal for controlling the operation of the robot arm 12 so that the positional relationship between the end effector 4 and the target object OBJ is the desired positional relationship. For example, the signal generation unit 313 may generate the robot control signal so that the end effector 4 performs the predetermined process on the target object OBJ at a timing at which the positional relationship between the end effector 4 and the target object OBJ is the desired positional relationship. For example, the signal generation unit 313 may generate the robot control signal for controlling the operation of the end effector 4 to perform the predetermined process on the target object OBJ at the timing at which the positional relationship between the end effector 4 and the target object OBJ is the desired positional relationship. Note that the robot control signal for controlling the operation of the end effector 4 may be referred to as the end effector control signal as already described above.

Note that the signal generation unit 313 may generate the robot control signal to perform a feedback control of the robot 1 by using the position pose information POI generated at the step S3. For example, the signal generation unit 313 may generate the robot control signal to perform the feedback control including a P (proportional) control by using the position pose information POI. For example, the signal generation unit 313 may generate the robot control signal to perform the feedback control including a PI (Proportional - Integral) control by using the position pose information POI. For example, the signal generation unit 313 may generate the robot control signal to perform the feedback control including a PID (Proportional - Integral - Differential) control by using the position pose information POI.

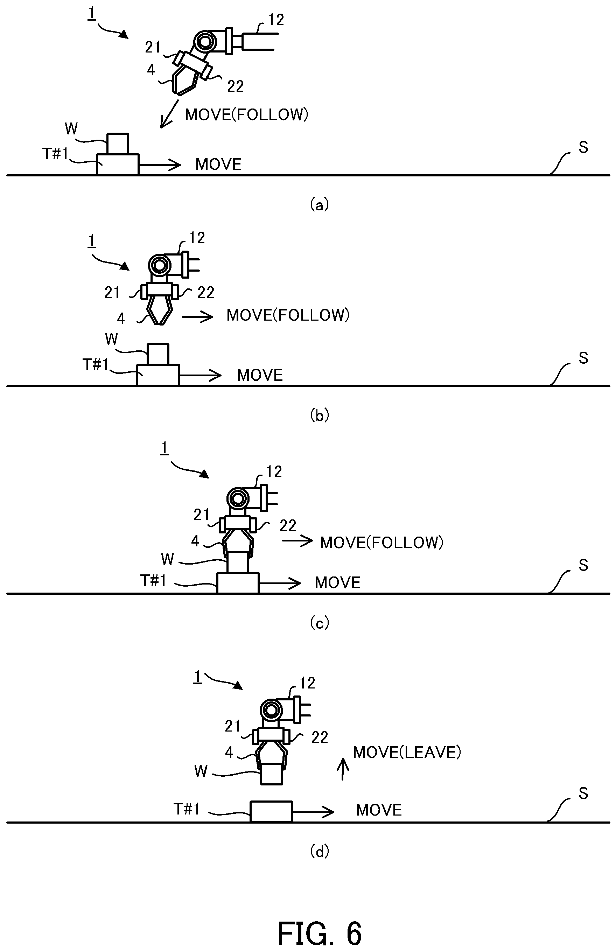

As one example, each of FIG. 6(a) to FIG. 6(d) is a side view that illustrates the positional relationship between the robot 1 and the workpiece W at a certain timing in a period during which the holding process for holding the workpiece W (namely, one example of the target object OBJ) placed on the placing apparatus T#1 such as the Automatic Guided Vehicle (AGV) moving on the support surface S is performed. In this case, the control apparatus 3 may generate the position pose information POI indicating at least one of the position and the pose of the workpiece W that is a target for the holding process (namely, one example of the target object OBJ for the holding process), and generate the robot control signal by using the generated position pose information POI. For example, as illustrated in FIG. 6(a), the signal generation unit 313 may generate the robot control signal for controlling the operation of the robot arm 12 so that the end effector 4 moves toward a space directly above the moving workpiece W. As one example, the signal generation unit 313 may generate the robot control signal for controlling the operation of the robot arm 12 so that the end effector 4 is positioned (in other words, approaches) the sequentially updated movement target position at a desired pose while sequentially updating the movement target position of the end effector 4 in accordance with the moving workpiece W based on at least one of the position and the pose of the workpiece W sequentially calculated by the position pose calculation unit 312. As illustrated in FIG. 6(b), the signal generation unit 313 may generate the robot control signal for controlling the operation of the robot arm 12 so that the end effector 4, which is positioned directly above the moving workpiece W, remains directly above the workpiece W and approaches the workpiece W until it can hold the workpiece W. As illustrated in FIG. 6(c), the signal generation unit 313 may generate the robot control signal for controlling the operations of the robot arm 12 and the end effector 4 so that the end effector 4, which is positioned at a position at which it can hold the moving workpiece W, holds the workpiece W while following the moving workpiece W. As illustrated in FIG. 6(d), the signal generation unit 313 may generate the robot control signal for controlling the operations of the robot arm 12 and end effector 4 so that the end effector 4, which has held the workpiece W, moves away from the moving placing apparatus T#1 while holding the workpiece W.

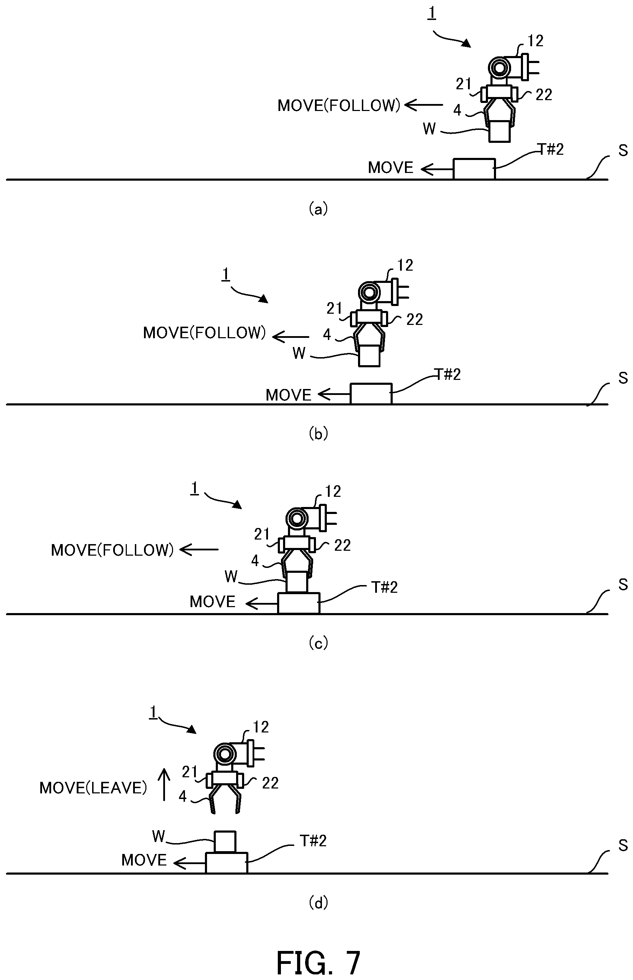

In a case where the robot 1 holds the workpiece W placed on the placing apparatus T#1 by using the end effector 4, the robot 1 may perform the releasing process for releasing the held workpiece W so that the held workpiece W is placed on a placing apparatus T#2 (namely, one example of the target object OBJ for the releasing process) that is different from the placing apparatus T#1. Namely, the robot 1 may perform the placing process for placing the workpiece W on the placing apparatus T#2 by continuously performing the holding process and the releasing process. In this case, the control apparatus 3 may generate the position pose information POI indicating at least one of the position and the pose of the placing apparatus T#2 that is a target for the releasing process, and generate the robot control signal by using the generated position pose information POI. For example, each of FIG. 7(a) to FIG. 7(d) is a side view that illustrates the positional relationship between the robot 1 and the workpiece W at a certain timing in a period during which the releasing process for placing the workpiece W on the placing apparatus T#2 moving on the support surface S is performed. In this case, as illustrated in FIG. 7(a), the signal generation unit 313 may generate the robot control signal for controlling the operation of the robot arm 12 so that the end effector 4 holding the workpiece W moves toward a space directly above the moving placing apparatus T#2 while holding the workpiece W. As one example, the signal generation unit 313 may generate the robot control signal for controlling the operation of the robot arm 12 so that the end effector 4 is positioned (in other words, approaches) the sequentially updated movement target position at a desired pose while sequentially updating the movement target position of the end effector 4 in accordance with the moving placing apparatus T#2 based on at least one of the position and the pose of the placing apparatus T#2 sequentially calculated by the position pose calculation unit 312. As illustrated in FIG. 7(b), the signal generation unit 313 may generate the robot control signal for controlling the operation of the robot arm 12 so that the end effector 4, which is positioned directly above the moving placing apparatus T#2 and is holding the workpiece W, approaches the placing apparatus T#2 until the workpiece W can be placed on the placing apparatus T#2 while positioning directly above the placing apparatus T and holding the workpiece W. As illustrated in FIG. 7(c), the signal generation unit 313 may generate the robot control signal for controlling the operations of the robot arm 12 and the end effector 4 so that the end effector 4, which is positioned at a position at which it can place the workpiece W on the placing apparatus T#2, places the workpiece W on the placing apparatus T#2 (namely, releases the held workpiece W) while following the moving placing apparatus T#2. As illustrated in FIG. 7(d), the signal generation unit 313 may generate the robot control signal for controlling the operation of the robot arm 12 so that the end effector 4, which has finished placing the workpiece W on the placing apparatus T#2, moves away from the placing apparatus T#2.

In a case where the releasing process is performed (especially, in a case where the releasing process is performed to perform the placing process), the control apparatus 3 may further generate the position pose information POI indicating at least one of the position and the pose of workpiece W (namely, one example of the target object OBJ for the releasing process), which is a second target for the releasing process, in addition to the position pose information POI indicating at least one of the position and the pose of the placing apparatus T#2 (namely, one example of the target object OBJ for the releasing process), which is the first target for the releasing process. Namely, the control apparatus 3 may generate the position pose information POI indicating at least one of the position and the pose of workpiece W held by the end effector 4 after the end effector 4 holds the workpiece W, in addition to generating the position pose information POI indicating at least one of the position and the pose of the workpiece W that is not yet held by the end effector 4 before the end effector 4 holds the workpiece W.

In a case where the releasing process is performed, the control apparatus 3 may generate the robot control signal by using the position pose information POI indicating at least one of the position and the pose of the workpiece W held by the end effector 4, in addition to the position pose information POI related to the placing apparatus T#2, before the end effector 4 releases the held workpiece W by the releasing process. Namely, the control apparatus 3 may generate the robot control signal by using the position pose information POI indicating at least one of the position and the pose of the workpiece W held by the end effector 4 in at least a part of a period during which the end effector 4 is holding the workpiece W.

For example, the signal generation unit 313 may generate the robot control signal for controlling the robot arm 12 so as to move the workpiece W held by the end effector 4 to a desired position (for example, a position at which the workpiece W should be released). In this case, the robot 1 can place the workpiece W held by the end effector 4 at the desired position of the placing apparatus T (can perform the placing process) more properly, compared to a case where the position pose information POI related to the workpiece W is not used. This is because the position of the workpiece W held by the end effector 4 is information known to the control apparatus 3. In a case where the position of the workpiece W is not the known information, there is a possibility that a technical problem that the workpiece W collides with the placing apparatus T occurs. Alternatively, in a case where the position of the workpiece W is not the known information, there is a possibility that a technical problem that the workpiece W is placed at an unintended position of the placing apparatus T (alternatively, another object) by the placing process described above occurs. Alternatively, in a case where the position of the workpiece W is not the known information, there is a possibility that a technical problem that the workpiece W is embedded into an unintended position of another object by the embedding process described above occurs. Alternatively, in a case where the position of the workpiece W is not the known information, there is a possibility that a technical problem that the workpiece W is attached to an unintended position of another object by the attachment process described above occurs. Alternatively, in a case where the position of the workpiece W is not the known information, there is a possibility that a technical problem that the workpiece W is adhered to an unintended position of another object by the adhesive process described above occurs. Alternatively, in a case where the position of the workpiece W is not the known information, there is a possibility that a technical problem that the workpiece W is welded to an unintended position of another object by the welding process described above occurs. However, in the present example embodiment, it is less likely or unlikely that these technical problems occur, because the position of the workpiece W is the known information.

Moreover, for example, the signal generation unit 313 may generate the robot control signal for controlling the end effector 4 so as to change the pose of the workpiece W held by the end effector 4 to a desired pose. In this case, the robot 1 can place the workpiece W in the desired pose on the placing apparatus T (can perform the placing process), compared to a case where the position pose information POI related to the workpiece W is not used. This is because the pose of the workpiece W held by the end effector 4 is information known to the control apparatus 3. In a case where the pose of the workpiece W is not the desired pose, there is a possibility that a technical problem that the workpiece W collides with the placing apparatus T occurs. Alternatively, in a case where the pose of the workpiece W is not the desired pose, there is a possibility that a technical problem that the workpiece W is placed at an unintended pose on the placing apparatus T (alternatively, another object) by the placing process described above occurs. Alternatively, in a case where the pose of the workpiece W is not the desired pose, there is a possibility that a technical problem that the workpiece W is embedded at an unintended pose into another object by the embedding process described above occurs. Alternatively, in a case where the pose of the workpiece W is not the desired pose, there is a possibility that a technical problem that the workpiece W is attached at an unintended pose to another object by the attachment process described above occurs. Alternatively, in a case where the pose of the workpiece W is not the desired pose, there is a possibility that a technical problem that the workpiece W is adhered at an unintended pose to another object by the adhesive process described above occurs. Alternatively, in a case where the pose of the workpiece W is not the desired pose, there is a possibility that a technical problem that the workpiece W is welded at an unintended pose to another object by the welding process described above occurs. However, in the present example embodiment, it is less likely or unlikely that these technical problems occur, because the robot 1 is controllable so that the pose of the workpiece W is the desired pose.

Note that the control apparatus 3 may generate the robot control signal by using the position pose information POI indicating at least one of the position and the pose of the workpiece W held by the end effector 4 not only in a case where the releasing process is performed but also in any case where the end effector 4 is holding the workpiece W.

At least one of the placing apparatus T#1 illustrated in FIG. 6(a) to FIG. 6(d) and the placing apparatus T#2 illustrated in FIG. 7(a) to FIG. 7(d) may not move on the support surface S. For example, each of FIG. 8(a) to FIG. 8(b)is a side view that illustrates the positional relationship between the robot 1 and the workpiece W at a certain timing in a period during which the holding process for holding the workpiece W placed on the placing apparatus T#1 that is stationary on the support surface S is performed. In this case, as illustrated in FIG. 8(a), the signal generation unit 313 may generate the robot control signal for controlling the operation of the robot arm 12 so that the end effector 4 approaches the workpiece W until it can hold the stationary workpiece W. As one example, the signal generation unit 313 may generate the robot control signal for controlling the operation of the robot arm 12 so that the end effector 4 is positioned (in other words, approaches) at a position, at which end effector 4 can hold the workpiece W whose position and / or the pose is calculated, in a desired pose based on at least one of the position and the pose of the workpiece W calculated by the position pose calculation unit 312. As illustrated in FIG. 8(b), the signal generation unit 313 may generate the robot control signal for controlling the operations of the robot arm 12 and the end effector 4 so that the end effector 4, which is positioned at a position at which it can hold the stationary workpiece W, holds the workpiece W. Furthermore, each of FIG. 8(c) to FIG. 8(e) is a side view that illustrates the positional relationship between the robot 1 and the workpiece W at a certain timing in a period during which the releasing process for placing the workpiece W on the placing apparatus T#2 that is stationary on the support surface S is performed. In this case, as illustrated in FIG. 8(c), the signal generation unit 313 may generate the robot control signal for controlling the operation of the robot arm 12 so that the end effector 4 holding the workpiece W approaches the placing apparatus T#2 until the workpiece W can be placed on the stationary placing apparatus T#2 while holding the workpiece W. As illustrated in FIG. 8(d), the signal generation unit 313 may generate the robot control signal for controlling the operations of the robot arm 12 and the end effector 4 so that the end effector 4, which is positioned at a position at which it can place the workpiece W on the placing apparatus T#2, places the workpiece W on the stationary placing apparatus T#2 (namely, releases the held workpiece W). As illustrated in FIG. 8(e), the signal generation unit 313 may generate the robot control signal for controlling the operation of the robot arm 12 so that the end effector 4, which has finished placing the workpiece W on the placing apparatus T#2, moves away from the placing apparatus T#2.

A plurality of workpieces W may be placed on the placing apparatus T#1. For example, the plurality of workpieces W may be placed on the placing apparatus T#1 so that the plurality of workpieces W are arranged on the placing apparatus T#1 in accordance with a certain manner. For example, the plurality of workpieces W may be placed on the placing apparatus T#1 so that the plurality of workpieces W are randomly stacked on the placing apparatus T#1. In this case, the robot 1 may perform the holding process for selectively holding one desired workpiece W of the plurality of workpieces W placed on the placing apparatus T#1. Especially, the robot 1 may perform the holding process for holding the plurality of workpieces W placed on the placing apparatus T#1 one by one in sequence.

Furthermore, the robot 1 may perform the releasing process for placing the plurality of workpieces W on the placing apparatus T#2. Namely, the robot 1 may perform the placing process for placing the plurality of workpieces W, which are placed on the placing apparatus T#1, on the placing apparatus T#2 (alternatively, on another placing apparatuses) one by one in sequence, by performing the holding process and the releasing process. In this case, the robot 1 may perform the releasing process for placing the plurality of workpieces W on the placing apparatus T#2 one by one in sequence so that the plurality of workpieces W are arranged on the placing apparatus T#2 in accordance with a certain manner. The robot 1 may perform the releasing process for placing the plurality of workpieces W on the placing apparatus T#2 one by one in sequence so that the plurality of workpieces W are randomly stacked on the placing apparatus T#2.

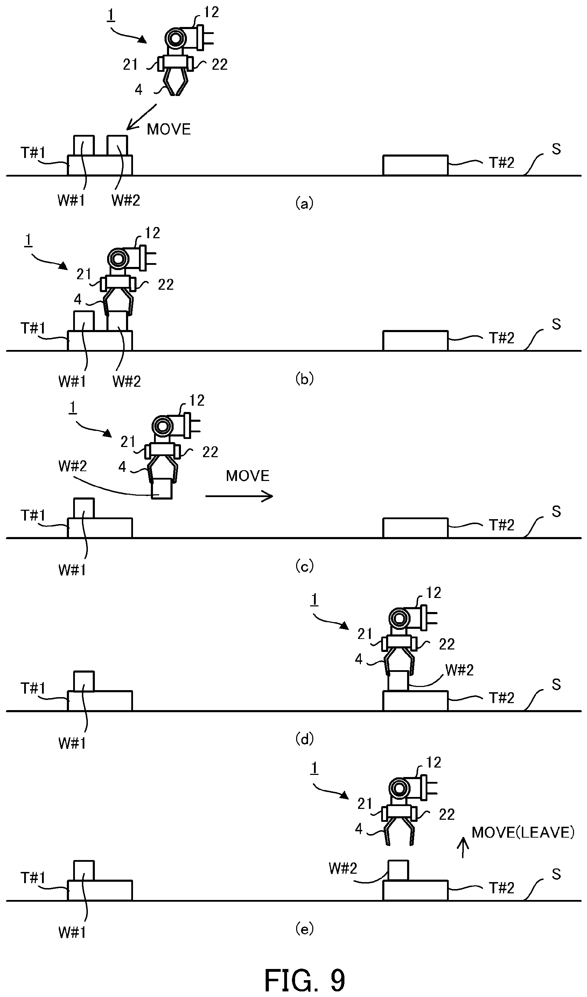

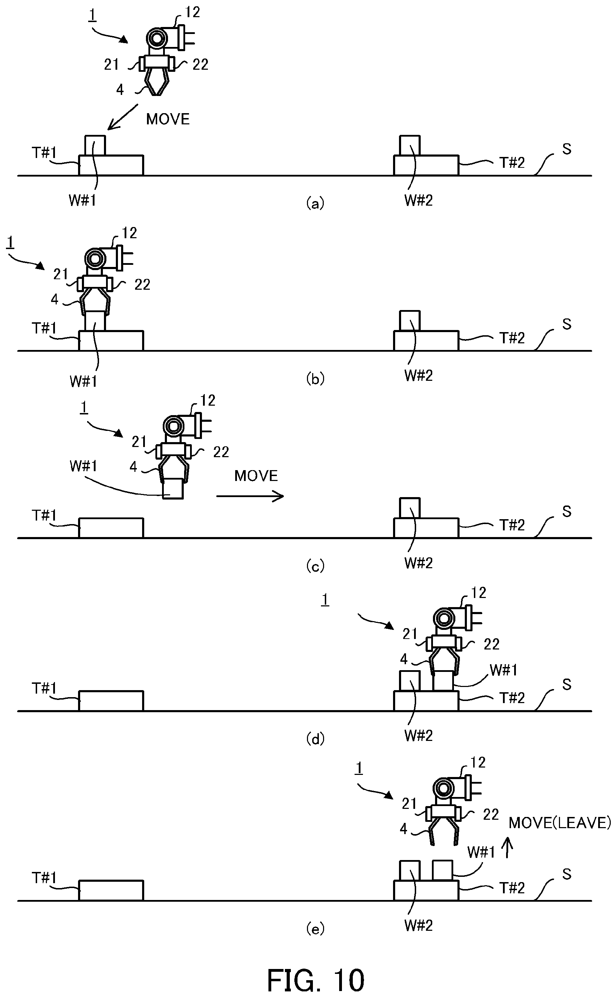

As an example, each of FIG. 9(a) to FIG. 9(e) and FIG. 10(a) to FIG. 10(e) is a side view that illustrates the positional relationship between the robot 1 and the workpiece W at a certain timing in a period during which the holding process for holding two workpieces W#1 and W#2 placed on the placing apparatus T#1 one by one in sequence and the releasing process for placing the two workpieces W#1 and W#2 on the placing apparatus T#2 one by one in sequence is performed. In this case, as illustrated in FIG. 9(a), the signal generation unit 313 may generate the robot control signal for controlling the operation of the robot arm 12 so that the end effector 4 approaches one of the workpieces W#1 and W#2 (the workpiece W#2 in an example illustrated in FIG. 9(a)) until it can hold the workpiece W#2. As one example, the signal generation unit 313 may generate the robot control signal for controlling the operation of the robot arm 12 so that the end effector 4 is positioned (in other words, approaches) at a position, at which end effector 4 can hold the workpiece W#2 whose position and / or the pose is calculated, in a desired pose based on at least one of the position and the pose of the workpiece W#2 calculated by the position pose calculation unit 312. Then, as illustrated in FIG. 9(b), the signal generation unit 313 may generate the robot control signal for controlling the operations of the robot arm 12 and the end effector 4 so that the end effector 4, which is positioned at a position at which it can hold the workpiece W#2, holds the workpiece W#2. Then, as illustrated in FIG. 9(c), the signal generation unit 313 may generate the robot control signal for controlling the operation of the robot arm 12 so that the end effector 4 holding the workpiece W#2 approaches the placing apparatus T#2 until the workpiece W#2 can be placed on the placing apparatus T#2 while holding the workpiece W#2. As one example, the signal generation unit 313 may generate the robot control signal for controlling the operation of the robot arm 12 so that the end effector 4 is positioned (in other words, approaches) at a position, at which end effector 4 can place the workpiece W#2 on the placing apparatus T#2 whose position and / or the pose is calculated, in a desired pose based on at least one of the position and the pose of the placing apparatus T#2 calculated by the position pose calculation unit 312. Then, as illustrated in FIG. 9(d), the signal generation unit 313 may generate the robot control signal for controlling the operations of the robot arm 12 and the end effector 4 so that the end effector 4, which is positioned at a position at which it can place the workpiece W#2 on the placing apparatus T#2, places the workpiece W#2 on the placing apparatus T#2 (namely, releases the held workpiece W#2). Then, as illustrated in FIG. 9(e), the signal generation unit 313 may generate the robot control signal for controlling the operation of the robot arm 12 so that the end effector 4, which has finished placing the workpiece W#2 on the placing apparatus T#2, moves away from the placing apparatus T#2. Then, as illustrated in FIG. 10(a), the signal generation unit 313 may generate the robot control signal for controlling the operation of the robot arm 12 so that the end effector 4 approaches the other one of the workpieces W#1 and W#2 (the workpiece W#1 in an example illustrated in FIG. 10(a)) until it can hold the workpiece W#1. As one example, the signal generation unit 313 may generate the robot control signal for controlling the operation of the robot arm 12 so that the end effector 4 is positioned (in other words, approaches) at a position, at which end effector 4 can hold the workpiece W#1 whose position and / or the pose is calculated, in a desired pose based on at least one of the position and the pose of the workpiece W#1 calculated by the position pose calculation unit 312. Then, as illustrated in FIG. 10(b), the signal generation unit 313 may generate the robot control signal for controlling the operations of the robot arm 12 and the end effector 4 so that the end effector 4, which is positioned at a position at which it can hold the workpiece W#1, holds the workpiece W#1. Then, as illustrated in FIG. 10(c), the signal generation unit 313 may generate the robot control signal for controlling the operation of the robot arm 12 so that the end effector 4 holding the workpiece W#1 approaches the placing apparatus T#2 until the workpiece W#1 can be placed on the placing apparatus T#2 while holding the workpiece W#1. As one example, the signal generation unit 313 may generate the robot control signal for controlling the operation of the robot arm 12 so that the end effector 4 is positioned (in other words, approaches) at a position, at which end effector 4 can place the workpiece W#1 on the placing apparatus T#2 whose position and / or the pose is calculated, in a desired pose based on at least one of the position and the pose of the placing apparatus T#2 calculated by the position pose calculation unit 312. Then, as illustrated in FIG. 10(d), the signal generation unit 313 may generate the robot control signal for controlling the operations of the robot arm 12 and the end effector 4 so that the end effector 4, which is positioned at a position at which it can place the workpiece W#1 on the placing apparatus T#2, places the workpiece W#1 on the placing apparatus T#2 (namely, releases the held workpiece W#1). Then, as illustrated in FIG. 10(e), the signal generation unit 313 may generate the robot control signal for controlling the operation of the robot arm 12 so that the end effector 4, which has finished placing the workpiece W#1 on the placing apparatus T#2, moves away from the placing apparatus T#2.

The robot 1 may perform the holding process for holding the plurality of workpieces W placed on the placing apparatus T#1, which moves on the support surface S, one by one in sequence. Alternatively, the robot 1 may perform the holding process for holding the plurality of workpieces W placed on the placing apparatus T#1, which is stationary on the support surface S, one by one in sequence. The robot 1 may perform the releasing process for placing the plurality of workpieces W on the placing apparatus T#2, which moves on the support surface S, one by one in sequence. The robot 1 may perform the releasing process for placing the plurality of workpieces W on the placing apparatus T#2, which is stationary on the support surface S, one by one in sequence.

Again in FIG. 4, the signal generation unit 313 outputs the robot control signal generated at the step S4 to the robot 1 (especially, the robot control apparatus 13) by using the communication apparatus 33. As a result, the robot control apparatus 13 controls at least one of the operation of the robot 1 (for example, the operation of the robot arm 12) and the operation of the end effector 4 based on the robot control signal.

Then, the control apparatus 3 repeats a series of processing from the step S1 to the step S4 until it is determined that the robot control processing is ended (a step S5). Namely, the control apparatus 3 continues to acquire at least one of the image data IMG_2D and IMG_3D from the imaging apparatuses 21 and 22 even in a period during which the operation of at least one of the robot arm 12 and the end effector 4 is controlled based on the robot control signal. For example, in a case where the end effector 4 performs the holding process as illustrated in FIG. 6(a) to FIG. 6(d), the control apparatus 3 may repeat a series of processing from the step S1 to the step S4 until the end effector 4 holds the workpiece W (furthermore, until the end effector 4 holding the workpiece W moves away from the placing apparatus T#1). For example, in a case where the end effector 4 performs the releasing process as illustrated in FIG. 7(a) to FIG. 7(d), the control apparatus 3 may repeat a series of processing from the step S1 to the step S4 until the end effector 4 places the workpiece W on the placing apparatus T#2 (furthermore, until the end effector 4, which has finished placing the workpiece W on the placing apparatus T#2, moves away from the placing apparatus T#2).

In this case, since the operation of at least one of the robot arm 12 and the end effector 4 is controlled based on the robot control signal as described above, each of the imaging apparatuses 21 and 22 may image the target object OBJ during a relative movement between the target object OBJ and the imaging apparatuses 21 and 22. For example, each of the imaging apparatuses 21 and 22 may image the target object OBJ in a period during which the target object OBJ is stationary while the imaging apparatuses 21 and 22 are moving. For example, each of the imaging apparatuses 21 and 22 may image the target object OBJ in a period during which the target object OBJ is moving while the imaging apparatuses 21 and 22 are stationary. For example, each of the imaging apparatuses 21 and 22 may image the target object OBJ in a period during which the target object OBJ is moving while the imaging apparatuses 21 and 22 are moving. Namely, the control apparatus 3 may continue to perform the robot control processing illustrated in FIG. 4 (may repeat the robot control processing illustrated in FIG. 4) during the relative movement between the target object OBJ and the imaging apparatuses 21 and 22 (namely, in a period during which at least one of the imaging apparatuses 21 and 22 and the target object OBJ is moving). As a result, the control apparatus 3 can newly calculate (namely, update) the position pose information POI indicating at least one of the position and the pose of the target object OBJ based on the newly acquired image data IMG_2D and IMG_3D even in the period during which the operation of the robot 1 is controlled based on the robot control signal.

However, each of the imaging apparatuses 21 and 22 may image the target object OBJ in a period during which the target object OBJ is stationary and the imaging apparatuses 21 and 22 are stationary. The control apparatus 3 may perform the robot control processing illustrated in FIG. 4 in a period during which the imaging apparatuses 21 and 22 and the target object OBJ are stationary. Note that the control apparatus 3 may repeat the robot control processing illustrated in FIG. 4 in a period during which the imaging apparatuses 21 and 22 and the target object OBJ are stationary.

Note that the position pose calculation unit 312 may not calculate at least one of the position and the position of the target object OBJ in the global coordinate system at the step S3, as described above. In this case, the position pose calculation unit 312 may calculate at least one of the position and the pose of the target object OBJ in a coordinate system that is different from the global coordinate system (for example, in the robot coordinate system, in the 2D imaging coordinate system, or in the 3D imaging coordinate system) at the step S3 in FIG. 4. Namely, the position pose calculation unit 312 may generate the position pose information POI indicating at least one of the position and the pose of the target object OBJ in a coordinate system that is different from the global coordinate system (for example, in the robot coordinate system, in the 2D imaging coordinate system, or in the 3D imaging coordinate system). In this case, the signal generation unit 313 may generate the robot control signal at the step S4 by using the position pose information POI indicating at least one of the position and the pose of the target object OBJ in the coordinate system different from the global coordinate system calculated at the step S3.

### (4) Modified Example

Next, a modified example of the robot system SYS will be described. Note that each modified example described below may be combined with other modified example. Moreover, a detailed description of a component already described is omitted in the below-described description. Moreover, a detailed description of a process already described is omitted in the below-described description. Namely, in the below-described description, a component that is different from the component already described and a process that is different from the process already described will be mainly described. Therefore, the robot system SYS may include the component already described and the robot system SYS may perform the process already described even in the modified example described below, if there is no notation.

### (4-1) First Modified Example

As described above, the position pose calculation unit 312 performs the 3D matching processing (in other words, the template matching processing) using the three-dimensional model data WMD on the three-dimensional position data WSD to generate the position pose data POI. Specifically, the position pose calculation unit 312 performs, on the three-dimensional position data WSD, the 3D matching processing (in other words, the template matching processing) using the template model TM3 (a three-dimensional model) indicated by the three-dimensional model data WMD as the template to generate the position pose data POI. In a first modified example, the position pose calculation unit 312 may perform the 3D matching processing using a part of the template model TM3 (the three-dimensional model) indicated by the three-dimensional model data WMD as the template, in addition to or instead of performing the 3D matching processing using a whole of the template model TM3 (the three-dimensional model) indicated by the three-dimensional model data WMD as the template. Namely, the position pose calculation unit 312 may perform the 3D matching processing using a partial model data that is three-dimensional model data indicating a part of the template model TM3 (the three-dimensional model). Note that the template model corresponding to the whole of template model TM3 indicated by the three-dimensional model data WMD is referred to as a whole model TM3_W in the below-described description. Namely, the template model TM3 (the three-dimensional model) itself is referred to as the whole model TM3_W in the below-described description. On the other hand, a template model corresponding to a part of the template model TM3 indicated by the three-dimensional model data WMD is referred to as a partial model TM3_P. In this case, the partial model TM3_P may be regarded a part of the whole model TM3_W. The template model corresponding to a part of the template model TM3 may be referred to as a three-dimensional partial model.

The control apparatus 3 (especially, the computing apparatus 31) may generate the partial model TM3_P. For example, the control apparatus 3 (especially, the computing apparatus 31) may extract at least a part of the whole model TM3_W from the whole model TM3_W to generate the partial model TM3_P that corresponds to the extracted partial part of the whole model TM3_W. However, an apparatus that is different from the control apparatus 3 (for example, a computing apparatus that is different from the computing apparatus 31) may generate the partial model TM3_P.

As one example, the control apparatus 3 may generate the partial model TM3_P based on an instruction from a user. For example, the control apparatus 3 may generate the partial model TM3_P based on the instruction from the user for extracting at least a part of the whole model TM3_W as the partial model TM3_P. In other words, the control apparatus 3 may generate the partial model TM3_P based on the instruction from the user for generating the partial model TM3_P.

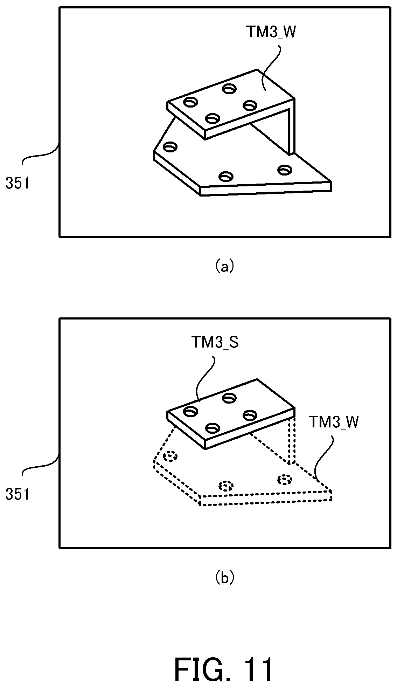

The user may input model generation information, which is related to the instruction from the user for generating the partial model TM3_P, to the control apparatus 3 by using the input apparatus 34. For example, the control apparatus 3 may display a model generation screen 351, which is operable by the user to generate the partial model TM3_P, on the output apparatus 35 that serves as the display apparatus. One example of the model generation screen 351 is illustrated in FIG. 11(a) to FIG. 11(b). As illustrated in FIG. 11(a) to FIG. 11(b), the model generation screen 351 may display the whole model TM3_W. The user may input the instruction (the model generation information) for generating the partial model TM3_P by using the whole model TM3_W displayed on the model generation screen 351 to the control apparatus 3 on the model generation screen 351.

As illustrated in FIG. 11(b), for example, the user may input, to the control apparatus 3, the instruction for selecting at least a part of the whole model TM3_W displayed on the model generation screen 351 as a selection model TM3_S. Note that the selection model TM3_S, which is selected by the user, of the whole model TM3_W is illustrated with a solid line and a model part, which is not selected by the user, of the whole model TM3_W is illustrated with a dashed line in FIG. 11(b). Furthermore, the user may input, to the control apparatus 3, the instruction for designating the selection model TM3_S as a model part that should be included in the partial model TM3_P. In this case, the control apparatus 3 may extract, from the whole model TM3_W, the model part of the whole model TM3_W selected by the user to generate the partial model TM3_P that includes at least a part of the extracted partial part of the whole model TM3_W. Alternatively, the user may input, to the control apparatus 3, the instruction for designating the selection model TM3_S as a model part that should not be included in the partial model TM3_P. In this case, the control apparatus 3 may extract, from the whole model TM3_W, the model part of the whole model TM3_W not selected by the user to generate the partial model TM3_P that includes at least a part of the extracted partial part of the whole model TM3_W.

As another example, the control apparatus 3 may generate the partial model TM3_P without using the instructions from the user. For example, the control apparatus 3 may generate the partial model TM3_P based on simulation image data. The simulation image data may be generated by assuming a case where the imaging system 2 images the target object OBJ. For example, image data that is expected to be generated by the imaging system 2 assuming that the imaging system 2 images the target object OBJ may be generated as the simulation image data. The simulation image data that is used to generate the partial model TM3_P used by the 3D matching processing may be image data in a format that is the same as a format of the image data IMG_3D (for example, the stereo image data), for example. Then, the control apparatus 3 may select and generate, from the whole model TM3_W, the partial model TM3_P satisfying a condition that "the target object OBJ is accurately detected by the matching processing using the partial model TM3_P (as a result, at least one of the position and the pose of the target object OBJ is accurately calculated)" based on the simulation image data (for example, by using simulation point cloud data calculated from the simulation image data).

After the partial model TM3_P is generated, the control apparatus 3 may perform the 3D matching processing using the three-dimensional position data WSD and the partial model TM3_P, in addition to or instead of performing the 3D matching processing using the three-dimensional position data WSD and the whole model TM3_W.

As a first example, the control apparatus 3 (especially, the position pose calculation unit 312) may first perform the 3D matching processing using the whole model TM3_W. Then, the control apparatus 3 may determine whether or not a computing result condition, which is related to a result of a position pose computing (a position pose computing processing) including the 3D matching processing using the whole model TM3_W, is satisfied. In a case where it is determined that the computing result condition is satisfied, the control apparatus 3 may generate the robot control signal based on the result of the 3D matching processing using the whole model TM3_W (namely, the position pose data POI). On the other hand, in a case where it is determined that the computing result condition is not satisfied, the control apparatus 3 (especially, the position pose calculation unit 312) may further perform the 3D matching processing using the partial model TM3_P. Then, the control apparatus 3 may determine whether or not a computing result condition, which is related to a result of a position pose computing (a position pose computing processing) including the 3D matching processing using the partial model TM3_P, is satisfied. In a case where it is determined that the computing result condition is satisfied, the control apparatus 3 may generate the robot control signal based on the result of the 3D matching processing using the partial model TM3_P (namely, the position pose data POI).

As a second example, the control apparatus 3 (especially, the position pose calculation unit 312) may first perform the 3D matching processing using the partial model TM3_P. Then, the control apparatus 3 may determine whether or not the computing result condition, which is related to the result of the position pose computing including the 3D matching processing using the whole model TM3_W, is satisfied. In a case where it is determined that the computing result condition is satisfied, the control apparatus 3 may generate the robot control signal based on the result of the 3D matching processing using the partial model TM3_P (namely, the position pose data POI). On the other hand, in a case where it is determined that the computing result condition is not satisfied, the control apparatus 3 (especially, the position pose calculation unit 312) may further perform the 3D matching processing using the whole model TM3_W. Then, the control apparatus 3 may determine whether or not the computing result condition, which is related to the result of the position pose computing including the 3D matching processing using the whole model TM3_W, is satisfied. In a case where it is determined that the computing result condition is satisfied, the control apparatus 3 may generate the robot control signal based on the result of the 3D matching processing using the whole model TM3_W (namely, the position pose data POI).

As a third example, the control apparatus 3 (especially, the position pose calculation unit 312) may perform both the 3D matching processing using the partial model TM3_P and the 3D matching processing using the whole model TM3_W. Then, the control apparatus 3 may generate the position pose data POI by comparing the matching similarity calculated by the 3D matching processing using the partial model TM3_P with the matching determination threshold value and by comparing the matching similarity calculated by the 3D matching processing using the whole model TM3_W with the matching determination threshold value. For example, the control apparatus 3 may select, as the process performed object, the target object OBJ whose matching similarity calculated by the 3D matching processing using the partial model TM3_P is higher than the matching determination threshold value and whose matching similarity calculated by the 3D matching processing using the whole model TM3_W is higher than the matching determination threshold value, and generate the position pose data POI of this target object OBJ. Then, the control apparatus 3 may generate the robot control signal based on the generated position pose data POI.

Note that the matching determination threshold value used in the position pose computing including the 3D matching processing using the whole model TM3_W may be the same as the matching determination threshold value used in the position pose computing including the 3D matching processing using the partial model TM3_P in at least one of the first to third examples. Alternatively, the matching determination threshold value used in the position pose computing including the 3D matching processing using the whole model TM3_W may be different from the matching determination threshold value used in the position pose computing including the 3D matching processing using the partial model TM3_P. For example, the matching determination threshold value used in the position pose computing including the 3D matching processing using the whole model TM3_W may be larger than the matching determination threshold value used in the position pose computing including the 3D matching processing using the partial model TM3_P. For example, the matching determination threshold value used in the position pose computing including the 3D matching processing using the whole model TM3_W may be smaller than the matching determination threshold value used in the position pose computing including the 3D matching processing using the partial model TM3_P.

As a fourth example, the control apparatus 3 (especially, the position pose calculation unit 312) may perform the 3D matching processing using a first partial model TM3_P, which indicates a first model part of the whole model TM3_W (the three-dimensional model), before performing the 3D matching processing using the whole model TM3_W, after performing the 3D matching processing using the whole model TM3_W, or without performing the 3D matching processing using the whole model TM3_W. Then, the control apparatus 3 may determine whether or not a computing result condition, which is related to a result of a position pose computing including the 3D matching processing using the first partial model TM3_P, is satisfied. In a case where it is determined that the computing result condition is satisfied, the control apparatus 3 may generate the robot control signal based on the result of the 3D matching processing using the first partial model TM3_P (namely, the position pose data POI). On the other hand, in a case where it is determined that the computing result condition is satisfied, the control apparatus 3 (especially, the position pose calculation unit 312) may further perform the 3D matching processing using a second partial model TM3_P that is different from the first partial model TM3_P. The second partial model TM3_P is different from the first partial model TM3_P, which indicates the first model part of the whole model TM3_W, in that it indicates a second model part of the whole model TM3_W that is at least partially different from the first model part. Then, the control apparatus 3 may determine whether or not a computing result condition, which is related to a result of a position pose computing including the 3D matching processing using the second partial model TM3_P, is satisfied. In a case where it is determined that the computing result condition is satisfied, the control apparatus 3 may generate the robot control signal based on the result of the 3D matching processing using the second partial model TM3_P (namely, the position pose data POI). On the other hand, in a case where it is determined that the computing result condition is not satisfied, the control apparatus 3 (especially, the position pose calculation unit 312) may further perform the 3D matching processing using a third partial model TM3_P that is different from the first and second partial models TM3_P. The third partial model TM3_P is different in that it indicates a third model part of the whole model TM3_W that is at least partially different from each of the first model part and the second model part. Then, the same operation may be repeated until it is determined that the computing result condition is satisfied.

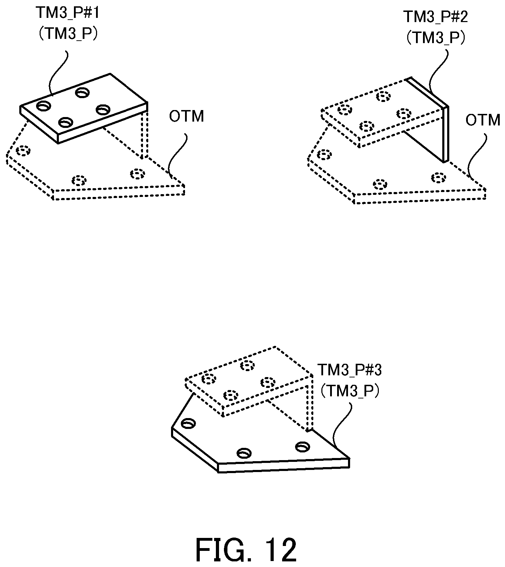

Thus, in the fourth example, a plurality of partial models TM3_P are used. Therefore, the control apparatus 3 may generate the plurality of partial models TM3_P that are different from each other. Namely, the control apparatus 3 may generate the plurality of partial models TM3_P that are a plurality of at least partially different three-dimensional models. Examples of the plurality of partial models TM3_P are illustrated in FIG. 12. In the examples illustrated in FIG. 12, the control apparatus 3 generates three partial models TM3_P (specifically, a partial model TM3_P#1, a partial model TM3_P#2, and a partial model TM3_P#3). Note that the control apparatus 3 may generate two different partial models TM3_P, or four or more different partial models TM3_P.

For example, the control apparatus 3 may generate the partial model TM3_P excluding at least one curved part (bend part) of the whole model TM3_W such as the partial model TM3_P#1 illustrated in FIG. 12. In this case, the control apparatus 3 may generate the partial model TM3_P based on the instruction from the user as described above. As another example, the control apparatus 3 may distinguish the curved part (the bend part) of the whole model TM3_W from other part (for example, a planar part) without using the instruction from the user, and exclude the curved part (the bend part) from the whole model TM3_W to generate the partial model TM3_P. Furthermore, not limited to the partial model TM3_P illustrated in FIG. 12, the control apparatus 3 may generate, as the partial model TM3_P, a model obtained by reducing a thickness of at least a part of at least partial model of the whole model TM3_W. For example, the control apparatus 3 may generate, as the partial model TM3_P, a model obtained by reducing a thickness of at least a part of a partial model of the whole model TM3_W. It can be said that the model obtained by reducing the thickness of at least a part of the whole model TM3_W is the partial model TM3_P because it is at least partial model of the whole model TM3_W. In this case, the control apparatus 3 may generate the partial model TM3_P based on the instruction from the user, or the control apparatus 3 may generate the partial model TM3_P without using the instruction from the user.

Note that the position pose computing in the present example embodiment is a computing for generating the position pose data POI. Namely, the position pose computing in the present example embodiment is a computing for calculating at least one of the position and the pose of the target object OBJ. In a case where the position pose data POI is generated by performing the 3D matching processing as described above, the position pose computing is a computing including the 3D matching processing. In a case where the position pose data POI is generated by performing the 2D matching processing as described above, the position pose computing is a computing including the 2D matching processing.

In the present example embodiment, an example in which a condition that the result of the position pose computing (the position pose computing processing) is good (a computing result good condition) is used as the computing result condition. In this case, the control apparatus 3 may determine whether or not the computing result condition (the computing result good condition) is satisfied by determining whether or not the result of the position pose computing is good. The signal generation unit 313 may determine that the computing result condition (the computing result good condition) is satisfied in a case where the result of the position pose computing is good. The signal generation unit 313 may determine that the computing result condition (the computing result good condition) is not satisfied in a case where the result of the position pose computing is not good (namely, the result of the position pose computing is defect).

The control apparatus 3 may determine whether or not the result of the position pose computing is good by determining whether or not there is the target object OBJ on which the end effector 4 can perform the predetermined process by using the result of the position pose computing. The signal generation unit 313 may determine whether or not the result of the position pose computing is good by determining whether or not there is the target object OBJ on which the end effector 4 cannot perform the predetermined process by using the result of the position pose computing, in addition to or instead of determining whether or not there is the target object OBJ on which the end effector 4 can perform the predetermined process by using the result of the position pose computing. The reason for this is described below.

The robot control signal is generated by using the result of the position pose computing (namely, information including the result of the matching processing, for example, information including the position pose data POI), and therefore, there is a possibility that the control apparatus 3 cannot generate the proper robot control signal in a case where the result of the position pose computing is not good. As a result, there is a possibility that the end effector 4 cannot perform the predetermined process on the target object OBJ, because the proper robot control signal is not generated. There is a possibility that there is the target objects OBJ on which the end effector 4 cannot perform the predetermined process by using the result of the position pose computing. Therefore, in a case where the end effector 4 cannot perform the predetermined process on the target object OBJ, there is a possibility that the result of the position pose computing is not good. Therefore, an existence of the target object OBJ on which the end effector 4 cannot perform the predetermined process by using the result of the position pose computing may be used as one reason for determining that the result of the position pose computing is defect. On the other hand, in a case where the result of the position pose computing is good, there is a possibility that the control apparatus 3 can generate the proper robot control signal. As a result, it is likely that the end effector 4 can perform the predetermined process on the target object OBJ because the proper robot control signal can be generated. Namely, it is likely that there is the target object OBJ on which the end effector 4 can perform the predetermined process by using the result of the position pose computing. Therefore, in a case where the end effector 4 can perform the predetermined process on the target object OBJ, it is likely that the result of the position pose computing is good. Therefore, the existence of the target object OBJ on which the end effector 4 can perform the predetermined process by using the result of the position pose computing may be used as one reason for determining that the result of the position pose computing is good.

As a first example, the control apparatus 3 may determine that the result of the position pose computing is good in a case where the result of the position pose computing indicates that there is at least one target object OBJ on which the end effector 4 can perform the predetermined process. On the other hand, the control apparatus 3 may determine that the result of the position pose computing is defect in a case where the result of the position pose computing indicates that there is no target object OBJ on the end effector 4 can perform the predetermined process.

As a second example, the control apparatus 3 may determine that the result of the position pose computing is defect in a case where the result of the position pose computing indicates that there is at least one target object OBJ on which the end effector 4 cannot perform the predetermined process. More specifically, the control apparatus 3 may determine that the result of the position pose computing is defect in a case where the result of the position pose computing indicates that the number of the target objects OBJ, on which the end effector 4 cannot perform the predetermined process, is equal to or larger than a predetermined detection threshold value. In other words, the control apparatus 3 may determine that the result of the position pose computing is defect in a case where the result of the position pose computing indicates that the number of the target objects OBJ, on which the end effector 4 can perform the predetermined process, is smaller than the predetermined detection threshold value. On the other hand, the control apparatus 3 may determine that the result of the position pose computing is good in a case where the result of the position pose computing indicates that the number of the target objects OBJ, on which the end effector 4 cannot perform the predetermined process, is smaller than the predetermined detection threshold value. In other words, the control apparatus 3 may determine that the result of the position pose computing is good in a case where the result of the position pose computing indicates that the number of the target objects OBJ, on which the end effector 4 can perform the predetermined process, is equal to or larger than the predetermined detection threshold value.

Note that the predetermined detection threshold value used in the second example may be set by the user. Alternatively, the predetermined detection threshold value used in the second example may be automatically set by the control apparatus 3. Note that the first example described above may be considered to be equivalent to the second example in which the predetermined detection threshold value is set to "1".

The target object OBJ whose position pose data POI can be calculated by the position pose computing is a first example of the target object OBJ on which the end effector 4 can perform the predetermined process. On the other hand, the target object OBJ whose position pose data POI cannot be calculated by the position pose computing is a first example of the target object OBJ on which the end effector 4 cannot perform the predetermined process. In this case, the control apparatus 3 may determine whether or not the computing result condition is satisfied by determining whether or not the position pose data POI of the target object OBJ has been calculated by the position pose computing.

The target object OBJ whose matching similarity, which is calculated by the position pose computing, is higher than the matching determination threshold value is a second example of the target object OBJ on which the end effector 4 can perform the predetermined process. On the other hand, the target object OBJ whose matching similarity, which is calculated by the position pose computing, is lower than the matching determination threshold value is a second example of the target object OBJ on which the end effector 4 cannot perform the predetermined process. In this case, the control apparatus 3 may determine whether or not the computing result condition is satisfied by determining whether or not the position pose computing has detected the target object OBJ whose matching similarity is higher than the matching determination threshold value. the control apparatus 3 may determine whether or not the computing result condition is satisfied by determining whether or not the position pose computing has calculated the position pose data POI of the target object OBJ whose matching similarity is higher than the matching determination threshold value.

Note that it is assumed that an accuracy of the position pose data POI (namely, a calculation accuracy of at least one of the position and the pose) of the target object OBJ is higher as the matching similarity of the target object OBJ is higher. Therefore, the position pose data POI of the target object OBJ whose matching similarity is higher than the matching determination threshold value may be considered to be equivalent to the position pose data POI whose accuracy is relatively high (specifically, is higher than a predetermined accuracy threshold value). On the other hand, the position pose data POI of the target object OBJ whose matching similarity is lower than the matching determination threshold value may be considered to be equivalent to the position pose data POI whose accuracy is relatively low (specifically, is lower than the predetermined accuracy threshold value). In this case, the matching determination threshold value may be set to a desired value by which a case where the accuracy (in other words, a reliability) of the position pose data POI of the target object OBJ is so high that the predetermined process performed by the end effector 4 on the target object OBJ succeeds from a case where the accuracy (in other words, the reliability) of the position pose data POI of the target object OBJ is so low that there is a possibility that the predetermined process performed by the end effector 4 on the target object OBJ fails based on the matching similarity.

Note that it is unlikely that the result of the position pose computing is good in a case where the control apparatus 3 (especially, the position pose calculation unit 312) cannot perform the position pose computing correctly. Therefore, the control apparatus 3 may determine whether or not the result of the position pose computing is good by determining whether or not the position pose calculation unit 312 has been able to perform the position pose computing correctly. Specifically, the control apparatus 3 may determine that the result of the position pose computing is good in a case where the position pose calculation unit 312 has been able to perform the position pose computing correctly. On the other hand, the control apparatus 3 may determine that the result of the position pose computing is defect in a case where the position pose calculation unit 312 has been unable to perform the position pose computing correctly. A state in which the position pose calculation unit 312 cannot perform the position pose computing correctly may include a state in which the position pose calculation unit 312 cannot start the position pose computing correctly. A state in which the position pose calculation unit 312 cannot perform the position pose computing correctly may include a state in which the position pose calculation unit 312 cannot complete the position pose computing correctly. A state in which the position pose calculation unit 312 cannot perform the position pose computing correctly may include a state in which the position pose computing started by the position pose calculation unit 312 abnormally terminates.

Note that the end effector 4 does not perform the predetermined process on the target object OBJ in a case where it is determined that the computing result condition is not satisfied. Therefore, determining whether or not the computing result condition is satisfied may include determining whether or not the end effector 4 performs the predetermined process on the target object OBJ. Determining that the computing result condition is not satisfied may include determining that the end effector 4 does not perform the predetermined process on the target object OBJ.

Especially in the present example embodiment, the control apparatus 3 may perform the 3D matching processing using the partial model TM3_P in a case where the three-dimensional position data WSD indicates the three-dimensional position of each of the plurality of target objects OBJ (especially, the plurality of target objects OBJ overlapping with each other at least partially). In this case, it is more likely that the control apparatus 3 can detect (recognize) one target object OBJ on which the end effector 4 should perform the predetermined process as the process performed object more properly, compared to a case where only the 3D matching processing using the whole model TM3_W is performed. Namely, it is more likely that the control apparatus 3 can detect (recognize) one target object OBJ on which the end effector 4 should perform the predetermined process as the process performed object more properly in a case where the plurality of target objects OBJ (especially, the plurality of target objects OBJ overlapping with each other at least partially) are captured in the image indicated by the image data IMG_3D.

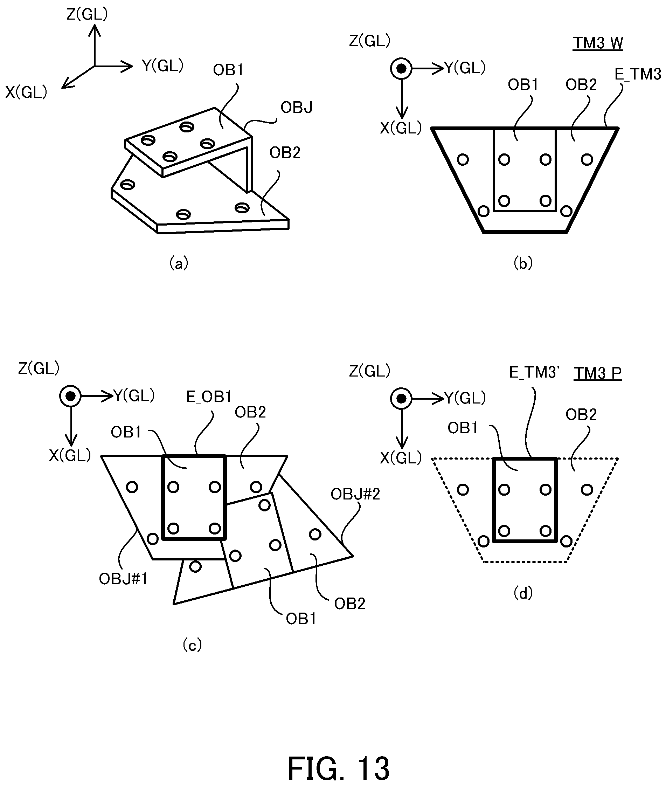

As one example, FIG. 13(a) illustrates a U-shaped component that is one example of the target object OBJ. In the example illustrated in FIG. 13(a), the target object OBJ includes a plate-like first part OB1 and a plate-like second part OB2 that faces the first part OB1 and that is larger than the first part OB1. In this case, there is a possibility that a following technical problem occurs in a case where the whole model TM3_W, which indicates both the three-dimensional shape of the first part OB1 and the three-dimensional shape of the second part OB2, is used as illustrated in FIG. 13(b). Specifically, an example in which a part of the second part OB2 of a first target object OBJ#1 is hidden by a second target object OBJ#2 a part of which is positioned under the first target object OBJ#1 will be described as illustrated in FIG. 13(c). Note that there is a possibility that the first target object OBJ#1 and the second target object OBJ#2 are engaged with each other, and as a result, a part of the first target object OBJ#1 is hidden by the second target object OBJ#2 a part of which is positioned under the first target object OBJ#1, in a case where the target object OBJ has a U-shaped shape. In this case, there is a possibility that the position pose calculation unit 312 detect not an edge of the second part OB2 of the first target object OBJ#1 a part of which is hidden by the second target object OBJ#2 (especially, the first part OB1 thereof), but an edge E_OB1 (see a thick line in FIG. 13(c)) of the first part OB1 of the first target object OBJ#1 positioned on the second target object OBJ#2 (especially, the first part OB1 thereof). However, the similarity between the detected edge E_OB1 and an edge E_TM3 (see a thick line in FIG. 13(b)) of the whole model TM3_W is low, and as a result, there is a possibility that the position pose calculation unit 312 cannot detect the first target object OBJ#1 properly (namely, cannot calculate at least one of the position and the pose of the first target object OBJ#1 proper). In this case, in a case where a model part of the template model TM3 corresponding to the first part OB1 is used as the partial model TM3_P as illustrated in FIG. 13(d), the similarity between the detected edge E_OB1 and an edge E_TM3' (see a thick line in FIG. 13(d)) of the partial model TM3_P is high, and as a result, the position pose calculation unit 312 can detect the first target object OBJ#1 properly (namely, can calculate at least one of the position and the pose of the first target object OBJ#1 proper).

Therefore, in the first modified example, it is likely that the position pose calculation unit 312 can detect the target object OBJ properly by the 3D matching processing.

In this case, it is unlikely that the second target object OBJ#2, which is different from the first target object OBJ#1 that should be selected as the process performed object, is unintentionally selected as the process performed object. If the second target object OBJ#2, which should not be selected as the process performed object, is unintentionally selected the process performed object, there is a possibility that the end effector 4 collides with the first target object OBJ#1 (for example, the first target object OBJ#1 positioned on the second target object OBJ#2), which should be selected as the process performed object, in a period during which the end effector 4 approaches the second target object OBJ#2 that should not be selected as the process performed object, and as a result, the first target object OBJ#1 is damaged. Alternatively, there is a possibility that the first target object OBJ#1, which is positioned on the second target object OBJ#2, moves along with the second target object OBJ#2 after the end effector 4 holds the second target object OBJ#2 that should not be selected as the process performed object. As a result, there is a possibility that the first target object OBJ#1, which is not held by the end effector 4, falls, and as a result, a surrounding target object OBJ is damaged by the fallen first target object OBJ#1. However, the first modified example is beneficial in that it reduces the possibility of such technical problems occurring.

In a case where the plurality of partial models TM3_P are generated as described with reference to FIG. 12, the control apparatus 3 may select one partial model TM3_P, by which it is likely that one target object on which the end effector 4 should perform the predetermined process can be detected (recognized) as the process performed object, from among the plurality of partial models TM3_P based on a tendency of an overlap of the plurality of target objects OBJ, and perform the 3D matching processing using the selected partial model TM3_P. As a result, it is more likely that the control apparatus 3 can detect (recognize) one target object OBJ, on which the end effector 4 should perform the predetermined process, more properly, compared to a case where a single partial model TM3_P is used.

Furthermore, since the partial model TM3_P is a part of the whole model TM3_W, a data size of the partial model TM3_P is smaller than a data size of the whole model TM3_W. Therefore, in the first modified example, the control apparatus 3 can reduce a time required to perform the 3D matching processing by performing the 3D matching processing using the partial model TM3_P, compared to a case where the 3D matching processing using the partial model TM3_P is not performed (namely, the 3D matching using only the whole model TM3_W is performed).

Incidentally, even in a case where the 2D matching processing that uses the template image as the template is performed, the position pose calculation unit 312 may perform the 2D matching processing that uses a partial model corresponding to a part of the template image as the template, in addition to or instead of the position pose calculation unit 312 performing the 2D matching processing that uses a whole model corresponding to a whole of the template image as the template, as with a case where the 3D matching processing is performed. Incidentally, in a case where the partial model used for the 2D matching processing is generated based on the simulation image data described above, the simulation image data may be image data in a format that is the same as a format of the image data IMG_2D (for example, the monocular image data). Note that a method for generating the partial model used for the 2D matching processing may be the same as a method for generating the partial model TM3_P used for the 3D matching processing described above, and therefore, a detailed description thereof is omitted. Furthermore, the 2D matching processing using the partial model may be the same as the 3D matching processing using the partial model TM3_P described above, and therefore, a detailed description thereof is omitted. Note that the partial model corresponding to a part of the template image may be referred to as a two-dimensional partial model.

Even in a case where the two-dimensional partial model is used in the 2D matching processing, a plurality of two-dimensional partial models may be used, as with a case where the partial model TM3_P is used in the 3D matching processing. In this case, the control apparatus 3 may generate the two-dimensional partial model excluding an image part corresponding to a curved part (a bend part) of the object captured in the template image corresponding to the whole model. Alternatively, the control apparatus 3 may distinguish the curved part (the bend part) of the whole model TM3_W from other part (for example, the planar part), exclude the curved part (the bend part) from the whole model TM3_W to generate the partial model TM3_P, and generate the two-dimensional partial model obtained by projecting the partial model TM3_P, from which the curved part has been excluded, on a two-dimensional plane. In this case, the control apparatus 3 may generate the two-dimensional partial model based on the instruction from the user as described above. As another example, the control apparatus 3 may distinguish the curved part (the bend part) from other part (for example, a planar part) in the object captured in the template image corresponding to the whole model without using the instruction from the user, and exclude the curved part (the bend part) from the template model corresponding to the whole model to generate the two-dimensional partial model. Moreover, the control apparatus 3 may generate, as the partial model TM3_P, a model obtained by reducing a thickness of at least a part of the object captured in the template image corresponding to the whole model, generate the two-dimensional partial model obtained by projecting the partial model TM3_P, which corresponds to the model whose thickness has been reduced, on a two-dimensional plane.

### (4-2) Second Modified Example

Next, the robot system SYS in a second modified example will be described. Note that the robot system SYS in the second modified example is referred to as a "robot system SYSb" in the below-described description.

### (4-2-1) Configuration of Robot System SYSb in Second Modified Example

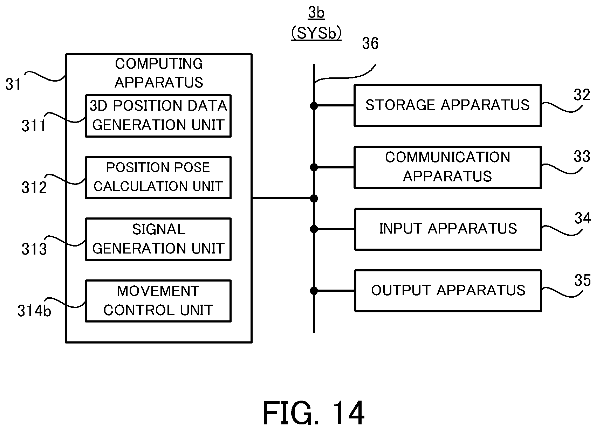

The robot system SYSb in the second modified example is different from the above-described robot system SYS in that it includes a control apparatus 3b instead of the control apparatus 3. Other feature of the robot system SYSb may be the same as other feature of the robot system SYS. Therefore, in the below-described description, the control apparatus 3b in the second modified example will be described with reference to FIG. 14. FIG. 14 is a block diagram that illustrates a configuration of the control apparatus 3b in the second modified example.

As illustrated in FIG. 14, the control apparatus 3b in the second modified example is different from the above-described control apparatus 3 in that the computing apparatus 31 includes a movement control unit 314b as the logical processing block. Other feature of the control apparatus 3b may be the same as other feature of the control apparatus 3.

The movement control unit 314b may determine whether or not the computing result condition described in the first modified example is satisfied (namely, whether or not the result of the position pose computing including the matching processing is good). The position pose computing is performed by using at least one of the image data IMG_2D and IMG_3D acquired at the step S1 in FIG. 4. Therefore, determining whether or not the computing result condition is satisfied may be considered to be equivalent to determining whether or not the result of the position pose computing performed based on at least one of the image data IMG_2D and IMG_3D acquired at the step S1 in FIG. 4 is good.

Furthermore, in a case where it is determined that the computing result condition is not satisfied, the movement control unit 314b moves the imaging system 2 so that a positional relationship between the imaging system 2 and the target object OBJ changes. Note that the positional relationship between the imaging system 2 and the target object OBJ may mean a positional relationship between the target object OBJ and at least one of the imaging apparatuses 21 and 22 in the second modified example. Moving the imaging system 2 may mean moving at least one of the imaging apparatuses 21 and 22 in the second modified example.

Specifically, in a case where it is determined that the end effector 4 cannot perform the predetermined process on the target object in a situation where the positional relationship between the imaging system 2 and the target object OBJ is a first positional relationship, the movement control unit 314b moves the imaging system 2 so that the positional relationship between the imaging system 2 and the target object OBJ changes from the first positional relationship to a second positional relationship that is different from the first positional relationship. Namely, it is determined that the end effector 4 cannot perform the predetermined process on the target object OBJ based on at least one of the image data IMG_2D and IMG_3D acquired in a situation where the positional relationship between the imaging system 2 and the target object OBJ is the first positional relationship, the movement control unit 314b moves the imaging system 2 so that the positional relationship between the imaging system 2 and the target object OBJ changes from the first positional relationship to the second positional relationship. In other words, in a case where it is determined that the end effector 4 cannot perform the predetermined process on the target object OBJ based on the result of the matching processing performed by using at least one of the image data IMG_2D and IMG_3D acquired in a situation where the positional relationship between the imaging system 2 and the target object OBJ is the first positional relationship, the movement control unit 314b moves the imaging system 2 so that the positional relationship between the imaging system 2 and the target object OBJ changes from the first positional relationship to the second positional relationship.

The positional relationship between the imaging system 2 and the target object OBJ may include a relationship between a position of the imaging system 2 and the position of the target object OBJ. Note that the position of the imaging system 2 may mean a position of at least one of the imaging apparatuses 21 and 22 in the second modified example. Therefore, the positional relationship between the imaging system 2 and the target object OBJ may include a relationship between the position of at least one of the imaging apparatuses 21 and 22 and the position of the target object OBJ in the second modified example. In this case, the movement control unit 314b may change the positional relationship between the imaging system 2 and the target object OBJ from the first positional relationship to the second positional relationship by moving the imaging system 2 so that the position of the imaging system 2 changes. Specifically, the movement control unit 314b may change the positional relationship between the imaging system 2 and the target object OBJ from the first positional relationship to the second positional relationship by moving the imaging system 2 so that the position of the imaging system changes from a first position corresponding to the first positional relationship to a second position corresponding to the second positional relationship.

The positional relationship between the imaging system 2 and the target object OBJ may include a relationship between a pose of the imaging system 2 and the pose of the target object OBJ. Note that the pose of the imaging system 2 may mean a pose of at least one of the imaging apparatuses 21 and 22 in the second modified example. Therefore, the positional relationship between the imaging system 2 and the target object OBJ may include a relationship between the pose of at least one of the imaging apparatuses 21 and 22 and the pose of the target object OBJ in the second modified example. In this case, the movement control unit 314b may change the positional relationship between the imaging system 2 and the target object OBJ from the first positional relationship to the second positional relationship by moving the imaging system 2 so that the pose of the imaging system 2 changes. Specifically, the movement control unit 314b may change the positional relationship between the imaging system 2 and the target object OBJ from the first positional relationship to the second positional relationship by moving the imaging system 2 so that the pose of the imaging system changes from a first pose corresponding to the first positional relationship to a second pose corresponding to the second positional relationship. Note that the positional relationship between the imaging system 2 and the target object OBJ may be referred to as a postural relationship between the imaging system 2 and the target object OBJ in a case where the positional relationship between the imaging system 2 and the target object OBJ indicates the relationship between the pose of at least one of the imaging apparatuses 21 and 22 and the pose of the target object OBJ. In this case, the movement control unit 314b may change the postural relationship between the imaging system 2 and the target object OBJ from a first postural relationship to a second postural relationship by moving the imaging system 2 so that the pose of the imaging system 2 changes from a first pose corresponding to the first postural relationship to a second pose corresponding to the second postural relationship.

Note that it can be said that a processing performed by the movement control unit 314b includes an operation for moving the imaging system 2 so that at least one of the position and the pose of the imaging system 2 changes relative to one target object OBJ. Note that it can be said that the processing performed by the movement control unit 314b includes an operation for moving the imaging system 2 so that at least one of the position and the pose of the imaging system 2 changes around one target object OBJ.

In order to move the imaging system 2, the movement control unit 314b generates the robot control signal for controlling the robot arm 12 to move the imaging system 2 so that the positional relationship between the imaging system 2 and the target object OBJ changes. Namely, the movement control unit 314b generates the robot control signal for controlling the robot arm 12 to move the imaging system 2 so that the positional relationship between the imaging system 2 and the target object OBJ changes from the first positional relationship to the second positional relationship.

Then, after the robot arm 12 moves the imaging system 2 based on the robot control signal generated by the movement control unit 314b, the control apparatus 3b performs the position pose computing, which is performed to generate the position pose data POI, again. Namely, after the robot arm 12 moves the imaging system 2, the imaging system 2 images the target object OBJ again to generate at least one of the image data IMG_2D and IMG_3D again. The control apparatus 3b generates the position pose data POI by using at least one of the image data IMG_2D and IMG_3D generated again by the imaging system 2. Namely, the control apparatus 3b generates the position pose data POI by using at least one of the image data IMG_2D and IMG_3D generated again by the imaging system 2 in a situation where the positional relationship between the imaging system 2 and the target object OBJ is the second positional relationship.

Here, since the imaging system 2 moves, the imaging system 2 images the target object OBJ from a position, which is different from a position of the imaging system 2 before the imaging system 2 moves. Alternatively, the imaging system 2 images the target object OBJ in a pose, which is different from a pose of the imaging system 2 before the imaging system 2 moves. Therefore, an appearance of the target object OBJ in the image indicated by each of the image data IMG_2D and IMG_3D changes. As a result, there is a possibility that the end effector 4 can perform the predetermined process on the target object OBJ based on at least one of the image data IMG_2D and IMG_3D acquired after the imaging system 2 moves, even in a case where it is determined that the end effector 4 cannot perform the predetermined process on the target object OBJ based on at least one of the image data IMG_2D and IMG_3D acquired before the imaging system 2 moves.

As one example, as described above, it may be determined that the end effector 4 cannot perform the predetermined process on the target object OBJ in a case where the result of the position pose computing is defect (namely, is not good). In this case, since the appearance of the target object OBJ in the image indicated by each of the image data IMG_2D and IMG_3D changes, there is a possibility that the result of the position pose computing performed after the imaging system 2 moves is not defect (namely, is good), even in a case where the result of the position pose computing performed before the imaging system 2 moves is defect. Therefore, in a case where the imaging system 2 moves in a case where the result of the position pose computing is defect, it is more likely that the result of the position pose computing is good, compared to a case where the imaging system 2 does not move even in a case where the result of the position pose computing is defect. As a result, the position pose calculation unit 312 can properly calculate at least one of the position and the pose of the target object OBJ. Therefore, it is likely to be determined that the computing result condition is satisfied.

As one example, as described above, it may be determined that the end effector 4 cannot perform the predetermined process on the target object OBJ in a case where the position pose calculation unit 312 cannot perform the position pose computing normally. In this case, since the appearance of the target object OBJ in the image indicated by each of the image data IMG_2D and IMG_3D changes, there is a possibility that the position pose calculation unit 312 can perform the position pose computing normally after the imaging system 2 moves, even in a case where the position pose calculation unit 312 cannot perform the position pose computing normally before the imaging system 2 moves. Therefore, in a case where the imaging system 2 moves in a case where the position pose calculation unit 312 cannot perform the position pose computing normally, it is more likely that the position pose calculation unit 312 can perform the position pose computing normally, compared to a case where the imaging system 2 does not move even in a case where the position pose calculation unit 312 cannot perform the position pose computing normally. As a result, the position pose calculation unit 312 can properly calculate at least one of the position and the pose of the target object OBJ. Therefore, it is likely to be determined that the computing result condition is satisfied.

Then, in a case where at least one of the position and the pose of the target object OBJ is properly calculated (namely, the position pose data POI is properly generated), the control apparatus 3b (especially, the signal generation unit 313) generates the robot control signal based on the generated position pose data POI so that the robot 1 (the end effector 4) performs the predetermined process on the target object OBJ at the step S4 in FIG. 4.

Note that the robot control signal generated by the movement control unit 314b may be considered to be different from the robot control signal generated by the signal generation unit 313 at the step S4 in FIG. 4 (namely, the robot control signal that is mainly used to allow the robot 1 (the end effector 4) to perform the predetermined process) in that it is a signal that is mainly used to move the imaging system 2. In this case, the robot control signal generated by the movement control unit 314b may be referred to as an imaging apparatus movement signal.

However, the robot control signal generated by the movement control unit 314b may be considered to be the same as the robot control signal generated by the signal generation unit 313 at the step S4 in FIG. 4 in that it is a signal for controlling the robot 1. Namely, the movement control unit 314b and the signal generation unit 313 may be common in that both generate the robot control signals. In this case, the signal generation unit 313 may perform an operation performed by the movement control unit 314b. In other words, the signal generation unit 313 may serve as the movement control unit 314b. In this case, the control apparatus 3b may not include the movement control unit 314b.

Note that the robot arm 12 moves both imaging apparatuses 21 and 22 because both the imaging apparatuses 21 and 22 are attached to the robot arm 12. Therefore, the movement control unit 314b generates the robot control signal for controlling the robot arm 12, which is configured to move both imaging apparatuses 21 and 22, so that the positional relationship between the target object OBJ and both imaging apparatuses 21 and 22 changes by moving both the imaging apparatuses 21 and 22. Even in the below-described description, an example in which the movement control unit 314b generates the robot control signal for controlling the robot arm 12 so that the positional relationship between the target object OBJ and both imaging apparatuses 21 and 22 changes by moving both the imaging apparatuses 21 and 22 will be described. However, depending on an arrangement aspect of the imaging apparatuses 21 and 22, the movement control unit 314b may generate the robot control signal for controlling the robot arm 12 so that the positional relationship between the target object OBJ and one of imaging apparatuses 21 and 22 changes by moving one the imaging apparatuses 21 and 22.

### (4-2-2) Flow of Robot Control Processing in Second Modified Example

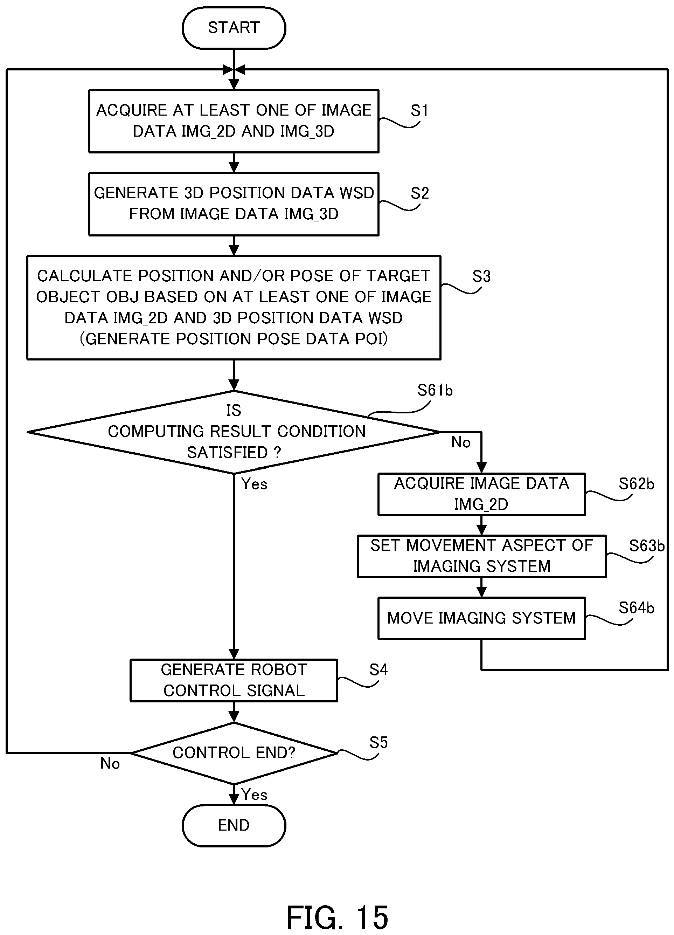

Next, with reference to FIG. 15, the robot control processing performed by the control apparatus 3b in the second modified example will be described. FIG. 15 is a flowchart that illustrates a flow of the robot control processing performed by the control apparatus 3b in the second modified example.

As illustrated in FIG. 15, even in the second modified example, the control apparatus 3b acquires at least one of the image data IMG_2D and IMG_3D from the imaging system 2 by using the communication apparatus 33 (the step S1). Furthermore, the three-dimensional position data generation unit 311 of the control apparatus 3b generates the three-dimensional position data WSD based on the acquired image data IMG_3D each time the control apparatus 3 acquires the image data IMG_3D (the step S2). Then, the position pose calculation unit 312 of the control apparatus 3b performs the position pose computing (namely, the computing including the matching processing) for calculating at least one of the position and the pose of the target object OBJ based on at least one of the image data IMG_2D acquired at the step S1 and the three-dimensional position data WSD generated at the step S2 (the step S3). Namely, the position pose calculation unit 312 performs the position pose computing for generating the position pose data POI indicating at least one of the position and the pose of the target object OBJ based on at least one of the image data IMG_2D acquired at the step S1 and the three-dimensional position data WSD generated at the step S2 (the step S3). Note that an example in which the position pose calculation unit 312 performing the 3D matching processing at the step S3 (namely, an example in which the control apparatus 3b acquires the image data IMG_3D at the step S1 and performs the 3D matching processing at the step S3) will be described even in the second modified example, as with the above-described description using FIG. 4, for simplicity of description. However, even in the second modified example, the position pose calculation unit 312 may perform the 2D matching processing, or may perform both the 2D matching processing and the 3D matching processing at the step S3 in FIG. 15.

Then, in the second modified example, the movement control unit 314b of the control apparatus 3b determines whether or not the computing result condition is satisfied (a step S61b). Specifically, the movement control unit 314b determines whether or not the computing result condition is satisfied by determining whether or not the result of the position pose computing performed based on at least one of the image data IMG_2D and IMG_3D acquired at the step S1 is good. Namely, the movement control unit 314b determines whether or not the computing result condition is satisfied by determining whether or not the result of the position pose computing at the step S3 in FIG. 4 is good.

Note that a detail of the "computing result condition" has already been described in the first modified example, and therefore, a detailed description thereof is omitted in the second modified example.

In a case where it is determined as a result of the determination at the step S61b that the computing result condition is satisfied (the step S61b: Yes), the signal generation unit 313 generates the robot control signal by using the position pose data POI generated at the step S3 (the step S4). Namely, the signal generation unit 313 generates the robot control signal for controlling the robot 1 so that the end effector 4 approaches the target object OBJ by using the position and pose data POI generated at the step S3 (the step S4).

On the other hand, in a case where it is determined as a result of the determination at the step S61b that the computing result condition is not satisfied (the step S61b: Yes), the signal generation unit 313 may not generate the robot control signal by using the position pose data POI generated at the step S3. Alternatively, in a case where the position pose calculation unit 312 has not been able to perform the position pose computing normally at the step S3, there is a possibility that the position pose data POI is not generated and the signal generation unit 313 cannot generate the robot control signal. In this case, the movement control unit 314b moves the imaging system 2 so that the positional relationship between the imaging system 2 and the target object OBJ changes (from a step S62b to a step S64b).

Specifically, the movement control unit 314b acquires the image data IMG_2D from the imaging system 2 (the step S62b). However, as described below, the movement control unit 314b may acquire the image data IMG_3D from the imaging system 2 at the step S62b, in addition to or instead of image data IMG_2D.

For example, the imaging system 2 may image the target object OBJ to generate the image data IMG_2D, which is acquired by the movement control unit 314b at the step S62b, after it is determined that the computing result condition is not satisfied at the step S61b. Note that the imaging system 2 may generate the image data IMG_2D, which is acquired by the movement control unit 314b at the step S62b, by newly imaging the target object OBJ from a direction that is the same as a direction in which the target object OBJ has been imaged to generate the image data IMG_3D acquired at the step S1. In this case, the movement control unit 314b may acquire the image data IMG_2D, which is generated after it is determined that the computing result condition is not satisfied.

For example, the imaging system 2 may image the target object OBJ to generate the image data IMG_2D, which is acquired by the movement control unit 314b at the step S62b, before it is determined that the computing result condition is not satisfied at the step S61b. Note that the imaging system 2 may generate the image data IMG_2D, which is acquired by the movement control unit 314b at the step S62b, by newly imaging the target object OBJ from a direction that is the same as a direction in which the target object OBJ has been imaged to generate the image data IMG_3D acquired at the step S1. In this case, the movement control unit 314b may acquire the image data IMG_2D, which is generated before it is determined that the computing result condition is not satisfied. As one example, the imaging system 2 may generate the image data IMG_2D, which is acquired by the movement control unit 314b at the step S62b, by imaging the target object OBJ after the imaging system 2 images the target object OBJ to generate at least one of the image data IMG_2D and IMG_3D for the position pose computing at the step S1 and before it is determined that the computing result condition is not satisfied at the step S61b. As another example, the imaging system 2 may generate the image data IMG_2D, which is acquired by the movement control unit 314b at the step S62b, while generating the image data IMG_3D for the position pose computing at the step S1. Namely, the imaging system 2 may generate the image data IMG_3D for the position pose computing and the image data IMG_2D acquired by the movement control unit 314b at the step S62b at the same timing.

Incidentally, although the second modified example described the example in which the position pose calculation unit 312 performs the 3D matching processing at the step S3 in FIG. 15 as described above, the imaging system 2 may generate the image data IMG_2D for position pose computing at the step S1 in a case where the position pose calculation unit 312 performs the 2D matching processing at the step S3 in FIG. 15. In this case, the movement control unit 314b may acquire the image data IMG_2D, which is generated at the step S1, at the step S62b. Namely, the image data IMG_2D for the position pose computing at the step S3 may be used as the image data IMG_2D acquired by the movement control unit 314b at the step S62b. Alternatively, the position pose data POI, which is generated by the position pose computing at the step S3 in FIG. 15, may be used by the movement control unit 314b to set a movement aspect of the imaging system 2 at the step S63b in FIG. 15, in addition to or instead of using the image data IMG_2D.

In both cases, the image data IMG_2D acquired by the movement control unit 314b at the step S62b is the image data IMG_2D generated by the imaging system 2 imaging the target object OBJ before the movement control unit 314b changes the positional relationship between the imaging system 2 and the target object OBJ. Specifically, the movement control unit 314b moves the imaging system 2 so that the positional relationship between the imaging system 2 and the target object OBJ changes from the first positional relationship to the second positional relationship in a case where it is determined that the computing result condition is not satisfied in a situation where the positional relationship between the imaging system 2 and the target object OBJ is the first positional relationship as described above. In this case, the image data IMG_2D acquired by the movement control unit 314b at the step S62b may be the image data IMG_2D generated by the imaging system 2 imaging the target object OBJ in a situation where the positional relationship between the imaging system 2 and the target object OBJ is the first positional relationship. In other words, the image data IMG_2D acquired by the movement control unit 314b at the step S62b may be the image data IMG_2D generated by the imaging system 2 imaging the target object OBJ in a situation where the positional relationship between the imaging system 2 and the target object OBJ is a positional relationship that is different from the second positional relationship. However, the image data IMG_2D acquired by the movement control unit 314b at the step S62b may be the image data IMG_2D generated by the imaging system 2 imaging the target object OBJ in a situation where the positional relationship between the imaging system 2 and the target object OBJ is a positional relationship that is different from the first positional relationship.

Then, the movement control unit 314b sets the movement aspect of the imaging system 2 relative to one object (for example, a gazing target object OBJ_g described below) based on the image data IMG_2D acquired at the step S62b (a step S63b). Note that the movement aspect of the imaging system 2 may mean a movement pattern or a movement method of the imaging system 2 relative to one target object (for example, the gazing target object OBJ_g described below). Namely, the movement aspect of the imaging system 2 may mean the movement pattern or the movement method indicating how to move the imaging system 2 relative to one target object (for example, the gazing target object OBJ_g described below). Note that it can be said that the movement aspect means the movement aspect or the movement method of the imaging system 2 based on target object (for example, the gazing target object OBJ_g described below). Furthermore, it can be said that the movement aspect mean the movement aspect or the movement method of the imaging system 2 around one target object (for example, the gazing target object OBJ_g described below).

Especially, the movement control unit 314b may automatically set the movement aspect of the imaging system 2 based on the image data IMG_2D acquired at the step S62b (the step S63b). For example, the movement control unit 314b may calculate at least one of the position and the pose of the target object OBJ by performing the 2D matching processing using the image data IMG_2D. Namely, the movement control unit 314b may generate the position pose data POI indicating at least one of the position and the pose of the target object OBJ by performing the 2D matching processing using the image data IMG_2D. Especially, the position pose calculation unit 312 may generate the position pose data POI indicating at least one of the position and the pose of one target object OBJ that is captured in the latest image data IMG_3D (alternatively, the image data IMG_2D) acquired at the step S1 in FIG. 15 but for which the position pose computing determines that the end effector 4 cannot perform the predetermined process on it. Note that it includes the operation for moving the imaging system 2 so that at least one of the position and the pose of the imaging system 2 changes relative to one target object OBJ whose position pose data POI has been calculated at the step S63b, as described below. Therefore, in the below-described description, one target object OBJ whose position pose data POI is calculated at the step S63b is referred to as the "gazing target object OBJ_g". Note that the 2D matching processing at the step S63b may be the same as the 2D matching processing at the step S3 described above, and therefore, a detailed description thereof is omitted. Then, the movement control unit 314b may set the movement aspect of the imaging system 2 based on the generated position pose data POI.

Note that the movement control unit 314b may set the movement aspect of the imaging system 2 based on the image data IMG_3D at the step S63b in a case where the image data IMG_3D is acquired at the step S62b as described above. For example, the movement control unit 314b may generate the position pose data POI indicating at least one of the position and the pose of the target object OBJ by performing the 3D matching processing using the three-dimensional position data WSD generated from the image data IMG_3D. The 3D matching processing at the step S63b may be the same as the 3D matching processing at the step S3 described above, and therefore, a detailed description thereof is omitted. Then, the movement control unit 314b may set the movement aspect of the imaging system 2 based on the generated position pose data POI. Alternatively, the movement control unit 314b may set the movement aspect of the imaging system 2 based on both the image data IMG_2D and IMG_3D at the step S63b. For example, the movement control unit 314b may generate the position pose data POI indicating at least one of the position and the pose of the target object OBJ by performing both 2D the matching processing using the image data IMG_2D and the 3D matching processing using the three-dimensional position data WSD generated the from image data IMG_3D. The processing for performing both the 2D matching processing and the 3D matching processing at the step S63b may be the same as the processing for performing both the 2D matching processing and the 3D matching processing at the step S3 described above, and therefore, a detailed description thereof is omitted. Then, the movement control unit 314b may set the movement aspect of the imaging system 2 based on the generated position pose data POI. In the below-described description, an example in which the movement control unit 314b sets the movement aspect of the imaging system 2 based on the image data IMG_2D at the step S63b will be described, for convenience of description.

The movement control unit 314b may set the movement aspect of the imaging system 2 so that it is more likely to be determined that the computing result condition is satisfied (namely, the result of the position pose computing is good) after the imaging system 2 moves relative to the gazing target object OBJ_g based on the movement aspect set at the step S63b. Specifically, the movement control unit 314b may set the movement aspect of the imaging system 2 based on position pose data POI indicating at least one of the position and pose of the gazing target object OBJ_g so that the positional relationship between the imaging system 2 and the gazing target object OBJ_g becomes a positional relationship satisfying a condition that "it is more likely to be determined that the computing result condition, which is related to the result of the position pose computing performed again after the imaging system 2 moves relative to the gazing target object OBJ_g based on the movement aspect set at the step S63b, is satisfied". The movement control unit 314b may set the movement aspect of the imaging system 2 based on position pose data POI indicating at least one of the position and pose of the gazing target object OBJ_g so that the positional relationship between the imaging system 2 and the gazing target object OBJ_g becomes a positional relationship satisfying a condition that "a possibility to be determined that the computing result condition, which is related to the result of the position pose computing performed again after the imaging system 2 moves relative to the gazing target object OBJ_g based on the movement aspect set at the step S63b, is satisfied is higher than a possibility to be determined that the computing result condition, which is related to the result of the position pose computing performed before the imaging system 2 moves relative to the gazing target object OBJ_g based on the movement aspect set at the step S63b is satisfied".

In a case where the computing result condition is satisfied (namely, the result of the position pose computing is good), it is expected that the end effector 4 can perform the predetermined process on the gazing target object OBJ_g. Therefore, the movement control unit 314b may set the movement aspect of the imaging system 2 so that it is more likely to be determined that the end effector 4 can perform the predetermined process on the gazing target object OBJ_g after the imaging system 2 moves relative to the gazing target object OBJ_g based on the movement aspect set at the step S63b. Specifically, the movement control unit 314b may set the movement aspect of the imaging system 2 based on position pose data POI indicating at least one of the position and pose of the gazing target object OBJ_g so that the positional relationship between the imaging system 2 and the gazing target object OBJ_g becomes a positional relationship satisfying a condition that "it is more likely to be determined that the end effector 4 can perform the predetermined process on the gazing target object OBJ_g after the imaging system 2 moves relative to the gazing target object OBJ_g based on the movement aspect set at the step S63b". The movement control unit 314b may set the movement aspect of the imaging system 2 based on position pose data POI indicating at least one of the position and pose of the gazing target object OBJ_g so that the positional relationship between the imaging system 2 and the gazing target object OBJ_g becomes a positional relationship satisfying a condition that "a possibility to be determined that the end effector 4 can perform the predetermined process on the gazing target object OBJ_g after the imaging system 2 moves relative to the gazing target object OBJ_g based on the movement aspect set at the step S63b is higher than a possibility to be determined that the end effector 4 can perform the predetermined process on the gazing target object OBJ_g before the imaging system 2 moves relative to the gazing target object OBJ_g based on the movement aspect set at the step S63b".

As one example, in a case where the position pose computing including the 3D matching processing is performed to generate the position pose data POI at the step S3 in FIG. 4, an amount of information that is usable for the 3D matching processing is larger as the number of points of the target object OBJ included in the point cloud indicated by the three-dimensional position data WSD used for the 3D matching processing is larger. Therefore, it is more likely that the target object OBJ is detected by the 3D matching processing as the number of points of the target object OBJ included in the point cloud indicated by the three-dimensional position data WSD is larger. Furthermore, the accuracy (the reliability) of the position pose data POI generated by the position pose computing including the 3D matching processing is higher as the number of points of the target object OBJ included in the point cloud indicated by the three-dimensional position data WSD. Therefore, the movement control unit 314b may set the movement aspect of the imaging system 2 so that the number of points of the gazing target object OBJ_g included in the point cloud indicated by the three-dimensional position data WSD increases. Specifically, the movement control unit 314b may set the movement aspect of the imaging system 2 so that the number of points of the gazing target object OBJ_g included in the point cloud indicated by the three-dimensional position data WSD, which is generated again at the step S2 after the imaging system 2 moves, is larger than the number of points of the gazing target object OBJ_g included in the point cloud indicated by the three-dimensional position data WSD, which has been already generated at the step S2 before the imaging system 2 moves. As a result, it is likely that the result of the position pose computing including the 3D matching processing is good.

It is likely that the number of points of the target object OBJ included in the point cloud indicated by the three-dimensional position data WSD is larger as a proportion of the target object OBJ relative to an imaging field of view of the imaging system 2 (especially, an imaging field of view of the imaging apparatus 22) is larger. Therefore, the movement control unit 314b may set the movement aspect of the imaging system 2 so that the proportion of the gazing target object OBJ_g relative to the imaging field of view of the imaging system 2 (especially, the imaging field of view of the imaging apparatus 22) increases. Specifically, the movement control unit 314b may set the movement aspect of the imaging system 2 so that the proportion of the gazing target object OBJ_g relative to the imaging field of view of the imaging system 2 (especially, the imaging field of view of the imaging apparatus 22) after the imaging system 2 moves is larger than the proportion of the gazing target object OBJ_g relative to the imaging field of view of the imaging system 2 (especially, the imaging field of view of the imaging apparatus 22) before the imaging system 2 moves. In other words, the movement control unit 314b may set the movement aspect of the imaging system 2 so that the proportion of the gazing target object OBJ_g relative to the imaging field of view of the imaging system 2 (especially, the imaging field of view of the imaging apparatus 22) for generating the image data IMG_3D after the imaging system 2 moves is larger than the proportion of the gazing target object OBJ_g relative to the imaging field of view of the imaging system 2 (especially, the imaging field of view of the imaging apparatus 22) for generating the image data IMG_3D before the imaging system 2 moves. As a result, it is likely that the result of the position pose computing including the 3D matching processing is good.

Note that there is a possibility that the proportion of the target object OBJ relative to the imaging field of view of the imaging system 2 is larger as a proportion of a part of the target object OBJ relative to the imaging field of view of the imaging system 2 (especially, the imaging field of view of the imaging apparatus 22) is larger. Therefore, the movement control unit 314b may set the movement aspect of the imaging system 2 so that the proportion of a part of the gazing target object OBJ_g relative to the imaging field of view of the imaging system 2 (especially the, imaging field of view of the imaging apparatus 22) increases. Specifically, the movement control unit 314b may set the movement aspect of the imaging system 2 so that the proportion of a part of the gazing target object OBJ_g relative to the imaging field of view of the imaging system 2 (especially, the imaging field of view of the imaging apparatus 22) after the imaging system 2 moves is larger than the proportion of a part of the gazing target object OBJ_g relative to the imaging field of view of the imaging system 2 (especially, the imaging field of view of the imaging apparatus 22) before the imaging system 2 moves.

Moreover, there is a possibility that the proportion of the target object OBJ relative to the imaging field of view of the imaging system 2 is larger as a proportion of an outline of the target object OBJ relative to the imaging field of view of the imaging system 2 (especially, the imaging field of view of the imaging apparatus 22) is larger. Therefore, the movement control unit 314b may set the movement aspect of the imaging system 2 so that the proportion of the outline of the gazing target object OBJ_g relative to the imaging field of view of the imaging system 2 (especially, the imaging field of view of the imaging apparatus 22) increases. Specifically, the movement control unit 314b may set the movement aspect of the imaging system 2 so that the proportion of the outline of the gazing target object OBJ_g relative to the imaging field of view of the imaging system 2 (especially, the imaging field of view of the imaging apparatus 22) after the imaging system 2 moves is larger than the proportion of the outline of the gazing target object OBJ_g relative to the imaging field of view of the imaging system 2 (especially, the imaging field of view of the imaging apparatus 22) before the imaging system 2 moves. Here, in a case where whole of the outline of the target object OBJ is included in the imaging field of view of the imaging system 2 (especially, the imaging field of view of the imaging apparatus 22), the proportion of the outline of the target object OBJ relative to the imaging field of view of the imaging system 2 (especially, the imaging field of view of the imaging apparatus 22) is maximum. Therefore, the movement control unit 314b may set the movement aspect of the imaging system 2 so that whole of the outline of the gazing target object OBJ_g is included in the imaging field of view of the imaging system 2 (especially, the imaging field of view of the imaging apparatus 22).

Moreover, the movement control unit 314b may set the movement aspect of the imaging system 2 so that both the proportion of a part of the gazing target object OBJ_g relative to the imaging field of view of the imaging system 2 (especially, the imaging field of view of the imaging apparatus 22) and the proportion of the outline of the gazing target object OBJ_g relative to the imaging field of view of the imaging system 2 (especially, the imaging field of view of the imaging apparatus 22) are maximum (alternatively, become proper proportions). Alternatively, the movement control unit 314b may set the movement aspect of the imaging system 2 so that a ratio between the proportion of a part of the gazing target object OBJ_g relative to the imaging field of view of the imaging system 2 (especially, the imaging field of view of the imaging apparatus 22) and the proportion of the outline of the gazing target object OBJ_g relative to the imaging field of view of the imaging system 2 (especially, the imaging field of view of the imaging apparatus 22) becomes an appropriate ratio. Namely, the movement control unit 314b may set the movement aspect of the imaging system 2 so that the proportion of a part of the gazing target object OBJ_g relative to the imaging field of view of the imaging system 2 (especially, the imaging field of view of the imaging apparatus 22) and the proportion of the outline of the gazing target object OBJ_g relative to the imaging field of view of the imaging system 2 (especially, the imaging field of view of the imaging apparatus 22) are balanced.

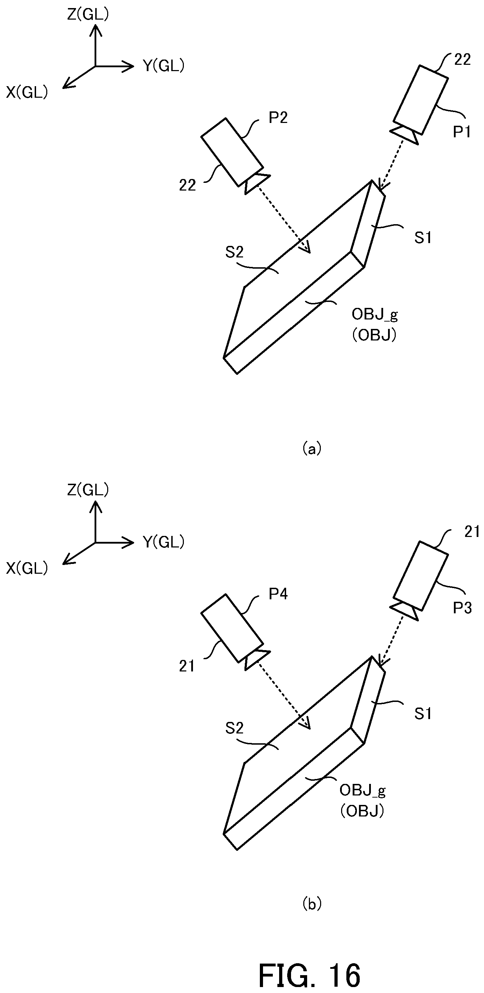

For example, FIG. 16(a) illustrates the imaging apparatus 22 before moving under the control of the movement control unit 314b and imaging apparatus 22 after moving under the control of the movement control unit 314b. In the example illustrated in FIG. 16(a), the imaging apparatus 22 before moving under the control of the movement control unit 314b is positioned at a first position P1. On the other hand, in the example illustrated in FIG. 16(a), the imaging apparatus 22 after moving under the control of the movement control unit 314b is positioned at a second position P2 that is different from the first position P1. In this case, the movement control unit 314b may set the movement aspect of the imaging system 2 relative to the gazing target object OBJ_g so that the number of points of the gazing target object OBJ_g included in the point cloud indicated by the three-dimensional position data WSD, which is generated based on the image data IMG_3D generated by the imaging apparatus 22 positioned at the second position P2, is larger than the number of points of the gazing target object OBJ_g included in the point cloud indicated by the three-dimensional position data WSD, which is generated based on the image data IMG_3D generated by the imaging apparatus 22 positioned at the first position P1. The movement control unit 314b may set the movement aspect of the imaging system 2 based on the gazing target object OBJ_g so that the number of points of the gazing target object OBJ_g included in the point cloud indicated by the three-dimensional position data WSD, which is generated based on the image data IMG_3D generated by the imaging apparatus 22 positioned at the second position P2, is larger than the number of points of the gazing target object OBJ_g included in the point cloud indicated by the three-dimensional position data WSD, which is generated based on the image data IMG_3D generated by the imaging apparatus 22 positioned at the first position P1. The movement control unit 314b may set the movement aspect of the imaging system 2 around the gazing target object OBJ_g so that the number of points of the gazing target object OBJ_g included in the point cloud indicated by the three-dimensional position data WSD, which is generated based on the image data IMG_3D generated by the imaging apparatus 22 positioned at the second position P2, is larger than the number of points of the gazing target object OBJ_g included in the point cloud indicated by the three-dimensional position data WSD, which is generated based on the image data IMG_3D generated by the imaging apparatus 22 positioned at the first position P1. The movement control unit 314b may set the movement aspect of the imaging system 2 relative to the gazing target object OBJ_g so that the proportion of the gazing target object OBJ_g relative to the imaging field of view of the imaging apparatus 22 positioned at the second position P2 is larger than the proportion of the gazing target object OBJ_g relative to the imaging field of view of the imaging apparatus 22 positioned at the first position P1. The movement control unit 314b may set the movement aspect of the imaging system 2 based on the gazing target object OBJ_g so that the proportion of the gazing target object OBJ_g relative to the imaging field of view of the imaging apparatus 22 positioned at the second position P2 is larger than the proportion of the gazing target object OBJ_g relative to the imaging field of view of the imaging apparatus 22 positioned at the first position P1. The movement control unit 314b may set the movement aspect of the imaging system 2 around the gazing target object OBJ_g so that the proportion of the gazing target object OBJ_g relative to the imaging field of view of the imaging apparatus 22 positioned at the second position P2 is larger than the proportion of the gazing target object OBJ_g relative to the imaging field of view of the imaging apparatus 22 positioned at the first position P1. For example, the movement control unit 314b may set the second position P2, at which the imaging system 2 should be positioned after moving, so that the number of points of the gazing target object OBJ_g included in the point cloud indicated by the three-dimensional position data WSD, which is generated based on the image data IMG_3D generated by the imaging apparatus 22 positioned at the second position P2, is larger than the number of points of the gazing target object OBJ_g included in the point cloud indicated by the three-dimensional position data WSD, which is generated based on the image data IMG_3D generated by the imaging apparatus 22 positioned at the first position P1, and set the movement aspect of the imaging system 2 relative to the gazing target object OBJ_g so that the imaging system 2 moves from the first position P1 to the second position P2. For example, the movement control unit 314b may set the second position P2, at which the imaging system 2 should be positioned after moving, so that the number of points of the gazing target object OBJ_g included in the point cloud indicated by the three-dimensional position data WSD, which is generated based on the image data IMG_3D generated by the imaging apparatus 22 positioned at the second position P2, is larger than the number of points of the gazing target object OBJ_g included in the point cloud indicated by the three-dimensional position data WSD, which is generated based on the image data IMG_3D generated by the imaging apparatus 22 positioned at the first position P1, and set the movement aspect of the imaging system 2 based on the gazing target object OBJ_g so that the imaging system 2 moves from the first position P1 to the second position P2. For example, the movement control unit 314b may set the second position P2, at which the imaging system 2 should be positioned after moving, so that the number of points of the gazing target object OBJ_g included in the point cloud indicated by the three-dimensional position data WSD, which is generated based on the image data IMG_3D generated by the imaging apparatus 22 positioned at the second position P2, is larger than the number of points of the gazing target object OBJ_g included in the point cloud indicated by the three-dimensional position data WSD, which is generated based on the image data IMG_3D generated by the imaging apparatus 22 positioned at the first position P1, and set the movement aspect of the imaging system 2 around the gazing target object OBJ_g so that the imaging system 2 moves from the first position P1 to the second position P2. For example, the movement control unit 314b may set the second position P2, at which the imaging system 2 should be positioned after moving, so that the proportion of the gazing target object OBJ_g relative to the imaging field of view of the imaging apparatus 22 positioned at the second position P2 is larger than the proportion of the gazing target object OBJ_g relative to the imaging field of view of the imaging apparatus 22 positioned at the first position P1, and set the movement aspect of the imaging system 2 relative to the gazing target object OBJ_g so that the imaging system 2 moves from the first position P1 to the second position P2. For example, the movement control unit 314b may set the second position P2, at which the imaging system 2 should be positioned after moving, so that the proportion of the gazing target object OBJ_g relative to the imaging field of view of the imaging apparatus 22 positioned at the second position P2 is larger than the proportion of the gazing target object OBJ_g relative to the imaging field of view of the imaging apparatus 22 positioned at the first position P1, and set the movement aspect of the imaging system 2 based on the gazing target object OBJ_g so that the imaging system 2 moves from the first position P1 to the second position P2. For example, the movement control unit 314b may set the second position P2, at which the imaging system 2 should be positioned after moving, so that the proportion of the gazing target object OBJ_g relative to the imaging field of view of the imaging apparatus 22 positioned at the second position P2 is larger than the proportion of the gazing target object OBJ_g relative to the imaging field of view of the imaging apparatus 22 positioned at the first position P1, and set the movement aspect of the imaging system 2 around the gazing target object OBJ_g so that the imaging system 2 moves from the first position P1 to the second position P2. Note that setting the movement aspect of the imaging system 2 relative to the gazing target object OBJ_g may be considered to be equivalent to setting the movement aspect of the imaging system 2 based on the gazing target object OBJ_g and setting the movement aspect of the imaging system 2 around the gazing target object OBJ_g.

In the example illustrated in FIG. 16(a), the imaging apparatus 22 positioned at the first position P1 faces a first surface S1 of the gazing target object OBJ_g that is narrower than a second surface S2 of the gazing target object OBJ_g. On the other hand, the imaging apparatus 22 positioned at the second position P2 faces the second surface S2 of the gazing target object OBJ_g that is wider than the first surface S1 of the gazing target object OBJ_g. Therefore, in the example illustrated in FIG. 16(a), the number of points of the gazing target object OBJ_g included in the point cloud indicated by the three-dimensional position data WSD generated based on the image data IMG_3D generated by the imaging apparatus 22 positioned at the second position P2 is larger than the number of points of the gazing target object OBJ_g included in the point cloud indicated by the three-dimensional position data WSD generated based on the image data IMG_3D generated by the imaging apparatus 22 positioned at the first position P1. Furthermore, the proportion of the gazing target object OBJ_g relative to the imaging field of view of the imaging apparatus 22 positioned at the second position P2 is larger than the proportion of the gazing target object OBJ_g relative to the imaging field of view of the imaging apparatus 22 positioned at the first position P1.

Incidentally, although the second modified example describes the example in which the position pose calculation unit 312 performs the 3D matching processing at the step S3 in FIG. 15 as described above, an amount of information that is usable for the 2D matching processing is larger as the number of pixels in which at least a part of the target object OBJ is captured in the image indicated by the image data IMG_2D, which is used to perform the 2D matching processing, is larger in a case where the position pose computing including the 2D matching processing is performed to generate the position pose data POI at the step S3 in FIG. 15. Therefore, it is more likely that the target object OBJ is detected by the 2D matching processing as the number of pixels in which at least a part of the target object OBJ is captured in the image indicated by the image data IMG_2D is larger. Furthermore, the accuracy (the reliability) of the position pose data POI generated by the position pose computing including the 2D matching processing is higher as the number of pixels in which at least a part of the target object OBJ is captured in the image indicated by the image data IMG_2D is larger. Therefore, the movement control unit 314b may set the movement aspect of the imaging system 2 so that the number of pixels in which at least a part of the gazing target object OBJ_g is captured in the image indicated by the image data IMG_2D. Specifically, the movement control unit 314b may set the movement aspect of the imaging system 2 so that the number of pixels in which at least a part of the gazing target object OBJ_g is captured in the image indicated by the image data IMG_2D, which is acquired again at the step S1 after the imaging system 2 moves, is larger than the number of pixels in which at least a part of the gazing target object OBJ_g is captured in the image indicated by the image data IMG_2D, which has been already acquired at the step S1 before the imaging system 2 moves. As a result, it is likely that the result of the position pose computing including the 2D matching processing is good.

It is likely that the number of pixels in which at least a part of the target object OBJ is captured in the image indicated by the image data IMG_2D is larger as the proportion of the target object OBJ relative to the imaging field of view of the imaging system 2 (especially, an imaging field of view of the imaging apparatus 21) is larger. Therefore, the movement control unit 314b may set the movement aspect of the imaging system 2 so that the proportion of the gazing target object OBJ_g relative to the imaging field of view of the imaging system 2 (especially, the imaging field of view of the imaging apparatus 21) increases. Specifically, the movement control unit 314b may set the movement aspect of the imaging system 2 so that the proportion of the gazing target object OBJ_g relative to the imaging field of view of the imaging system 2 (especially, the imaging field of view of the imaging apparatus 21) after the imaging system 2 moves is larger than the proportion of the gazing target object OBJ_g relative to the imaging field of view of the imaging system 2 (especially, the imaging field of view of the imaging apparatus 21) before the imaging system 2 moves. In other words, the movement control unit 314b may set the movement aspect of the imaging system 2 so that the proportion of the gazing target object OBJ_g relative to the imaging field of view of the imaging system 2 (especially, the imaging field of view of the imaging apparatus 21) for generating the image data IMG_2D after the imaging system 2 moves is larger than the proportion of the gazing target object OBJ_g relative to the imaging field of view of the imaging system 2 (especially, the imaging field of view of the imaging apparatus 21) for generating the image data IMG_2D before the imaging system 2 moves.

Note that there is a possibility that the proportion of the target object OBJ relative to the imaging field of view of the imaging system 2 is larger as the proportion of a part of the target object OBJ relative to the imaging field of view of the imaging system 2 (especially, the imaging field of view of the imaging apparatus 21) is larger. Therefore, the movement control unit 314b may set the movement aspect of the imaging system 2 so that the proportion of a part of the gazing target object OBJ_g relative to the imaging field of view of the imaging system 2 (especially the, imaging field of view of the imaging apparatus 21) increases. Specifically, the movement control unit 314b may set the movement aspect of the imaging system 2 so that the proportion of a part of the gazing target object OBJ_g relative to the imaging field of view of the imaging system 2 (especially, the imaging field of view of the imaging apparatus 21) after the imaging system 2 moves is larger than the proportion of a part of the gazing target object OBJ_g relative to the imaging field of view of the imaging system 2 (especially, the imaging field of view of the imaging apparatus 21) before the imaging system 2 moves.

Moreover, there is a possibility that the proportion of the target object OBJ relative to the imaging field of view of the imaging system 2 is larger as the proportion of the outline of the target object OBJ relative to the imaging field of view of the imaging system 2 (especially, the imaging field of view of the imaging apparatus 21) is larger. Therefore, the movement control unit 314b may set the movement aspect of the imaging system 2 so that the proportion of the outline of the gazing target object OBJ_g relative to the imaging field of view of the imaging system 2 (especially, the imaging field of view of the imaging apparatus 21) increases. Specifically, the movement control unit 314b may set the movement aspect of the imaging system 2 so that the proportion of the outline of the gazing target object OBJ_g relative to the imaging field of view of the imaging system 2 (especially, the imaging field of view of the imaging apparatus 21) after the imaging system 2 moves is larger than the proportion of the outline of the gazing target object OBJ_g relative to the imaging field of view of the imaging system 2 (especially, the imaging field of view of the imaging apparatus 21) before the imaging system 2 moves. Here, in a case where whole of the outline of the target object OBJ is included in the imaging field of view of the imaging system 2 (especially, the imaging field of view of the imaging apparatus 21), the proportion of the outline of the target object OBJ relative to the imaging field of view of the imaging system 2 (especially, the imaging field of view of the imaging apparatus 21) is maximum. Therefore, the movement control unit 314b may set the movement aspect of the imaging system 2 so that whole of the outline of the gazing target object OBJ_g is included in the imaging field of view of the imaging system 2 (especially, the imaging field of view of the imaging apparatus 21).

Moreover, the movement control unit 314b may set the movement aspect of the imaging system 2 so that both the proportion of a part of the gazing target object OBJ_g relative to the imaging field of view of the imaging system 2 (especially, the imaging field of view of the imaging apparatus 21) and the proportion of the outline of the gazing target object OBJ_g relative to the imaging field of view of the imaging system 2 (especially, the imaging field of view of the imaging apparatus 21) are maximum (alternatively, become proper proportions). Alternatively, the movement control unit 314b may set the movement aspect of the imaging system 2 so that the ratio between the proportion of a part of the gazing target object OBJ_g relative to the imaging field of view of the imaging system 2 (especially, the imaging field of view of the imaging apparatus 21) and the proportion of the outline of the gazing target object OBJ_g relative to the imaging field of view of the imaging system 2 (especially, the imaging field of view of the imaging apparatus 21) becomes an appropriate ratio. Namely, the movement control unit 314b may set the movement aspect of the imaging system 2 so that the proportion of a part of the gazing target object OBJ_g relative to the imaging field of view of the imaging system 2 (especially, the imaging field of view of the imaging apparatus 21) and the proportion of the outline of the gazing target object OBJ_g relative to the imaging field of view of the imaging system 2 (especially, the imaging field of view of the imaging apparatus 21) are balanced.

For example, FIG. 16(b) illustrates imaging apparatus 21 before moving under the control of the movement control unit 314b and imaging apparatus 21 after moving under the control of the movement control unit 314b. In the example illustrated in FIG. 16(b), the imaging apparatus 21 before moving under the control of the movement control unit 314b is positioned at a third position P3. On the other hand, in the example illustrated in FIG. 16(b), the imaging apparatus 21 after moving under the control of the movement control unit 314b is positioned at a fourth position P4 that is different from the third position P3. The movement control unit 314b may set the movement aspect of the imaging system 2 relative to the gazing target object OBJ_g so that the number of pixels in which at least a part of the gazing target object OBJ_g is captured in the image indicated by the image data IMG_2D, which is generated based on the image data IMG_2D generated by the imaging apparatus 21 positioned at the fourth position P4, is larger than the number of pixels in which at least a part of the gazing target object OBJ_g is captured in the image indicated by the image data IMG_2D, which is generated based on the image data IMG_2D generated by the imaging apparatus 21 positioned at the third position P3. The movement control unit 314b may set the movement aspect of the imaging system 2 relative to the gazing target object OBJ_g so that the proportion of the gazing target object OBJ_g relative to the imaging field of view of the imaging apparatus 22 positioned at the fourth position P4 is larger than the proportion of the gazing target object OBJ_g relative to the imaging field of view of the imaging apparatus 22 positioned at the third position P3. For example, the movement control unit 314b may set the fourth position P4, at which the imaging system 2 should be positioned after moving, so that the number of pixels in which at least a part of the gazing target object OBJ_g is captured in the image indicated by the image data IMG_2D, which is generated based on the image data IMG_2D generated by the imaging apparatus 21 positioned at the fourth position P4, is larger than the number of pixels in which at least a part of the gazing target object OBJ_g is captured in the image indicated by the image data IMG_2D, which is generated based on the image data IMG_2D generated by the imaging apparatus 21 positioned at the third position P3, and set the movement aspect of the imaging system 2 relative to the gazing target object OBJ_g so that the imaging system 2 moves from the third position P3 to the fourth position P4. For example, the movement control unit 314b may set the fourth position P4, at which the imaging system 2 should be positioned after moving, so that the proportion of the gazing target object OBJ_g relative to the imaging field of view of the imaging apparatus 22 positioned at the fourth position P4 is larger than the proportion of the gazing target object OBJ_g relative to the imaging field of view of the imaging apparatus 22 positioned at the third position P3, and set the movement aspect of the imaging system 2 relative to the gazing target object OBJ_g so that the imaging system 2 moves from the third position P3 to the fourth position P4.

Note that setting the movement aspect of the imaging system 2 relative to the gazing target object OBJ_g may be considered to be equivalent to setting the movement aspect of the imaging system 2 based on the gazing target object OBJ_g and setting the movement aspect of the imaging system 2 around the gazing target object OBJ_g, as described above. Therefore, the signal generation unit 313 may set the movement aspect of the imaging system 2 based on the gazing target object OBJ_g to satisfy the condition described in this paragraph. The signal generation unit 313 may set the movement aspect of the imaging system 2 around the gazing target object OBJ_g to satisfy the condition described in this paragraph.

In the example illustrated in FIG. 16(b), the imaging apparatus 21 positioned at the third position P3 faces the first surface S1 of the gazing target object OBJ_g that is narrower than the second surface S2 of the gazing target object OBJ_g. On the other hand, the imaging apparatus 21 positioned at the fourth position P4 faces the second surface S2 of the gazing target object OBJ_g that is wider than the first surface S1 of the gazing target object OBJ_g. Therefore, in the example illustrated in FIG. 16(b), the number of pixels in which at least a part of the gazing target object OBJ_g is captured in the image indicated by image data IMG_2D generated by the imaging apparatus 21 positioned at the fourth position P4 is larger than the number of pixels in which at least a part of the gazing target object OBJ_g is captured in the image indicated by image data IMG_2D generated by the imaging apparatus 21 positioned at the third position P3. Furthermore, the proportion of the gazing target object OBJ_g relative to the imaging field of view of the imaging apparatus 21 positioned at the fourth position P4 is larger than the proportion of the gazing target object OBJ_g relative to the imaging field of view of the imaging apparatus 21 positioned at the third position P3.

Note that the number of pixels in which at least a part of the target object OBJ is captured in the image indicated by the image data IMG_2D increases as a size of a captured part of the target object OBJ in the image indicated by the image data IMG_2D is larger. Therefore, the movement control unit 314b may set the movement aspect of the imaging system 2 so that the size of the captured part of the gazing target object OBJ_g in the image indicated by the image data IMG_2D, which is acquired again at the step S1 after the imaging system 2 moves, is larger than the size of the captured part of the gazing target object OBJ_g in the image indicated by the image data IMG_2D, which has been already acquired at the step S1 before the imaging system 2 moves. As a result, it is likely that the result of the position pose computing including the 2D matching processing is good.

Moreover, the number of pixels in which at least a part of the target object OBJ is captured in the image indicated by the image data IMG_2D may be considered to be equivalent to the number of points of the target object OBJ captured in the image indicated by the image data IMG_2D (namely, points of the target object OBJ imaged by the imaging apparatus 21). Therefore, the movement control unit 314b may set the movement aspect of the imaging system 2 so that the number of points of the gazing target object OBJ_g captured in in the image indicated by the image data IMG_2D (namely, points of the target object OBJ imaged by the imaging apparatus 21), which is acquired again at the step S1 after the imaging system 2 moves, is larger than the number of points of the gazing target object OBJ_g captured in in the image indicated by the image data IMG_2D (namely, points of the target object OBJ imaged by the imaging apparatus 21), which has been already acquired at the step S1 before the imaging system 2 moves.

The movement control unit 314b may set the movement aspect of the imaging system 2 so that at least one of the position and the pose of the imaging system 2 changes relative to at least one target object OBJ imaged by the imaging system 2 (namely, at least one target object OBJ captured in the image indicated by the image data IMG_2D acquired by the movement control unit 314b at the step S62b). Especially, the movement control unit 314b may set the movement aspect of the imaging system 2 so that at least one of the position and the pose of the imaging system 2 changes relative to one target object OBJ, on which it is determined that the end effector 4 cannot perform the predetermined process, of the plurality of target objects OBJ imaged by the imaging system 2. For example, the gazing target object OBJ_g is the target object OBJ that is imaged by the imaging system 2 but on which the end effector 4 cannot perform the predetermined process. In this case, the movement control unit 314b may set the movement aspect of the imaging system 2 so that at least one of the position and the pose of the imaging system 2 relative to the gazing target object OBJ_g changes.

In a case where at least one of the position and the pose of the imaging system 2 relative to the target object OBJ (especially, the gazing target object OBJ_g) changes, a direction in which the imaging system 2 images the target object OBJ (especially, the gazing target object OBJ_g) may change. In this case, the movement control unit 314b may set the movement aspect of the imaging system 2 so that the direction in which the imaging system 2 images the target object OBJ (especially, the gazing target object OBJ_g) changes. Specifically, in a case where the imaging system 2 has already imaged the target object OBJ (especially, the gazing target object OBJ_g) from a first direction at the step S1 in FIG. 15, the movement control unit 314b may set the movement aspect of the imaging system 2 so that the movement of the imaging system 2 based on the movement aspect set at the step S63b in FIG. 15 allows the imaging system 2 to newly image the target object OBJ (especially, the gazing target object OBJ_g) from a second direction that is different from the first direction. For example, the movement control unit 314b may set the movement aspect of the imaging system 2 so that the imaging system 2, which has moved based on the set movement aspect, is positioned at a position that allows the imaging system 2 to image the target object OBJ (especially, the gazing target object OBJ_g) from the second direction. For example, the movement control unit 314b may set the movement aspect of the imaging system 2 so that the imaging system 2, which has moved based on the set movement aspect, takes a pose that allows the imaging system 2 to image the target object OBJ (especially, the gazing target object OBJ_g) from the second direction.

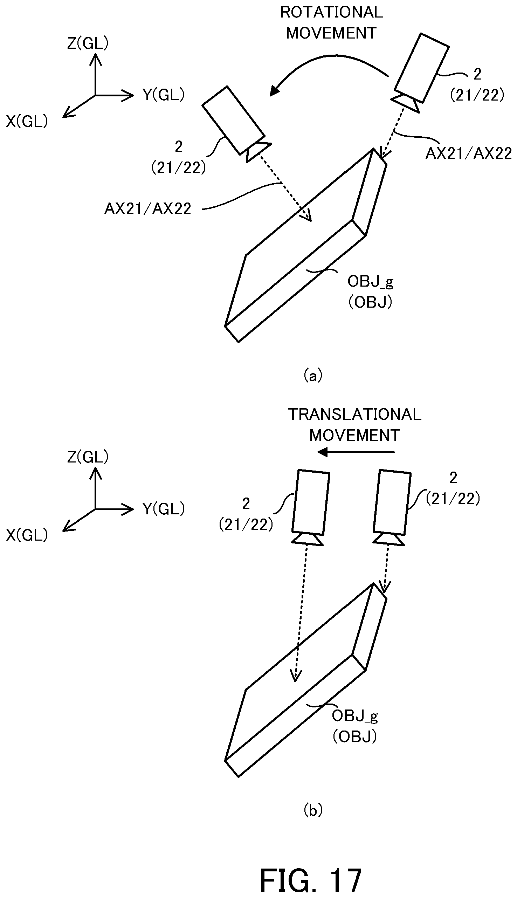

The movement control unit 314b may set the movement aspect of the imaging system 2 so that the imaging system 2 rotationally moves around a predetermined rotational axis relative to the gazing target object OBJ_g, as illustrated in FIG. 17(a). For example, the movement control unit 314b may set the movement aspect of the imaging system 2 so that the imaging system 2 rotationally moves around at least one of a rotational axis along the X-axis (GL) of the global coordinate system (alternatively, another coordinate system such as the robot coordinate system, the same applies in the fifth modified example below), the Y-axis (GL) of the global coordinate system, and the Z-axis (GL) of the global coordinate system. As one example, the movement control unit 314b may set the movement aspect of the imaging system 2 so that at least one of an optical axis direction extending from the imaging apparatus 21 along the optical axis AX21 of the imaging apparatus 21 and an optical axis direction extending from the imaging apparatus 22 along the optical axis AX22 of the imaging apparatus 22 changes relative to the target object OBJ (especially, the gazing target object OBJ_g) by rotationally moving the imaging system 2 around the predetermined rotational axis, as illustrated in FIG. 17(a). In a case where the imaging system 2 rotationally moves in this manner, it is likely that the direction in which the imaging system 2 images the target object OBJ (especially, the gazing target object OBJ_g) changes.

However, as illustrated in FIG. 17(b), the movement control unit 314b may set the movement aspect of the imaging system 2 so that the imaging system 2 translationally moves along a predetermined translational axis relative to the gazing target object OBJ_g in addition to or instead of the imaging system 2 rotationally moving around the predetermined rotational axis relative to the gazing target object OBJ_g. For example, the movement control unit 314b may set the movement aspect of the imaging system 2 so that the imaging system 2 translationally moves along at least one of the X-axis (GL) of the global coordinate system, the Y-axis (GL) of the global coordinate system, and the Z-axis (GL) of the global coordinate system.

Note that it may be considered that a direction in which the imaging system 2 gazes the target object OBJ (especially, the gazing target object OBJ_g) changes as the imaging system 2 rotationally moves under the control of the movement control unit 314b. In this case, a processing for rotationally moving the imaging system 2 under the control of the movement control unit 314b may be referred to as a gazing processing or a rotational movement processing. Moreover, in a case where the movement aspect of the imaging system 2 is set so that the imaging system 2 rotationally moves to the gazing target object OBJ_g and the imaging system 2 translationally moves relative to the gazing target object OBJ_g, a movement amount (namely, a rotational movement amount) of the imaging system 2 rotationally moving may be larger than a movement amount (namely, a translational movement amount) of the imaging system 2 translationally moving. Even in this case, the processing for rotationally moving the imaging system 2 under the control of the movement control unit 314b may be referred to as the gazing processing or the rotational movement processing. However, the movement amount of the imaging system 2 rotationally moving may be larger than the movement amount of the imaging system 2 translationally moving.

The movement aspect of the imaging system 2 may include a movement direction of the imaging system 2. Note that the movement direction of the imaging system 2 may mean a movement direction of at least one of the imaging apparatuses 21 and 22 in the second modified example. In this case, the movement control unit 314b may set the movement direction of the imaging system 2 relative to the gazing target object OBJ_g so that it is more likely that the result of the position pose computing is good. In a case where the imaging system 2 rotationally moves as illustrated in FIG. 17(a), the movement direction may mean a rotational direction. In a case where the imaging system 2 translationally moves as illustrated in FIG. 17(b), the movement direction may mean a translational direction.

The movement direction of the imaging system 2 may be automatically set by the control apparatus 3. For example, the control apparatus 3 may set a random movement direction as the movement direction of the imaging system 2. Alternatively, the movement direction of the imaging system 2 may be set by the user.

The movement aspect of the imaging system 2 may include a movement amount of the imaging system 2. Note that the movement amount of the imaging system 2 may mean a movement amount of at least one of the imaging apparatuses 21 and 22 in the second modified example. In this case, the movement control unit 314b may set the movement amount of the imaging system 2 relative to the gazing target object OBJ_g so that it is more likely that the result of the position pose computing is good. In a case where the imaging system 2 rotationally moves as illustrated in FIG. 17(a), the movement amount may mean a rotational amount (a rotational angle). In a case where the imaging system 2 translationally moves as illustrated in FIG. 17(b), the movement amount may mean a translational amount.

The movement amount of the imaging system 2 may be automatically set by the control apparatus 3. For example, the control apparatus 3 may set a random movement amount as the movement amount of the imaging system 2. Alternatively, the movement amount of the imaging system 2 may be set by the user.

At the step S63b, the movement control unit 314b may set the movement aspect of the imaging system 2 based on the instruction from the user of the robot system SYSb, in addition to or instead of automatically setting the movement aspect based on the image data IMG_2D (specifically, based on the position pose data POI generated from the image data IMG_2D). Moreover, for example, the user may set the movement aspect of the imaging system 2. The user may input the instruction for setting the movement aspect of the imaging system 2 by using the input apparatus 34 through a GUI (Graphical User Interface) and the like displayed on the output apparatus 35 that is configured to serve as the display apparatus. The movement control unit 314b may set the movement aspect of the imaging system 2 based on the instruction from the user input by using the input apparatus 34. In this case, the movement control unit 314b may set the movement aspect of the imaging system 2 based on the instruction from the user input by using the input apparatus 34 and the image data IMG_2D (specifically, the position pose data POI generated from the image data IMG_2D). Alternatively, the movement control unit 314b may set the movement aspect of the imaging system 2 based on the instruction from the user input by using the input apparatus 34 without using the image data IMG_2D (specifically, the position pose data POI generated from the image data IMG_2D).

The user may input, as information for setting the movement aspect of the imaging system 2, at least one of a target value of the position (a target position) of the imaging system 2 and a target value of the pose (a target pose) of the imaging system 2 when the imaging system 2 images the target object OBJ. For example, the user may set at least one of the target position of the imaging system 2 along the X-axis (GL) of the global coordinate system, the target position of the imaging system 2 along the Y-axis (GL) of the global coordinate system, the target position of the imaging system 2 along the Z-axis (GL) of the global coordinate system, the target pose of the imaging system 2 around the X-axis (GL) of the global coordinate system, the target pose of the imaging system 2 around the Y-axis (GL) of the global coordinate system, and the target pose of the imaging system 2 around the Z-axis (GL) of the global coordinate system.

In a case where the user sets the target position of the imaging system 2, the movement control unit 314b may set the movement aspect of the imaging system 2 based on image data IMG_2D (specifically, the position pose data POI generated from image data IMG_2D) so that the position of the imaging system 2 in the global coordinate system is matches the target position in the global coordinate system set by the user. In a case where the user sets the target pose of the imaging system 2, the movement control unit 314b may set the movement aspect of the imaging system 2 based on image data IMG_2D (specifically, the position pose data POI generated from image data IMG_2D) so that the pose of the imaging system 2 in the global coordinate system matches the target pose in the global coordinate system set by the user.

The user may input, as the information for setting the movement aspect of the imaging system 2, a positional relationship between the imaging system 2 and the target object OBJ when the imaging system 2 images the target object OBJ, in addition to or instead of setting at least one of the target position and the target pose of the imaging system 2. For example, the user may input as the information for setting the movement aspect of the imaging system 2, at least one of a relative position and a relative pose of the imaging system 2 relative to the target object OBJ when the imaging system 2 images the target object OBJ (relative position pose information). For example, the user may input as the information for setting the movement aspect of the imaging system 2, at least one of a relative position and a relative pose of the target object OBJ relative to the imaging system 2 when the imaging system 2 images the target object OBJ (relative position pose information).

The user may set the positional relationship between the imaging system 2 and the target object OBJ by using the input apparatus 34 through a GUI (Graphical User Interface) and the like displayed on the output apparatus 35 that is configured to serve as the display apparatus. For example, the user may set the positional relationship between the imaging system 2 and the target object OBJ by aligning a three-dimensional model of the imaging system 2 with a three-dimensional model of the target object OBJ on the GUI in which the three-dimensional model (for example, a CAD model) of the target object OBJ is displayed. As another example, the user may input the positional relationship between the imaging system 2 and the target object OBJ numerically by using the input apparatus 34. However, the relative position pose information is not limited to being input into the control apparatus 3 by the user; it may be automatically generated by the control apparatus 3. In this case, the control apparatus 3 may generate the relative position pose information based on a shape of the target object OBJ (for example, a shape of the CAD model).

The relative position pose information may be set so that it is more likely to be determined that the computing result condition is satisfied (namely, the position pose data POI of the gazing target object OBJ_g is properly generated) after the imaging system 2 moves relative to the gazing target object OBJ_g based on the movement aspect that is set based on the relative position pose information. Note that an example for setting the movement aspect of the imaging system 2 so that it is more likely to be determined that the computing result condition is satisfied after the imaging system 2 moves has already been described, and therefore, a detailed description thereof is omitted here.

Especially, the user or the control apparatus 3 may set the relative position pose information based on the position pose data POI of the gazing target object OBJ_g so that it is more likely to be determined that the computing result condition is satisfied (namely, the position pose data POI of the gazing target object OBJ_g is properly generated) after the imaging system 2 moves relative to the gazing target object OBJ_g based on the movement aspect that is set based on the relative position pose information, because the position pose data POI of the gazing target object OBJ_g is generated to set the movement aspect of the imaging system 2 as described above. In this case, it is expected that the position pose data POI of the gazing target object OBJ_g is reliably generated, and as a result, it is expected that the end effector 4 reliably performs the predetermined process on the gazing target object OBJ_g.

In a case where the user sets the positional relationship between the imaging system 2 and the target object OBJ, the movement control unit 314b may calculate a target value of the position (a target position) in the global coordinate system at which the imaging system 2 should be positioned after moving, based on the position pose data POI of the gazing target object OBJ_g generated at the step S63b (namely, at least one of the position and the pose of the target object OBJ in the global coordinate system) and the relative positional relationship set by the user. Then, the movement control unit 314b may set the movement aspect of the imaging system 2 so that the position of the imaging system 2 in the global coordinate system matches the calculated target position. Moreover, the movement control unit 314b may calculate a target value of the pose (a target pose) in the global coordinate system which should be taken by the imaging system 2 after moving, based on the position pose data POI of the gazing target object OBJ_g generated at the step S63b (namely, at least one of the position and the pose of the target object OBJ in the global coordinate system) and the relative positional relationship set by the user. Then, the movement control unit 314b may set the movement aspect of the imaging system 2 so that the pose of the imaging system 2 in the global coordinate system matches the calculated target pose.

At the step S63b, the movement control unit 314b may set the movement aspect indicated by change information as the movement aspect of the imaging system 2, in addition to or instead of setting the movement aspect of the imaging system 2 based on the image data IMG_2D. The movement aspect indicated by the change information may be a fixed movement aspect. Namely, the change information may indicate (in other words, may specify or define) a fixed movement aspect as the movement aspect of the imaging system 2. For example, the change information may indicate a fixed movement direction. For example, the change information may indicate a fixed movement amount. In this case, the change information may be considered to indicate at least one of a direction and an amount for changing at least one of the position and the pose of the imaging system 2. The change information may be set by the user or may be automatically set by the movement control unit 314b.

In a case where the movement control unit 314b sets the movement aspect indicated by the change information as the movement aspect of the imaging system 2, the movement control unit 314b may not newly (in other words, again) acquire the image data IMG_2D at the step S62b in FIG. 15, and may not calculate at least one of the position and the pose of the target object OBJ based on the image data IMG_2D to set the movement aspect of the imaging system 2 at the step S62c in FIG. 15. Therefore, a processing load of the movement control unit 314b for moving the imaging system 2 from the step S62b to the step S64b in FIG. 15 is reduced. As a result, a time required to move the imaging system 2 from the step S62b to the step S64b in FIG. 15 is reduced.

Furthermore, in a case where the movement control unit 314b sets the movement aspect indicated by the change information as the movement aspect of the imaging system 2, the imaging system 2 may not generate the image data IMG_2D acquired by the movement control unit 314b at the step S62b in FIG. 15. Namely, the imaging system 2 may not image the target object OBJ to generate the image data IMG_2D acquired by the movement control unit 314b at the step S62b in FIG. 15. Therefore, the time required to move the imaging system 2 from the step S62b to the step S64b in FIG. 15 is reduced, because a time required for the imaging system 2 to image the target object OBJ and generate the image data IMG_2D is not necessary.

Again in FIG. 15, then, the movement control unit 314b generates the robot control signal for controlling the robot arm 12 to move the imaging system 2 based on the movement aspect set at the step S63b (a step S64b). As a result, the imaging system 2 moves based on the movement aspect set at the step S63b (the step S64b). For example, the imaging system 2 may move along the movement direction set at the step S63b. For example, the imaging system 2 may move by the movement amount set at the step S63b.

Then, the processing from the step S1 is repeated. Namely, the processing for moving the imaging system 2 (the step S62b to the step S64b) and the position pose computing (the step S1 to the step S3) are alternately repeated until it is determined at the step S61b that the end effector 4 can perform the predetermined process on the target object OBJ (especially, the result of the position pose computing is good).

Here, when the imaging system 2 moves at the step S64b, at least one of the position and the pose of the imaging system 2 changes. For example, the position of the moved imaging system 2 changes to a position that is different from the position of the imaging system 2 at a timing at which the imaging system 2 images the target object OBJ (especially, the gazing target object OBJ_g) to generate at least one of the image data IMG_2D and IMG_3D used for a past determination that the computing result condition is not satisfied. As a result, the position of the imaging system 2 at the timing at which the imaging system 2 images the target object OBJ (especially, the gazing target object OBJ_g) to generate at least one of the image data IMG_2D and IMG_3D used for a past determination that the computing result condition is not satisfied changes relative to the target object OBJ (especially, the gazing target object OBJ_g). For example, the pose of the moved imaging system 2 changes to a pose that is different from the pose of the imaging system 2 at a timing at which the imaging system 2 images the target object OBJ (especially, the gazing target object OBJ_g) to generate at least one of the image data IMG_2D and IMG_3D used for a past determination that the computing result condition is not satisfied. As a result, the pose of the imaging system 2 at the timing at which the imaging system 2 images the target object OBJ (especially, the gazing target object OBJ_g) to generate at least one of the image data IMG_2D and IMG_3D used for a past determination that the computing result condition is not satisfied changes relative to the target object OBJ (especially, the gazing target object OBJ_g). Therefore, the appearance of the target object OBJ (especially, the gazing target object OBJ_g) in the images indicated by each of the image data IMG_2D and IMG_3D changes. As a result, there is a possibility to be determined that the computing result condition is satisfied (for example, the result of the position pose computing is good) based on at least one of the image data IMG_2D and IMG_3D acquired after the imaging system 2 moves, even in a case where it is determined that the computing result condition is not satisfied (for example, the result of the position pose computing is not good) based on at least one of the image data IMG_2D and IMG_3D acquired before the imaging system 2 moves. As one example, there is a possibility to be determined that the end effector 4 can perform the predetermined process on the gazing target object OBJ_g (for example, the matching similarity of the gazing target object OBJ_g is higher than the matching determination threshold value) by the position pose computing performed based on at least one of the image data IMG_2D and IMG_3D acquired after the imaging system 2 moves, even in a case where it is determined that the end effector 4 cannot perform the predetermined process on the gazing target object OBJ_g (for example, the matching similarity of the gazing target object OBJ_g is lower than the matching determination threshold value) by the position pose computing performed based on at least one of the image data IMG_2D and IMG_3D acquired before the imaging system 2 moves. As a result, it is more likely that the end effector 4 can perform the predetermined process on the target object OBJ (especially, the gazing target object OBJ_g), compared to a case where the imaging system 2 does not move.

Thus, even in a case where it has been determined that the end effector 4 cannot perform the predetermined process on a first target object OBJ, it is more likely to be determined that the end effector 4 can perform the predetermined process on a second target object OBJ, which is the same as or different from the first target object OBJ, by performing the gazing processing. As one example, even in a case where it has been determined that the end effector 4 cannot perform the predetermined process on the gazing target object OBJ_g, it is more likely to be determined that the end effector 4 can perform the predetermined process on the same gazing target object OBJ_g by performing the gazing processing. As another example, it is more likely to be determined that the end effector 4 can perform the predetermined process on the target object OBJ, for which it has been determined that the end effector 4 cannot perform the predetermined process before the gazing processing but which is closest to a successful process by the end effector 4, by performing the gazing processing. Therefore, the gazing processing may be regarded as a processing for increasing a possibility of the success of the predetermined process performed by the end effector 4 on the target object OBJ. The gazing processing may be regarded as a processing for ensuring the success of the predetermined process performed by the end effector 4 on the target object OBJ.

Here, the target object OBJ may not move in an imaging apparatus movement period that is from a timing at which the image data IMG_2D is generated at the step S62b before the imaging system 2 moves to a timing at which at least one of the image data IMG_2D and IMG_3D is generated at the step S1 after the imaging system 2 moves. Namely, the target object OBJ may be stationary in the imaging apparatus movement period. In other words, the actual position and the actual pose of the target object OBJ may not change before and after the movement of the imaging apparatus 2. Even in a case where the actual position and the actual pose of the target object OBJ do not change in this manner, the position and the pose of the target object OBJ calculated by the position pose computing performed again at the step S3 after the imaging system 2 moves may be different from the position and the pose of the target object OBJ calculated at the step S63b before the imaging system 2 moves. This is because the imaging system 2 moves, thereby, the imaging system 2 images the target object OBJ from a position that is different from the position of the imaging system 2 before the imaging system 2 moves, as described above. In this case, there is a possibility that the result of the position pose computing improves (in other words, changes) after the imaging system 2 moves. As a result, there is a possibility that the position and the pose of the target object OBJ, which are calculated by the position pose computing performed again at the step S3 after the imaging system 2 moves, are closer to the actual position and the actual pose of the target object OBJ, compared to the position and the pose of the target object OBJ that are calculated at the step S63b before the imaging system 2 moves. For this reason, even in a case where the actual position and the actual pose of the target object OBJ do not change, there is a possibility that the position and the pose of the target object OBJ calculated by the position pose computing performed again at the step S3 after the imaging system 2 moves may be different from the position and the pose of the target object OBJ calculated at the step S63b before the imaging system 2 moves. However, in some cases, the position and the pose of the target object OBJ calculated by the position pose computing performed again at the step S3 after the imaging system 2 moves may be the same as the position and the pose of the target object OBJ calculated at the step S63b before the imaging system 2 moves, respectively.

Note that the position and the pose of the target object OBJ calculated by the position pose computing performed again at the step S3 after the imaging system 2 moves may be different from the position and the pose of the target object OBJ calculated at the step S63b before the imaging system 2 moves at the step S62b, respectively, in a case where a type of the image data (for example, the image data IMG_3D) used to calculate the position and the pose of the target object OBJ at the step S3 is different from a type of the image data (for example, the image data IMG_2D) used to calculate the position and the pose of the target object OBJ at the step S63b. This is because the 3D matching processing is performed at the step S3 and the 2D matching processing, which is different from the 3D matching processing, is performed at the step S63b. However, even in this case, the position and the pose of the target object OBJ calculated by the position pose computing performed again at the step S3 after the imaging system 2 moves may be different from the position and the pose of the target object OBJ calculated at the step S63b before the imaging system 2 moves at the step S62b, respectively, by the improvement of the result of the position pose computing due to the movement of the imaging system 2.

However, the target object OBJ may move in at least a part of the imaging apparatus movement period. In this case, the position and the pose of the target object OBJ calculated by the position pose computing performed again at the step S3 after the imaging system 2 moves may be different from the position and the pose of the target object OBJ calculated at the step S63b before the imaging system 2 moves, respectively.

In a case where the gazing target object OBJ_g (alternatively, another target object OBJ that is different from the gazing target object OBJ_g, in addition to or instead of the gazing target object OBJ_g, the same applies in this paragraph) is stationary in the imaging apparatus movement period, it is more likely to be determined that the computing result condition is satisfied after the imaging system 2 moves, compared to a case where the gazing target object OBJ_g moves in the imaging apparatus movement period. This is because the movement aspect of the imaging system 2 is set so that it is more likely to be determined that the end effector 4 can perform the predetermined process on the gazing target object OBJ_g at a timing at which the imaging system 2 generates the image data IMG_2 acquired at the step S62b (namely, the imaging system 2 images the target object OBJ to generate the image data IMG_2D acquired at the step S62b), as described above. In this case, if the gazing target object OBJ_g moves in the imaging apparatus movement period, there is a possibility that the movement aspect of the imaging system 2 for increasing the possibility of the determination that the end effector 4 can perform the predetermined process on the gazing target object OBJ_g that has moved may change from the movement aspect of the imaging system 2 for increasing the possibility of the determination that the end effector 4 can perform the predetermined process on the gazing target object OBJ_g that has not moved yet. As a result, even in a case where the imaging system 2 moves based on the movement aspect that is set to increase the possibility of the determination that the end effector 4 can perform the predetermined process on the gazing target object OBJ_g that has not moved yet in a situation where the gazing target object OBJ_g moves in the imaging apparatus movement period, it may not necessarily increase the possibility that the end effector 4 can perform the predetermined process on the gazing target object OBJ_g that has moved. Therefore, in a case where the gazing target object OBJ_g is stationary in the imaging apparatus movement period, it is more likely to be determined that end effector 4 can perform the predetermined process on the gazing target object OBJ_g after the imaging system 2 moves, compared to a case where the gazing target object OBJ_g moves in the imaging apparatus movement period. Namely, it is more likely to be determined that the computing result condition is satisfied (namely, the result of the position pose computing is good).

However, in a case where the gazing target object OBJ_g (alternatively, another target object OBJ that is different from the gazing target object OBJ_g, in addition to or instead of the gazing target object OBJ_g, the same applies in this paragraph) moves in the imaging apparatus movement period, the movement control unit 314b may predict the movement aspect of the gazing target object OBJ_g in the imaging apparatus movement period and set the movement aspect of the imaging system 2 based on a predicted result of the gazing target object OBJ_g in the imaging apparatus movement period at the step S63b. In this case, even in a case where the gazing target object OBJ_g moves in the imaging apparatus movement period, it is likely to be determined that the end effector 4 can perform the predetermined process on the gazing target object OBJ_g after the imaging system 2 moves, , as with a case where the gazing target object OBJ_g is stationary in the imaging apparatus movement period. Note that the movement control unit 314b may predict a change of the position and the pose of the gazing target object OBJ_g based on a temporal change of at least one of the position and the pose of the gazing target object OBJ_g, which is calculated from at least one of the image data IMG_2D and IMG_3D generated by the imaging system 2 imaging the moving gazing target object OBJ_g.

Note that the target object OBJ may not move even in a period from a timing at which at least one of the image data IMG_2D and IMG_3D is generated at the step S1 before the imaging system 2 moves to a timing at which at least one of the image data IMG_2D and IMG_3D is newly generated at the step S1 after the imaging system 2 moves. Namely, the target object OBJ may be stationary even in the period from a timing at which at least one of the image data IMG_2D and IMG_3D is generated at the step S1 before the imaging system 2 moves to a timing at which at least one of the image data IMG_2D and IMG_3D is newly generated at the step S1 after the imaging system 2 moves. Alternatively, the target object OBJ may move in the period from a timing at which at least one of the image data IMG_2D and IMG_3D is generated at the step S1 before the imaging system 2 moves to a timing at which at least one of the image data IMG_2D and IMG_3D is newly generated at the step S1 after the imaging system 2 moves.

In a case where it is determined again that the computing result condition is not satisfied after the imaging system 2 moves, the movement control unit 314b may set the movement aspect of the imaging system 2 again so that the direction in which the imaging system 2 images the target object OBJ (especially, the gazing target object OBJ_g) changes. Especially, the movement control unit 314b may set the movement aspect of the imaging system 2 again so that the imaging system 2 can newly image the target object OBJ (especially, the gazing target object OBJ_g) from a direction that is different from a direction in which the imaging system 2 has already imaged the target object OBJ (especially, the gazing target object OBJ_g). For example, in a case where the imaging system 2, which has moved by the gazing processing, has already imaged the target object OBJ (especially, the gazing target object OBJ_g) from a first direction, the movement control unit 314b may set the movement aspect of the imaging system 2 so that the imaging system 2 moves again based on the movement aspect, which is set again, to imager the target object OBJ (especially, the gazing target object OBJ_g) from a second direction that is different from the first direction. For example, the movement control unit 314b may set the movement aspect of the imaging system 2 again so that the imaging system 2 moves again based on the movement aspect, which is set again, to be positioned at a position at which the imaging system 2 can image the target object OBJ (especially, the gazing target object OBJ_g) from the second direction. For example, the movement control unit 314b may set the movement aspect of the imaging system 2 again so that the imaging system 2 moves again based on the movement aspect, which is set again, to take a pose that allows the imaging system 2 to image the target object OBJ (especially, the gazing target object OBJ_g) from the second direction.

In a case where it is determined again that the computing result condition is not satisfied after the imaging system 2 moves, the movement control unit 314b may set the movement aspect of the imaging system 2 again so that the movement aspect of the imaging system 2 that is set after it is determined again that the computing result condition is not satisfied is different from the movement aspect of the imaging system 2 that has been set before it is determined again that the computing result condition is not satisfied. Namely, the movement control unit 314b may change the movement aspect of the imaging system 2 each time it is determined that the computing result condition is not satisfied.

As one example, the movement control unit 314b may change the movement aspect of the imaging system 2 by changing a method for setting the movement aspect of the imaging system 2 (a movement aspect setting method) each time it is determined that the computing result condition is not satisfied. Specifically, in a case where it is determined again that the movement result condition is not satisfied after the imaging system 2 moves based on the movement aspect set by a first movement aspect setting method, the movement control unit 314b may move the imaging system 2 based on the movement aspect set by a second movement aspect setting method for setting the movement aspect (namely, a second movement aspect setting method that is different from the first movement aspect setting method). For example, in a case where it is determined again that the movement result condition is not satisfied after the imaging system 2 moves based on the movement aspect that is set based on the image data IMG_2D, the movement control unit 314b may move the imaging system 2 based on the movement aspect that is set based on the change information. For example, in a case where it is determined again that the movement result condition is not satisfied after the imaging system 2 moves based on the movement aspect that is set based on the image data IMG_2D, the movement control unit 314b may move the imaging system 2 based on the movement aspect that is set by the user. For example, in a case where it is determined again that the movement result condition is not satisfied after the imaging system 2 moves based on the movement aspect that is set based on the change information, the movement control unit 314b may move the imaging system 2 based on the movement aspect that is set based on the image data IMG_2D. For example, in a case where it is determined again that the movement result condition is not satisfied after the imaging system 2 moves based on the movement aspect that is set based on the change information, the movement control unit 314b may move the imaging system 2 based on the movement aspect that is set by the user. For example, in a case where it is determined again that the movement result condition is not satisfied after the imaging system 2 moves based on the movement aspect that is set by the user, the movement control unit 314b may move the imaging system 2 based on the movement aspect that is set based on the image data IMG_2D. For example, in a case where it is determined again that the movement result condition is not satisfied after the imaging system 2 moves based on the movement aspect that is set by the user, the movement control unit 314b may move the imaging system 2 based on the movement aspect that is set based on the change information.

As another example, the movement control unit 314b may change the movement aspect of the imaging system 2 by changing the movement direction of the imaging system 2, in addition to or instead of changing the movement aspect setting method, each time it is determined that the computing result condition is not satisfied. Specifically, in a case where it is determined again that the movement result condition is not satisfied after the imaging system 2 moves toward a first movement direction, the movement control unit 314b may move the imaging system 2 toward a second movement direction that is different from the first movement direction. For example, in a case where it is determined again that the movement result condition is not satisfied after the imaging system 2 moves toward the first movement direction, the movement control unit 314b may move the imaging system 2 toward the second movement direction that intersects the first movement direction. For example, in a case where it is determined again that the movement result condition is not satisfied after the imaging system 2 moves toward the first movement direction, the movement control unit 314b may move the imaging system 2 toward the second movement direction that is orthogonal to the first movement direction. For example, in a case where it is determined again that the movement result condition is not satisfied after the imaging system 2 moves toward the first movement direction, the movement control unit 314b may move the imaging system 2 toward the second movement direction that is opposite to the first movement direction.

As another example, the movement control unit 314b may change the movement aspect of the imaging system 2 by changing the movement amount of the imaging system 2, in addition to or instead of changing at least one of the movement aspect setting method and the movement direction, each time it is determined that the computing result condition is not satisfied. Specifically, in a case where it is determined again that the movement result condition is not satisfied after the imaging system 2 moves by a first movement amount, the movement control unit 314b may move the imaging system 2 by a second movement amount that is different from the first movement amount. For example, in a case where it is determined again that the movement result condition is not satisfied after the imaging system 2 moves by the first movement amount, the movement control unit 314b may move the imaging system 2 by the second movement amount that is longer than the first movement amount. For example, in a case where it is determined again that the movement result condition is not satisfied after the imaging system 2 moves by the first movement amount, the movement control unit 314b may move the imaging system 2 by the second movement amount that is shorter than the first movement amount.

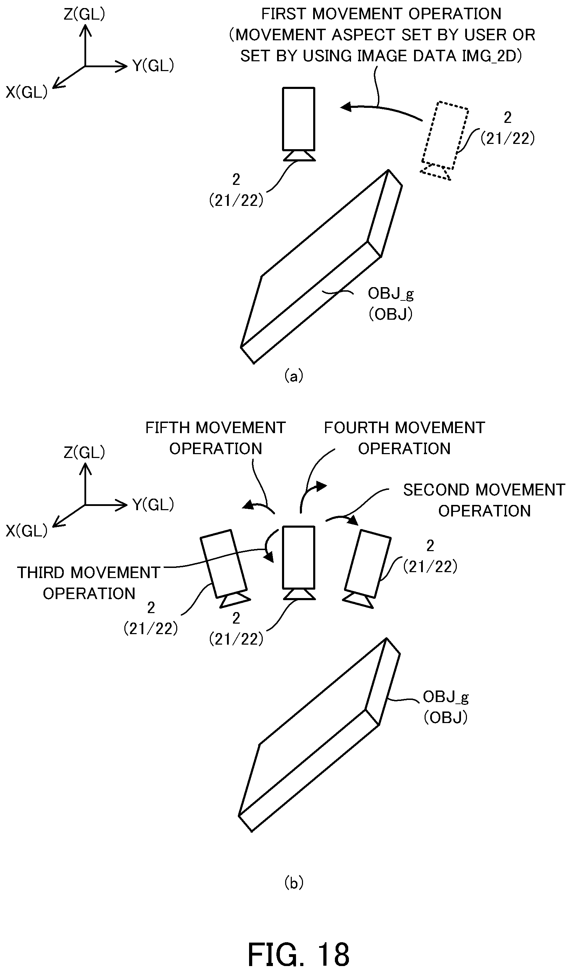

One example in which at least one of the movement aspect setting method, the movement direction, and the movement amount of the imaging system 2 is changed each time it is determined that the computing result condition is not satisfied is illustrated in FIG. 18(a) and FIG. 18(b).

As illustrated in FIG. 18(a), in a case where it is determined for the first time that the computing result condition is not satisfied, the movement control unit 314b may move the imaging system 2 based on the movement aspect set based on the image data IMG_2D. For example, the movement control unit 314b may move the imaging system 2 based on the movement aspect set based on the image data IMG_2D and information input by the user (the positional relationship between the imaging system 2 (namely, the position pose data POI of the gazing target object OBJ_g) and the gazing target object OBJ_g in a case where the imaging system 2 images the target object OBJ, namely, the relative position pose information). In this case, the movement control unit 314b may calculate a target value of the position (namely, an initial target position) in the global coordinate system, at which of the imaging system 2 should be positioned after moving, based on the position pose data POI (namely, at least one of the position and the pose of the target object OBJ in the global coordinate system) of the gazing target object OBJ_g, which is generated from the image data IMG_2D at the step S63b, and the positional relationship between the imaging system 2 and the gazing target object OBJ_g (namely, the above-described relative position pose information), which is set by the user, and move the imaging system 2 so that the position of the imaging system 2 in the global coordinate system matches the calculated initial target position. Moreover, the movement control unit 314b may calculate a target value of the pose (namely, an initial target pose) in the global coordinate system, which should be taken by the imaging system 2 should take after moving, based on the position pose data POI (namely, at least one of the position and the pose of the target object OBJ in the global coordinate system) of the gazing target object OBJ_g, which is generated from the image data IMG_2D at the step S63b, and the positional relationship between the imaging system 2 and the gazing target object OBJ_g (namely, the above-described relative position pose information), which is set by the user, and move the imaging system 2 so that the pose of the imaging system 2 in the global coordinate system matches the calculated initial target pose. As illustrated in FIG. 18(a), the movement control unit 314b performs a first movement operation for at rotationally moving the imaging system 2 at least so that the position of the imaging system 2 is changed from a current position to the initial target position and the pose of the imaging system 2 is changed from a current pose to the initial target pose.

Then, as illustrated in FIG. 18(b), in a case where it is determined for the second or more time that the computing result condition is not satisfied, the movement control unit 314b may move the imaging system 2 based on the movement aspect indicated by the change information. Especially, as illustrated in FIG. 18(b), the movement control unit 314b may repeat an operation for moving the imaging system 2 based on the movement aspect indicated by the change information in a case where it is determined for the second or more time that the computing result condition is not satisfied. Specifically, in a case where it is determined for the second time that the computing result condition is not satisfied, the movement control unit 314b may move the imaging system 2 based on one movement aspect indicated by the change information. Then, the operation for moving based on another movement aspect indicated by the change information may be repeated each time it is determined again that the computing result condition is not satisfied.

In this case, the change information may be information indicating that the imaging system 2 is moved based on a plurality of different movement aspects in order. For example, the change information may be information indicating that the imaging system 2 is moved by a plurality of different movement amounts in order. For example, the change information may be information indicating that the imaging system 2 is moved toward a plurality of different movement directions in order.

In the example illustrated in FIG. 18(b), in a case where it is determined for the second time that the computing result condition is not satisfied, the movement control unit 314b performs a second movement operation for rotationally moving the imaging system 2, which is positioned at the initial target position and which takes the initial target pose, in a negative rotational direction around the X-axis (GL). Then, in a case where it is determined for the third time that the computing result condition is not satisfied, the movement control unit 314b performs a third movement operation for rotationally moving the imaging system 2, which is positioned at the initial target position and which takes the initial target pose, in a positive rotational direction around the Y-axis (GL). However, the position of the imaging system 2 is different from the initial target position and / or the pose of the imaging system 2 is different from the initial target pose after the second movement operation is performed. In this case, the movement control unit 314b may calculate, as the target position and the target pose of the imaging system 2 in the third movement operation, the position and the pose of the imaging system 2 assuming that the imaging system 2, which is positioned at the initial target position and which takes the initial target pose, is rotationally moved in the positive rotational direction around the Y-axis (GL), based on the change information and at least one of the position and the pose of the imaging system 2, and perform the third movement operation so that the position of the imaging system 2 matches the target position and the pose of the imaging system 2 matches the target pose. The same applies to fourth and fifth rotational movement operations described below. Then, in a case where it is determined for the fourth time that the computing result condition is not satisfied, the movement control unit 314b performs a fourth movement operation for rotationally moving the imaging system 2, which is positioned at the initial target position and which takes the initial target pose, in a negative rotational direction around the Y-axis (GL). Then, in a case where it is determined for the fifth time that the computing result condition is not satisfied, the movement control unit 314b performs a fifth movement operation for rotationally moving the imaging system 2, which is positioned at the initial target position and which takes the initial target pose, in a positive rotational direction around the X-axis (GL). Note that the movement control unit 314b may translationally move the imaging system 2, in addition to or instead of rotationally moving it.

Namely, in FIG. 18(b), in a case where it is determined for the second or more time that the computing result condition is not satisfied, the movement control unit 314b may repeat an operation for moving the imaging system 2, which is positioned at the initial target position and which takes the initial target pose, toward the movement direction indicated by the change information while changing the movement direction based on the change information. In this case, the movement amount of the imaging system 2 may be fixed. Alternatively, the movement amount of the imaging system 2 may be changed. Namely, in a case where it is determined for the second or more time that the computing result condition is not satisfied, the movement control unit 314b may repeat the operation for moving the imaging system 2, which is positioned at the initial target position and which takes the initial target pose, toward the movement direction indicated by the change information by the movement amount indicated by the change information, while changing at least one of the movement direction and the movement amount based on the change information. Alternatively, in a case where it is determined for the second or more time that the computing result condition is not satisfied, the movement control unit 314b may repeat the operation for moving the imaging system 2, which is positioned at the initial target position and which takes the initial target pose, by the movement amount indicated by the change information, while changing the movement amount based on the change information but fixing the movement direction of the imaging system 2.

However, in a case where, for the second or more time, the computing result condition is not satisfied, the movement aspect of the imaging system 2 may be set by using the same change information. For example, in a case where it is determined for the second or more time that the computing result condition is not satisfied, the movement control unit 314b may use the same change information to repeat the operation for moving the imaging system 2 toward the movement direction indicated by the change information by the movement amount indicated by the change information. Namely, the movement control unit 314b may move the imaging system 2 toward the same direction by the same amount each time it is determined for the second or more time that the computing result condition is not satisfied. In this case, the movement control unit 314b can move the imaging system 2 without sequentially changing the change information.

In a case where the movement control unit 314b moves the imaging system 2 based on the movement aspect indicated by the change information in a case where it is determined for the second or more time that the computing result condition is not satisfied in this manner, the movement control unit 314b may not newly (namely, again) acquire the image data IMG_2D at the step S62b in FIG. 15, and may not calculate at least one of the position and the pose of the target object OBJ based on the image data IMG_2D again to set the movement aspect of the imaging system 2 at the step S62c in FIG. 15. Furthermore, the imaging system 2 may not generate the image data IMG_2D, and may not image the target object OBJ to set the movement aspect of the imaging system 2 at the step S62c in FIG. 15. Therefore, a processing load of the movement control unit 314b for moving the imaging system 2 from the step S62b to the step S64b in FIG. 15 is reduced. Furthermore, a time required for the imaging system 2 to image the target object OBJ and generate the image data IMG_2D is not necessary. Therefore, the time required to move the imaging system 2 from the step S62b to the step S64b in FIG. 15 is reduced. As a result, the time required to perform the robot control processing illustrated in FIG. 15 is reduced.

However, even in a case where it is determined for the second or more time that the computing result condition is not satisfied, the movement control unit 314b may set (set again) the movement aspect, which is different from the movement aspect indicated by the change information, as the movement aspect of the imaging system 2.

As a first example, the movement control unit 314b may set the movement aspect of the imaging system 2 again based on both the above-described relative position pose information and the change information. For example, the movement control unit 314b may set, as the movement aspect of the imaging system 2 again, the movement amount that is obtained by reflecting (for example, adding) the movement amount of the imaging system 2 indicated by the change information onto the movement amount of the imaging system 2 indicated by the relative position pose information. For example, the movement control unit 314b may set, the movement aspect of the imaging system 2 again, the movement direction that is obtained by reflecting the movement direction of the imaging system 2 indicated by the change information onto the movement direction of the imaging system 2 indicated by the relative position pose information.

As a second example, in a case where a plurality of different relative position pose information are set, the movement control unit 314b may set the movement aspect of the imaging system 2 again based on one relative position pose information, which is not used yet to set the movement aspect of the imaging system 2, of the plurality of different relative position pose information without using the change information. Note that priorities may be assigned to the plurality of different relative position pose information. In this case, the movement control unit 314b may sequentially use the plurality of different relative position pose information in order of priority, from highest to lowest, to set the movement aspect of the imaging system 2.

As a third example, the movement control unit 314b may set a random movement aspect as the movement aspect of the imaging system 2 without using the change information. For example, the movement control unit 314b may set a random movement direction as the movement direction of the imaging system 2 that is one example of the movement aspect of the imaging system 2. For example, the movement control unit 314b may set a random movement amount as the movement amount of the imaging system 2 that is one example of the movement aspect of the imaging system 2.

As a fourth example, the movement control unit 314b may set the movement aspect of the imaging system 2 again based on the position pose data POI of the gazing target object OBJ_g. For example, the signal generation unit 313 may set the movement aspect of the imaging system 2 again based on the position pose data POI of the gazing target object OBJ_g and the relative position pose information. Conversely, in the above-described description, the movement control unit 314b sets the movement aspect of the imaging system 2 based on the position pose data POI of the gazing target object OBJ_g and the relative position pose information in a case where it is determined for the first time that the computing result condition is not satisfied. However, in a case where it is determined for the first time that the computing result condition is not satisfied, the movement control unit 314b may set the movement aspect of the imaging system 2 without using the position pose data POI of the gazing target object OBJ_g and the relative position pose information. For example, in a case where it is determined for the first time that the computing result condition is not satisfied, the movement control unit 314b may set the movement aspect indicated by the change information as the movement aspect of the imaging system 2 for the gazing processing.

The movement control unit 314b may change the method for setting the movement aspect of the imaging system 2 based on the instruction from the user. In this case, for example, the user may input the instruction for designating a rule for setting the movement aspect of the imaging system 2 by using the input apparatus 34 through a GUI (Graphical User Interface) and the like displayed on the output apparatus 35 that is configured to serve as the display apparatus. For example, in the example illustrated in FIG. 18(a), the user may input the instruction for designating a rule that "the imaging system 2 is moved based on the movement aspect set based on the image data IMG_2D (namely, the movement aspect set based on image data IMG_2D and the information input by the user) in a case where it is determined for the first time that the computing result condition is not satisfied". Namely, the user may input the instruction for designating a rule that "a method for setting the movement aspect based on the image data IMG_2D (namely, based on image data IMG_2D and the information input by the user) is used as the method for setting the movement aspect of the imaging system 2 in a case where it is determined for the first time that the computing result condition is not satisfied". For example, in the example illustrated in FIG. 18(b), the user may input the instruction for designating a rule that "the imaging system 2 is moved based on the movement aspect (namely, at least one of the movement direction and the movement amount) indicated by the change information in a case where it is determined for the second or more time that the computing result condition is not satisfied". Namely, the user may input the instruction for designating a rule that "a method for setting the movement aspect based on the change information is used as the method for setting the movement aspect of the imaging system 2 in a case where it is determined for the second or more time that the computing result condition is not satisfied".

Note that the control apparatus 3 may determine at the step S62b whether or not the computing result condition is satisfied based on the acquired image data IMG_2D, in addition to or instead of moving the imaging system 2 by performing the operation from the step S63b to the step S64b, in a case where it is determined at the step S61b that the computing result condition is not satisfied. Specifically, in a case where the image data IMG_3D acquired at the step S1 is used to determine at the step S61b whether or not the computing result condition is satisfied, the control apparatus 3 may acquire the image data IMG_2D that is image data whose type is different from that of the image data IMG_3D acquired at the step S1, perform the position pose computing including the 2D matching processing based on the acquired image data IMG_2D, and determine again whether or not the computing result condition related to the result of the position pose computing is satisfied at the step S62b. Alternatively, in a case where the image data IMG_2D acquired at the step S1 is used to determine at the step S61b whether or not the computing result condition is satisfied, the control apparatus 3 may acquire the image data IMG_3D that is image data whose type is different from that of the image data IMG_2D acquired at the step S1, perform the position pose computing including the 3D matching processing based on the acquired image data IMG_3D, and determine again whether or not the computing result condition related to the result of the position pose computing is satisfied at the step S62b. Namely, in a case where the image data generated by one of the imaging apparatuses 21 and 22 is used to determine at the step S61b whether or not the computing result condition is satisfied, the control apparatus 3 may perform the position pose computing including the matching processing based on the image data generated by the other one of the imaging apparatuses 21 and 22, and determine again whether or not the computing result condition related to the result of the position pose computing is satisfied at the step S62b. In this case, even in a case where it has been determined that the computing result condition, which is related to the result of the position pose computing including the matching processing based on the image data generated by one of the imaging apparatuses 21 and 22, is not satisfied, there is a possibility to be determined that the computing result condition, which is related to the result of the position pose computing including the matching processing based on the image data generated by the other one of the imaging apparatus 21 or 22, is satisfied. This is because at least one of the position and the pose of imaging apparatus 21 is different from at least one of the position and the pose of the imaging apparatus 22 to some extent. Then, in a case where it is determined that the computing result condition related to the result of the position pose computing including the matching processing based on the image data IMG_2D (alternatively, the image data IMG_3D) acquired at the step S62b is satisfied, the control apparatus 3 may generate the robot control signal at the step S4 by using the position pose data POI generated based on the image data IMG_2D (alternatively, the image data IMG_3D) acquired at the step S62b. In this case, it is not necessarily required to move the imaging system 2 at the step S64b, and therefore, a throughput of the robot control processing illustrated in FIG. 15 improves. On the other hand, in a case where it is determined at the step S62b that the end effector 4 cannot perform the predetermined process on the target object OBJ based on the image data IMG_2D (alternatively, the image data IMG_3D) acquired at the step S62b, the control apparatus 3 may move the imaging system 2 by performing the operation from the step S63b to the step S64b.

After the imaging system 2 moves at the step S64b, the control apparatus 3b may perform the processing from the step S1 to the step S3 and from the step S61b to the step S63b in a situation where the imaging system 2 is stationary. Alternatively, after the imaging system 2 moves at the step S64b, the control apparatus 3b may perform the processing from the step S1 to the step S3 and from the step S61b to the step S63b in a situation where the imaging system 2 continues moving. As one example, in a case where the target object OBJ has already been detected by the position pose computing, the control apparatus 3b may perform the processing from the step S1 to the step S3 and from the step S61b to the step S63b in a situation where the imaging system 2 continues moving to approach the detected target object OBJ.

As described above, in the second modified example, in a case where it is determined that the computing result condition is not satisfied, the control apparatus 3b may move the imaging apparatus 21 and 22 and then perform the position pose computing again. Therefore, it is more likely that the computing result condition is satisfied (namely, the result of the position pose computing is good), compared to a case where the imaging apparatus 21 and 22 do not move in a case where it is determined that the computing result condition is not satisfied. Therefore, the control apparatus 3b can properly calculate the position and the pose of the target object OBJ. As a result, the control apparatus 3b can properly generate the robot control signal so that the robot 1 (the end effector 4) can perform the predetermined process on the target object OBJ. Namely, it is more likely that the end effector 4 can perform the predetermined process on the target object OBJ.

Furthermore, in the second modified example, it is likely that the control apparatus 3b can properly calculate at least one of the position and the pose of the target object OBJ regardless of the position and the pose of the target object OBJ. In other words, it is likely that the control apparatus 3b can properly calculate at least one of the position and the pose of the target object OBJ even in a case where the target object OBJ is positioned at any position with any pose. This is because the imaging system 2 moves in a case where it is determined that the computing result condition is not satisfied, and therefore, it is more likely that the result of the position pose computing is good, compared to a case where the imaging system 2 does not move. As a result, the control apparatus 3b can properly generate the robot control signal so that the robot 1 (the end effector 4) can perform the predetermined process on the target object OBJ. Namely, it is more likely that the end effector 4 can perform the predetermined process on the target object OBJ.

Furthermore, in the second modified example, even in a case where the plurality of target objects OBJ exist randomly, it is likely that the control apparatus 3b can properly calculate at least one of the positions and the poses of all of the plurality of target objects OBJ. This is because the imaging system 2 moves, and therefore, it is more likely that the result of the position pose computing is good, compared to a case where the imaging system 2 does not move. As a result, the control apparatus 3b can properly generate the robot control signal so that the robot 1 (the end effector 4) can perform the predetermined process on each of the plurality of target objects OBJ. Namely, it is more likely that the end effector 4 can perform the predetermined process on each of the plurality of target objects OBJ.

### (4-2-3) Usage of Patial Model TM3_P

In the second modified example, the position pose calculation unit 312 may perform the 3D matching processing using the partial model TM3_P described in the first modified example at the step S3 in FIG. 15, in addition to or instead of the template model TM3 (namely, the whole model TM3_W). Note that the position pose calculation unit 312 may perform the 2D matching processing using a part of the template image (the partial model) even in a case where the 2D matching processing is performed at the step S3 in FIG. 15. Note that an example in which the position pose calculation unit 312 performs the 3D matching processing using the partial model TM3_P at the step S3 in FIG. 15 will be primarily described in the below-described description for simplicity of description.

Especially, the position pose calculation unit 312 may perform the 3D matching processing using the partial model TM3_P in a case where the position pose calculation unit 312 performs the 3D matching processing again at the step S3 in FIG. 15 after the imaging system 2 moves at the step S64b in FIG. 15. A technical reason for this will be described below.

In a case where imaging system 2 moves at the step S64b in FIG. 15, the positional relationship between the imaging system 2 and the target object OBJ changes, compared to a case before the imaging system 2 moves. Therefore, the appearance of target object OBJ in the image indicated by the image data IMG_3D changes. For example, there is a possibility that an incidence of light (for example, at least one of the above-described projection light and ambient light) onto the target object OBJ changes, and as a result, a brightness (in other words, a contrast) of the target object OBJ captured in the image indicated by the image data IMG_3D changes. Note that the contrast of the target object OBJ may include the contrast of the projection light projected on the target object OBJ in a case where the projection apparatus 23 projects the projection light on the target object OBJ. As a result, there is a possibility that an amount of the point cloud included in the point cloud data generated as the three-dimensional position data WSD based on the image data IMG_3D changes. Specifically, there is a possibility that a density of the points included in the point cloud data changes. As one example, there is a possibility that the density of the points of an object part, which appears relatively dark in the image indicated by the image data IMG_3D, of the target object OBJ is lower than the density of the points of an object part, which appears relatively bright in the image indicated by the image data IMG_3D, of the target object OBJ. Note that there is a possibility that the brightness (the contrast) of the target object OBJ captured in the image indicated by the image data IMG_3D changes not only due to a change of the incidence of the light but also due to a change of a distance between the imaging system 2 and the target object OBJ as the imaging system 2 moves.

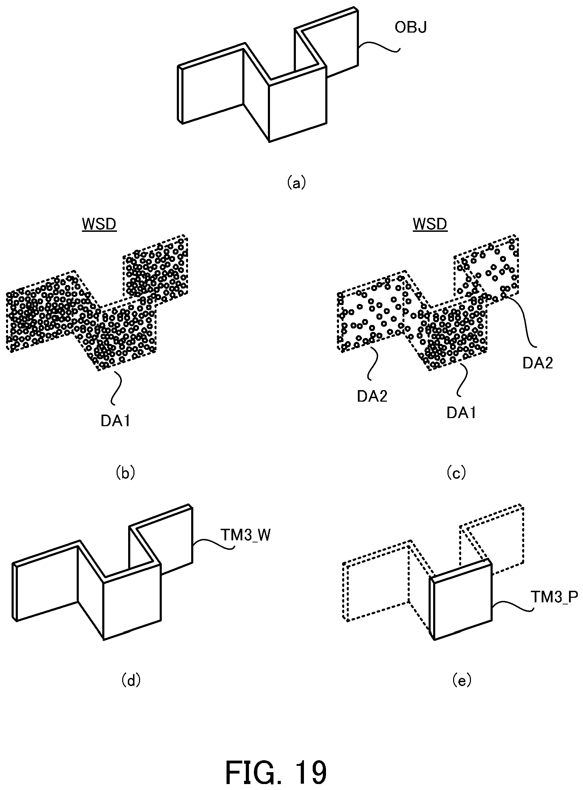

For example, FIG. 19(a) illustrates one example of the target object OBJ, and FIG. 19(b) illustrates one example of the point cloud included in the point cloud data (the three-dimensional position data WSD) generated from the image data IMG_3D, which indicates the image in which the target object OBJ illustrated in FIG. 19(a) is captured with a first brightness (a first contrast). FIG. 19(c) illustrates one example of the point cloud included in the point cloud data (the three-dimensional position data WSD) generated from the image data IMG_3D, which indicates the image in which the target object OBJ illustrated in FIG. 19(a) is captured with a second brightness (a second contrast) that is different from the first brightness (the first contrast). In the point cloud illustrated in FIG. 19(c), a proportion of a dense area DA1, in which the density of the points (namely, the number of points per unit volume) is equal to or higher than a predetermined density threshold value, to the whole point cloud is smaller, compared to the point cloud illustrated in FIG. 19(b). In the point cloud illustrated in FIG. 19(c), a proportion of a sparse area DA2, in which the density of the points is lower than the predetermined density threshold value, to the whole point cloud is larger, compared to the point cloud illustrated in FIG. 19(b).

Here, in a case where the point cloud data (the three-dimensional position data WSD) indicating the point cloud illustrated in FIG. 19(b) is generated, the target object OBJ illustrated in FIG. 19(a) can be properly detected by the 3D matching processing using the whole model TM3_W illustrated in FIG. 19(d). This is because the point cloud illustrated in FIG. 19(b) properly indicates the three-dimensional shape of the target object OBJ. On the other hand, in a case where the point cloud data (the three-dimensional position data WSD) indicating the point cloud illustrated in FIG. 19(c) is generated, there is a possibility that the target object OBJ illustrated in FIG. 19(a) cannot be properly detected by the 3D matching processing using the whole model TM3_W illustrated in FIG. 19(d). This is because the point cloud illustrated in FIG. 19(c) properly indicates the three-dimensional shape of a part of the target object OBJ corresponding to the dense area DA1 but may not necessarily properly indicates the three-dimensional shape of a part of the target object OBJ corresponding to the sparse area DA2. Therefore, there is a possibility that the point cloud included in the sparse area DA2 is not used as the point cloud on which the matching using the whole model TM3_W should be performed in the matching between the point cloud and the whole model TM3_W. As a result, the target object OBJ cannot be detected properly, and therefore, there is a possibility to be determined that the result of the position pose computing is defect.

Therefore, in the second modified example, the position pose calculation unit 312 may perform the 3D matching processing using the partial model TM3_P, as illustrated in FIG. 19(e), considering the possibility of the sparse area DA2 being included in the point cloud due to the movement of the imaging system 2. In this case, the partial model TM3_P, which includes a model part of the whole model TM3_W corresponding to the dense area DA1, may be used as illustrated in FIG. 19(e). Alternatively, the partial model TM3_P, which does not include a model part of the whole model TM3_W corresponding to the sparse area DA2, may be used as illustrated in FIG. 19(e).

Note that the appearance of the target object OBJ in the image indicated by the image data IMG_2D changes due to the movement of the imaging system 2 at the step S64b in FIG. 15, even in a case where the 2D matching processing is performed at the step S3 in FIG. 15. As described above, there is a possibility that the brightness (in other words, the contrast) of the target object OBJ captured in the image indicated by the image data IMG_2D changes. In this case, there is a possibility that the target object OBJ, which is captured in an image area whose contrast is higher than a predetermined upper limit threshold value or whose contrast is lower than a predetermined lower limit threshold value, is not detected properly by the 2D matching processing using the whose template image (the whole model). On the other hand, the target object OBJ, which is captured in an image area whose contrast is lower than the predetermined upper limit threshold value and whose contrast is higher than the predetermined lower limit threshold value, is detected properly by the 2D matching processing using the whose template image (the whole model). Therefore, in a case where the 2D matching processing is performed after the imaging system 2 moves, the partial model (namely, a part of the template image) that does not include an image area, whose contrast is higher than the predetermined upper limit threshold value or whose contrast is lower than the predetermined lower limit threshold value, of the template image may be used. In a case where the 2D matching processing is performed after the imaging system 2 moves, the partial model (namely, a part of the template image) that includes an image area, whose contrast is lower than the predetermined upper limit threshold value and whose contrast is higher than the predetermined lower limit threshold value, of the template image may be used.

As described above, the processing for moving the imaging system 2 (the step S62b to the step S64b in FIG. 15) and the position pose computing (the step S1 to the S3 in FIG. 15) are alternately repeated until it is determined that the computing result condition is satisfied at the step S61b in FIG. 15. Therefore, the imaging system 2 may move two or more time in some cases.

In this case, the partial model TM3_P used in the 3D matching processing performed after the imaging system 2 moves for the N1-th time (wherein, N1 is a variable number representing an integer number that is equal to or larger than 1) may be the same as the partial model TM3_P used in the 3D matching processing performed after the imaging system 2 moves for the N2-th time (wherein, N2 is a variable number representing an integer number that is equal to or larger than 1 and that is different from N1). Specifically, both the partial model TM3_P used in the 3D matching processing performed after the imaging system 2 moves for the N1-th time and the partial model TM3_P used in the 3D matching processing performed after the imaging system 2 moves for the N2-th time may be a three-dimensional model indicating a same part of the whole model TM3_W. Namely, the 3D matching processing at the step S3 in FIG. 15 may be performed by using the same partial model TM3_P each time the imaging system 2 moves. In this case, it is not necessary to prepare the plurality of partial models TM3_P.

Alternatively, the partial model TM3_P used in the 3D matching processing performed after the imaging system 2 moves for the N1-th time may be different from the partial model TM3_P used in the 3D matching processing performed after the imaging system 2 moves for the N2-th time. Specifically, the partial model TM3_P used in the 3D matching processing performed after the imaging system 2 moves for the N1-th time may be a three-dimensional model indicating a first part of the whole model TM3_W, and the partial model TM3_P used in the 3D matching processing performed after the imaging system 2 moves for the N2-th time may be a three-dimensional model indicating a second part, which is different from the first part, of the whole model TM3_W. Namely, the position pose calculation unit 312 may perform the 3D matching processing at the step S3 in FIG. 15 while changing the used partial model TM3_P each time the imaging system 2 moves. Here, considering that the positional relationship between the imaging system 2 and the target object OBJ changes each time the imaging system 2 moves, the position pose calculation unit 312 may select one partial model TM3_P, which corresponds to the actual positional relationship between the imaging system 2 and the target object OBJ at a timing at which the imaging system 2 actually images the target object OBJ, from among the plurality of partial models TM3_P corresponding to a plurality of positional relationships, which are expected as the positional relationship between the imaging system 2 and the target object OBJ, and then perform the 3D matching processing using the selected partial model TM3_P. As a result, even in a case where the positional relationship between the imaging system 2 and the target object OBJ changes, it is likely that the position pose calculation unit 312 can detect the target object OBJ properly. Namely, even in a case where the positional relationship between the imaging system 2 and the target object OBJ changes, it is likely that the result of the position pose computing is good.

Note that one partial model TM3_P that is used in a case where the positional relationship between the imaging system 2 and the target object OBJ is a first positional relationship may be the partial model TM3_P satisfying a condition that "the result of the 3D matching processing (the position pose computing) using one point cloud data (there-dimensional position data WSD), which is generated from the image data IMG_3D acquired by the imaging system 2 imaging the target object OBJ in a case where the positional relationship is the first positional relationship, is good". For example, the one partial model TM3_P may include a model part, which corresponds to the dense area DA1 included in the point cloud indicated by the one point cloud data, of the whole model TM3_W. For example, the one partial model TM3_P may not include a model part, which corresponds to the sparse area DA2 included in the point cloud indicated by the one point cloud data, of the whole model TM3_W.

As described in the first modified example, the partial model TM3_P used in the second modified example may also be generated by the control apparatus 3b (alternatively, an apparatus that is different from the control apparatus 3b, the same applies in the below-described description) based on the instruction from the user. In this case, the user may input, to the control apparatus 3b, an instruction for generating the partial model TM3_P based on the point cloud included in the point cloud data actually generated by the three-dimensional position data generation unit 311, before the robot control processing illustrated in FIG. 15 starts. For example, before the robot control processing illustrated in FIG. 15 starts, the imaging system 2 may generate the image data IMG_3D by imaging the target object OBJ, and the user may input, to the control apparatus 3b, the instruction for generating the partial model TM3_P based on the point cloud included in the point cloud data generated from this image data IMG_3D. Alternatively, before the robot control processing illustrated in FIG. 15 starts, the control apparatus 3b may generate the point cloud data by performing a simulation of the imaging system 2 imaging the target object OBJ, , and the user may input, to the control apparatus 3b, the instruction for generating the partial model TM3_P based on the point cloud included in this point cloud data. For example, the user may identify the dense area DA1 from the point cloud and input information related to the identified dense area DA1 (for example, information related to a position of the dense area DA1) to the control apparatus 3 as the instruction for generating the partial model TM3_P. Alternatively, without generating the point cloud data, the user may input, to the control apparatus 3b, the instruction for generating the partial model TM3_P based on the image indicated by the image data IMG_3D, which is generated in advance by the imaging system 2 imaging the target object OBJ, or the image indicated by the image data IMG_3D, which is generated in advance by performing the simulation of the imaging system 2 imaging the target object OBJ. Then, the control apparatus 3b may extract the model part, which corresponds to the dense area DA1 input by the user, from the whole model TM3_W to generate the extracted model part as the partial model TM3_P. In this case, the information related to the dense area DA1 is regarded as inclusion information related to the model part (area), which is included in the partial model TM3_P, of the whole model TM3_W. For example, the user may identify the sparse area DA2 from the point cloud and input information related to the identified sparse area DA2 (for example, information related to a position of the sparse area DA2) to the control apparatus 3 as the instruction for generating the partial model TM3_P. Then, the control apparatus 3b may remove the model part, which corresponds to the sparse area DA2 input by the user, from the whole model TM3_W to generate the residual model part as the partial model TM3_P. In this case, the information related to the sparse area DA2 is regarded as removal information related to the model part (area), which is removed from the partial model TM3_P, of the whole model TM3_W.

The user may input the instruction for generating the partial model TM3_P by using the input apparatus 34 through a GUI displayed on the output apparatus 35 that is configured to serve as the display apparatus. For example, the user may input information related to at least one of the dense area DA1 and the sparse area DA2 by designating at least one of the dense area DA1 and the sparse area DA2 on the GUI displaying the point cloud of the target object OBJ.

Alternatively, as described in the first modified example, the partial model TM3_P used in the second modified example may also be generated by the control apparatus 3b (alternatively, an apparatus that is different from the control apparatus 3b, the same applies in the below-described description) using the simulation image data. Specifically, the control apparatus 3b may generate the partial model TM3_P corresponding to a predetermined positional relationship based on the simulation image data generated by assuming the case where the imaging system 2 images the target object OBJ in a situation where the positional relationship between the imaging system 2 and the target object OBJ is the predetermined positional relationship. In other words, control apparatus 3b may generate the partial model TM3_P corresponding to a predetermined positional relationship based on the simulation image data generated by performing a simulation for estimating, in a virtual space, the case where the imaging system 2 images the target object OBJ in a situation where the positional relationship between the imaging system 2 and the target object OBJ is the predetermined positional relationship. For example, in a case where the positional relationship between the imaging system 2 and the target object OBJ in a case where the imaging system 2 images the target object OBJ is set in advance as the relative position pose information as described above, the control apparatus 3b may generate the partial model TM3_P corresponding to the predetermined positional relationship based on the simulation image data generated by assuming the case where the imaging system 2 images the target object OBJ in a situation where the positional relationship between the imaging system 2 and the target object OBJ is the predetermined positional relationship based on the relative position pose information. In a case where at least one of a user setting position and a user setting pose is set by the user as the relative position pose information as described above, the control apparatus 3b may generate the partial model TM3_P corresponding to the predetermined positional relationship based on the simulation image data generated by assuming the case where the imaging system 2 images the target object OBJ in a situation where the positional relationship between the imaging system 2 and the target object OBJ is the predetermined positional relationship based on at least one of the user setting position and the user setting pose.

The control apparatus 3b may generate the simulation image data by performing a simulation for estimating, in a virtual space, the case where the imaging system 2 images the target object OBJ, and generate the partial model TM3_P based on the generated simulation image data. In this case, the control apparatus 3b may generates the point cloud data (the three-dimensional position data WSD) from the simulation image data, identify at least one of the dense area DA1 and the sparse area DA2 from the generated three-dimensional position data WSD, and generate the partial model TM3_P based on an identified result of at least one of the dense area DA1 and the sparse area DA2. The control apparatus 3b may identify at least one a first image part having a proper brightness (for example, an image part corresponding to the dense area DA1) and a second image part that is too bright or too dark (for example, an image part corresponding to the sparse area DA2) based on the brightness (the contrast) of the image indicated by the simulation image data without generating the point cloud data (the three-dimensional position data WSD) from the simulation image data, and generate the partial model TM3_P based on an identified result of the first and second image parts. For example, the control apparatus 3b may extract the model part, which corresponds to the dense area DA1 identified from the simulation image data, from the whole model TM3_W to generate the extracted model part as the partial model TM3_P. For example, the control apparatus 3b may remove the model part, which corresponds to the sparse area DA2 identified from the simulation image data, from the whole model TM3_W to generate the residual model part as the partial model TM3_P.

In a case where the imaging system 2 projects the projection light on the target object OBJ by using the projection apparatus 23 as described above, the control apparatus 3b may generate the partial model TM3_P corresponding to a predetermined imaging direction based on the simulation image data generated by assuming a case where the imaging system 2 images the target object OBJ from the predetermined imaging direction in a situation where the projection apparatus 23 projects the projection light on the target object OBJ from a predetermined projection direction corresponding to the predetermined imaging direction. However, in a case where the projection apparatus 23 does not project the projection light on the target object OBJ, the control apparatus 3b may not perform a simulation considering the projection apparatus 23 to generate the simulation image data.

In a case where the plurality of partial models TM3_P corresponding to the plurality of positional relationships, which are expected as the positional relationship between the imaging system 2 and the target object OBJ, are used as described above, the control apparatus 3b may generate the plurality of partial models TM3_P. For example, the control apparatus 3b may generate the plurality of partial models TM3_P based on the instruction from the user. For example, the control apparatus 3b may generate the plurality of partial models TM3_P based on a plurality of simulation image data corresponding to the plurality of positional relationships, which are expected as the positional relationship between the imaging system 2 and the target object OBJ. For example, the control apparatus 3b may generate a first partial model TM3_P corresponding to a first positional relationship based on first simulation image data generated by assuming a case where the imaging system 2 images the target object OBJ in a situation where the positional relationship between the imaging system 2 and the target object OBJ is the first positional relationship. For example, the control apparatus 3b may generate a second partial model TM3_P corresponding to a second positional relationship based on second simulation image data generated by assuming a case where the imaging system 2 images the target object OBJ in a situation where the positional relationship between the imaging system 2 and the target object OBJ is a second positional relationship that is different from the first positional relationship.

In this case, at least one of the plurality of positional relationships, which are expected as the positional relationship between the imaging system 2 and the target object OBJ, may be set based on the above-described relative position pose information input by the user (namely, the instruction from the user). In other words, at least one of the plurality of positional relationships, which are expected as the positional relationship between the imaging system 2 and the target object OBJ, may be a positional relationship based on the relative position pose information input by the user (namely, the instruction from the user). Specifically, at least one of the plurality of positional relationships, which are expected as the positional relationship between the imaging system 2 and the target object OBJ, may be a positional relationship between the imaging system 2 and the target object OBJ indicated by the relative position pose information input by the user (namely, the instruction from the user). At least one of the plurality of positional relationships, which are expected as the positional relationship between the imaging system 2 and the target object OBJ, may be set based on at least one of the user setting position and the user setting pose described above. In other words, at least one of the plurality of positional relationships, which are expected as the positional relationship between the imaging system 2 and the target object OBJ, may be a positional relationship based on the at least one of the user setting position and the user setting pose. In other words, at least one of the plurality of positional relationships, which are expected as the positional relationship between the imaging system 2 and the target object OBJ, may be a positional relationship between the imaging system 2 and the target object OBJ indicated by the at least one of the user setting position and the user setting pose. Furthermore, at least one of the plurality of positional relationships, which are expected as the positional relationship between the imaging system 2 and the target object OBJ, may be set based on the change information that is usable to set the movement aspect (for example, the movement direction and the movement amount) of the imaging system 2 at the step S64b in FIG. 15. In other words, at least one of the plurality of positional relationships, which are expected as the positional relationship between the imaging system 2 and the target object OBJ, may be a positional relationship based on the change information that is usable to set the movement aspect (for example, the movement direction and the movement amount) of the imaging system 2 at the step S64b in FIG. 15. Specifically, at least one of the plurality of positional relationships, which are expected as the positional relationship between the imaging system 2 and the target object OBJ, may be a positional relationship between the imaging system 2 and the target object OBJ assuming that the imaging system 2 moves based on the movement aspect indicated by the change information.

As one example, an example in which the imaging system 2 moves based on the movement aspect illustrated in FIG. 18(a) to FIG. 18(b) described above will be described. In this case, the control apparatus 3b may generate a first partial model TM3_P, which is used in the 3D matching processing performed after the first movement operation, based on a first simulation image data generated by assuming a case where the imaging system 2, which has moved by the first movement operation, images the target object OBJ. Here, the movement aspect by the first movement operation is set based on the relative position pose information input by the user. Therefore, the control apparatus 3b generate the first partial model TM3_P, which is used in the 3D matching processing performed after the first movement operation, based on the first simulation image data generated by assuming a case where the imaging system 2 images the target object OBJ in a situation where the positional relationship between the imaging system 2 and the target object is the positional relationship based on the relative position pose information input by the user (namely, the positional relationship based on the first movement operation). Furthermore, the control apparatus 3b may generate a second partial model TM3_P, which is used in the 3D matching processing performed after the second movement operation, based on a second simulation image data generated by assuming a case where the imaging system 2, which has moved by the second movement operation, images the target object OBJ. Here, the movement aspect by the second movement operation is set based on the change information. Therefore, the control apparatus 3b generate the second partial model TM3_P, which is used in the 3D matching processing performed after the second movement operation, based on the second simulation image data generated by assuming a case where the imaging system 2 images the target object OBJ in a situation where the positional relationship between the imaging system 2 and the target object is the positional relationship based on the change information (namely, the positional relationship based on the second movement operation).

Note that the control apparatus 3b may automatically set the positional relationship between the imaging system 2 and the target object OBJ in a case where the imaging system 2 images the target object OBJ (namely, the relative position pose information), in addition to or instead of generating the partial model TM3_P based on the plurality of simulation image data corresponding to the plurality of positional relationships, which are expected as the positional relationship between the imaging system 2 and the target object OBJ. For example, the control apparatus 3b may generate a plurality of point cloud data (three-dimensional position data WSD) from the plurality of simulation image data. Then, the control apparatus 3b may select one point cloud data, in which the proportion of the sparse area DA2 is minimum (alternatively, is equal to or lower than a predetermined first proportion), from the plurality of point cloud data. Alternatively, the control apparatus 3b may select one point cloud data, in which the proportion of the dense area DA1 is maximum (alternatively, is equal to or higher than a predetermined second proportion), from the plurality of point cloud data. Then, the control apparatus 3b may select one simulation image data that is used to generate the selected one point cloud data. Then, the control apparatus 3b may set, as the positional relationship (namely, an ideal positional relationship, and a target positional relationship) between the imaging system 2 and the target object OBJ in a case where the imaging system 2 images the target object OBJ, a positional relationship between the imaging system 2 and the target object OBJ that is used in the simulation for generating the selected one simulation image data. Namely, the control apparatus 3b may set, as the relative position pose information designating the positional relationship between the imaging system 2 and the target object OBJ in a case where the imaging system 2 images the target object OBJ, the positional relationship between the imaging system 2 and the target object OBJ that is used in the simulation for generating the selected one simulation image data.

Similarly, the control apparatus 3b may automatically set the change information, which is usable to set the movement aspect of the imaging system 2 at the step S64b in FIG. 15, based on the plurality of simulation image data corresponding to the plurality of positional relationships, which are expected as the positional relationship between the imaging system 2 and the target object OBJ. For example, the control apparatus 3b may select one simulation image data, as in a case where the positional relationship between the imaging system 2 and the target object OBJ is automatically set. Then, the control apparatus 3b may set the change information indicating the movement aspect of the imaging system 2 that is necessary to change the positional relationship between the imaging system 2 and the target object OBJ from the positional relationship indicated by the relative position pose information to the positional relationship between the imaging system 2 and the target object OBJ that is used in the simulation for generating the selected one simulation image data. Namely, the control apparatus 3b may set the change information indicating the movement aspect of the imaging system 2 that is necessary to change the positional relationship between the imaging system 2 and the target object OBJ from the positional relationship indicated by the relative position pose information to the positional relationship between the imaging system 2 and the target object OBJ that is used in the simulation for generating the selected one simulation image data.

However, the position pose calculation unit 312 may perform the 3D matching processing using the whole model TM3_W in a case where the position pose calculation unit 312 performs the 3D matching processing at the step S3 in FIG. 15 after the imaging system 2 moves at the step S64b in FIG. 15.

The model used by the position pose calculation unit 312 to perform the 3D matching processing at the step S3 in FIG. 15 after the imaging system 2 moves may be designated by the user. For example, the user may designate that the position pose calculation unit 312 uses the partial model TM3_P to perform the 3D matching processing at the step S3 in FIG. 15 after the imaging system 2 moves. In this case, the position pose calculation unit 312 may perform the 3D matching processing using the partial model TM3_P at the step S3 in FIG. 15 after the imaging system 2 moves. Alternatively, for example, the user may designate that the position pose calculation unit 312 uses the whole model TM3_W to perform the 3D matching processing at the step S3 in FIG. 15 after the imaging system 2 moves. In this case, the position pose calculation unit 312 may perform the 3D matching processing using the whole model TM3_W at the step S3 in FIG. 15 after the imaging system 2 moves.

On the other hand, in a case where the position pose calculation unit 312 performs the 3D matching processing for the first time at the step S3 in FIG. 15 before the imaging system 2 moves at the step S64b in FIG. 15, the position pose calculation unit 312 may perform the 3D matching processing using the whole model TM3_W. This is because information related to the position and the pose of the target object OBJ is unknown information to the control apparatus 3b in a case where the position pose calculation unit 312 performs the 3D matching processing for the first time at the step S3 in FIG. 15, and therefore, there is a possibility that it is not easy to select the proper partial model TM3_P. However, in a case where the position pose calculation unit 312 performs the 3D matching processing for the first time at the step S3 in FIG. 15 before the imaging system 2 moves at the step S64b in FIG. 15, the position pose calculation unit 312 may perform the 3D matching processing using the partial model TM3_P.

Note that the movement control unit 314b may perform the 2D matching processing using the image data IMG_2D acquired at the step S62b in FIG. 15b to set the movement aspect of the imaging system 2 at the step S63b in FIG. 15 as described above. Here, it is likely that a scene where the movement aspect of the imaging system 2 is set at the step S63b in FIG. 15 is a scene where the result of the position pose computing at the step S3 in FIG. 15 is defect (alternatively, the position pose computing cannot be performed correctly) and therefore the control apparatus 3b cannot accurately calculate the position and the pose of the target object OBJ. Namely, there is a possibility that the information related to the position and the pose of the target object OBJ is still unknown information to the control apparatus 3b at a timing at which the processing at the step S63b in FIG. 15 is performed. Therefore, there is a possibility that it is not easy to select the proper partial model TM3_P for the 2D matching processing at the step S63b in FIG. 15. Therefore, the movement control unit 314b may perform the 2D matching processing using the whole template image (namely, the whole model) at the step S63b in FIG. 15. Even in a case where the 3D matching processing is performed at the step S63b in FIG. 15, the movement control unit 314b may perform the 3D matching processing using the whole model TM3_W. However, the movement control unit 314b may perform the 2D matching processing using a part of the template image (namely, the partial model) at the step S63b in FIG. 15. In a case where the 3D matching processing is performed at the step S63b in FIG. 15, the movement control unit 314b may perform the 3D matching processing using the partial model TM3_P.

### (4-2-4) Specific Example of Robot Control Processing in Second Modified Example Performed in a case where Imaging System 2 Images Plurality of Target Objects OBJ

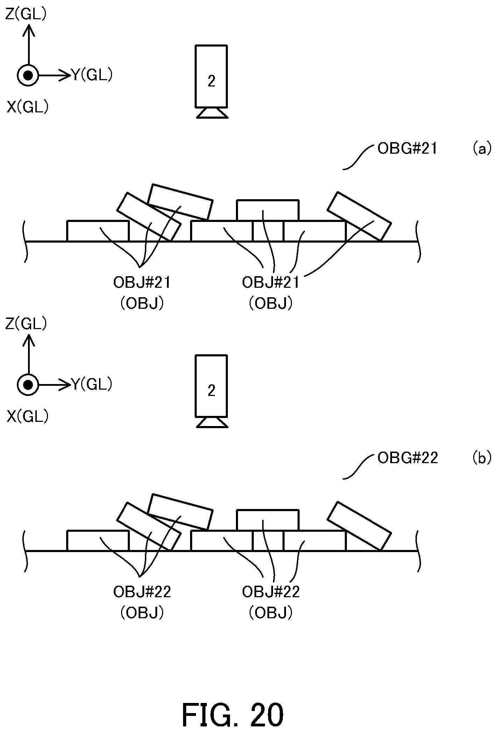

As described above, there is a possibility that the imaging system 2 (especially, the imaging apparatus 22) images the plurality of target objects OBJ. Namely, there is a possibility that the three-dimensional position data WSD include points of the plurality of target objects OBJ. In other words, there is a possibility that the plurality of target objects OBJ are detected by the position pose computing including the 3D matching processing. In this case, the movement control unit 314b may determine at the step S61b in FIG. 15 whether or not the computing result condition is satisfied by determining whether or not the end effector 4 can perform the predetermined process on at least one of the plurality of target objects OBJ. Next, with reference to FIG. 20(a) to FIG. 21(b), one example of the flow of the robot control processing in the second modified example performed in a case where the imaging system 2 images the plurality of target objects OBJ will be described.

As illustrated in FIG. 20(a), the control apparatus 3b acquires the image data IMG_3D (it is referred to as image data IMG_3D#21) generated by the imaging system 2, which is positioned at a first position and which takes a first pose, imaging a first target object group OBG#21, which includes at least two target objects OBJ of the plurality of target objects OBJ (the step S1 in FIG. 15). Note that the target object OBJ included in the first object group OBG#21 is referred to as a first target object OBJ#21 in the below-described description for the convenience of description. Then, the position pose calculation unit 312 perform the position pose calculation for generating the position pose data POI (it is referred to as first position pose data POI#21) of at least one first target object OBJ#21 of the plurality of first target objects OBJ#21 based on the first image data IMG_3D#21 (specifically, the three-dimensional position data WSD generated from the first image data IMG_3D#21) (the step S2 to the step S3 in FIG. 15).

Note that the term "object group OBG" is used to treat the plurality of target objects OBJ as one group in the present example embodiment. The plurality of target object OBJ included in the object group OBG may include at least two target objects OBJ concentratively distributed in a single local area. The plurality of target objects OBJ included in the target object group OBG may include at least two target objects OBJ that are distant from each other by a predetermined distance or more. Namely, the plurality of target objects OBJ included in the target object group OBG may include at least two target objects OBJ distributed in at least two areas, which are distant from each other by a predetermined distance or more, respectively.

Then, in a case where it is determined that the end effector 4 can perform the predetermined process on at least one first target object OBJ#21 (the step S61b in FIG. 15: Yes), the control apparatus 3 may determine that the computing result condition is satisfied. In this case, the control apparatus 3b generates the robot control signal for controlling the robot 1 to allow the end effector 4 to approach the first target object OBJ#21, which is selected as the process performed object, based on the first position pose data POI#21 of at least one (for example, one) first target object OBJ#21, which is selected as the process performed object (the step S4 in FIG. 15).

On the other hand, in a case where it is determined that the end effector 4 cannot perform the predetermined process one at least one first target object OBJ#21 (for example, the end effector 4 cannot perform the predetermined process on all of the plurality of first target objects OBJ#21) (the step S61b in FIG. 15: No), the control apparatus 3b may determine that the computing result condition is not satisfied. In this case, the control apparatus 3b acquires the image data IMG_2D (it is referred to as second image data IMG_2D#22) generated by the imaging system 2 imaging a second target object group OBG#22, which includes at least two target objects OBJ of the plurality of target objects OBJ (the step S62b in FIG. 15). Note that the target object OBJ included in the second object group OBG#22 is referred to as a second target object OBJ#22 in the below-described description for the convenience of description.

The plurality of second target objects OBJ#22 included in the second target object group OBG#22 may be the same as the plurality of first target objects OBJ#21 included in the first target object group OBG#21. For example, in a case where the plurality of target objects OBJ are stationary after the imaging system 2 images the first target object group OBG#21 and before the imaging system 2 images the second target object group OBG#22, the plurality of second target objects OBJ#22 may be the same as the plurality of first target objects OBJ#21. Alternatively, at least one of the plurality of second target objects OBJ#22 included in the second target object group OBG#22 may be different from at least one of the plurality of first target objects OBJ#21 included in the first target object group OBG#21. For example, in a case where at least one of the plurality of target objects OBJ moves after the imaging system 2 images the first target object group OBG#21 and before the imaging system 2 images the second target object group OBG#22, at least one of the second target objects OBJ#22 may be different from at least one of the first target objects OBJ#21.

Then, the movement control unit 314b sets the movement aspect of the imaging system 2 based on the second image data IMG_2D#22 so that the position of the imaging system 2 changes from the first position to a second position that is different from the first position and / or the pose of the imaging system 2 changes from the first pose to a second pose that is different from the first pose (the step S63b in FIG. 15). For example, as described with reference to FIG. 18(a), the movement control unit 314b may set the movement aspect of the imaging system 2 based on the second image data IMG_2D#22 and the relative position pose information input by the user. Note that the relative position pose information may be information common to the plurality of target objects OBJ in a case where the shapes of the plurality of target objects OBJ are the same. On the other hand, in a case where the shapes of at least two target objects OBJ are different from each other, first relative position pose information corresponding to the target object OBJ having a first shape and second relative position pose information corresponding to the target object OBJ having a second shape that is different from the first shape may be used.

The movement control unit 314b may select one second target object OBJ#22 of the plurality of second target objects OBJ#22 by performing the 2D matching processing using the second image data IMG_2D#22 and the template image (namely, the two-dimensional model), and set the movement aspect of the imaging system 2 based on the position pose data POI (it is referred to as second position pose data POI#22) of the selected one second target object OBJ#22. For example, the movement control unit 314b may set the movement aspect based on the position pose data POI (it is referred to as the second position pose data POI#22) of the one second target object OBJ#22, whose matching similarity calculated by the 2D matching processing based on the second image data IMG_2D#22 is maximum (alternatively, which satisfies a predetermined selection condition). In this case, the movement control unit 314b may set the movement aspect of the imaging system 2 so that it is more likely to be determined that the end effector 4 can perform the predetermined process on the one second target object OBJ#22. For example, the movement control unit 314b may set the movement aspect of the imaging system 2 so that at least one of the position and the pose of the one second target object OBJ#22 is properly calculated after the imaging system 2 moves.

In order to select one second target object OBJ#22, the movement control unit 314b may calculate the matching similarities of all second target objects OBJ#22 included in the second target object group OBG#22. However, the movement control unit 314b may not calculate the matching similarities of all second target objects OBJ#22 included in the second object group OBG#22 to select one second target object OBJ#22. For example, the movement control unit 314b may calculate the matching similarity of at least one second target object OBJ#22 included in the second target object group OBG#22. In this case, the movement control unit 314b may select one second target object OBJ#22 whose matching similarity is maximum (alternatively, which satisfies the predetermined selection condition) from the plurality of second target objects OBJ#22 whose matching similarities has been calculated.

As described above, in order to set the movement aspect of the imaging system 2, the movement control unit 314b may set the movement aspect of the imaging system 2 so that the number of points of the target object OBJ included in the point cloud indicated by the three-dimensional position data WSD increases. Here, in a case where the plurality of objects OBJ are imaged, the movement control unit 314b may set the movement aspect of the imaging system 2 so that the number of points of one target object OBJ whose three-dimensional position is indicated by the three-dimensional position data WSD generated after the imaging system 2 moves is larger than the number of points of the target object OBJ whose three-dimensional position is indicated by the three-dimensional position data WSD generated before the imaging system 2 moves and which has the most points. For example, the three-dimensional position data WSD generated before the imaging system 2 moves indicates the points of the plurality of second target objects OBJ#22. On the other hand, the three-dimensional position data generated after the imaging system 2 moves indicates the points of a plurality of third target objects OBJ#23 as described below. In this case, the movement control unit 314b may set the movement aspect of the imaging system 2 so that the number of points of one third target object OBJ#23 (for example, one third target object OBJ#23 for which third position pose data POI#23 is calculated as described below) is larger than the number of points of one second target object OBJ#22, which has the most points, of the second target objects OBJ#22.

Note that the control apparatus 3b may calculate in advance at least one of the position and the pose of the imaging system 2, which can realize a state in which the number of points of the target object OBJ included in the point cloud indicated by the three-dimensional position data WSD increases, by simulating a case where the imaging system 2 images the target object OBJ. In this case, the control apparatus 3b may move the imaging system 2 based on at least one of the positions and the poses calculated in advance by the simulation. Alternatively, the control apparatus 3b may generate the simulation image data by simulating the case where the imaging system 2 images the target object OBJ, and the user may set in advance at least one of the position and the pose of the imaging system 2, which can realize a state in which the number of points of the target object OBJ included in the point cloud indicated by the three-dimensional position data WSD increases, based on the simulation image data (alternatively, the point cloud data generated from the simulation image data). In this case where, the control apparatus 3b may move the imaging system 2 based on at least one of the position and the pose set in advance by the user.

As described above, in order to set the movement aspect of the imaging system 2, the movement control unit 314b may set the movement aspect of the imaging system 2 so that the proportion of the target object OBJ relative to the imaging field of view of the imaging system 2 (especially, the imaging field of view of the imaging apparatus 22) increases. Here, in a case where the plurality of target objects OBJ are imaged, the movement control unit 314b may set the movement aspect of the imaging system 2 so that the proportion of one target object OBJ relative to the imaging field of view of the imaging system 2 after movement is larger than the proportion of the target object OBJ relative to the imaging field of view of the imaging system 2 before movement. For example, the movement control unit 314b may set the movement aspect of the imaging system 2 so that the proportion of one third target object OBJ#23 (for example, one third target object OBJ#23 whose third position pose data POI#23 is calculated as described below) relative to the imaging field of view of the imaging system 2 after movement is larger than the proportion of the second target object OBJ#22, whose proportion relative to the imaging field of view of the imaging system 2 before movement, of the plurality of second target objects OBJ#22 relative to the imaging field of view of the imaging system 2 before movement.

Note that the control apparatus 3b may calculate in advance at least one of the position and the pose of the imaging system 2, which can realize a state in which the proportion of the target object OBJ relative to the imaging field of view of the imaging system 2 (especially, the imaging field of view of the imaging apparatus 22) increases, by simulating a case where the imaging system 2 images the target object OBJ. In this case, the control apparatus 3b may move the imaging system 2 based on at least one of the positions and the poses calculated in advance by the simulation. Alternatively, the control apparatus 3b may generate the simulation image data by simulating the case where the imaging system 2 images the target object OBJ, and the user may set in advance at least one of the position and the pose of the imaging system 2, which can realize a state in which the proportion of the target object OBJ relative to the imaging field of view of the imaging system 2 (especially, the imaging field of view of the imaging apparatus 22) increases, based on the simulation image data (alternatively, the point cloud data generated from the simulation image data). In this case where, the control apparatus 3b may move the imaging system 2 based on at least one of the position and the pose set in advance by the user.

Even in a case where the 2D matching processing is performed as described above, the movement control apparatus 314b may set the movement aspect of the imaging system 2 based on the pixels of the image data IMG_2D so that the number of pixels of one third target object OBJ#23 (for example, one third target object OBJ#23 whose third position pose data POI#23 is calculated as described below) is larger than the number of pixels of one second target object OBJ#22, which has the most pixels, of the plurality of second target objects OBJ#22. The movement control unit 314b may set the movement aspect of the imaging system 2 so that the proportion of one third target object OBJ#23 (for example, one third target object OBJ#23 whose third position pose data POI#23 is calculated as described below) relative to the imaging field of view of the imaging system 2 (especially, the imaging field of view of the imaging apparatus 21) after movement is larger than the proportion of the second target object OBJ#22, whose proportion relative to the imaging field of view of the imaging system 2 before movement, of the plurality of second target objects OBJ#22 relative to the imaging field of view of the imaging system 2 before movement.

Note that the control apparatus 3b may calculate in advance at least one of the position and the pose of the imaging system 2, which can realize a state in which pixels of the image data IMG_2D satisfy a condition described in the preceding paragraph, by simulating a case where the imaging system 2 images the target object OBJ. The control apparatus 3b may calculate in advance at least one of the position and the pose of the imaging system 2, which can realize a state in which the proportion of the target object OBJ relative to the imaging field of view of the imaging system 2 after movement satisfies the condition described in the preceding paragraph, by simulating a case where the imaging system 2 images the target object OBJ. In this case, the control apparatus 3b may move the imaging system 2 based on at least one of the positions and the poses calculated in advance by the simulation. Alternatively, the control apparatus 3b may generate the simulation image data by simulating the case where the imaging system 2 images the target object OBJ, and the user may set in advance at least one of the position and the pose of the imaging system 2, which can realize a state in which pixels of the image data IMG_2D satisfy the condition described in the preceding paragraph, based on the simulation image data (alternatively, the point cloud data generated from the simulation image data). The control apparatus 3b may generate the simulation image data by simulating the case where the imaging system 2 images the target object OBJ, and the user may set in advance at least one of the position and the pose of the imaging system 2, which can realize a state in which the proportion of the target object OBJ relative to the imaging field of view of the imaging system 2 after movement satisfies the condition described in the preceding paragraph, based on the simulation image data (alternatively, the point cloud data generated from the simulation image data). In this case where, the control apparatus 3b may move the imaging system 2 based on at least one of the position and the pose set in advance by the user.

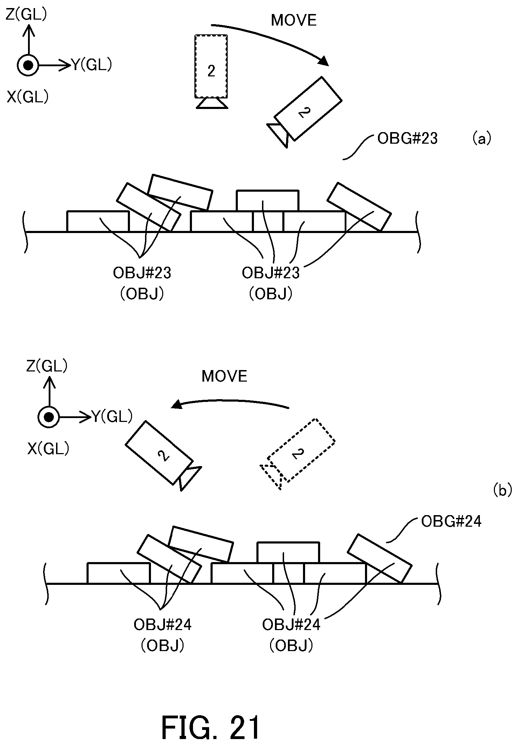

Then, the movement control unit 314b generates the robot control signal for controlling the robot arm 12 to move the imaging system 2 based on the set movement aspect (the step S64b in FIG. 15). As a result, the imaging system 2 moves as illustrated in FIG. 21(a).

Then, as illustrated in FIG. 21(a), the control apparatus 3b acquires the image data IMG_3D (it is referred to as third image data IMG_3D#23) generated by the imaging system 2, which is positioned at the second position and / or which takes the second pose, imaging a third target object group OBG#23, which includes at least two target objects OBJ of the plurality of target objects OBJ (the step S1 in FIG. 15). Note that the target object OBJ included in the third object group OBG#23 is referred to as the third target object OBJ#23 in the below-described description for the convenience of description.

The plurality of third target objects OBJ#23 included in the third target object group OBG#23 may be the same as the plurality of second target objects OBJ#22 included in the second target object group OBG#22. For example, in a case where the plurality of target objects OBJ are stationary after the imaging system 2 images the second target object group OBG#22 and before the imaging system 2 images the third target object group OBG#23, the plurality of third target objects OBJ#23 may be the same as the plurality of second target objects OBJ#22. Alternatively, at least one of the plurality of third target objects OBJ#23 included in the third target object group OBG#23 may be different from at least one of the plurality of second target objects OBJ#22 included in the second target object group OBG#22. For example, at least one of the third target objects OBJ#23 may be different from at least one of the second target objects OBJ#22, because at least one of the position and the pose of the imaging system 2 imaging the second object group OBG#22 is different from at least one of the position and the pose of the imaging system 2 imaging the third object group OBG#23 due to the movement of the imaging system 2. For example, in a case where at least one of the plurality of target objects OBJ moves after the imaging system 2 images the second target object group OBG#22 and before the imaging system 2 images the third target object group OBG#23, at least one of the third target objects OBJ#23 may be different from at least one of the second target objects OBJ#22.

Then, the position pose calculation unit 312 perform the position pose calculation for generating the position pose data POI (it is referred to as third position pose data POI#23) of at least one third target object OBJ#23 of the plurality of third target objects OBJ#23 based on the third image data IMG_3D#23 (the step S2 to the step S3 in FIG. 15).

Then, in a case where it is determined that the end effector 4 can perform the predetermined process on at least one third target object OBJ#23 (the step S61b in FIG. 15: Yes), the control apparatus 3 may determine that the computing result condition is satisfied. In this case, the control apparatus 3b generates the robot control signal for controlling the robot 1 to allow the end effector 4 to approach the third target object OBJ#23, which is selected as the process performed object, based on the third position pose data POI#23 of at least one (for example, one) third target object OBJ#23, which is selected as the process performed object (the step S4 in FIG. 15).

Here, as described above, the movement control unit 314b may set the movement aspect of the imaging system 2 so that it is more likely to be determined that the end effector 4 can perform the predetermined process on one second target object OBJ#22. In this case, it is likely that the imaging system 2 images one third target object OBJ#23 that is the same as the one second target object OBJ#22, it is likely that the position pose calculation unit 312 generates the third position pose data POI#23 of the one third target object OBJ#23 that is the same as the one second target object OBJ#22, and it is likely that the position pose calculation unit 312 selects, as the process performed object, the one third target object OBJ#23 that is the same as the one second target object OBJ#22. This is because it is likely that the matching similarity of the one third target object OBJ#23, which is the same as the one second target object OBJ#22, is high. However, in a case where the 3D matching processing detects another third target object OBJ#23 whose matching similarity is higher than the matching similarity of the one third target object OBJ#23 that is the same as the one second target object OBJ#22, the position pose calculation unit 312 may select this another third target object OBJ#23 as the process performed object.

Considering the it is likely that the matching similarity of the one third target object OBJ#23, which is the same as the one second target object OBJ#22, is high in this manner, the position pose calculation unit 312 may not calculate the matching similarities of the plurality of third target objects OBJ#23 based on the third image data IMG_3D (specifically, based on the three-dimensional position data WSD generated from the third image data IMG_3D#23) to generate the third position pose data POI#23 of at least one third target object OBJ#23. In this case, the position pose calculation unit 312 may generate the third position pose data POI#23 of the one third target object OBJ#23, which is the same as the one second target object OBJ#22 whose second position pose data POI#22 has been calculated based on the second image data IMG_2D#22, based on the third image data IMG_3D#23. In this case, a processing time required to generate the third position pose data POI#23 of at least one third target object OBJ#23 is reduced, compared to a case where the matching similarities of the plurality of third target objects OBJ#23 are calculated to generate the third position pose data POI#23 of at least one third target object OBJ#23. However, as described above, the position pose calculation unit 312 may calculate the matching similarities of the plurality of third target object OBJ#23, select at least one third target object OBJ#23 based on the calculated matching similarities, and generate the third position pose data POI#23 of the selected at least one third target object OBJ#23.

Note that the movement control unit 314b may use the relative position pose information (namely, the positional relationship between the imaging system 2 and the target object OBJ in a case where the imaging system 2 images the target object OBJ) set by the user at the step S63b in FIG. 15 at which the robot control signal for moving the imaging system 2 is mainly generated, as described above. On the other hand, the position pose calculation unit 312 may also use the relative position pose information set by the user at the step S4 in FIG. 15 at which the robot control signal for moving the end effector 4 to perform the predetermined process on the target object OBJ is mainly generated. However, the relative position pose information used at the step S4 in FIG. 15 may indicate the positional relationship between the end effector 4 and the target object OBJ in a case where the end effector 4 performs the predetermined process on the target object OBJ.

On the other hand, in a case where it is determined that the end effector 4 cannot perform the predetermined process on at least one third target object OBJ#23 (for example, the end effector 4 cannot perform the predetermined process on all of the plurality of third objects OBJ#23) (the step S61b in FIG. 15: No), the control apparatus 3b may determine that the computing result condition is not satisfied. In this case, the movement control unit 314b sets the movement aspect of the imaging system 2 so that the position of the imaging system 2 changes from the second position to a third position that is different from the second position and / or the pose of the imaging system 2 changes from the second pose to a third pose that is different from the second pose (the step S63b in FIG. 15). For example, as described with reference to FIG. 19(b), the movement control unit 314b may set the movement aspect indicated by the change information as the movement aspect of the imaging system 2. In this case, as described above, the movement control unit 314b may not newly acquire the image data IMG_2D, and may not calculate at least one of the position and the pose of the third target object OBJ based on the image data IMG_2D. Furthermore, in order to set the movement aspect of the imaging system 2 at the step S62c in FIG. 15, the imaging system 2 may not generate the image data IMG_2D and may not image the target object OBJ. Therefore, a time required for the imaging system 2 to image the target object OBJ and generate the image data IMG_2D is not necessary. As a result, as described above, the time required to move the imaging system 2 from the step S62b to the step S64b in FIG. 15 is reduced. Namely, a time required to perform the robot control processing in FIG. 15, including the step S62b to the step S64b (for example, a time required for the imaging system 2 imaging the target object OBJ and a time required for the control apparatus 3b generating the position pose data POI) is reduced.

Then, the movement control unit 314b generates the robot control signal for controlling the robot arm 12 to move the imaging system 2 based on the set movement aspect (the step S64b in FIG. 15). As a result, the imaging system 2 moves as illustrated in FIG. 21(b).

Then, as illustrated in FIG. 21(b), the control apparatus 3b acquires the image data IMG_3D (it is referred to as fourth image data IMG_3D#24) generated by the imaging system 2, which is positioned at the third position and / or which takes the third pose, imaging a fourth target object group OBG#24, which includes at least two target objects OBJ of the plurality of target objects OBJ (the step S1 in FIG. 15). Note that the target object OBJ included in the fourth object group OBG#24 is referred to as a fourth target object OBJ#24 in the below-described description for the convenience of description.

The plurality of fourth target objects OBJ#24 included in the fourth target object group OBG#24 may be the same as the plurality of third target objects OBJ#23 included in the third target object group OBG#23. For example, in a case where the plurality of target objects OBJ are stationary after the imaging system 2 images the third target object group OBG#23 and before the imaging system 2 images the fourth target object group OBG#24, the plurality of fourth target objects OBJ#24 may be the same as the plurality of third target objects OBJ#23. Alternatively, at least one of the plurality of fourth target objects OBJ#24 included in the fourth target object group OBG#24 may be different from at least one of the plurality of third target objects OBJ#23 included in the third target object group OBG#23. For example, at least one of the fourth target objects OBJ#24 may be different from at least one of the third target objects OBJ#23, because at least one of the position and the pose of the imaging system 2 imaging the third object group OBG#23 is different from at least one of the position and the pose of the imaging system 2 imaging the fourth object group OBG#24 due to the movement of the imaging system 2. For example, in a case where at least one of the plurality of target objects OBJ moves after the imaging system 2 images the third target object group OBG#23 and before the imaging system 2 images the fourth target object group OBG#24, at least one of the fourth target objects OBJ#24 may be different from at least one of the third target objects OBJ#23.

Then, the position pose calculation unit 312 perform the position pose calculation for generating the position pose data POI (it is referred to as fourth position pose data POI#24) of at least one fourth target object OBJ#24 of the plurality of fourth target objects OBJ#24 based on the fourth image data IMG_3D#24 (the step S2 to the step S3 in FIG. 15).

Then, in a case where it is determined that the end effector 4 can perform the predetermined process on at least one fourth target object OBJ#24 (the step S61b in FIG. 15: Yes), the control apparatus 3 may determine that the computing result condition is satisfied. In this case, the control apparatus 3b generates the robot control signal for controlling the robot 1 to allow the end effector 4 to approach the fourth target object OBJ#24, which is selected as the process performed object, based on the fourth position pose data POI#24 of at least one (for example, one) fourth target object OBJ#24, which is selected as the process performed object (the step S4 in FIG. 15).

Here, as described above, the movement control unit 314b may set the movement aspect of the imaging system 2 so that it is more likely to be determined that the end effector 4 can perform the predetermined process on one second target object OBJ#22. In this case, there is a possibility that the imaging system 2 images one fourth target object OBJ#24 that is the same as the one second target object OBJ#22, there is a possibility that the position pose calculation unit 312 generates the fourth position pose data POI#24 of the one fourth target object OBJ#24 that is the same as the one second target object OBJ#22, and there is a possibility that the position pose calculation unit 312 selects, as the process performed object, the one fourth target object OBJ#24 that is the same as the one second target object OBJ#22. This is because it is likely that the matching similarity of the one fourth target object OBJ#24, which is the same as the one second target object OBJ#22, is high. However, in a case where the 3D matching processing detects another fourth target object OBJ#24 whose matching similarity is higher than the matching similarity of the one fourth target object OBJ#24 that is the same as the one second target object OBJ#22, the position pose calculation unit 312 may select this another fourth target object OBJ#24 as the process performed object.

Considering the it is likely that the matching similarity of the one fourth target object OBJ#24, which is the same as the one second target object OBJ#22, is high in this manner, the position pose calculation unit 312 may not calculate the matching similarities of the plurality of fourth target objects OBJ#24 based on the fourth image data IMG_3D (specifically, based on the three-dimensional position data WSD generated from the fourth image data IMG_3D#24) to generate the fourth position pose data POI#24 of at least one fourth target object#24. In this case, the position pose calculation unit 312 may generate the fourth position pose data POI#24 of the one fourth target object OBJ#24, which is the same as the one second target object OBJ#22 whose second position pose data POI#22 has been calculated based on the second image data IMG_2D#22, based on the fourth image data IMG_3D#24. In this case, a processing time required to generate the fourth position pose data POI#24 of at least one fourth target object OBJ#24 is reduced, compared to a case where the matching similarities of the plurality of fourth target objects OBJ#24 are calculated to generate the fourth position pose data POI#24 of at least one fourth target object OBJ#24. However, as described above, the position pose calculation unit 312 may calculate the matching similarities of the plurality of fourth target object OBJ#24, select at least one fourth target object OBJ#24 based on the calculated matching similarities, and generate the fourth position pose data POI#24 of the selected at least one fourth target object OBJ#24.

On the other hand, in a case where it is determined that the end effector 4 cannot perform the predetermined process on at least one fourth target object OBJ#24 (for example, the end effector 4 cannot perform the predetermined process on all of the plurality of fourth objects OBJ#24) (the step S61b in FIG. 15: No), the control apparatus 3b may determine that the computing result condition is not satisfied. In this case, the movement control unit 314b sets the movement aspect of the imaging system 2 so that the position of the imaging system 2 changes from the third position to a fourth position that is different from the third position and / or the pose of the imaging system 2 changes from the third pose to a fourth pose that is different from the third pose (the step S63b in FIG. 15). For example, as described with reference to FIG. 18(b), the movement control unit 314b may set the movement aspect, which is indicated by the change information and which is different from used movement aspect, as the movement aspect of the imaging system 2.

Then, the same operation is repeated until it is determined that the computing result condition is satisfied.

### (4-2-5) Usage of Reset Position RTP and Reset Pose RTA

There is a possibility that it is not determined that the computing result condition is satisfied even in a case where the processing for moving the imaging system 2 (the step S62b to the step S64b in FIG. 15) and the position pose computing (the step S1 to the step S3 in FIG. 15) are alternately repeated a plurality of times in a situation where the imaging system 2 images the plurality of target objects OBJ. Namely, there is a possibility that it is still determined that the computing result condition is not satisfied even in a case where the processing for moving the imaging system 2 (the step S62b to the step S64b in FIG. 15) and the position pose computing (the step S1 to the step S3 in FIG. 15) are alternately repeated a plurality of times in a situation where the imaging system 2 images the plurality of target objects OBJ. In this case, the movement control unit 314b may perform the robot control processing for moving the imaging system 2 so that the position of the imaging system 2 changes to a reset position RTP, which is set as a position at which the imaging system 2 images the target object OBJ, and / or the pose of the imaging system 2 changes to a reset pose RTA, which is set as a pose in which the imaging system 2 images the target object OBJ. Namely, the movement control unit 314b may generate the robot control signal for controlling the robot arm 12 so that the position of the imaging system 2 changes to the reset position RTP and / or the pose of the imaging system 2 changes to the reset pose RTA.

In order to change the position of the imaging system 2 to the reset position RTP, the movement control unit 314b may generate the robot control signal for controlling the robot arm 12 to translationally move the imaging system 2. In order to change the pose of the imaging system 2 to the reset pose RTA, the movement control unit 314b may generate the robot control signal for controlling the robot arm 12 to translationally move the imaging system 2. However, in order to change the position of the imaging system 2 to the reset position RTP, the movement control unit 314b may generate the robot control signal for controlling the robot arm 12 to rotationally move the imaging system 2. In order to change the pose of the imaging system 2 to the reset pose RTA, the movement control unit 314b may generate the robot control signal for controlling the robot arm 12 to rotationally move the imaging system 2.

Note that the movement amount (namely, a translational movement amount) of the imaging system 2 translationally moving may be larger than the movement amount (namely, a rotational movement amount) of the imaging system 2 rotationally moving in a case where the imaging system 2 rotationally moves and translationally moves. In this case, a processing for changing the position of the imaging system 2 to the reset position RTP and / or changing the pose of the imaging system 2 to the reset pose RTA may be referred to as a translational movement processing. However, the movement amount of the imaging system 2 translationally moving may not be larger than the movement amount of the imaging system 2 rotationally moving. Note that the imaging system 2 may perform only translational movement by a reset processing.

After the position of the imaging system 2 changes to the reset position RTP and / or the pose of the imaging system 2 changes to the reset pose RTA, the control apparatus 3b may perform the robot control processing illustrated in FIG. 15 again. In this case, since the position of the imaging system 2 changes to the reset position RTP and / or the pose of the imaging system 2 changes to the reset pose RTA, it is more likely that the imaging system 2 images a plurality of target objects OBJ including the target object OBJ, which is different from the target object that has been imaged by the imaging system 2 before the position of the imaging system 2 changes to the reset position RTP and / or the pose of the imaging system 2 changes to the reset pose RTA. Namely, a candidate of the target object OBJ on which the end effector 4 performs the predetermined process changes. Therefore, it is more likely to be determined that the end effector 4 can perform the predetermined process on at least one target object OBJ. Namely, it is more likely to be determined that the computing result condition is satisfied.

Thus, in the second modified example, by changing the position of the imaging system 2 to the reset position RTP and / or changing the pose of the imaging system 2 to the reset pose RTA, it is more likely that the imaging system 2 images another target object OBJ different from the one target object OBJ that has been previously imaged. In this case, the processing for changing the position of the imaging system 2 to the reset position RTP and / or changing the pose of the imaging system 2 to the reset pose RTA may be regarded as a processing for moving the imaging system 2 to prioritize performing the predetermined process on another target object OBJ on which the end effector 4 can easily perform the predetermined process, rather than seeking to perform the predetermined process on one target object OBJ on which it has been determined that the end effector 4 cannot perform the predetermined process.

Note that the control apparatus 3b may alternately repeat the processing for moving the imaging system 2 (the step S62b to the step S64b in FIG. 15) and the position pose computing (the step S1 to the step S3 in FIG. 15) even in a case where the robot control processing illustrated in FIG. 15 is performed again after the position of the imaging system 2 changes to the reset position RTP and / or the pose of the imaging system 2 changes to the reset pose RTA. However, the control apparatus 3b may perform the position pose computing without performing the processing for moving the imaging system 2.

On the other hand, there is a possibility not to be determined that the computing result condition is satisfied by the robot control processing performed again . In this case, the movement control unit 314b may move the imaging system 2 so that the position of the imaging system 2 changes to another different reset position RTP and / or the pose of the imaging system 2 changes to another different reset pose RTA. Namely, a plurality of different reset positions RTP may be set, and a plurality of different reset poses RTA may be set. The movement control unit 314b may generate the robot control signal for controlling the robot arm 12 so that the position of the imaging system 2 changes to another different reset position RTP and / or the pose of the imaging system 2 changes to another different reset pose RTA. Namely, the control apparatus 3b may alternately perform the robot control processing illustrated in FIG. 15 and a processing for controlling the robot arm 12 so that the position of the imaging system 2 changes to the reset position RTP and / or the pose of the imaging system 2 changes to the reset pose RTA. In this case, it is more likely that the imaging system 2 images a plurality of target objects OBJ including the target object OBJ, which is different from the target object that has been imaged by the imaging system 2 before the position of the imaging system 2 changes to another different reset position RTP and / or the pose of the imaging system 2 changes to another different reset pose RTA. Namely, the candidate of the target object OBJ on which the end effector 4 performs the predetermined process changes. Therefore, it is more likely to be determined that the end effector 4 can perform the predetermined process on at least one target object OBJ. Namely, it is more likely to be determined that the computing result condition is satisfied.

Note that one of the plurality of reset positions RTP may be used as an initial position of the imaging system 2 when the imaging system 2 starts imaging the target object OBJ in a case where the plurality of reset positions RTP are set. In this case, the robot system SYS may alternately perform the processing for controlling the robot arm 12 so that the position of the imaging system 2 changes to one reset position RTP and the robot control processing illustrated in FIG. 15.

Similarly, in a case where plurality of reset poses RTA are set, one of the plurality of reset poses RTA may be used as an initial pose of the imaging system 2 in a case where the imaging system 2 starts imaging the target object OBJ. In this case, the robot system SYS may alternately perform the processing for controlling the robot arm 12 so that the pose of the imaging system 2 changes to one reset pose RTA, and the robot control processing illustrated in FIG. 15.

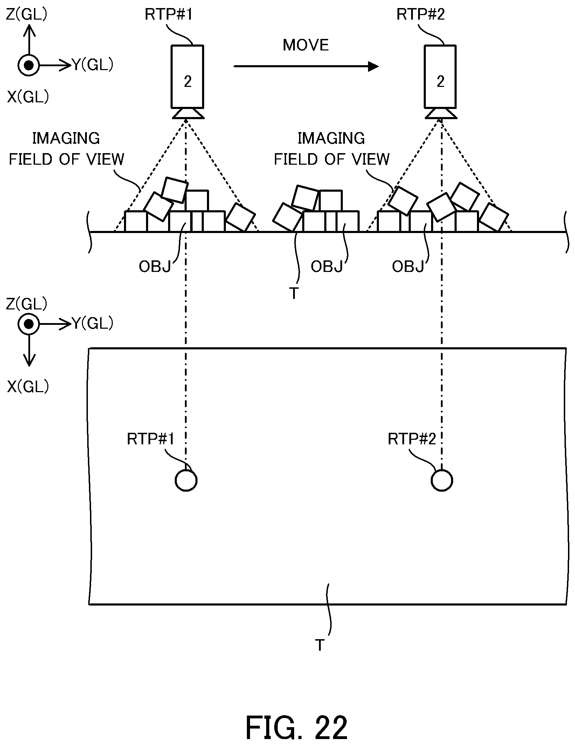

Examples of the plurality of reset positions RTP are illustrated in FIG. 22. As illustrated in FIG. 22, at least one of the plurality of target objects OBJ, which are imaged by the imaging system 2 positioned at a first reset position RTP#1 (for example, the initial position) may be different from at least one of the plurality of target objects OBJ, which are imaged by the imaging system 2 positioned at a second reset position RTP#2 that is different from the first reset position RTP#1. In this case, the candidate of the target object OBJ on which the end effector 4 performs the predetermined process changes. Therefore, even in a case where it is determined that the computing result condition, which is related to the result of the position pose computing based on the image data IMG_3D generated by the imaging system 2 positioned at one of the first reset position RTP#1 and the second reset position RTP#2, is not satisfied, there is a possibility to be determined the computing result condition, which is related to the result of the position pose computing based on the image data IMG_3D generated by the imaging system 2 positioned at the other one of the first reset position RTP#1 and the second reset position RTP#2, is satisfied.

One reset position RTP of the plurality of reset positions RTP may be set to satisfy a condition that "a predetermined proportion of the plurality of target objects OBJ included in the imaging field of view of the imaging system 2 that has moved to the one reset position RTP is the target object OBJ that is different from the plurality of target objects OBJ included in the imaging field of view of the imaging system 2 immediately before moving to the one reset position RTP". For example, in a case where the imaging system 2 is positioned at the above-described fourth position before the imaging system 2 moves to the one reset position RTP, the one reset position RTP may be set so that "the predetermined proportion of the plurality of target objects OBJ included in the imaging field of view of the imaging system 2 positioned at the one reset position RTP is the target object OBJ that is different from the plurality of target objects OBJ included in the imaging field of view of the imaging system 2 positioned at the fourth position". In this case, it is more likely that the candidate of the target object OBJ on which the end effector 4 performs the predetermined process changes due to the movement of the imaging system 2. Therefore, it is more likely to be determined that the end effector 4 can perform the predetermined process on at least one target object OBJ. Namely, it is more likely to be determined that the computing result condition is satisfied.

In this case, the movement control unit 314b may generate the robot control signal for moving the imaging system 2 so that a predetermined proportion of the imaging field of view of the imaging system 2 that has moved to the one reset position RTP does not overlap with the imaging field of view of the imaging system 2 immediately before moving to the one reset position RTP. As a result, the predetermined proportion of the plurality of target objects OBJ included in the imaging field of view of imaging system 2 that has moved to the one reset position RTP is the target object OBJ that is different from the plurality of target objects OBJ included in the imaging field of view of the imaging system 2 immediately before moving to the one reset position RTP.

The predetermined proportion for each of the target objects OBJ and the imaging field of view may be equal to or greater than 50%. In this case, one reset position RTP of the plurality of reset positions RTP may be set to satisfy a condition that "at least half (namely, 50% or more, one-half, the same applies in the below-described description) of the plurality of target objects OBJ included in the imaging field of view of the imaging system 2 that has moved to the one reset position RTP is the target object OBJ that is different from the plurality of target objects OBJ included in the imaging field of view of the imaging system 2 immediately before moving to the one reset position RTP". For example, in a case where the imaging system 2 is positioned at the above-described fourth position before the imaging system 2 moves to the one reset position RTP, the one reset position RTP may be set to satisfy the condition that "at least half of the plurality of target objects OBJ included in the imaging field of view of the imaging system 2 positioned at the one reset position RTP is the target object OBJ that is different from the plurality of target objects OBJ included in the imaging field of view of the imaging system 2 positioned at the fourth position". In this case, it is more likely that the candidate of the target object OBJ on which the end effector 4 performs the predetermined process changes due to the movement of the imaging system 2. Therefore, it is more likely to be determined that the end effector 4 can perform the predetermined process on at least one target object OBJ. Namely, it is more likely to be determined that the computing result condition is satisfied. In this case, the movement control unit 314b may generate the robot control signal for moving the imaging system 2 so that at least half (namely, 50% or more) of the imaging field of view of the imaging system 2 that has moved to the one reset position RTP does not overlap with the imaging field of view of the imaging system 2 immediately before moving to the one reset position RTP. As a result, at least half of the plurality of target objects OBJ included in the imaging field of view of imaging system 2 that has moved to the one reset position RTP is the target object OBJ that is different from the plurality of target objects OBJ included in the imaging field of view of the imaging system 2 immediately before moving to the one reset position RTP.

Alternatively, the predetermined proportion for each of the target objects OBJ and the imaging field of view may be less than 50%. In this case, one reset position RTP of the plurality of reset positions RTP may be set to satisfy a condition that "less than half of (namely, less than 50%) of the plurality of target objects OBJ included in the imaging field of view of the imaging system 2 that has moved to the one reset position RTP is the target object OBJ that is different from the plurality of target objects OBJ included in the imaging field of view of the imaging system 2 immediately before moving to the one reset position RTP". For example, in a case where the imaging system 2 is positioned at the above-described fourth position before the imaging system 2 moves to the one reset position RTP, the one reset position RTP may be set to satisfy the condition that "less than half of the plurality of target objects OBJ included in the imaging field of view of the imaging system 2 positioned at the one reset position RTP is the target object OBJ that is different from the plurality of target objects OBJ included in the imaging field of view of the imaging system 2 positioned at the fourth position". In this case, the movement control unit 314b may generate the robot control signal for moving the imaging system 2 so that less than half (namely, less than 50%) of the imaging field of view of the imaging system 2 that has moved to the one reset position RTP does not overlap with the imaging field of view of the imaging system 2 immediately before moving to the one reset position RTP. As a result, at least half of the plurality of target objects OBJ included in the imaging field of view of imaging system 2 that has moved to the one reset position RTP is the target object OBJ that is different from the plurality of target objects OBJ included in the imaging field of view of the imaging system 2 immediately before moving to the one reset position RTP.

The predetermined proportion for each of the target objects OBJ and the imaging field of view may be 100%. In this case, one reset position RTP of the plurality of reset positions RTP may be set to satisfy a condition that "all (namely, 100%) of the plurality of target objects OBJ included in the imaging field of view of the imaging system 2 that has moved to the one reset position RTP are the target objects OBJ that are different from the plurality of target objects OBJ included in the imaging field of view of the imaging system 2 immediately before moving to the one reset position RTP". For example, in a case where the imaging system 2 is positioned at the above-described fourth position before the imaging system 2 moves to the one reset position RTP, the one reset position RTP may be set to satisfy the condition that "all of the plurality of target objects OBJ included in the imaging field of view of the imaging system 2 positioned at the one reset position RTP are the target objects OBJ that are different from the plurality of target objects OBJ included in the imaging field of view of the imaging system 2 positioned at the fourth position". In this case, it is much more likely that the candidate of the target object OBJ on which the end effector 4 performs the predetermined process changes due to the movement of the imaging system 2. Therefore, it is much more likely to be determined that the end effector 4 can perform the predetermined process on at least one target object OBJ. Namely, it is much more likely to be determined that the computing result condition is satisfied. In this case, the movement control unit 314b may generate the robot control signal for moving the imaging system 2 so that all (namely, 100%) of the imaging field of view of the imaging system 2 that has moved to the one reset position RTP does not overlap with the imaging field of view of the imaging system 2 immediately before moving to the one reset position RTP. As a result, all of the plurality of target objects OBJ included in the imaging field of view of the imaging system 2 that has moved to the one reset position RTP are the target objects OBJ that are different from the plurality of target objects OBJ included in the imaging field of view of the imaging system 2 immediately before moving to the one reset position RTP.

The plurality of reset positions RTP may be set to satisfy a condition that "at least half of the plurality of target objects OBJ included in the imaging field of view of the imaging system 2 positioned at a first reset position RTP is the target object OBJ that is different the plurality of target objects OBJ included in the imaging field of view of imaging system 2 positioned at a second reset position RTP that is different from the first reset position RTP". In this case, the movement control unit 314b may generate the robot control signal for moving the imaging system 2 so that at least half of the imaging field of view of the imaging system 2 positioned at the first reset position RTP does not overlap with the imaging field of view of the imaging system 2 immediately before moving to the second reset position RTP. As a result, at least half of the plurality of target objects OBJ included in the imaging field of view of the imaging system 2 positioned at the first reset position RTP is the target object OBJ that is different the plurality of target objects OBJ included in the imaging field of view of imaging system 2 positioned at the second reset position RTP. Alternatively, the plurality of reset positions RTP may be set to satisfy a condition that "all of the plurality of target objects OBJ included in the imaging field of view of the imaging system 2 positioned at the first reset position RTP are the target objects OBJ that are different the plurality of target objects OBJ included in the imaging field of view of imaging system 2 positioned at the second reset position RTP that is different from the first reset position RTP". In this case, the movement control unit 314b may generate the robot control signal for moving the imaging system 2 so that all of the imaging field of view of the imaging system 2 positioned at the first reset position RTP does not overlap with the imaging field of view of the imaging system 2 immediately before moving to the second reset position RTP. As a result, all of the plurality of target objects OBJ included in the imaging field of view of the imaging system 2 positioned at the first reset position RTP are the target objects OBJ that are different the plurality of target objects OBJ included in the imaging field of view of imaging system 2 positioned at the second reset position RTP that is different from the first reset position RTP. Even in this case, it is more likely that the candidate of the target object OBJ on which the end effector 4 performs the predetermined process changes due to the movement of the imaging system 2. Therefore, it is more likely to be determined that the end effector 4 can perform the predetermined process on at least one target object OBJ. Namely, it is more likely to be determined that the computing result condition is satisfied.

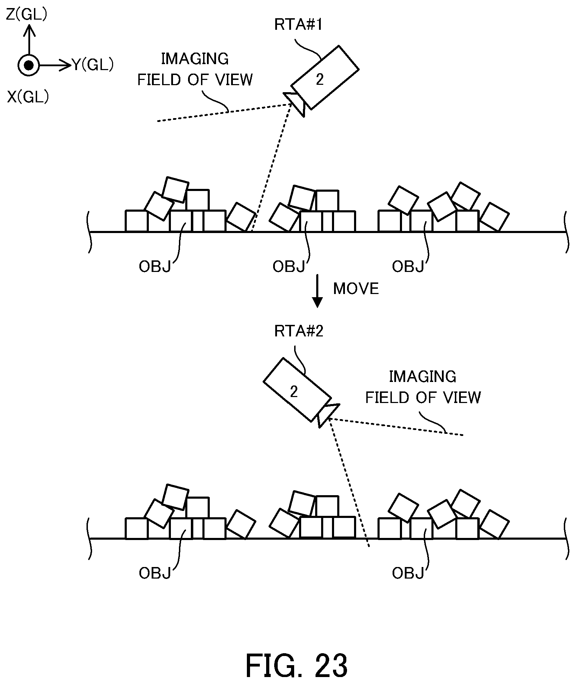

Examples of the plurality of reset poses RTA are illustrated in FIG. 23. As illustrated in FIG. 23, at least one of the plurality of target objects OBJ, which are imaged by the imaging system 2 taking a first reset pose RTA#1 (for example, the initial pose) may be different from at least one of the plurality of target objects OBJ, which are imaged by the imaging system 2 taking a second reset pose RTA#2 that is different from the first reset pose RTA#1. In this case, the candidate of the target object OBJ on which the end effector 4 performs the predetermined process changes. Therefore, even in a case where it is determined that the computing result condition, which is related to the result of the position pose computing based on the image data IMG_3D generated by the imaging system 2 taking one of the first reset pose RTA#1 and the second reset pose RTA#2, is not satisfied, there is a possibility to be determined that the computing result condition, which is related to the result of the position pose computing based on the image data IMG_3D generated by the imaging system 2 taking the other one of the first reset pose RTA#1 and the second reset pose RTA#2, is satisfied.

One reset pose RTA of the plurality of reset poses RTA may be set to satisfy a condition that "a predetermined proportion of the plurality of target objects OBJ included in the imaging field of view of the imaging system 2 whose pose has changed to the one reset pose RTA is the target object OBJ that is different from the plurality of target objects OBJ included in the imaging field of view of the imaging system 2 immediately before its pose changes to the one reset pose RTA". For example, in a case where the imaging system 2 takes the above-described fourth pose before the pose of the imaging system 2 changes to the one reset pose RTA, the one reset pose RTA may be set so that "the predetermined proportion of the plurality of target objects OBJ included in the imaging field of view of the imaging system 2 taking the one reset pose RTA is the target object OBJ that is different from the plurality of target objects OBJ included in the imaging field of view of the imaging system 2 taking the fourth pose". In this case, it is more likely that the candidate of the target object OBJ on which the end effector 4 performs the predetermined process changes due to the movement of the imaging system 2. Therefore, it is more likely to be determined that the end effector 4 can perform the predetermined process on at least one target object OBJ. Namely, it is more likely to be determined that the computing result condition is satisfied.

In this case, the movement control unit 314b may generate the robot control signal for moving the imaging system 2 so that a predetermined proportion of the imaging field of view of the imaging system 2 whose pose has changed to the one reset pose RTA does not overlap with the imaging field of view of the imaging system 2 immediately before its pose changes to the one reset pose RTA. As a result, the predetermined proportion of the plurality of target objects OBJ included in the imaging field of view of imaging system 2 whose pose has changed to the one reset pose RTA is the target object OBJ that is different from the plurality of target objects OBJ included in the imaging field of view of the imaging system 2 immediately before its pose changes to the one reset pose RTA.

The predetermined proportion for each of the target objects OBJ and the imaging field of view may be equal to or greater than 50%. In this case, one reset pose RTA of the plurality of reset poses RTA may be set to satisfy a condition that "at least half (namely, 50% or more, one-half, the same applies in the below-described description) of the plurality of target objects OBJ included in the imaging field of view of the imaging system 2 whose pose has changed to the one reset pose RTA is the target object OBJ that is different from the plurality of target objects OBJ included in the imaging field of view of the imaging system 2 immediately before its pose changes to the one reset pose RTA". For example, in a case where the imaging system 2 takes the above-described fourth pose before the pose of the imaging system 2 changes to the one reset pose RTA, the one reset pose RTA may be set to satisfy the condition that "at least half of the plurality of target objects OBJ included in the imaging field of view of the imaging system 2 taking the one reset pose RTA is the target object OBJ that is different from the plurality of target objects OBJ included in the imaging field of view of the imaging system 2 taking the fourth pose". In this case, it is more likely that the candidate of the target object OBJ on which the end effector 4 performs the predetermined process changes due to the movement of the imaging system 2. Therefore, it is more likely to be determined that the end effector 4 can perform the predetermined process on at least one target object OBJ. Namely, it is more likely to be determined that the computing result condition is satisfied. In this case, the movement control unit 314b may generate the robot control signal for moving the imaging system 2 so that at least half (namely, 50% or more) of the imaging field of view of the imaging system 2 whose pose has changed to the one reset pose RTA does not overlap with the imaging field of view of the imaging system 2 immediately before its pose changes to the one reset pose RTA. As a result, at least half of the plurality of target objects OBJ included in the imaging field of view of imaging system 2 whose pose has changed to the one reset pose RTA is the target object OBJ that is different from the plurality of target objects OBJ included in the imaging field of view of the imaging system 2 immediately before its pose changes to the one reset pose RTA.

Alternatively, the predetermined proportion for each of the target objects OBJ and the imaging field of view may be less than 50%. In this case, one reset pose RTA of the plurality of reset poses RTA may be set to satisfy a condition that "less than half of (namely, less than 50%) of the plurality of target objects OBJ included in the imaging field of view of the imaging system 2 whose pose has changed to the one reset pose RTA is the target object OBJ that is different from the plurality of target objects OBJ included in the imaging field of view of the imaging system 2 immediately before its pose changes to the one reset pose RTA". For example, in a case where the imaging system 2 takes the above-described fourth pose before the pose of the imaging system 2 changes to the one reset pose RTA, the one reset pose RTA may be set to satisfy the condition that "less than half of the plurality of target objects OBJ included in the imaging field of view of the imaging system 2 taking the one reset pose RTA is the target object OBJ that is different from the plurality of target objects OBJ included in the imaging field of view of the imaging system 2 taking the fourth pose". In this case, the movement control unit 314b may generate the robot control signal for moving the imaging system 2 so that less than half (namely, less than 50%) of the imaging field of view of the imaging system 2 whose pose has changed to the one reset pose RTA does not overlap with the imaging field of view of the imaging system 2 immediately before its pose changes to the one reset pose RTA. As a result, less than half of the plurality of target objects OBJ included in the imaging field of view of imaging system 2 whose pose has changed to the one reset pose RTA is the target object OBJ that is different from the plurality of target objects OBJ included in the imaging field of view of the imaging system 2 immediately before its pose changes to the one reset pose RTA.

The predetermined proportion for each of the target objects OBJ and the imaging field of view may be 100%. In this case, one reset pose RTA of the plurality of reset poses RTA may be set to satisfy a condition that "all (namely, 100%) of the plurality of target objects OBJ included in the imaging field of view of the imaging system 2 whose pose has changed to the one reset pose RTA are the target objects OBJ that are different from the plurality of target objects OBJ included in the imaging field of view of the imaging system 2 immediately before its pose changes to the one reset pose RTA". For example, in a case where the imaging system 2 takes the above-described fourth pose before the pose of the imaging system 2 changes to the one reset pose RTA, the one reset pose RTA may be set to satisfy the condition that "all of the plurality of target objects OBJ included in the imaging field of view of the imaging system 2 taking the one reset pose RTA are the target objects OBJ that are different from the plurality of target objects OBJ included in the imaging field of view of the imaging system 2 taking the fourth pose". In this case, it is much more likely that the candidate of the target object OBJ on which the end effector 4 performs the predetermined process changes due to the movement of the imaging system 2. Therefore, it is much more likely to be determined that the end effector 4 can perform the predetermined process on at least one target object OBJ. Namely, it is much more likely to be determined that the computing result condition is satisfied. In this case, the movement control unit 314b may generate the robot control signal for moving the imaging system 2 so that all (namely, 100%) of the imaging field of view of the imaging system 2 whose pose has changed to the one reset pose RTA does not overlap with the imaging field of view of the imaging system 2 immediately before its pose changes to the one reset pose RTA. As a result, all of the plurality of target objects OBJ included in the imaging field of view of the imaging system 2 whose pose has changed to the one reset pose RTA are the target objects OBJ that are different from the plurality of target objects OBJ included in the imaging field of view of the imaging system 2 immediately before its pose changes to the one reset pose RTA.

The plurality of reset poses RTA may be set to satisfy a condition that "at least half of the plurality of target objects OBJ included in the imaging field of view of the imaging system 2 taking a first reset pose RTA is the target object OBJ that is different the plurality of target objects OBJ included in the imaging field of view of imaging system 2 taking a second reset pose RTA that is different from the first reset pose RTA". In this case, the movement control unit 314b may generate the robot control signal for moving the imaging system 2 so that at least half of the imaging field of view of the imaging system 2 taking the first reset pose RTA does not overlap with the imaging field of view of the imaging system 2 taking the second reset pose RTA. As a result, at least half of the plurality of target objects OBJ included in the imaging field of view of the imaging system 2 taking the first reset pose RTA is the target object OBJ that is different the plurality of target objects OBJ included in the imaging field of view of imaging system 2 taking the second reset pose RTA. Alternatively, the plurality of reset poses RTA may be set to satisfy a condition that "all of the plurality of target objects OBJ included in the imaging field of view of the imaging system 2 taking the first reset pose RTA are the target objects OBJ that are different the plurality of target objects OBJ included in the imaging field of view of imaging system 2 taking the second reset pose RTA that is different from the first reset pose RTA". In this case, the movement control unit 314b may generate the robot control signal for moving the imaging system 2 so that all of the imaging field of view of the imaging system 2 taking the first reset pose RTA does not overlap with the imaging field of view of the imaging system 2 taking the second reset pose RTA. As a result, all of the plurality of target objects OBJ included in the imaging field of view of the imaging system 2 taking the first reset pose RTA are the target objects OBJ that are different the plurality of target objects OBJ included in the imaging field of view of imaging system 2 taking the second reset pose RTA that is different from the first reset pose RTA. Even in this case, it is more likely that the candidate of the target object OBJ on which the end effector 4 performs the predetermined process changes due to the movement of the imaging system 2. Therefore, it is more likely to be determined that the end effector 4 can perform the predetermined process on at least one target object OBJ. Namely, it is more likely to be determined that the computing result condition is satisfied.

The reset position may indicate a position in the global coordinate system. The reset pose may indicate a pose in the global coordinate system. However, the reset position may indicate a position in a coordinate system that is different from the global coordinate system. The reset pose may indicate a pose in a coordinate system that is different from the global coordinate system.

At least one of the reset position RTP and the reset pose RTA may be set by the user. In this case, the user may input, to the control apparatus 3b, information indicating at least one of the reset position RTP and the reset pose RTA designated by the user as imaging position pose information indicating at least one of the position and the pose at which the imaging system 2 images the target object OBJ. The user may input, to the control apparatus 3b, information indicating at least one of the reset position RTP and the reset pose RTA designated by the user as re-imaging position pose information indicating at least one of the position and the pose at which the imaging system 2 images the target object OBJ again.

Alternatively, at least one of the reset position RTP and reset pose RTA may be automatically set by the control apparatus 3b (alternatively, an apparatus that is different from the control apparatus 3b). In a case where the control apparatus 3b sets at least one of the reset position RTP and the reset pose PTA, the control apparatus 3b may set at least one of the reset position RTP and the reset pose PTA based on at least one of the imaging field of view of the imaging system 2 and a size of the placing apparatus T on which the plurality of target objects OBJ are placed (for example, a size of the container CB in which the plurality of target objects OBJ are contained).

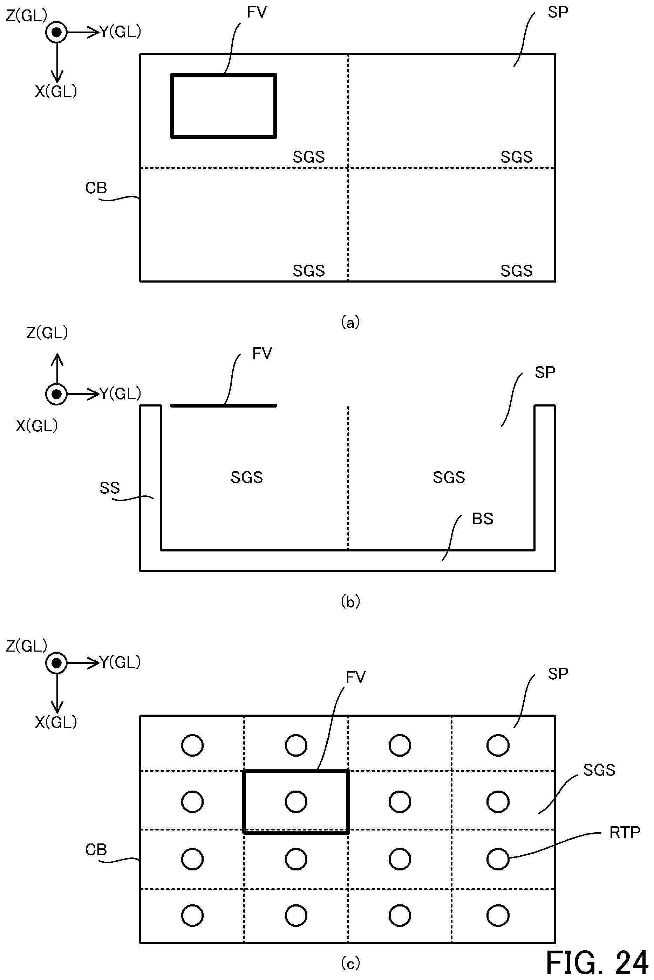

An example in which the control apparatus 3b sets the reset position RTP based on at least one of the imaging field of view of the imaging system 2 and the size of the container CB, which is one example of the placing apparatus T, on (in) which the plurality of target objects OBJ are placed (contained), is illustrated in FIG. 24(a) to FIG. 24(c). As illustrated in FIG. 24(a) to FIG. 24(b), the control apparatus 3b may set a plurality of segmentalized spaces SGS by dividing the containing space SP in which the container CB contains the target object OBJ at equal intervals along the X-axis direction and the Y-axis direction. In a case where the container CB includes the bottom wall BS and the side wall SS as described above, the space surrounded by the bottom wall BS and the side wall SS may be used as the containing space SP. In a case where the container CB includes the bottom wall BS but does not include the side wall SS, the space above the bottom wall BS may be used as the containing space SP. FIG. 24(a) to FIG. 24(b) illustrate an example in which the containing space SP is divided into four segmentalized spaces SGS. Then, the control apparatus 3b may determine whether or not the size of the segmentalized space SGS along the XY plane is larger than the size of the imaging field of view FV along the XY plane. In a case where it is determined that the size of the segmentalized space SGS along the XY plane is larger than the size of the imaging field of view FV along the XY plane, the control apparatus 3b may further divide the containing space SP into a plurality of segmentalized spaces SGS with smaller size. In the example illustrated in FIG. 24(a), the size of the segmentalized space SGS along the XY plane is larger than the size of the imaging field of view FV along the XY plane. In this case, the control apparatus 3b divides the containing space SP into a plurality of (in the example illustrated in FIG. 24(b), sixteen) segmentalized spaces SGS with smaller size as illustrated in FIG. 24(b). In a case where it is determined that the size of the segmentalized space SGS along the XY plane is smaller than the size of the imaging field of view FV along the XY plane, the control apparatus 3b may set the plurality of reset positions that correspond to the plurality of segmentalized spaces SGS, respectively. For example, the control apparatus 3b may set a center coordinate of one segmentalized space SGS in the X-axis direction as a X-coordinate of one reset position RTP corresponding to the one segmentalized space SGS. For example, the control apparatus 3b may set a center coordinate of one segmentalized space SGS in the Y-axis direction as an Y-coordinate of one reset position RTP corresponding to the one segmentalized space SGS. For example, the control apparatus 3b may set a coordinate that is away upwardly from one segmentalized space SGS in the Z-axis direction as an Z-coordinate of one reset position RTP corresponding to the one segmentalized space SGS.

The control apparatus 3b may divide the containing space SP into the plurality of segmentalized spaces SGS so that all (namely, 100%) of the imaging field of view FV of the imaging system 2 positioned at a first reset position RTP corresponding to a first segmentalized space SGS does not overlap with the imaging field of view FV of the imaging system 2 positioned at a second reset position RTP corresponding to a second segmentalized space SGS.

Alternatively, the control apparatus 3b may divide the containing space SP into the plurality of segmentalized spaces SGS so that a part of the imaging field of view FV of the imaging system 2 positioned at the first reset position RTP corresponding to the first segmentalized space SGS overlaps with the imaging field of view FV of the imaging system 2 positioned at the second reset position RTP corresponding to the second segmentalized space SGS. Namely, the control apparatus 3b may divide the containing space SP into plurality of segmentalized spaces SGS so that a predetermined proportion of the imaging field FV of the imaging system 2 positioned at the first reset position RTP corresponding to the first segmentalized space SGS overlaps with the imaging field FV of the imaging system 2 positioned at the second reset position RTP corresponding to the second segmentalized space SGS. As a first example, the predetermined proportion may be less than 50%. Namely, the control apparatus 3b may divide the containing space SP into the plurality of segmentalized spaces SGS so that less than half (namely, less than 50%) of the imaging field of view FV of the imaging system 2 positioned at the first reset position RTP corresponding to the first segmentalized space SGS overlaps with the imaging field of view FV of the imaging system 2 positioned at the second reset position RTP corresponding to the second segmentalized space SGS. In other words, the control apparatus 3b may divide the containing space SP into the plurality of segmentalized spaces SGS so that at least half or more (namely, 50% or more) of the imaging field of view FV of the imaging system 2 positioned at the first reset position RTP corresponding to the first segmentalized space SGS does not overlap with the imaging field of view FV of the imaging system 2 positioned at the second reset position RTP corresponding to the second segmentalized space SGS. As a second example, the predetermined proportion may be equal to or greater than 50%. Namely, the control apparatus 3b may divide the containing space SP into the plurality of segmentalized spaces SGS so that at least half or more (namely, 50% or more) of the imaging field of view FV of the imaging system 2 positioned at the first reset position RTP corresponding to the first segmentalized space SGS overlaps with the imaging field of view FV of the imaging system 2 positioned at the second reset position RTP corresponding to the second segmentalized space SGS. In other words, the control apparatus 3b may divide the containing space SP into the plurality of segmentalized spaces SGS so that less than half (namely, less than 50%) of the imaging field of view FV of the imaging system 2 positioned at the first reset position RTP corresponding to the first segmentalized space SGS does not overlap with the imaging field of view FV of the imaging system 2 positioned at the second reset position RTP corresponding to the second segmentalized space SGS. Note that the predetermined proportion for the imaging field of view FV, which is used to set the reset position RTP, may be set by the user or may be automatically set by the control apparatus 3b.

Note that the movement control unit 314b may move the imaging system 2 so that the position of the imaging system 2 changes to the reset position RTP and / or the pose of the imaging system 2 changes to the reset pose RTA in a case other than the case where the processing for moving the imaging system 2 (from the step S62b to the step S64b) and the position pose computing are alternately repeated as illustrated in FIG. 15.

For example, the movement control unit 314b may move the imaging system 2 so that the position of the imaging system 2 changes to a first reset position RTP and / or the pose of the imaging system 2 changes to a first reset pose RTA. Then, the control apparatus 3b may perform the robot control processing illustrated in FIG. 4. As a result, the end effector 4 may sequentially perform the predetermined process on at least one target object OBJ, which is included in the imaging field of view of the imaging system 2 that is positioned at the first reset position RTP and / or that takes the first reset pose RTA. Specifically, in a case where a single target object OBJ is included in the imaging field of view of the imaging system 2 that is positioned at the first reset position RTP and / or that takes the first reset pose RTA, the control apparatus 3b may generate the position pose data POI of the single target object OBJ based on the image data IMG_3D generated by the imaging system 2 imaging this single target object OBJ. Then, the control apparatus 3b may generate the robot control signal for controlling the robot arm 12 so that the end effector 4 approaches the single target object OBJ in order for the end effector 4 to perform the predetermined process on the single target object OBJ based on the generated position pose data POI. Alternatively, in a case where the plurality of target objects OBJ are included in the imaging field of view of the imaging system 2 that which is positioned at the first reset position RTP and / or that takes the first reset pose RTA, the control apparatus 3b may generate the position pose data POI of at least one of the plurality of target objects OBJ based on the image data IMG_3D generated by the imaging system 2 imaging the plurality of target objects OBJ. Then, the control apparatus 3b may generate the robot control signal for controlling the robot arm 12 so that the end effector 4 sequentially approaches at least one of the plurality of target objects OBJ in order for the end effector 4 to sequentially perform the predetermined process on at least one of the plurality of target objects OBJ based on the generated position pose data POI.

Then, the movement control unit 314b may move the imaging system 2 so that the position of the imaging system 2 changes to a second reset position RTP and / or the pose of the imaging system 2 changes to a second reset pose RTA. Then, the control apparatus 3b may perform the robot control processing illustrated in FIG. 4. As a result, the end effector 4 may sequentially perform the predetermined process on at least one target object OBJ, which is included in the imaging field of view of the imaging system 2 that is positioned at the second reset position RTP and / or that takes the second reset pose RTA. Specifically, in a case where a single target object OBJ is included in the imaging field of view of the imaging system 2 that is positioned at the second reset position RTP and / or that takes the second reset pose RTA, the control apparatus 3b may generate the position pose data POI of the single target object OBJ based on the image data IMG_3D generated by the imaging system 2 imaging this single target object OBJ. Then, the control apparatus 3b may generate the robot control signal for controlling the robot arm 12 so that the end effector 4 approaches the single target object OBJ in order for the end effector 4 to perform the predetermined process on the single target object OBJ based on the generated position pose data POI. Alternatively, in a case where the plurality of target objects OBJ are included in the imaging field of view of the imaging system 2 that which is positioned at the second reset position RTP and / or that takes the second reset pose RTA, the control apparatus 3b may generate the position pose data POI of at least one of the plurality of target objects OBJ based on the image data IMG_3D generated by the imaging system 2 imaging the plurality of target objects OBJ. Then, the control apparatus 3b may generate the robot control signal for controlling the robot arm 12 so that the end effector 4 sequentially approaches at least one of the plurality of target objects OBJ in order for the end effector 4 to sequentially perform the predetermined process on at least one of the plurality of target objects OBJ based on the generated position pose data POI.

In a case where the plurality of target objects OBJ are included in the imaging field of view of the imaging system 2 that is positioned at each reset position RTP and / or that takes each reset pose RTA, the number of target objects OBJ on which the end effector 4 actually performs the process may be set by the user. Alternatively, the control apparatus 3b may set the number of target objects OBJ on which the end effector 4 actually performs the process based on the image data IMG_3D (alternatively, the image data IMG_2D) generated by the imaging system 2. In this case, the imaging system 2 may move so that the position of the imaging system 2 changes to another different reset position RTP and / or the pose of the imaging system 2 changes to another different reset pose RTA as described below in a case where the number of target objects OBJ on which the end effector 4 has performed the process is equal to or larger than a set number, even in a case where the end effector 4 has not yet performed the process on at least one of the plurality of target objects OBJ included in the imaging field of view of the imaging system 2.

### (4-2-6) Other Example

As briefly described in the above-described description, the movement control unit 314b may set the movement aspect of the imaging system 2 based on image data IMG_3D (alternatively, the three-dimensional position data WSD generated from the image data IMG_3D) instead of the image data IMG_2D at the step S62b in FIG. 15. For example, the movement control unit 314b may calculate at least one of the position and the pose of the target object OBJ by performing the 3D matching processing using the three-dimensional position data WSD, and set the movement aspect of the imaging system 2 based on at least one of the calculated position and pose of the target object OBJ. Even in this case, the movement control unit 314b may set the movement aspect of the imaging system 2 based on the image data IMG_3D (alternatively, the three-dimensional position data WSD generated from the image data IMG_3D) so that it is more likely that the result of the position pose computing is good (namely, the computing result condition is satisfied). Note that a processing for setting the movement aspect of the imaging system 2 based on the image data IMG_3D (alternatively, the three-dimensional position data WSD generated from the image data IMG_3D) may be the same as the above-described processing for setting the movement aspect of the imaging system 2 based on the image data IMG_2D. Therefore, a detailed description of the processing for setting the movement aspect of the imaging system 2 based on the image data IMG_3D (alternatively, the three-dimensional position data WSD generated from the image data IMG_3D) is omitted.

Even in this case, the movement control unit 314b may acquire the image data IMG_3D generated by the imaging system 2 after it is determined that the computing result condition is not satisfied. Alternatively, the movement control unit 314b may acquire the image data IMG_3D generated by the imaging system 2 before it is determined that the computing result condition is not satisfied. As one example, after the imaging system 2 nay generate the image data IMG_3D, which is acquired by the movement control unit 314b at the step S62b, after the imaging system 2 images the target object OBJ to generate at least one of the image data IMG_2D and IMG_3D for the position pose computing at the step S1 in FIG. 15. As another example, the imaging system 2 may generate the image data IMG_3D for the position pose computing at the step S1 in FIG. 15, and the movement control unit 314b may acquire the image data IMG_3D, which has been generated at the step S1 in FIG. 15, at the step S62b in FIG. 15. Namely, the image data IMG_3D for the position pose computing at the step S3 in FIG. 15 may be used as the image data IMG_3D acquired by the movement control unit 314b at the step S62b in FIG. 15. Alternatively, the position pose data POI generated by the position pose computing at the step S3 in FIG. 15 may be used by the movement control unit 314b setting the movement aspect of the imaging system 2 at the step S63b in FIG. 15, in addition to or instead of using the image data IMG_3D. As another example, at the step S1 in FIG. 15, the imaging system 2 may generate the image data IMG_2D for the position pose computing, and also generate the image data IMG_3D acquired by the movement control unit 314b at the step S62b in FIG. 15. Namely, the imaging system 2 may generate the image data IMG_2D for the position pose computing and the image data IMG_3D acquired by the movement control unit 314b at the step S62b in FIG. 15 at the same timing.

As briefly described in the above-described description, the movement control unit 314b may set the movement aspect of the imaging system 2 based on both the image data IMG_2D and the image data IMG_3D (alternatively, the three-dimensional position data WSD generated from the image data IMG_3D) at the step S62b in FIG. 15. For example, the movement control unit 314b may calculate at least one of the position and the pose of the target object OBJ by performing both the 2D matching processing using the image data IMG_2D and the 3D matching processing using the three-dimensional position data WSD, and set the movement aspect of the imaging system 2 based on at least one of the calculated position and pose of the target object OBJ. Even in this case, the movement control unit 314b may set the movement aspect of the imaging system 2 based on both the image data IMG_2D and the image data IMG_3D (alternatively, the three-dimensional position data WSD generated from the image data IMG_3D) so that it is more likely that the result of the position pose computing is good (namely, the computing result condition is satisfied). Note that a processing for setting the movement aspect of the imaging system 2 based on both the image data IMG_2D and the image data IMG_3D (alternatively, the three-dimensional position data WSD generated from the image data IMG_3D) may be the same as the above-described processing for setting the movement aspect of the imaging system 2 based on the image data IMG_2D. Therefore, a detailed description of the processing for setting the movement aspect of the imaging system 2 based on both the image data IMG_2D and the image data IMG_3D (alternatively, the three-dimensional position data WSD generated from the image data IMG_3D) is omitted.

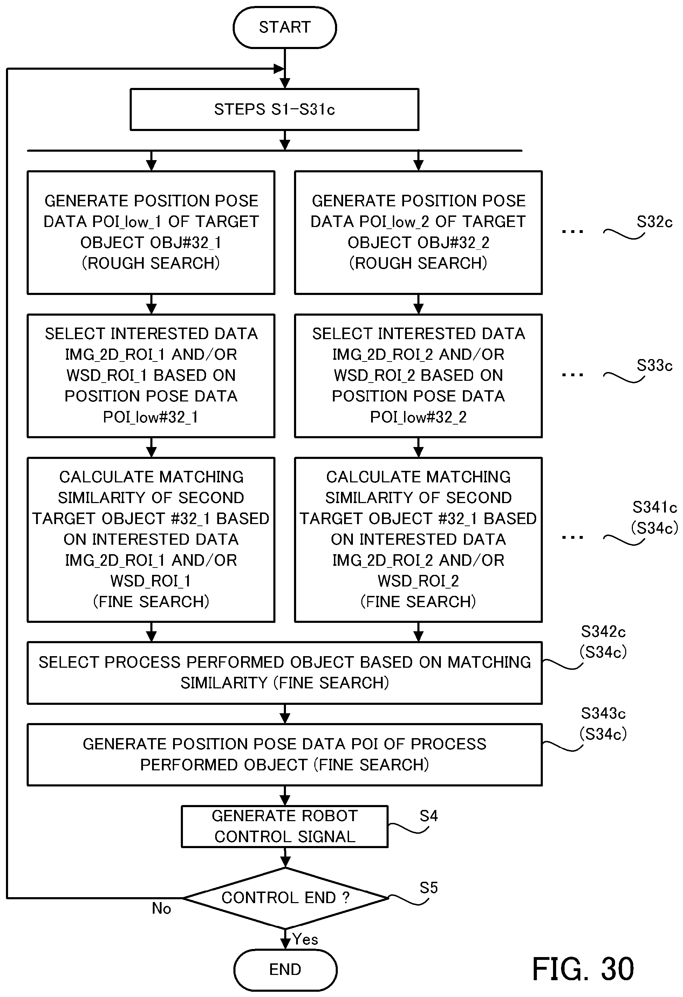

In a case where at least one of the image data IMG_2D and the image data IMG_3D (specifically, the three-dimensional position data WSD generated from the image data IMG_3D) is used to perform the position pose computing (the matching processing) at the step S3 in FIG. 15, the movement control unit 314b may set the movement aspect of the imaging system 2 by using at least the other one of the image data IMG_2D and the image data IMG_3D (alternatively, the three-dimensional position data WSD generated from the image data IMG_3D) at the step S63b in FIG. 30.

As one example, in a case where the position pose computing at the step S3 in FIG. 15 is performed by using the image data IMG_2D without using the image data IMG_3D (specifically, the three-dimensional position data WSD generated from the image data IMG_3D), the movement control unit 314b may set the movement aspect of the imaging system 2 by using at least the image data IMG_3D (alternatively, the three-dimensional position data WSD generated from the image data IMG_3D) at the step S63b in FIG. 15. This is because it is unlikely that there is no significant difference between the detected result of the target object OBJ for performing the position pose computing and the detected result of the target object OBJ for setting the movement aspect in a case where the image data IMG_2D is used to perform the position pose computing and the image data IMG_2D is used to set the movement aspect of the imaging system 2. As a result, in a situation where it is determined that the computing result condition related to the result of the position pose computing based on the image data IMG_2D generated by the imaging apparatus 21 is not satisfied, there is a possibility to be determined that the computing result condition is not still satisfied even in a case where the imaging system 2 moves based on the movement aspect set by using the same image data IMG_2D generated by the imaging apparatus 21. On the other hand, in a case where the image data IMG_2D is used to perform the position pose computing and the image data IMG_3D is used to set the movement aspect of the imaging system 2, there is a possibility that there is a difference between the detected result of the target object OBJ for performing the position pose computing and the detected result of the target object OBJ for setting the movement aspect. As a result, in a situation where it is determined that the computing result condition related to the result of the position pose computing based on the image data IMG_2D generated by the imaging apparatus 21 is not satisfied, it is more likely to be determined that the computing result condition is not still satisfied by moving the imaging system 2 based on the movement aspect set by using the image data IMG_3D generated by the imaging apparatus 22 that is different from the imaging apparatus 21. Therefore, in a case where the image data IMG_2D is used to perform the position pose computing and the image data IMG_3D is used to set the movement aspect of the imaging system 2, the movement control unit 314b can set the movement aspect of the imaging system 2 so that it is more likely that the result of the position pose computing is good (namely, the computing result condition is satisfied).

Moreover, there is a possibility that the position pose data POI generated by the 3D matching processing described above is more accurate than the position pose data POI generated by the 2D matching processing. However, in a case where the 3D matching processing is performed, there is a possibility that a quality of the three-dimensional position data WSD decreases and / or varies during a process for generating the three-dimensional position data WSD from the image data IMG_3D. For example, in a case where the three-dimensional position data WSD is the point cloud data, there is a possibility that an amount of noise included in the point cloud increases or a deviation of the three-dimensional coordinate indicated by the point cloud data from a true values increases. In this case, there is a possibility that an accuracy of the position pose data POI generated by the 3D matching processing significantly varies (for example, decreases) due to the accuracy of the three-dimensional position data WSD. Namely, a robustness of the position pose data POI generated by the 3D matching processing is low. On the other hand, in a case where the 2D matching processing is performed, the position pose data POI is generated by using the image data IMG_2D directly without converting the image data IMG_2D to other data (for example, the three-dimensional position data WSD). Therefore, it is unlikely that the accuracy of the position pose data POI generated by the 2D matching processing significantly varies (for example, significantly decreases). Namely, the robustness of the position pose data POI generated by the 2D matching processing is high. Therefore, in a case where the computing result condition, which is related to the position pose computing including the 3D matching processing performed by using the image data IMG_3D (specifically, the three-dimensional position data WSD generated from the image data IMG_3D) at the step S3 in FIG. 4 and the step S76 in FIG. 13, is not satisfied, the control apparatus 3 performs the 2D matching processing, whose robustness is so high that it is expected that the calculated matching similarity is likely to be higher than the matching determination threshold value, to generate the position pose data POI, which is expected to indicates at least one of the position and the pose of the target object OBJ (especially, the gazing target object OBJ_g) with relatively high accuracy, and sets the movement aspect of the imaging system 2 based on this position pose data POI. In this case, the control apparatus 3 may be considered to support the 3D matching processing by the 2D matching processing so that the result of the position pose computing including the subsequent 3D matching improves.

For the same reason, in a case where the position pose computing at the step S3 in FIG. 15 is performed by using the image data IMG_3D (specifically, the three-dimensional position data WSD generated from the image data IMG_3D) without using the image data IMG_2D, the movement control unit 314b may set the movement aspect of the imaging system 2 by using at least the image data IMG_2D at the step S63b in FIG. 15. Even in this case, the movement control unit 314b can set the movement aspect of the imaging system 2 so that it is more likely that the result of the position pose computing is good (namely, the computing result condition is satisfied).

However, in a case where the position pose computing at the step S3 in FIG. 15 is performed by using the image data IMG_2D without using the image data IMG_3D (specifically, the three-dimensional position data WSD generated from the image data IMG_3D), the movement control unit 314b may set the movement aspect of the imaging system 2 by using at least the image data IMG_2D at the step S63b in FIG. 15. Alternatively, in a case where the position pose computing is performed by using the image data IMG_2D without using the image data IMG_3D (specifically, the three-dimensional position data WSD generated from the image data IMG_3D), the movement control unit 314b may set the movement aspect of the imaging system 2 by using both the image data IMG_2D and the image data IMG_3D (specifically, the three-dimensional position data WSD generated from the image data IMG_3D) at the step S63b in FIG. 15.

Similarly, in a case where the position pose computing at the step S3 in FIG. 15 is performed by using the image data IMG_3D (specifically, the three-dimensional position data WSD generated from the image data IMG_3D) without using the image data IMG_2D, the movement control unit 314b may set the movement aspect of the imaging system 2 by using at least the image data IMG_3D (specifically, the three-dimensional position data WSD generated from the image data IMG_3D) at the step S63b in FIG. 15. Alternatively, in a case where the position pose computing is performed by using the image data IMG_3D (specifically, the three-dimensional position data WSD generated from the image data IMG_3D)without using the image data IMG_2D, the movement control unit 314b may set the movement aspect of the imaging system 2 by using both the image data IMG_2D and the image data IMG_3D (specifically, the three-dimensional position data WSD generated from the image data IMG_3D) at the step S63b in FIG. 15.

Moreover, in a case where perform position pose computing at the step S3 in FIG. 15 is performed by using both the image data IMG_2D and the image data IMG_3D (specifically, the three-dimensional position data WSD generated from the image data IMG_3D), the movement control unit 314b may set the movement aspect of the imaging system 2 by using at least one of the image data IMG_2D and the image data IMG_3D (alternatively, the three-dimensional position data WSD) at the step S63b in FIG. 15.

Alternatively, the movement control unit 314b may set the movement aspect of the imaging system 2 without acquiring the image data IMG_2D and IMG_3D (alternatively, the three-dimensional position data WSD generated from the image data IMG_3D) at the step S62b in FIG. 15. For example, even in a case where it is determined that the result of the position pose computing is defect (namely, the computing result condition is not satisfied) because the accuracy of at least one of the position and the pose of the target object OBJ calculated by the position pose calculation unit 312 is lower than the predetermined accuracy threshold value, the fact remains that at least one of the position and the pose of the target object OBJ has been calculated. In this case, the position pose calculation unit 312 may set the movement aspect of the imaging system 2 based on at least one of the position and the pose of target object OBJ calculated as the result of the position pose computing (namely, at least one of the position and the pose of OBJ whose accuracy may be low).

### (4-3) Third Modified Example

Next, the robot system SYS in a third modified example will be described. Note that the robot system SYS in the third modified example is referred to as a "robot system SYSc" in the below-described description.

### (4-3-1) Configuration of Robot System SYSc in Third Modified Example

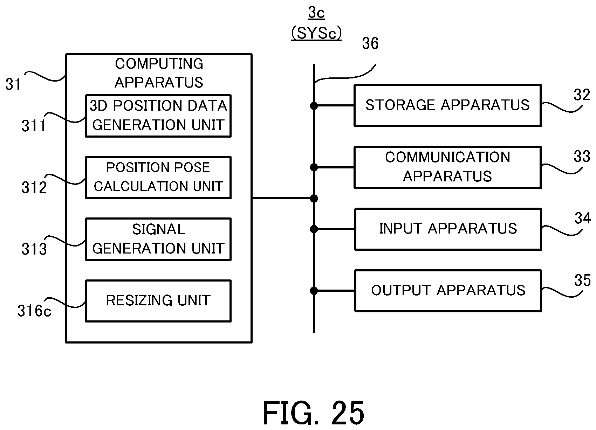

The robot system SYSc in the third modified example is different from the above-described robot system SYS in that it includes a control apparatus 3c instead of the control apparatus 3. Other feature of the robot system SYSc may be the same as other feature of the robot system SYS. Therefore, in the below-described description, the control apparatus 3c in the third modified example will be described with reference to FIG. 25. FIG. 25 is a block diagram that illustrates a configuration of the control apparatus 3c in the third modified example.

As illustrated in FIG. 25, the control apparatus 3c in the third modified example is different from the above-described control apparatus 3 in that the computing apparatus 31 includes a resizing unit 316c. Other feature of the control apparatus 3c may be the same as other feature of the control apparatus 3.

The resizing unit 316c performs a resizing processing on at least one of the image data IMG_2D and IMG_3D. The resizing processing is a processing for reducing a data size of at least one of the image data IMG_2D and IMG_3D.

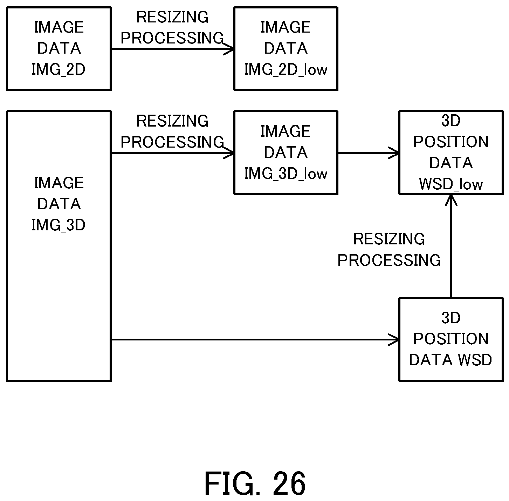

For example, as illustrated in FIG. 26, the resizing unit 316c may generate image data IMG_2D_low, whose data size is smaller than that of the image data IMG_2D, by performing the resizing processing on the image data IMG_2D. As one example, the resizing unit 316c may generate, as the image data IMG_2D_low, image data obtained by decreasing (namely, deleting or reducing) the pixels of the image indicated by the image data IMG_2D. For example, the resizing unit 316c may generate, as the image data IMG_2D_low, image data indicating an image including a pixel whose pixel value is an average of pixel values (for example, brightness values) of at least two adjacent pixels of the image indicated by the image data IMG_2D. Namely, the resizing unit 316c may generate, as the image data IMG_2D_low, image data indicating an image obtained by performing a convolution processing on the pixels of the image indicated by the image data IMG_2D. As another example, the resizing unit 316c may generate, as the image data IMG_2D_low, image data indicating an image obtained by performing a binning processing on the image indicated by the image data IMG_2D.

For example, as illustrated in FIG. 26, the resizing unit 316c may generate image data IMG_3D_low, whose data size is smaller than that of the image data IMG_3D, by performing the resizing processing on the image data IMG_3D. As one example, the resizing unit 316c may generate, as the image data IMG_3D_low, image data obtained by decreasing (namely, deleting or reducing) the pixels of the image indicated by the image data IMG_3D. For example, the resizing unit 316c may generate, as the image data IMG_3D_low, image data indicating an image including a pixel whose pixel value is an average of pixel values (for example, brightness values) of at least two adjacent pixels of the image indicated by the image data IMG_3D. Namely, the resizing unit 316c may generate, as the image data IMG_3D_low, image data indicating an image obtained by performing a convolution processing on the pixels of the image indicated by the image data IMG_3D. As another example, the resizing unit 316c may generate, as the image data IMG_3D_low, image data indicating an image obtained by performing a binning processing on the image indicated by the image data IMG_3D.

The target object OBJ captured in the image indicated by the image data IMG_2D_low is typically the same as the target object OBJ captured in the image indicated by the image data IMG_2D. Similarly, the target object OBJ captured in the image indicated by the image data IMG_3D_low is typically the same as the target object OBJ captured in the image indicated by the image data IMG_3D.

In a case where the resizing unit 316c generates the image data IMG_3D_low, the three-dimensional position data generation unit 311 may generate three-dimensional position data WSD_low based on the image data IMG_3D_low instead of generating the three-dimensional position data WSD based on the image data IMG_3D, as illustrated in FIG. 26.

The three-dimensional position data WSD_low is different from the three-dimensional position data WSD, which indicates the three-dimensional position of the target object OBJ captured in the image indicated by the image data IMG_3D, in that it indicates the three-dimensional position of the target object OBJ captured in the image indicated by the image data IMG_3D_low. Here, as described above, the target object OBJ captured in the image indicated by the image data IMG_3D_low is typically the same as the target object OBJ captured in the image indicated by the image data IMG_3D. Therefore, the three-dimensional position data WSD_low indicates the three-dimensional position of the target object OBJ whose three-dimensional position is indicated by the three-dimensional position data WSD. Namely, the three-dimensional position data WSD_low and the three-dimensional position data WSD indicate the three-dimensional position of the same target object OBJ.

A data size of the three-dimensional position data WSD_low is smaller than a data size of the three-dimensional position data WSD. For example, in a case where each of the three-dimensional position data WSD and WSD_low is the point cloud data, the number of points included in the point cloud (for example, the density of the point cloud) indicated by the three-dimensional position data WSD_low is smaller than the number of points included in the point cloud indicated by the three-dimensional position data WSD. For example, in a case where each of the three-dimensional position data WSD and WSD_low is the depth image data, the number of pixels in the image indicated by the three-dimensional position data WSD_low is smaller than the number of pixels in the image indicated by the three-dimensional position data WSD. Other feature of the three-dimensional position data WSD_low may be the same as other feature of the three-dimensional position data WSD.

The three-dimensional position data WSD_low may be considered to be equivalent to data obtained by performing, on the three-dimensional position data WSD a resizing processing for reducing the data size of the three-dimensional position data WSD. Therefore, the resizing unit 316c may generate the three-dimensional position data WSD_low by performing the resizing processing on the three-dimensional position data WSD, in addition to or instead of generating the image data IMG_3D_low by performing the resizing processing on the image data IMG_3D.

As one example, the resizing unit 316c may generate the three-dimensional position data WSD_low, which is the point cloud data whose data size is reduced, by performing the resizing processing on the three-dimensional position data WSD, which is the point cloud data. For example, the resizing unit 316c may generate, as the three-dimensional position data WSD_low, point cloud data obtained by decreasing (namely, deleting or reducing) the number of points included in the point cloud indicated by the three-dimensional position data WSD.

As another example, the resizing unit 316c may generate the three-dimensional position data WSD_low, which is the depth image data whose data size is reduced, by performing the resizing processing on the three-dimensional position data WSD, which is the depth image data. For example, the resizing unit 316c may generate, as the three-dimensional position data WSD_low, depth image data obtained by decreasing (namely, deleting or reducing) the number of pixels of the depth image indicated by the three-dimensional position data WSD. For example, the resizing unit 316c may generate, as the three-dimensional position data WSD_low, depth image data indicating a depth image including a pixel whose pixel value is an average of pixel values (for example, brightness values) of at least two adjacent pixels of the depth image indicated by the three-dimensional position data WSD. Namely, the resizing unit 316c may generate, as the three-dimensional position data WSD_low, depth image data indicating a depth image obtained by performing a convolution processing on the pixels of the depth image indicated by the three-dimensional position data WSD. As another example, the resizing unit 316c may generate, as the three-dimensional position data WSD_low, depth image data indicating a depth image obtained by performing a binning processing on the depth image indicated by the three-dimensional position data WSD.

Note that the point cloud data, which is usable as the three-dimensional position data WSD, is typically generated from intermediate data that is the depth image data, which is usable as the three-dimensional position data WSD. In this case, the resizing unit 316c may perform the resizing processing on the depth image data, which is the intermediate data for generating the point cloud data that is the three-dimensional position data WSD, and generate the three-dimensional position data WSD_low, which is the point cloud data and whose data size is reduced, based on the depth image data on which the resizing processing has been performed, in addition to or instead of generating the three-dimensional position data WSD_low by performing the resizing processing on the three-dimensional position data WSD that is the point cloud data that.

Alternatively, in addition to or instead of the resizing unit 316c performing the resizing processing on the image data IMG_2D, the imaging apparatus 21 may generate both the image data IMG_2D and IMG_2D_low. Similarly, in addition to or instead of the resizing unit 316c performing the resizing processing on the image data IMG_3D or performing the resizing processing on the three-dimensional position data WSD, the imaging apparatus 22 may generate both the image data IMG_3D and IMG_3D_low. In this case, the three-dimensional position data generation unit 311 may generate the three-dimensional position data WSD based on the image data IMG_3D generated by the imaging apparatus 22. The three-dimensional position data generation unit 311 may generate the three-dimensional position data WSD_low based on the image data IMG_3D_low generated by the imaging apparatus 22.

In the third modified example, the position pose calculation unit 312 first generates provisional position pose data POI indicating at least one of the position and the pose of the target object OBJ based on at least one of the image data IMG_2D_low and the three-dimensional position data WSD_low at the step S3 in FIG. 4. Note that the provisional position pose data POI generated based on at least one of the image data IMG_2D_low and the three-dimensional position data WSD_low is referred to as "position pose data POI_low" in the below-described description. Then, the position pose calculation unit 312 generates definitive position pose data POI, which is used to generate the robot control signals, based on the provisional position pose data POI_low and at least one of the image data IMG_2D and the three-dimensional position data WSD.

### (4-3-2) Flow of Robot Control Processing in Third Modified Example

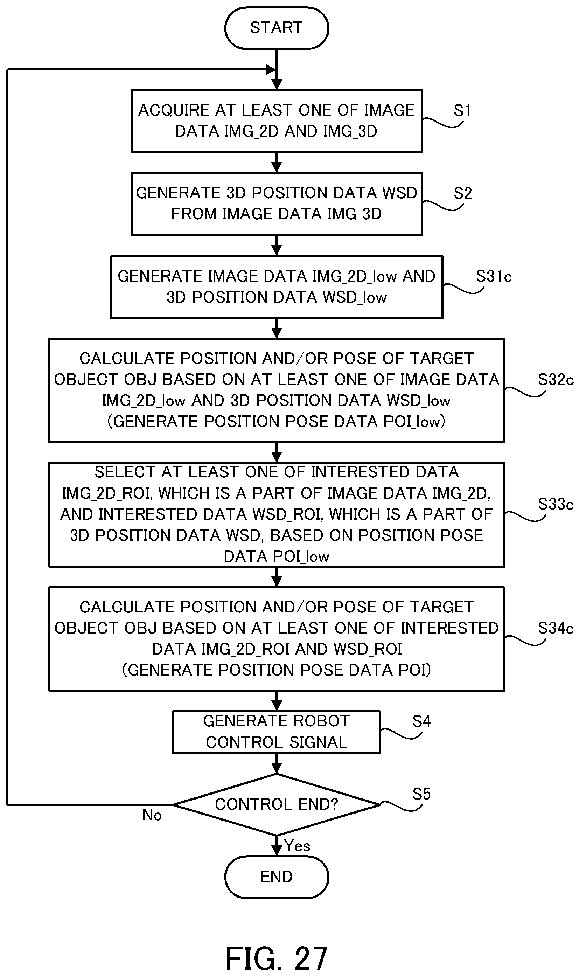

Next, with reference to FIG. 27, the robot control processing performed by the control apparatus 3c in the third modified example will be described. FIG. 27 is a flowchart that illustrates a flow of the robot control processing performed by the control apparatus 3c in the third modified example.

As illustrated in FIG. 27, even in the third modified example, the control apparatus 3c acquires at least one of the image data IMG_2D and IMG_3D from the imaging system 2 by using the communication apparatus 33 (the step S1). Note that the object that is different from the target object OBJ may be captured or may not be captured in at least one of the image data IMG_2D and IMG_3D. Furthermore, the three-dimensional position data generation unit 311 of the control apparatus 3b generates the three-dimensional position data WSD based on the acquired image data IMG_3D each time the control apparatus 3 acquires the image data IMG_3D (the step S2).

In parallel with, before or after the processing from the step S1 to the step S2, the control apparatus 3c generates at least one of the image data IGM_2D_low and the three-dimensional position data WSD_low (a step S31c). Note that the control apparatus 3c may acquire the image data IMG_2D_low from the imaging apparatus 21, in addition to or instead of generating the image data IMG_2D_low, as described above (the step S31c). Note that the method for generating the image data IMG_2D_low and the three-dimensional position data WSD_low have already been described, and therefore, a detailed description thereof is omitted.

Then, the position pose calculation unit 312 generates the position pose data POI_low indicating the position and the pose of the target object OBJ based on at least one of the image data IMG_2D_low and the three-dimensional position data WSD_low (a step S32c). Note that the processing for generating the provisional position pose data POI_low based on at least one of the image data IMG_2D_low and the three-dimensional position data WSD_low (namely, the position pose computing performed based on at least one of the image data IMG_2D_low and the three-dimensional position data WSD_low) may be referred to as a rough search as necessary in the below-described description.

At the step S32c in FIG. 27, the position pose calculation unit 312 may generate the position pose data POI_low by performing the matching processing using at least one of the image data IMG_2D_low and the three-dimensional position data WSD_low. For example, the position pose calculation unit 312 may generate the position pose data POI_low by performing the matching processing (the 2D matching processing) using the image data IMG_2D_low. For example, the position pose calculation unit 312 may generate the position pose data POI_low by performing the matching processing (the 3D matching processing) using the three-dimensional position data WSD_low. For example, the position pose calculation unit 312 may generate the position pose data POI_low by performing the matching processing using both the image data IMG_2D_low and the three-dimensional position data WSD_low.

Note that the 2D matching processing itself using the image data IMG_2D_low may be the same as the 2D matching processing itself using the image data IMG_2D described above. Therefore, a detailed description of the 2D matching processing using the image data IMG_2D_low is omitted. Similarly, the 3D matching processing itself using the three-dimensional position data WSD_low may be the same as the 3D matching processing itself using the three-dimensional position data WSD described above. Therefore, a detailed description of the 3D matching processing using the three-dimensional position data WSD_low is omitted. Similarly, the matching processing itself using both the image data IMG_2D_low and the three-dimensional position data WSD_low may be the same as the matching processing itself using both the image data IMG_2D and the three-dimensional position data WSD described above. Therefore, a detailed description of the matching processing using both the image data IMG_2D_low and the three-dimensional position data WSD_low is omitted.

At the step S32c, the position pose calculation unit 312 may generate the position pose data POI_low of the target object OBJ whose matching similarity is higher than the predetermined matching determination threshold value in a case where the matching similarity calculated by the rough search is higher than the predetermined matching determination threshold value (namely, in a case where the result of the position pose computing is good). On the other hand, in a case where the matching similarity calculated by the rough search is lower than the predetermined matching determination threshold value (namely, in a case where the result of the position pose computing is defect), the position pose calculation unit 312 may not generate the position pose data POI_low of the target object OBJ whose matching similarity is lower than the predetermined matching determination threshold value. In this case, the processing for moving the imaging system 2 (the step S62b to the step S64b in FIG. 15) may be performed as described in the second modified example.

Then, the position pose calculation unit 312 selects a part of the three-dimensional position data WSD as interested data WSD_ROI based on the position pose data POI_low generated at the step S32c (a step S33c).

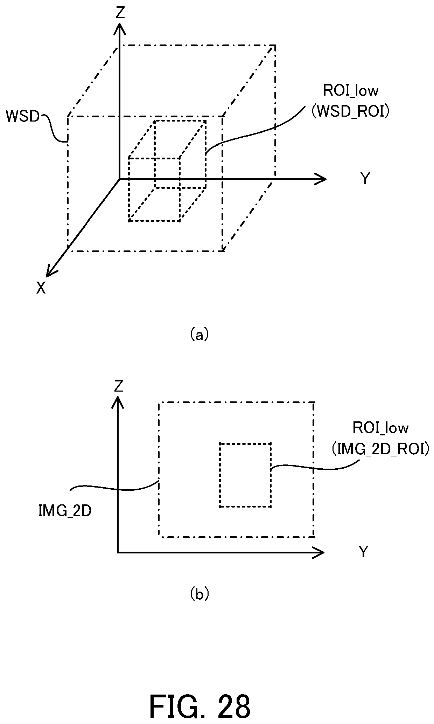

Specifically, the position pose data POI_low indicates at least one of the position and the pose of the target object OBJ actually detected by the rough search at the step S32c. Therefore, it can be said that the position pose data POI_low indicates an area in which at least a part of the target object OBJ exists (it is referred to as an interested area ROI_low in the below-described description). In this case, the position pose calculation unit 312 may set the interested area ROI_low based on the position pose data POI_low, and select partial data part, which corresponds to the interested area ROI_low, from the three-dimensional position data WSD as the interested data WSD_ROI, as illustrated in FIG. 28(a). Namely, the position pose calculation unit 312 may select the partial data part indicating a partial point cloud, which is included in the interested area ROI_low, of the point could indicated by the three-dimensional position data WSD from the three-dimensional position data WSD as the interested data WSD_ROI. Since at least a part of the target object OBJ exists in the interested area ROI_low as described above, the position pose calculation unit 312 may select partial data part, which indicates the three-dimensional position of at least a part of the plurality of points of the target object OBJ included in the interested area ROI_low, from the three-dimensional position data WSD as the interested data WSD_ROI. The position pose calculation unit 312 may select data including the partial data part indicating a partial point cloud, which indicates the three-dimensional position of at least a part of the plurality of points of the target object OBJ included in the interested area ROI_low, of the point could indicated by the three-dimensional position data WSD from the three-dimensional position data WSD as the interested data WSD_ROI. Note that the interested data WSD_ROI may be referred to as selection data.

Alternatively, at the step S33c, the position pose calculation unit 312 may select a part of the image data IMG_2D as interested data IMG_2D_ROI, in addition to or instead of selecting the interested data WSD_ROI. Specifically, the position pose calculation unit 312 may select partial data part, which corresponds to the interested area ROI_low, from the image data IMG_2D as the interested data IMG_2D_ROI, as illustrated in FIG. 28(b). Since at least a part of the target object OBJ exists in the interested area ROI_low as described above, the position pose calculation unit 312 may select data including part data part, which indicates an image of at least a part of the target object OBJ included in the interested area ROI_low, from the image data IMG_2D as the interested data IMG_2D_ROI. Note that the interested data IMG_2D_ROI may be referred to as selection data.

Then, the position pose calculation unit 312 generates the position pose data POI (the definitive position pose data POI) indicating at least one of the position and the pose of the target object OBJ based on at least one of the interested data IMG_2D_ROI and the interested data WSD_ROI (a step S34c). Note that the processing for generating the position pose data POI based on at least one of the interested data IMG_2D_ROI and the interested data WSD_ROI (namely, the position pose computing performed based on at least one of the interested data IMG_2D_ROI and the interested data WSD_ROI) may be referred to as a fine search as necessary in the below-described description.

At the step S34c in FIG. 27, the position pose calculation unit 312 may generate the position pose data POI by performing the matching processing using at least one of the interested data IMG_2D_ROI and the interested data WSD_ROI. For example, the position pose calculation unit 312 may generate the position pose data POI by performing the matching processing (the 2D matching processing) using the interested data IMG_2D_ROI. For example, the position pose calculation unit 312 may generate the position pose data POI by performing the matching processing (the 3D matching processing) using the interested data WSD_ROI. For example, the position pose calculation unit 312 may generate the position pose data POI by performing the matching processing using both the interested data IMG_2D_ROI and the interested data WSD_ROI.

Note that the 2D matching processing itself using the interested data IMG_2D_ROI may be the same as the 2D matching processing itself using the image data IMG_2D described above. Therefore, a detailed description of the 2D matching processing using the interested data IMG_2D_ROI is omitted. Similarly, the 3D matching processing itself using the interested data WSD_ROI may be the same as the 3D matching processing itself using the three-dimensional position data WSD described above. Therefore, a detailed description of the 3D matching processing using the interested data WSD_ROI is omitted. Similarly, the matching processing itself using both the interested data IMG_2D_ROI and the interested data WSD_ROI may be the same as the matching processing itself using both the image data IMG_2D and the three-dimensional position data WSD described above. Therefore, a detailed description of the matching processing using both the interested data IMG_2D_ROI and the interested data WSD_ROI is omitted.

At the step S34c, the position pose calculation unit 312 may generate the position pose data POI of the target object OBJ whose matching similarity is higher than the predetermined matching determination threshold value in a case where the matching similarity calculated by the fine search is higher than the predetermined matching determination threshold value (namely, in a case where the result of the position pose computing is good). On the other hand, in a case where the matching similarity calculated by the fine search is lower than the predetermined matching determination threshold value (namely, in a case where the result of the position pose computing is defect), the position pose calculation unit 312 may not generate the position pose data POI of the target object OBJ whose matching similarity is lower than the predetermined matching determination threshold value. In this case, the processing for moving the imaging system 2 (the step S62b to the step S64b in FIG. 15) may be performed as described in the second modified example. However, the fine search is performed in a case where the target object OBJ whose matching similarity is higher than the predetermined matching determination threshold value is detected by the rough search. Therefore, it is expected that the possibility of the matching similarity calculated by the fine search being smaller the predetermined matching determination threshold value is not high.

The target object OBJ may not move after the rough search is performed and before the fine search is performed. Namely, the target object OBJ may remain stationary after the rough search is performed and before the fine search is performed. In this case, the position indicated by the position pose data POI_low generated by the rough search may be the same as or may be different from the position indicated by the position pose data POI generated by the fine search. However, it is expected that the position pose data POI generated by the fine search indicates the position of the target object OBJ more accurately than the position pose data POI_low generated by the rough search. Similarly, the pose indicated by the position pose data POI_low generated by the rough search may be the same as or may be different from the pose indicated by the position pose data POI generated by the fine search. However, it is expected that the position pose data POI generated by the fine search indicates the pose of the target object OBJ more accurately than the position pose data POI_low generated by the rough search.

Alternatively, the target object OBJ may move after the rough search is performed and before the fine search is performed. For example, in a case where the target object OBJ is placed on the placing apparatus T that is configured to serve as the above-described transport apparatus, the target object OBJ may move. In this case, the position indicated by the position pose data POI_low generated by the rough search may be different from the position indicated by the position pose data POI generated by the fine search. The pose indicated by the position pose data POI_low generated by the rough search may be the same as or may be different from the pose indicated by the position pose data POI generated by the fine search.

The position pose calculation unit 312 may perform a data deletion processing for deleting other data part other than the interested data WSD_ROI from the three-dimensional position data WSD before starting the fine search. In this case, the data part of the three-dimensional position data WSD that has not been deleted by the data deletion processing may be used as the interested data WSD_ROI. Namely, the position pose calculation unit 312 may perform the data deletion processing for deleting other data part other than the interested data WSD_ROI from the three-dimensional position data WSD to select the data part corresponding to the interested area ROI_low in the three-dimensional position data WSD as the interested data WSD_ROI. However, the position pose calculation unit 312 may not perform the data deletion processing before starting the fine search. Even in this case, the partial data part corresponding to the interested area ROI_low in the three-dimensional position data WSD is still used as the interested data WSD_ROI. Namely, it may be considered that there is no substantial difference between the interested data WSD_ROI used for the fine search in a case where the data deletion processing is performed and the interested data WSD_ROI used for the fine search in a case where the data deletion processing is not performed. In other words, it may be considered that there is no substantial difference between the fine search that generates the position pose data POI by using the interested data WSD_ROI selected by performing the data deletion processing and fine search that generates the position pose data POI by using the selected interested data WSD_ROI selected without performing the data deletion processing.

The position pose calculation unit 312 may perform a data deletion processing for deleting other data part other than the interested data IMG_2D_ROI from the image data IMG_2D before starting the fine search. In this case, the data part of the image data IMG_2D that has not been deleted by the data deletion processing may be used as the interested data IMG_2D_ROI. Namely, the position pose calculation unit 312 may perform the data deletion processing for deleting other data part other than the interested data IMG_2D_ROI from the image data IMG_2D to select the data part corresponding to the interested area ROI_low in the image data IMG_2D as the interested data IMG_2D_ROI. However, the position pose calculation unit 312 may not perform the data deletion processing before starting the fine search. Even in this case, the partial data part corresponding to the interested area ROI_low in the image data IMG_2D is still used as the interested data IMG_2D_ROI. Namely, it may be considered that there is no substantial difference between the interested data IMG_2D_ROI used for the fine search in a case where the data deletion processing is performed and the interested data IMG_2D_ROI used for the fine search in a case where the data deletion processing is not performed. In other words, it may be considered that there is no substantial difference between the fine search that generates the position pose data POI by using the interested data IMG_2D_ROI selected by performing the data deletion processing and fine search that generates the position pose data POI by using the selected interested data IMG_2D_ROI selected without performing the data deletion processing.

As described above, in the third modified example, the position pose calculation unit 312 generates the position pose data POI indicating the position and the pose of the target object OBJ in the global coordinate system by performing the rough search for generating the provisional position pose data POI_low and them performing the fine search for generating the definitive position pose data POI. Especially, during the fine search, the position pose calculation unit 312 generates the position pose data POI by using at least one of the interested data IMG_2D_ROI and the interested data WSD_ROI, instead of the image data IMG_2D and the three-dimensional position data WSD. Here, the accuracy of the provisional position pose data POI_low, which is generated by using at least one of the image data IMG_2D_low and the three-dimensional position data WSD_low on which the resizing processing has been performed, is lower than the accuracy of the definitive position pose data POI, which is generated by using at least one of the interested data IMG_2D_ROI and the interested data WSD_ROI on which the resizing processing is not performed. However, even in a case, the provisional position pose data POI_low still indicates the position and the pose of the target object OBJ with adequate accuracy. Therefore, it is likely that the point cloud indicating the three-dimensional position of the target object OBJ is included in the interested data WSD_ROI selected based on the provisional position pose data POI_low. Similarly, it is likely that the image part indicating the target object OBJ is included in the interested data IMG_2D_ROI selected based on the provisional position pose data POI_low. On the other hand, it is unlikely that the point clouds indicating the three-dimensional position of an object different from the target object OBJ is included in the interested data WSD_ROI. More specifically, it is unlikely that the point clouds indicating the three-dimensional position of the object different from the target object OBJ is included in the interested data WSD_ROI, even in a case where the point clouds indicating the three-dimensional position of the object different from the target object OBJ is included in the three-dimensional position data WSD. Similarly, it is unlikely that the image part of an object different from the target object OBJ is included in the interested data IMG_2D_ROI. More specifically, it is unlikely that the image part of the object different from the target object OBJ is included in the interested data IMG_2D_ROI, even in a case where the image part of the object different from the target object OBJ is included in the image data IMG_2D. Therefore, it is unlikely that the position pose calculation unit 312 erroneously calculates the position and the pose of the object different from the target object OBJ as the position and the pose of the target object OBJ at the step S34c in FIG. 27. Therefore, the position pose calculation unit 312 can properly generate the position pose data POI that accurately indicates the position and the pose of the target object OBJ.

On the other hand, in the third modified example, the position pose calculation unit 312 performs both the fine search for generating the definitive position pose data POI (the step S34c in FIG. 27) and the rough search for generating the provisional position pose data POI_low (the step S32c in FIG. 27). In this case, there is a possibility that a time required to generate the definitive position pose data POI increases, because it is necessary to additional perform the rough search for generating the provisional position pose data POI_low. However, in the third modified example, the position pose calculation unit 312 first performs the rough search for generating the provisional position pose data POI_low by using at least one of the image data IMG_2D_low and the three-dimensional position data WSD_low whose data size is relatively small, instead of the image data IMG_2D and the three-dimensional position data WSD whose data size is relatively large. Therefore, the position pose calculation unit 312 can reduce the time required to generate the provisional position pose data POI_low, compared to a case where the provisional position pose data POI_low is generated by using at least one of the image data IMG_2D and the three-dimensional position data WSD whose data size is relatively large. Namely, the position pose calculation unit 312 can reduce the time required to perform the rough search. Furthermore, in the third modified example, the position pose calculation unit 312 generates the definitive position pose data POI by using at least one of the interested data IMG_2D_ROI and the interested data WSD_ROI whose data size is relatively small, instead of the image data IMG_2D and the three-dimensional position data WSD whose data size is relatively large. Therefore, the position pose calculation unit 312 can reduce the time required to generate the definitive position pose data POI, compared to a case where the definitive position pose data POI is generated by using at least one of the image data IMG_2D and the three-dimensional position data WSD whose data size is relatively large. Namely, the position pose calculation unit 312 can reduce the time required to perform the fine search. Therefore, the position pose calculation unit 312 can perform both the rough search and the fine search while reducing the time required to generate the definitive position pose data POI.

Note that the control apparatus 3c may perform the rough search and the fine search without performing the resizing processing. Namely, the control apparatus 3c may performs the rough search for generating the provisional position pose data POI by using at least one of the image data IMG_2D and the three-dimensional position data WSD, then select at least one of the interested data IMG_2D_ROI and WSD_ROI based on the provisional position pose data POI, and then perform the fine search for generating the definitive position pose data POI based on at least one of the interested data IMG_2D_ROI and WSD_ROI. In this case, the control apparatus 3c can generate the definitive position pose data POI indicating at least one of the position and the pose of the target object OBJ with higher accuracy, compared to a case where the rough search and the fine search are performed with the resizing processing. However, in a case where the rough search and the fine search are performed without performing the resizing processing, the time required to generate the definitive position pose data POI is significantly longer, compared to a case where the rough search and the fine search are performed with the resizing processing. Therefore, the control apparatus 3c can generate the definitive position pose data POI indicating at least one of the position and the pose of the target object OBJ with high accuracy while reducing the time required to generate the definitive position pose data POI by performing the rough search and fine search with the resizing processing.

### (4-3-3) Specific Example of Robot Control Processing in Third Modified Example Performed in a case where Imaging System 2 Images Plurality of Target Objects OBJ

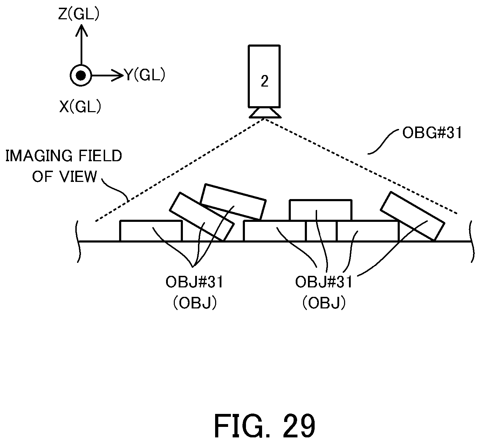

In order to generate at least one of the image data IMG_2D and IMG_3D acquired by the control apparatus 3c at the step S1 in FIG. 27, there is a possibility that the imaging system 2 images the plurality of target objects OBJ. For example, as illustrated in FIG. 29, there is a possibility that the imaging system 2 images a target object group OBG#31 that includes a plurality of target objects OBJ#31 each of which is the target object OBJ. Note that the imaging system 2 may image or may not image an object that is different from the target object OBJ in addition to the plurality of target objects OBJ#31 as described above.

In this case, the imaging system 2 generates at least one of the image data IMG_2D and IMG_3D, each of which indicates an image in which the plurality of target objects OBJ#31 are captured (in other words, the target object group OBG#31 is captured), as the imaged result of the plurality of target objects OBJ#31 (in other words, the imaged result of the target object group OBG#31). As a result, the three-dimensional position data WSD generated based on this image data IMG_3D indicates the three-dimensional positions of the plurality of points of each of the plurality of target objects OBJ#31. In other words, the three-dimensional position data WSD indicates the three-dimensional positions of the plurality of points of the target object group OBG#31. In other words, the three-dimensional position data WSD indicates the three-dimensional positions of the plurality of points in a space included in the imaging range of the imaging system 2.

In this case, the position pose calculation unit 312 may perform the rough search based on at least one of the image data IMG_2D_low and the three-dimensional position data WSD_low at to generate the position pose data POI_low of each of a plurality of target objects OBJ#32 (namely, a target object group OBG#32), which include at least two of the plurality of target objects OBJ#31, at the step S32c, as illustrated in FIG. 30 that is a flowchart illustrating a flow of the robot processing apparatus in the third modified example performed in a case where the imaging system 2 images the plurality of target objects OBJ#31. For example, as illustrated in FIG. 30, the position pose calculation unit 312 may generate position pose data POI_low_1 of a first target object OBJ#32_1 and position pose data POI_low_2 of second target object OBJ#32_2 that is different from the first target object OBJ#32_1.

At the step S32c, the position pose calculation unit 312 may perform the rough search including the above-described matching processing to detect (select), as the target object OBJ#32, the target object OBJ#31 satisfying the condition that the matching similarity is higher than the above-described matching determination threshold value, and generate the position pose data POI_low of the detected (selected) target object OBJ#32. In a case where the matching similarities of all of the plurality of target objects OBJ#31 imaged by the imaging system 2 are higher than the matching determination threshold value, all of the plurality of target objects OBJ#31 imaged by the imaging system 2 may be detected as target objects OBJ#32. On the other hand, in a case where the matching similarity of at least one of the plurality of target objects OBJ#31 imaged by the imaging system 2 is lower than the matching determination threshold value, at least one of the plurality of target objects OBJ#31 imaged by the imaging system 2 may not be detected as the target object OBJ#32. Therefore, the number of target objects OBJ#32 whose position pose data POI_low is calculated is typically equal to or less than the number of target objects OBJ#31 imaged by the imaging system 2.

Note that the position pose calculation unit 312 may determine that the result of the position pose computing (the rough search) is defect at the step S32c in a case where the number of target objects OBJ whose matching similarity is higher than the predetermined matching determination threshold value is smaller than a predetermined detection threshold value. Note that "the target object OBJ whose matching similarity calculated by the rough search is higher than the predetermined matching determination threshold value" may be regarded as the target object OBJ for which the result of the position pose computing (the rough search) is good. On the other hand, "the target object OBJ whose matching similarity calculated by the rough search is lower than the predetermined matching determination threshold value" may be regarded as the target object OBJ for which the result of the position pose computing (the rough search) is defect. The detection threshold value may be 1, 2, 3, 4, 5, or 6 or more. The detection threshold value may be automatically set by the control apparatus 3c or may be set by the user. In a case where it is determined that the result of the position pose computing (the rough search) is defect, the processing for moving the imaging system 2 (the step S62b to the step S64b in FIG. 15) may be performed as described in the second modified example.

Then, as illustrated in FIG. 30, the position pose calculation unit 312 performs the processing for selecting the interested data WSD_ROI based on the position pose data POI_low generated at the step S32c, in parallel or in sequence for the number of detected target objects OBJ#32 at the step S33c. For example, the position pose calculation unit 312 may select the interested data WSD_ROI based on the position pose data POI_low_1 of the target object OBJ#32_1, and select the interested data WSD_ROI based on the position pose data POI_low_2 of the target object OBJ#32_2. As a result, the position pose calculation unit 312 selects plurality of interested data WSD_ROI. For example, the position pose calculation unit 312 may select interested data WSD_ROI_1 indicating the three-dimensional position of the target object OBJ#32_1 and interested data WSD_ROI_2 indicating the three-dimensional position of the target object OBJ#32_2.

As illustrated in FIG. 30, the position pose calculation unit 312 may perform the processing for selecting the interested data IMG_2D_ROI based on the position pose data POI_low generated at the step S32c, in parallel or in sequence for the number of detected target objects OBJ#32, in addition to or instead of performing the processing for selecting the interested data WSD_ROI for the number of detected target objects OBJ#32, at the step S33c. For example, the position pose calculation unit 312 may select the interested data IMG_2D_ROI based on the position pose data POI_low_1 of the target object OBJ#32_1, and select the interested data IMG_2D_ROI based on the position pose data POI_low_2 of the target object OBJ#32_2. As a result, the position pose calculation unit 312 selects plurality of interested data IMG_2D_ROI. For example, the position pose calculation unit 312 may select the interested data IMG_2D_ROI_1 indicating the image of the target object OBJ#32 and the interested data IMG_2D_ROI_2 indicating the image of the target object OBJ#32_2.

Then, as illustrated in FIG. 30, the position pose calculation unit 312 performs, as a part of step S34c, the processing for calculating the matching similarity of the target object OBJ#32 based on at least one of the interested data IGM_2D_ROI and WSD_ROI, in parallel or in sequence for the number of detected target objects OBJ#32 (a step S341c). For example, the position pose calculation unit 312 may calculate the matching similarity of the target object OBJ#32_1 based on at least one of the interested data IMG_2D_ROI_1 and WSD_ROI_1, and calculate the matching similarity of target object OBJ#32_2 based on at least one of the interested data IMG_2D_ROI_2 and WSD_ROI_2.

Note that the position pose calculation unit 312 may calculate the plurality of matching similarities, which correspond to the plurality of target objects OBJ#32, respectively, and generate the plurality of position pose data POI, which correspond to the plurality of target objects OBJ#32, respectively, at the step S341c as described above. Alternatively, the position pose calculation unit 312 may calculate the plurality of matching similarities, which correspond to the plurality of target objects OBJ#32, respectively, without generating the plurality of position pose data POI, which correspond to the plurality of target objects OBJ#32, respectively, at the step S341c. Alternatively, the position pose calculation unit 312 may generate the plurality of position pose data POI, which correspond to the plurality of target objects OBJ#32, respectively, and then calculate the plurality of matching similarities, which correspond to the plurality of target objects OBJ#32, respectively, at the step S341c.

Then, the position pose calculation unit 312 selects, as the process performed object, one target object OBJ#32 whose matching similarity calculated at the step S341c satisfies a predetermined selection condition from among the plurality of target objects OBJ#32 detected at the step S32c, as a part of the step S34c (a step S342c). For example, the predetermined selection condition may include a condition that "the target object OBJ#32 whose matching similarity is maximum is selected as the process performed object". The predetermined selection condition may include a condition that "one target object OBJ#32 whose matching similarity is maximum is selected as the process performed object". The predetermined selection condition may include a condition that "one target object OBJ#32 whose matching similarity is the N-th (wherein, N is a constant value representing an integer that is equal to or larger than 2) highest is selected as the process performed object". The predetermined selection condition may include a condition that "one target object OBJ#32 whose matching similarity is higher than the matching determination threshold value and which is closest to the end effector 4 is selected as the process performed object". The predetermined selection condition may include a condition that "the target object OBJ#32 whose matching similarity is higher than the matching determination threshold value and whose Z coordinate along the Z-axis is the greatest (which is positioned at the highest position) is selected as the process performed object".

Then, the position pose calculation unit 312 generates the position pose data POI of the process performed object (namely, one target object OBJ#32) selected at the step S342c, as a part of step S34c (a step S343c). However, in a case where the position pose data POI of the target object OBJ#32 has already been generated in parallel with or prior to the calculation of the matching similarity as described above, the position pose calculation unit 312 may not generate the position pose data POI of the process performed object (namely, one target object OBJ#32) again.

In a case where the number of target objects OBJ whose matching similarity is higher than predetermined matching determination threshold value is smaller than the predetermined detection threshold value at the step S34c, the position pose calculation unit 312 may determine that the result of the position pose computing (the fine search) is defect. Note that "the target object OBJ whose matching similarity calculated by the fine search is higher than the predetermined matching determination threshold value" may be regarded as the target object OBJ for which the result of the position pose computing (the fine search) is good. On the other hand, "the target object OBJ whose matching similarity calculated by the fine search is lower than the predetermined matching determination threshold value" may be regarded as the target object OBJ for which the result of the position pose computing (the fine search) is defect. In a case where it is determined that the result of the position pose computing (the fine search) is defect, the process for moving the imaging system 2 (the step S62b to the step S64b in FIG. 15) may be performed as described in the second modified example. However, the fine search is performed in a case where the number of target objects OBJ detected by the rough search (namely, target objects OBJ whose matching similarity is higher than the predetermined matching determination threshold value) is equal to or larger than the detection threshold value. Therefore, it is expected that the possibility of the number of target objects OBJ whose matching similarity is higher than the predetermined matching determination threshold value is smaller than the predetermined detection threshold value in the fine search is not high.

Then, the signal generation unit 313 generates the robot control signal by using the position pose data POI generated at the step S343c (the step S4). Then, the control apparatus 3 repeats the series of processing from the step S1 to the step S4 until it is determined that the robot control processing is ended (the step S5).

Note that the signal generation unit 313 may generate the robot control signal for controlling the robot 1 so that the end effector 4 performs the predetermined process on a first target object OBJ, whose matching similarity is higher than the predetermined matching determination threshold value, in a case where the plurality of target objects OBJ whose matching similarity is higher than the predetermined matching determination threshold value are detected at the step S341c. Then, after the end effector 4 completes the predetermined process on the first target object OBJ, the control apparatus 3 may may generate the robot control signal for controlling the robot 1 so that the end effector 4 performs the predetermined process on a second target object OBJ, whose matching similarity is higher than the predetermined matching determination threshold value and which is different from the first target object OBJ, instead of repeating the processing from the step S1. Then, the control apparatus 3c may repeat the same operation for the number of target object OBJ whose matching similarity is determined to be higher than the predetermined matching determination threshold value. In this case, the control apparatus 3c may not repeat the processing from the step S1 to the step S34c each time the end effector 4 completes the predetermined process on one target object OBJ. Therefore, an improvement in throughput is expected.

However, the control apparatus 3c may perform the processing from the step S1 again after the end effector 4 completes the predetermined process for the first target object OBJ in a situation where the plurality of target objects OBJ whose matching similarity is higher than the predetermined matching determination threshold value are detected at the step S341c. In this case, the control apparatus 3c may perform the processing from the step S1 again after returning at least one of the position and the pose of the end effector 4 to at least one of the position and the pose of the end effector 4 which is one before the end effector 4 performs the predetermined process on the first target object OBJ. Even in this case, there is a possibility that the remaining target object OBJ moves when the end effector 4 performs the predetermined process (for example, holds) on the first target object OBJ, and therefore, it is likely that the control apparatus 3c can properly generate the position pose data POI of the remaining target objects OBJ. Alternatively, the control apparatus 3c may perform the processing from the step S1 again after returning at least one of the position and the pose of the end effector 4 to at least one of other position and other pose that is different from at least one of the position and the pose which is one before the end effector 4 performs the predetermined process on the first target object OBJ. In this case, it is likely that the control apparatus 3c can properly generate the position pose data POI of other new target object OBJ in a situation where the end effector 4 has performed the predetermined process on all of the target object(s) OBJ detectable at the position and the pose which is one before the end effector 4 performs the predetermined process on the first target object OBJ.

### (4-3-4) Usage of Patial Model TM3_P

Even in the third modified example, the position pose calculation unit 312 may perform the 3D matching processing using the partial model TM3_P described in the first modified example, in addition to or instead of the template model TM3 (namely, the whole model TM3_W), to generate the position pose data POI. Namely, the position pose calculation unit 312 may perform at least one of the 3D matching processing using the whole model TM3_W and the 3D matching processing using the partial model TM3_P to generate the position pose data POI.

The position pose calculation unit 312 can generate the position pose data POI that indicates at least one of the position and the pose of the target object OBJ with corresponding accuracy, regardless of the pose of the target object OBJ, by performing the 3D matching processing using the whole model TM3_W. On the other hand, the position pose calculation unit 312 can generate the position pose data POI that indicates at least one of the position and the pose of the target object OBJ with high accuracy in a case where the pose of the target object OBJ is a specific pose (as a result, the target object OBJ captured in a specific manner in the image indicated by the image data IMG_3D) by performing the 3D matching processing using the partial model TM3_P. Alternatively, the position pose calculation unit 312 can generate the position pose data POI that indicates at least one of the position and the pose of the target object OBJ with high accuracy in a case where the three-dimensional position data WSD including the point cloud indicating only a part of the target object OBJ is generated due to the target object OBJ taking the specific pose, by performing the 3D matching processing using the partial model TM3_P.

Note that the position pose calculation unit 312 may perform the 2D matching processing using a part of the template image even in a case where the 2D matching processing is performed to generate the position pose data POI. Namely, the position pose calculation unit 312 may perform at least one of the 2D matching processing using the whole of the template image (the whole model) and the 2D matching processing using a part of the template image (the partial model) to generate the position pose data POI. A technical effect is the same as that in a case where the 3D matching processing is performed. Note that an example in which the position pose calculation unit 312 performs the 3D matching processing using the partial model TM3_P will be described for the simplicity of description in the below-described description.

The position pose calculation unit 312 may perform at least one of the 3D matching processing using the whole model TM3_W and the 3D matching processing using the partial model TM3_P to generate the position pose data POI (namely, the provisional position pose data POI_low) at the step S32c in FIG. 27. Namely, the position pose calculation unit 312 may perform at least one of the 3D matching processing using the whole model TM3_W and the 3D matching processing using the partial model TM3_P to perform the rough search.

The position pose calculation unit 312 may perform at least one of the 3D matching processing using the whole model TM3_W and the 3D matching processing using the partial model TM3_P to generate the position pose data POI (namely, the definitive position pose data POI_low) at the step S34c in FIG. 27. Namely, the position pose calculation unit 312 may perform at least one of the 3D matching processing using the whole model TM3_W and the 3D matching processing using the partial model TM3_P to perform the fine search.

### (4-3-5) Usage of Plurality of Template Models TM0 to which Priority is assigned

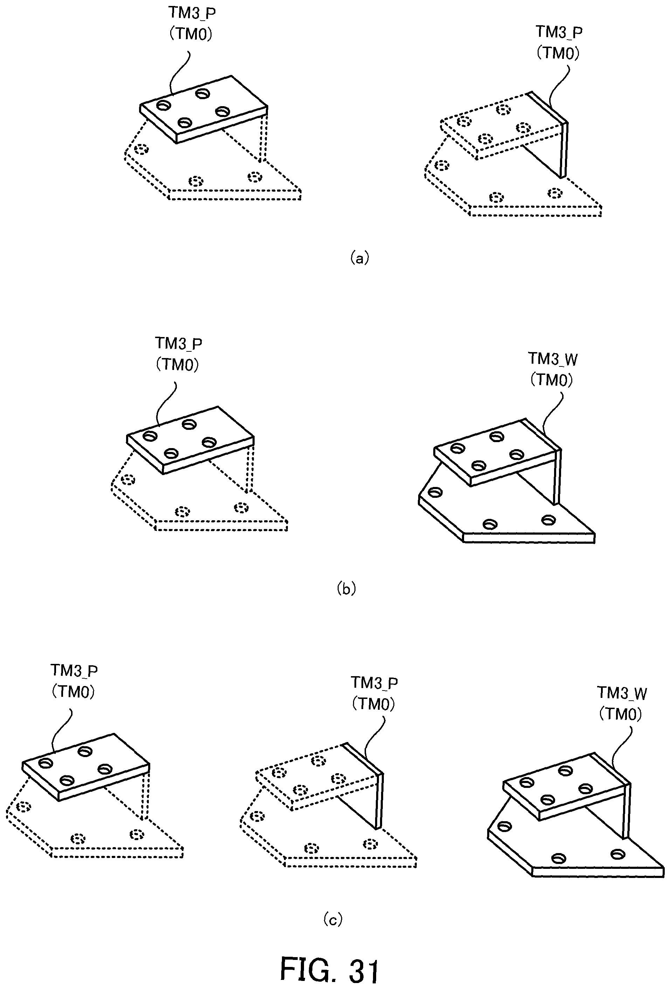

In the third modified example, the position pose calculation unit 312 may perform the 3D matching processing using a plurality of template models TM0, which include a plurality of partial models TM3_P as illustrated in FIG. 31(a), to generate the position pose data POI. The plurality of partial models TM3_P may be a plurality of model parts each of which corresponds to a part of the whole model TM3_W and which are different from each other at least partially. For example, the position pose calculation unit 312 may perform the 3D matching processing using a first partial model TM3_P indicating a first model part of the whole model TM3_W, and may perform the 3D matching processing using a second partial model TM3_P indicating a second model part of the whole model TM3_W that is different from the first model part at least partially, to generate the position pose data POI.

The position pose calculation unit 312 may perform the 3D matching processing using a plurality of template models TM0, which include one partial model TM3_P and one whole model TM3_W as illustrated in FIG. 31(b), to generate the position pose data POI. For example, the position pose calculation unit 312 may perform the 3D matching processing using the whole model TM3_W, and may perform the 3D matching processing using the partial model TM3_P, which is a part of the whole model TM3_W, to generate the position pose data POI.

The position pose calculation unit 312 may perform the 3D matching processing using a plurality of template models TM0, which include a plurality of partial models TM3_P and one whole model TM3_W as illustrated in FIG. 31(c), to generate the position pose data POI. For example, the position pose calculation unit 312 may perform the 3D matching processing using the whole model TM3_W, may perform the 3D matching processing using a first partial model TM3_P indicating a first model part of the whole model TM3_W, and may perform the 3D matching processing using a second partial model TM3_P indicating a second model part of the whole model TM3_W that is different from the first model part at least partially, to generate the position pose data POI.

Note that the position pose calculation unit 312 may perform the 2D matching processing using a plurality of template models including a plurality of partial models, which are a plurality of image parts each of which corresponds to a part of the template image and which are different from each other at least partially, even in a case where the 2D matching processing is performed to generate the position pose data POI. The position pose calculation unit 312 may perform the 2D matching processing using a plurality of template models including one whole model corresponding to the whole of the template image and one partial model corresponding to a part of the template image, even in a case where the 2D matching processing is performed to generate the position pose data POI. The position pose calculation unit 312 may perform the 2D matching processing using a plurality of template models including one whole model corresponding to the whole of the template image and a plurality of partial models each corresponding to a part of the template image, even in a case where the 2D matching processing is performed to generate the position pose data POI. Note that an example in which the position pose calculation unit 312 performs the 3D matching processing using the plurality of template models TM0 will be described for the simplicity of description in the below-described description.

The position pose calculation unit 312 may perform the 3D matching processing using the plurality of template models TM0 to generate the position pose data POI (namely, the provisional position pose data POI_low) at the step S32c in FIG. 27 or the step S32c in FIG. 30. Namely, the position pose calculation unit 312 may perform the 3D matching processing using the plurality of template models TM0 to perform the rough search.

The position pose calculation unit 312 may perform the 3D matching processing using the plurality of template models TM0 to generate the position pose data POI (namely, the definitive position pose data POI_low) at the step S34c in FIG. 27 or the step S34c in FIG. 30. Namely, the position pose calculation unit 312 may perform the 3D matching processing using the plurality of template models TM0 to perform the fine search.

Priorities may be assigned to the plurality of template models TM0. The priority indicates a priority of the template model TM0 used to generate the position pose data POI. The position pose calculation unit 312 may perform at least one of the rough search and the fine search by preferentially using the template model TM0 having the higher priority. In this case, the priority may be considered to indicate a priority of the template model TM0 used to generate the position pose data POI by at least one of the rough search and the fine search. Namely, the priority may be considered to indicate a priority of the template model TM0 used for at least one of the rough search and the fine search.

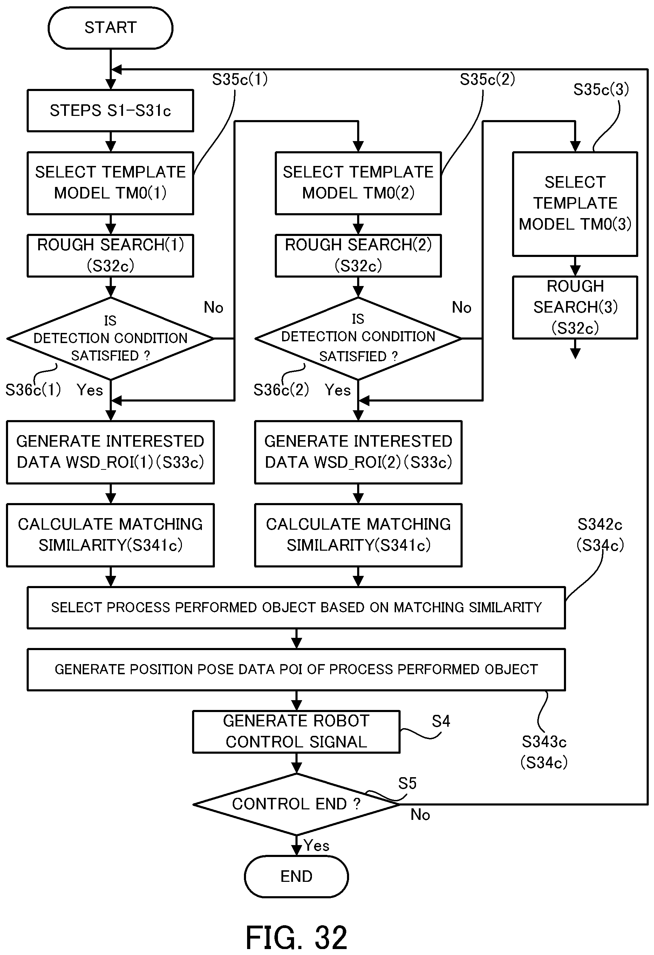

Next, with reference to FIG. 32, a flow of the robot control processing using the plurality of template models TM0 to which the priorities are assigned will be described. FIG. 32 is a flowchart that illustrates the flow of the robot control processing using the plurality of template models TM0 to which the priorities are assigned.

Note that the flow of the robot control processing performed by using the plurality of template models TM0 in a case where the imaging system 2 images the plurality of target objects OBJ (specifically, the plurality of target objects OBJ#31 illustrated in FIG. 29) will be described in the below-described description. However, the robot control processing using the plurality of template models TM0 may be performed even in a case where the imaging system 2 images a single target object OBJ.

As illustrated in FIG. 32, the control apparatus 3c acquires the image data IMG_3D (the step S1), generates the three-dimensional position data WSD (the step S2), and generates the three-dimensional position data WSD_low (the step S31c).

Then, the position pose calculation unit 312 selects the template model TM0 to which the highest priority is assigned from among the plurality of template models TM0 (a step S35c(1)). Note that the template model to which the i-th highest priority (wherein, i is a variable number representing an integer that is equal to or larger than 1) is referred to as a "template model TM0(i)" in the below-described description. Therefore, the position pose calculation unit 312 selects the template model TM0(1) at the step S35c(1).

Then, the position pose calculation unit 312 performs the rough search using the template model TM0(1) selected at the step S35c(1) (a step S32c). Note that the rough search using the template model TM0(i) is referred to as a "rough search (i)" as necessary in the below-described description. Therefore, after selecting the template model TM0(1) at the step S35c(1), the position pose calculation unit 312 performs the rough search (1) using template model TM0(1).

As a result of the rough search (1), the position pose calculation unit 312 generates the position pose data POI_low of at least one target object OBJ whose matching similarity is determined to be higher than the matching determination threshold value by the rough search (1) (the step S32c). Especially, since the imaging system 2 images the plurality of target objects OBJ#31 as described above, the position pose calculation unit 312 generates the plurality of position pose data POI_low of target objects OBJ#32, each of which is the target object OBJ#31 whose matching similarity is higher than the matching determination threshold value, as a result of the rough search (1). Note that the position pose calculation unit 312 may not generate the position pose data POI_low in a case where no target object OBJ whose matching similarity is determined to be higher the matching determination threshold value is not detected by the rough search (1).

Then, the position pose calculation unit 312 determine whether or not the result of the rough search (1) satisfies a predetermined detection condition (in other words, whether or not the predetermined detection condition is satisfied) (a step S36c(1)). The predetermined detection condition may include a condition related to the target object OBJ#31 whose matching similarity is determined to be higher than the matching determination threshold value by the rough search (namely, a condition related to the target object OBJ#32). Especially, the predetermined detection condition may include a condition related to the number of target objects OBJ#31 whose matching similarity is determined to be higher than the matching determination threshold value by the rough search (namely, a condition related to the number of target objects OBJ#32). In the third modified example, an example in where the predetermined detection condition includes a condition that the number of target objects OBJ#31 whose matching similarity is determined to be higher than the matching determination threshold value by the rough search (namely, the number of target objects OBJ#32) is equal to or larger than a predetermined detection threshold value will be described. The detection threshold value may be 1, may be 2, may be 3, may be 4, may be 5, or may be 6 or higher. The detection threshold value may be set automatically by the control apparatus 3c or set by the user. In this case, in a case where the number of target objects OBJ#31 whose matching similarity is determined to be higher than the matching determination threshold value by the rough search (1) is equal to or larger than the predetermined detection threshold value, the position pose calculation unit 312 may determine that the result of the rough search (1) satisfies the predetermined detection condition (namely, the predetermined detection condition is satisfied). Namely, in a case where the number of target objects OBJ#32 detected by the rough search (1) is equal to or larger than the predetermined detection threshold value, the position pose calculation unit 312 may determine that the result of the rough search (1) satisfies the predetermined detection condition (namely, the predetermined detection condition is satisfied). On the other hand, in a case where the number of target objects OBJ#31 whose matching similarity is determined to be higher than the matching determination threshold value by the rough search (1) is smaller than the predetermined detection threshold value, the position pose calculation unit 312 may determine that the result of the rough search (1) does not satisfy the predetermined detection condition (namely, the predetermined detection condition is not satisfied). Namely, in a case where the number of target objects OBJ#32 detected by the rough search (1) is smaller than the predetermined detection threshold value, the position pose calculation unit 312 may determine that the result of the rough search (1) does not satisfy the predetermined detection condition (namely, the predetermined detection condition is not satisfied).

In a case where it is determined as a result of the determination at the step S36c(1) that the result of the rough search (1) satisfies the predetermined detection condition (the step S36c(1): Yes), the position pose calculation unit 312 selects a plurality of interested data WSD_ROI based on the result of the rough search (1) (namely, the position pose data POI_low generated by rough search (1)) (the step S33c). Note that the interested data WSD_ROI generated by using the result of the rough search (i) is referred to as interested data WSD_ROI(i) in the below-described description.

Then, the position pose calculation unit 312 calculates the matching similarity of each of the plurality of target objects OBJ#32, which has been detected by the rough search (1), based on the plurality of interested data WSD_ROI(1) (the step S341c).

In order to calculate the matching similarity based on the plurality of interested data WSD_ROI(1), the position pose calculation unit 312 may perform the 3D matching processing using the template model TM0(1) selected at the step S35c(1). Namely, in order to calculate the matching similarity based on the plurality of interested data WSD_ROI(1), the position pose calculation unit 312 may calculate the matching similarity by performing the 3D matching processing using the template model TM0(1) used for the rough search (1). However, in order to calculate the matching similarity based on the plurality of interested data WSD_ROI(1), the position pose calculation unit 312 may calculate the matching similarity by performing the 3D matching processing using the template model TM0 that is different from template model TM0(1).

On the other hand, in a case where it is determined as a result of the determination at the step S36c(1) that the result of the rough search (1) does not satisfy the predetermined detection condition (the step S36c(1): No), the position pose calculation unit 312 selects a plurality of interested data WSD_ROI(1) based on the result of the rough search (1) (namely, the position pose data POI_low generated by the rough search (1)) (the step S33c). However, in a case where no target object OBJ whose matching similarity is determined to be higher than the matching determination threshold value by the rough search (1) is detected, the position pose calculation unit 312 may not select the plurality of interested data WSD_ROI(1). Namely, in a case where it is determined that the result of the rough search (1) does not satisfy the predetermined detection condition and at least one target object OBJ whose matching similarity is determined to be higher than the matching determination threshold value by the rough search (1) is detected, the position pose calculation unit 312 may select the plurality of interested data WSD_ROI(1). Then, the position pose calculation unit 312 calculates the matching similarity of each of the plurality of target objects OBJ#32, which has been detected by the rough search (1), based on the plurality of interested data WSD_ROI(1) (the step S341c).

Furthermore, in a case where it is determined as a result of the determination at the step S36c(1) that the result of the rough search (1) does not satisfy the predetermined detection condition (the step S36c(1): No), the position pose calculation unit 312 selects the template model TM0 to which the second highest priority is assigned (namely, the template model TM0(2)) from among the plurality of template models TM0 (a step S35c(2)). Then, the position pose calculation unit 312 performs the rough search (2) using the template model TM0(2) (the step S32c). As a result, the position pose calculation unit 312 generates the position pose data POI_low as the result of the rough search (2) (the step S32c).

The position pose calculation unit 312 may generate the position pose data POI_low of the target object OBJ#31, for which the result of the rough search (1) is not good, by performing the rough search (2). Note that "the target object OBJ#31 for which result of the rough search is not good (namely, is defect)" may mean "the target object OBJ#31 whose matching similarity is not determined to be higher than the matching determination threshold value by the rough search". Namely, the position pose calculation unit 312 may generate the position pose data POI_low of the target object OBJ#31, which has not been detected as the target object OBJ#32 by the rough search (1), by performing the rough search (2). In other words, the position pose calculation unit 312 may perform the rough search (2) to detect at least one target object OBJ#31, whose matching similarity is determined to be higher than the matching determination threshold value by the matching processing using the template model TM0(2), as the target object OBJ#32 from among at least one target object OBJ#31 that has not been detected as the target object OBJ#32 by the rough search (1), and to generate the position pose data POI_low of the detected target object OBJ#32.

On the other hand, the position pose calculation unit 312 may not generate the position pose data POI_low of the target object OBJ#31, for which the result of the rough search (1) is good, by performing rough search (2). Note that "the target object OBJ#31 for which the result of the rough search is good" may mean "the target object OBJ#31 whose matching similarity is determined to be higher than the matching determination threshold value by the rough search". Namely, the position pose calculation unit 312 may not generate the position pose data POI_low of the target object OBJ#31, which has been detected as the target object OBJ#32 by the rough search (1), by performing the rough search (2). In other words, the position pose calculation unit 312 may not detect the target object OBJ#31, which has been detected as the target object OBJ#32 by the rough search (1), as the target object OBJ#32 again by performing the rough search (2). This is because the position pose data POI_low of the target object OBJ#31, which has been detected as the target object OBJ#32 by the rough search (1), has been already generated by the rough search (1). Therefore, depending on the number of target object OBJ#31, which has been detected as the target object OBJ#32 by the rough search (1), the position pose calculation unit 312 may generate the position pose data POI_low of a plurality of target objects OBJ#32 or may generate the position pose data POI_low of a single target object OBJ#32, as a result of the rough search (2).

In any case, the position pose calculation unit 312 performs the rough search (2) to generate the position pose data POI_low of at least one target object OBJ#32 whose matching similarity is determined to be higher than the matching determination threshold value by the rough search (2). Namely, the position pose calculation unit 312 generates at least one position pose data POI_low. Note that the position pose calculation unit 312 may not generate the position pose data POI_low in a case where no target object OBJ whose matching similarity is determined to be higher than the matching determination threshold value is detected by the rough search (2).

However, the position pose calculation unit 312 may generate the position pose data POI_low of the target object OBJ#31, for which the result of the rough search (1) is good, by performing rough search (2). Namely, the position pose calculation unit 312 may generate the position pose data POI_low of the target object OBJ#31, which has been detected as the target object OBJ#32 by the rough search (1), by performing the rough search (2). Thus, the position pose calculation unit 312 may generate a plurality of position pose data POI_low of the same target object OBJ#31 (the same target object OBJ#32) by performing a plurality of rough searches using a plurality of different template models TM0, respectively. For example, the position pose calculation unit 312 may generate, as the position pose data POI_low of one target object OBJ#32, the position pose data POI_low generated by the rough search (1) and the position pose data POI_low generated by the rough search (2).

Then, the position pose calculation unit 312 determines whether or not the result the rough search (1) to the rough search (2) performed ever satisfies the predetermined detection condition described above (a step S36c(2)). For example, in a case where the number of target objects OBJ#31 whose matching similarity is determined to be higher than the matching determination threshold value by the rough search (1) to the rough search (2) is equal to or larger than the predetermined detection threshold value, the position pose calculation unit 312 may determine that the result of the rough search (1) to the rough search (2) satisfies the predetermined detection condition (namely, the predetermined detection condition is satisfied). Namely, in a case where the number of target objects OBJ#32 detected by the rough search (1) to the rough search (2) is equal to or larger than the predetermined detection threshold value, the position pose calculation unit 312 may determine that the result of the rough search (1) to the rough search (2) satisfies the predetermined detection condition (namely, the predetermined detection condition is satisfied). On the other hand, in a case where the number of target objects OBJ#31 whose matching similarity is determined to be higher than the matching determination threshold value by the rough search (1) to the rough search (2) is smaller than the predetermined detection threshold value, the position pose calculation unit 312 may determine that the result of the rough search (1) to the rough search (2) does not satisfy the predetermined detection condition (namely, the predetermined detection condition is not satisfied). Namely, in a case where the number of target objects OBJ#32 detected by the rough search (1) to the rough search (2) is smaller than the predetermined detection threshold value, the position pose calculation unit 312 may determine that the result of the rough search (1) to the rough search (2) does not satisfy the predetermined detection condition (namely, the predetermined detection condition is not satisfied).

In a case where it is determined as a result of the determination at the step S36c(2) that the result of the rough search (1) to the rough search (2) satisfies the predetermined detection condition (the step S36c(2): Yes), the position pose calculation unit 312 selects at least one interested data WSD_ROI(2) based on the result of the rough search (2) (namely, the position pose data POI_low generated by rough search (2)) (the step S33c).

Then, the position pose calculation unit 312 calculates the matching similarity of at least one target objects OBJ#32, which has been detected by the rough search (2), based on the plurality of interested data WSD_ROI(2) (the step S341c).

In order to calculate the matching similarity based on at least one interested data WSD_ROI(2), the position pose calculation unit 312 may perform the 3D matching processing using the template model TM0(2) selected at the step S35c(2). Namely, in order to calculate the matching similarity based on at least one interested data WSD_ROI(2), the position pose calculation unit 312 may calculate the matching similarity by performing the 3D matching processing using the template model TM0(2) used for the rough search (2). However, in order to calculate the matching similarity based on at least one interested data WSD_ROI(2), the position pose calculation unit 312 may calculate the matching similarity by performing the 3D matching processing using the template model TM0 that is different from template model TM0(2).

On the other hand, in a case where it is determined as a result of the determination at the step S36c(2) that the result of the rough search (1) to the rough search (2) does not satisfy the predetermined detection condition (the step S36c(2): No), the position pose calculation unit 312 selects at least one interested data WSD_ROI(2) based on the result of the rough search (2) (namely, the position pose data POI_low generated by the rough search (2)) (the step S33c). However, in a case where no target object OBJ whose matching similarity is determined to be higher than the matching determination threshold value by the rough search (2) is detected, the position pose calculation unit 312 may not select at least one interested data WSD_ROI(2). Namely, in a case where it is determined that the result of the rough search (2) does not satisfy the predetermined detection condition and at least one target object OBJ whose matching similarity is determined to be higher than the matching determination threshold value by the rough search (2) is detected, the position pose calculation unit 312 may select at least one interested data WSD_ROI(1). Then, the position pose calculation unit 312 calculates the matching similarity of at least one target objects OBJ#32, which has been detected by the rough search (2), based on at least one interested data WSD_ROI(2) (the step S341c).

Furthermore, in a case where it is determined as a result of the determination at the step S36c(2) that the result of the rough search (1) to the rough search (2) does not satisfy the predetermined detection condition (the step S36c(2): No), the position pose calculation unit 312 selects the template model TM0 to which the third highest priority is assigned (namely, the template model TM0(3)) from among the plurality of template models TM0 (a step S35c(3)). Then, the position pose calculation unit 312 performs the rough search (3) using the template model TM0(3) (the step S32c). As a result, the position pose calculation unit 312 generates the position pose data POI_low as the result of the rough search (3) (the step S32c).

Thus, in the third modified example, after the position poser calculation unit 312 performs the rough search (i) (the step S32), the position pose calculation unit 312 selects at least one interested data WSD_ROI(i) based on the result of the rough search (i) (namely, the position pose data POI_low generated by the rough search (i)) (the step S33c), regardless of whether or not the result of the rough search (1) to the rough search (i) satisfies the predetermined detection condition. Then, the position pose calculation unit 312 calculates the matching similarity of each of at least one target object OBJ#32, which has been detected by the rough search (i), based on at least one interested data WSD_ROI(i) (the step S341c). However, in a case where the result of the rough search (1) to the rough search (i) does not satisfy the predetermined detection condition and no target object OBJ whose matching similarity is determined to be higher than the matching determination threshold value is detected by the rough search (i), the position pose calculation unit 312 may not select at least one interested data WSD_ROI(i). Namely, in a case where it is determined that the result of the rough search (1) to the rough search (i) does not satisfy the predetermined detection condition and at least one target object OBJ whose matching similarity is determined to be higher than the matching determination threshold value is detected by the rough search (i), the position pose calculation unit 312 may select at least one interested data WSD_ROI(i).

Furthermore, in a case where the result of the rough search (1) to the rough search (i) does not satisfy the predetermined detection conditions, the position pose calculation unit 312 additionally selects the template model TM0(i+1) to which the (i+1)-th highest priority is assigned (the step S35c(i+1)), and additionally performs the rough search (i+1) using the selected template model TM0(i+1) (the step S32). Furthermore, the position pose calculation unit 312 additionally generates the interested data WSD_ROI(i+1) based on the result of the rough search (i+1) (the position pose data POI_low) and additionally calculates the matching similarity based on the interested data WSD_ROI(i+1). However, in a case where no target object OBJ whose matching similarity is determined to be higher than the matching determination threshold value is detected by the rough search (i+1), the position pose calculation unit 312 may not additionally generate the interested data WSD_ROI(i+1).

The position pose calculation unit 312 may generate the position pose data POI_low of the target object OBJ#31, for which the result of the rough search (1) to the rough search (i) is not good, by performing the rough search (i+1). Namely, the position pose calculation unit 312 may generate the position pose data POI_low of the target object OBJ#31, which has not been detected as the target object OBJ#32 by the rough search (1) to the rough search (i), by performing the rough search (i+1). In other words, the position pose calculation unit 312 may perform the rough search (i+1) to detect the target object OBJ#31, whose matching similarity is determined to be higher than the matching determination threshold value by the matching processing using the template model TM0(i+1), as the target object OBJ#32 from among at least one target object OBJ#31 that has not been detected as the target object OBJ#32 by the rough search (1) to the rough search (i), and to generate the position pose data POI_low of the detected target object OBJ#32.

On the other hand, the position pose calculation unit 312 may not generate the position pose data POI_low of the target object OBJ#31, for which the result of at least one of the rough search (1) to the rough search (i) is good, by performing rough search (i+1). Namely, the position pose calculation unit 312 may not generate the position pose data POI_low of the target object OBJ#31, which has been detected as the target object OBJ#32 by at least one of the rough search (1) to the rough search (i), by performing the rough search (i+1). In other words, the position pose calculation unit 312 may not detect the target object OBJ#31, which has been detected as the target object OBJ#32 by at least one of the rough search (1) to the rough search (i), as the target object OBJ#32 again by performing the rough search (i+1). This is because the position pose data POI_low of the target object OBJ#31, which has been detected as the target object OBJ#32 by at least one of the rough search (1) to the rough search (i), has been already generated by at least one of the rough search (1) to the rough search (i). Therefore, depending on the number of target object OBJ#31, which has been detected as the target object OBJ#32 by at least one of the rough search (1) to the rough search (i), the position pose calculation unit 312 may generate the position pose data POI_low of a plurality of target objects OBJ#32 or may generate the position pose data POI_low of a single target object OBJ#32, as a result of the rough search (i+1).

In any case, the position pose calculation unit 312 performs the rough search (i+1) to generate the position pose data POI_low of at least one target object OBJ#32 whose matching similarity is determined to be higher than the matching determination threshold value by the rough search (i+1). Namely, the position pose calculation unit 312 generates at least one position pose data POI_low. Note that the position pose calculation unit 312 may not generate the position pose data POI_low in a case where no target object OBJ whose matching similarity is determined to be higher than the matching determination threshold value is detected by the rough search (i+1).

However, the position pose calculation unit 312 may generate the position pose data POI_low of the target object OBJ#31, for which the result of at least one of the rough search (1) to the rough search (i) is good, by performing rough search (i+1). Namely, the position pose calculation unit 312 may generate the position pose data POI_low of the target object OBJ#31, which has been detected as the target object OBJ#32 by at least one of the rough search (1) to the rough search (i), by performing the rough search (i+1).

On the other hand, in a case where the result of the rough search (1) to the rough search (i) satisfies the predetermined detection conditions, the position pose calculation unit 312 may not additionally perform the rough search (i+1). Note that an example in which it is determined that the result of the rough search (1) to the rough search (i) satisfies predetermined detection condition after the rough search (i) is performed will be described in the below-described description.

In this case, a plurality of matching similarities are acquired as a result of the step S341c. These plurality of matching similarities may include the matching similarity calculated based on the target data WSD_ROI(1), the matching similarity calculated based on the target data WSD_ROI(2), ... , and the matching similarity calculated based on the target data WSD_ROI(i). Namely, the plurality of matching similarities acquired as a result of the step S341c may include the matching similarity of the target object OBJ#32 detected by the rough search (1), the matching similarity of the target object OBJ#32 detected by the rough search (2), ... , and the matching similarity of the target object OBJ#32 detected by the rough search (i).

Then, the position pose calculation unit 312 selects one target object OBJ#32, whose matching similarity calculated at the step S341c satisfies the predetermined selection condition, from among the plurality of target objects OBJ#32 detected by the rough search (1) to the rough search (i), as the process performed object (the step S342c).
One target object OBJ#32, whose matching similarity calculated at the step S341c satisfies the predetermined selection condition, is selected as the process performed object. Note that the predetermined selection condition has already been described, and therefore, a detailed description thereof is omitted.

Then, the position pose calculation unit 312 generates the position pose data POI of the process performed object (namely, one target object OBJ#32) selected at the step S342c (the step S343c). For example, in a case where one target object OBJ#32 detected by the rough search (1) is selected as the process performed object at the step S342c, the position pose calculation unit 312 may select the interested data WSD_POI(1) corresponding to the process performed object from the three-dimensional position data WSD based on the result of the rough search (1) (namely, the position pose data POI_low generated by the rough search (1)), and generate the position pose data POI of the process performed object by performing the 3D matching processing using the interested data WSD_POI(1) and the template model TM0(1) (alternatively, another template model TM0). For example, in a case where one target object OBJ#32 detected by the rough search (2) is selected as the process performed object at the step S342c, the position pose calculation unit 312 may select the interested data WSD_POI(2) corresponding to the process performed object from the three-dimensional position data WSD based on the result of the rough search (2) (namely, the position pose data POI_low generated by the rough search (2)), and generate the position pose data POI of the process performed object by performing the 3D matching processing using the interested data WSD_POI(2) and the template model TM0(2) (alternatively, another template model TM0).

However, in a case where the position pose data POI of the target object OBJ#32 has already been generated in parallel with or prior to the calculation of the matching similarity as described above, the position pose calculation unit 312 may not generate the position pose data POI of the process performed object (namely, one target object OBJ#32) again.

Then, the signal generation unit 313 generates the robot control signal by ¥using the position pose data POI generated at the step S343c (the step S4). Then, the control apparatus 3 repeats the series of processes from step S1 to step S4 until it is determined that the robot control processing is ended (the step S5).

Note that the control apparatus 3c may generate the robot control signal for controlling the robot 1 so that the end effector 4 performs the predetermined process on another target object OBJ, instead of performing the processing from the step S1 each time the end effector 4 completes the predetermined process on the target object OBJ as described above, in a case where the plurality of target objects OBJ each of matching similarity is higher than the predetermined matching determination threshold value are detected at the step S341c. However, as described above, the control apparatus 3c may perform the processing from the step S1 each time the end effector 4 completes the predetermined process on the target object OBJ.

### (4-3-6) Performance of Pre-Processing

The control apparatus 3c may perform a pre-processing on the image data IMG_2D. The control apparatus 3c may perform the pre-processing on the image data IMG_3D, in addition to or instead of performing the pre-processing on the image data IMG_2D. The control apparatus 3c may perform the pre-processing on the three-dimensional position data WSD generated from the image data IMG_3D, in addition to or instead of performing the pre-processing on at least one of the image data IMG_2D and IMG_3D.

In this case, the control apparatus 3c may generate the position pose data POI by using the image data IMG_2D on which the pre-processing has been performed. The control apparatus 3c may generate the position pose data POI by using the three-dimensional position data WSD generated from the image data IMG_3D on which the pre-processing has been performed. The control apparatus 3c may generate the position pose data POI by using the three-dimensional position data WSD on which the pre-processing has been performed.

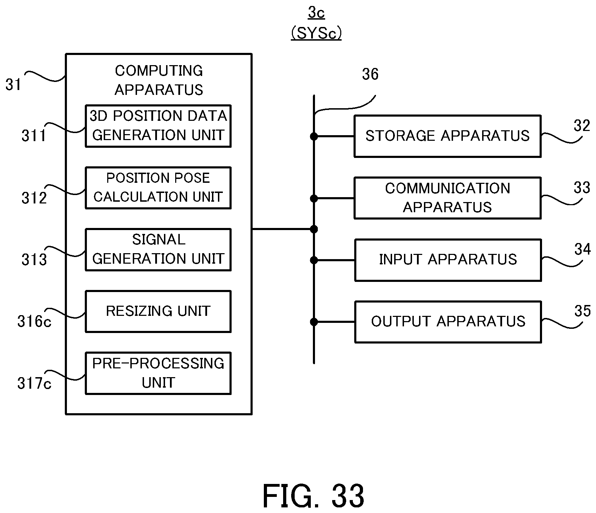

In a case where the pre-processing is performed, the control apparatus 3c may include a pre-processing unit 317c as a processing block implemented in the computing apparatus 31, as illustrated in FIG. 33.

### (4-3-6-1) First Specific Example of Pre-Processing

The pre-processing unit 317c may perform de-noise processing on at least one of the image data IMG_2D and the image data IMG_3D as the pre-processing. The de-noise processing may be a processing for generating the image data IMG_2D with less noise by removing noise included in the image indicated by the image data IMG_2D. The de-noise processing may be a processing for generating the image data IMG_3D with less noise by removing noise included in the image indicated by the image data IMG_3D. The de-noise processing may be a processing for generating the image data IMG_2D with less noise by removing noise included in the image indicated by the image data IMG_2D. The pre-processing unit 317c may perform, as the de-noise processing, a known filtering processing on at least one of the image data IMG_2D and IMG_3D. For example, the pre-processing unit 317c may perform the filtering processing using at least one of an averaging filter, a median filter, and a dilation filter on at least one of the image data IMG_2D and IMG_3D.

The pre-processing unit 317c may perform the de-noise processing on the image data IMG_2D and IMG_3D that are used for the rough search (the step S32c) illustrated in FIG. 27, FIG. 30, or FIG. 32. In this case, the pre-processing unit 317c may perform the de-noise processing after the resizing unit 316c performs the resizing processing. For example, the resizing unit 316c may perform the resizing processing on the image data IMG_2D, and then the pre-processing unit 317c may perform the de-noise processing on the image data IMG_2D on which the resizing processing has been performed. For example, the resizing unit 316c may perform the resizing processing on the image data IMG_3D, and then the pre-processing unit 317c may perform the de-noise processing on the image data IMG_3D on which the resizing processing has been performed. Alternatively, the pre-processing unit 317c may perform the de-noise processing before the resizing unit 316c performs the resizing processing. For example, the pre-processing unit 317c may perform the de-noise processing on the image data IMG_2D, and then the resizing unit 316c may perform the resizing processing on the image data IMG_2D on which the de-noise processing has been performed. For example, the pre-processing unit 317c may perform the de-noise processing on the image data IMG_3D, and then the resizing unit 316c may perform the resizing processing on the image data IMG_3D on which the de-noise processing has been performed. In both cases, the image data IMG_2D_low on which the de-noise processing has been performed and the image data IMG_3D_low on which the de-noise processing has been performed are generated.

The position pose calculation unit 312 may perform the rough search by using at least one of the image data IMG_2D_low on which the de-noise processing has been performed and the three-dimensional position data WSD_low generated from the image data IMG_3D_low on which the de-noise processing has been performed. In this case, the position pose calculation unit 312 can reduce an influence of the noise included in the image indicated by the image data IMG_2D and the noise included in the image indicated by the image data IMG_3D on the accuracy of the rough search.

However, the influence of the noise included in the image indicated by the image data IMG_2D on the accuracy of the rough search is smaller than the influence of the noise included in the image indicated by the image data IMG_3D on the accuracy of the rough search. Therefore, the pre-processing unit 317c may not perform the de-noise processing on the image data IMG_2D that is used for the rough search.

The pre-processing unit 317c may perform the de-noise processing on the image data IMG_2D and IMG_3D that are used for the fine search (the step S34c) illustrated in FIG. 27,

FIG. 30, or FIG. 32. For example, the pre-processing unit 317c may perform the de-noise processing on the image data IMG_2D on which the resizing processing has not been performed, thereby generating the image data IMG_2D on which the de-noise processing has been performed but on which the resizing processing has not been performed. For example, the pre-processing unit 317c may perform the de-noise processing on the image data IMG_3D on which the resizing processing has not been performed, thereby generating the image data IMG_3D on which the de-noise processing has been performed but on which the resizing processing has not been performed.

The position pose calculation unit 312 may perform the fine search by using at least one of the image data IMG_2D on which the de-noise processing has been performed and the three-dimensional position data WSD generated from the image data IMG_3D on which the de-noise processing has been performed. In this case, the position pose calculation unit 312 can reduce an influence of the noise included in the image indicated by the image data IMG_2D and the noise included in the image indicated by the image data IMG_3D on the accuracy of the fine search.

However, the influence of the noise included in the image indicated by the image data IMG_2D and the noise included in the image indicated by the image data IMG_3D on the accuracy of the fine search is smaller than the influence of the noise included in the image indicated by the image data IMG_2D and the noise included in the image indicated by the image data IMG_3D on the accuracy of the rough search. Therefore, the pre-processing unit 317c may not perform the de-noise processing on the image data IMG_2D that is used for the fine search illustrated in FIG. 27.

### (4-3-6-2) Second Specific Example of Pre-Processing

The pre-processing unit 317c may perform a planar surface removal processing on the three-dimensional position data WSD as the pre-processing. The planar surface removal processing is a processing for removing point cloud corresponding to a planar surface, which is equivalent to the placement surface on which the target object OBJ is placed, from the point cloud indicated by the three-dimensional position data WSD. An upper surface (the placement surface) of the placing apparatus T described above is one example of the placement surface. At least one of a planar surface removal processing using a RANSAC (Random Sample Consensus) and a planar surface removal processing using a least-squares method is one example of the planar surface removal processing.

The pre-processing unit 317c may perform the planar surface removal processing on the three-dimensional position data WSD (namely, the three-dimensional position data WSD_low on which the resizing processing has been performed) that is used for the rough search (the step S32c) illustrated in FIG. 27, FIG. 30, or FIG. 32. In this case, the position pose calculation unit 312 may perform the rough search by using the three-dimensional position data WSD_low on which the planar surface removal processing has been performed. In this case, it is less likely that the position pose calculation unit 312 mistakenly detects the placement surface as a part of the target object OBJ. Therefore, the position pose calculation unit 312 can generate the position pose data POI_low that properly indicates at least one of the position and the pose of the target object OBJ.

The pre-processing unit 317c may perform the planar surface removal processing on the three-dimensional position data WSD that is used for the fine search (the step S33c) illustrated in FIG. 27, FIG. 30, or FIG. 32. In this case, the position pose calculation unit 312 may perform the fine search by using the three-dimensional position data WSD on which the planar surface removal processing has been performed. In this case, it is less likely that the position pose calculation unit 312 mistakenly detects the placement surface as a part of the target object OBJ. Therefore, the position pose calculation unit 312 can generate the position pose data POI that properly indicates at least one of the position and the pose of the target object OBJ.

### (4-4) Fourth Modified Example

### (4-4-1) Position Pose Computing for Target Object OBJ held by End Effector 4

As described above, the end effector 4 performs the holding process for holding the target object OBJ. In a fourth modified example, the position pose calculation unit 312 may calculate at least one of a position and a pose of the target object OBJ held by the end effector 4. Namely, the position pose calculation unit 312 may calculate at least one of the position and the pose of the target object OBJ held by the end effector 4 in at least a part of a period during which the end effector 4 holds the target object OBJ. As a result, the position pose calculation unit 312 may generate the position pose data POI indicating at least one of the position and the pose of the target object OBJ held by the end effector 4.

Note that the target object OBJ held by the end effector 4 is referred to as a "held object OBJh" for convenience of description in the fourth modified example.

In or der to calculate at least one of the position and the pose of the held object OBJh, the imaging system 2 may image the held object OBJh in at least a part of the period during which the end effector 4 holds the held object OBJh. As a result, the imaging system 2 may generate at least one of the image data IMG_2D and IMG_3D in which the held object OBJh is captured.

The imaging system 2 may image the held object OBJh in at least a part of the period during which the robot arm 12 moves the held object OBJh. Namely, the imaging system 2 may image the held object OBJh in at least a part of the period during which the robot arm 12 moves the end effector 4 holding the held object OBJh. In this case, the held object OBJh may not stop for the imaging system 2 to image the held object OBJh. Namely, the end effector 4 may not stop for the imaging system 2 to image the held object OBJh. As a result, the imaging system 2 can image the held object OBJh without stopping the robot arm 12, which moves the held object OBJh and the end effector 4, compared to a case where the held object OBJh and the end effector 4 need to stop for the imaging system 2 to image the held object OBJh. As a result, it is possible to prevent a deterioration of the throughput of the robot 1 (for example, an increase of a cycle time). This is because stopping the robot arm 12 could lead to the deterioration of the throughput of the robot 1.

However, the imaging system 2 may image the held object OBJh in at least a part of the period during which the robot arm 12 does not move held object OBJh and the end effector 4. Namely, the imaging system 2 may image the held object OBJh in at least a part of the period during which the held object OBJh and the end effector 4 stop.

Then, the control apparatus 3 (alternatively, the control apparatus 3b or 3c, the same applies in the below-described description) may acquire at least one of the image data IMG_2D and IMG_3D from the imaging system 2 by using the communication apparatus 33 (the step S1 in FIG. 4). Namely, the control apparatus 3 may acquire at least one of the image data IMG_2D and IMG_3D in which the held object OBJh is captured. Furthermore, each time the control apparatus 3 acquires the image data IMG_3D, the three-dimensional position data generation unit 311 of the control apparatus 3 generates the three-dimensional position data WSD based on the acquired image data IMG_3D (the step S2 in FIG. 4). In this case, the three-dimensional position data WSD indicates the three-dimensional position of the held object OBJh. Then, the position pose calculation unit 312 of the control apparatus 3b may perform the position pose computing (namely, a computing including the matching processing) for calculating at least one of the position and the pose of the held object OBJh based on at least one of the image data IMG_2D and the three-dimensional position data WSD (the step S3 in FIG. 4).

The control apparatus 3 may perform the position pose computing for calculating at least one of the position and the pose of the held object OBJh in at least a part of the period during which the robot arm 12 moves the held object OBJh. In this case, the held object OBJh may not stop for the control apparatus 3 to perform the position pose computing. Namely, the end effector 4 may not stop for the control apparatus 3 to perform the position pose computing. As a result, the control apparatus 3 can perform the position pose computing without stopping the robot arm 12, which moves the held object OBJh and the end effector 4, compared to a case where the held object OBJh and the end effector 4 need to stop for the control apparatus 3 to perform the position pose computing. As a result, it is possible to prevent the deterioration of the throughput of the robot 1.

However, the control apparatus 3 may perform the position pose computing in at least a part of the period during which the robot arm 12 does not move the held object OBJh and the end effector 4. Namely, the control apparatus 3 may perform the position pose computing in at least a part of the period during which the held object OBJh and the end effector 4 stop.

The control apparatus 3 may check whether or not the held object OBJh is properly held by the end effector 4 based on a calculated result of at least one of the position and the pose of the held object OBJh. For example, the control apparatus 3 may check whether or not the pose of the held object OBJh is a desired pose (namely, a desired pose set in advance). In a case where it is determined that the held object OBJh is not properly held by the end effector 4 (namely, the pose of the held object OBJh is not the designed pose), the control apparatus 3 may notify the user that the held object OBJh is not properly held by the end effector 4. In a case where it is determined that the held object OBJh is not properly held by the end effector 4, the control apparatus 3 may control the robot 1 and the end effector 4 so that the end effector 4 releases the held object OBJh and then properly re-holds the released held object OBJh.

The control apparatus 3 may generate the robot control signal based on the calculated result of at least one of the position and the pose of the held object OBJh (namely, the position pose data POI).

As one example, in a case where the end effector 4 performs the above-described releasing process for releasing the held object OBJh, the control apparatus 3 may generate the robot control signal for controlling the robot arm 12 so that the end effector 4 properly releases the held object OBJh, based on the calculated result of at least one of the position and the pose of the held object OBJh. Specifically, for example, the control apparatus 3 may generate the robot control signal for controlling the robot arm 12 so that the end effector 4 (the held object OBJh held by the end effector 4) approaches the release position at which the end effector 4 should release the held object OBJh, based on the calculated result of at least one of the position and the pose of the held object OBJh.

As another example, in a case where the end effector 4 performs the above-described placing process for placing the held object OBJh, the control apparatus 3 may generate the robot control signal for controlling the robot arm 12 so that the end effector 4 properly places the held object OBJh at the desired position, based on the calculated result of at least one of the position and the pose of the held object OBJh. Specifically, for example, the control apparatus 3 may generate the robot control signal for controlling the robot arm 12 so that the end effector 4 (the held object OBJh held by the end effector 4) approaches a placement position at which the end effector 4 should place the held object OBJh, based on the calculated result of at least one of the position and the pose of the held object OBJh.

As described above, the embedding process is one example of the placing process. In this case, the control apparatus 3 may generate the robot control signal controlling the robot arm 12 so that the end effector 4 properly embed the held object OBJh into another object, based on the calculated result of at least one of the position and the pose of the held object OBJh,. Specifically, for example, the control apparatus 3 may generate the robot control signal for controlling the robot arm 12 so that the end effector 4 (the held object OBJh held by the end effector 4) approaches another object into which the end effector 4 should embed the held object OBJh, based on the calculated result of at least one of the position and the pose of the held object OBJh.

As described above, the attachment process is one example of the placing process. In this case, the control apparatus 3 may generate the robot control signal controlling the robot arm 12 so that the end effector 4 properly attach the held object OBJh to another object, based on the calculated result of at least one of the position and the pose of the held object OBJh,. Specifically, for example, the control apparatus 3 may generate the robot control signal for controlling the robot arm 12 so that the end effector 4 (the held object OBJh held by the end effector 4) approaches another object to which the end effector 4 should attach the held object OBJh, based on the calculated result of at least one of the position and the pose of the held object OBJh.

As described above, the adhesive process is one example of the placing process. In this case, the control apparatus 3 may generate the robot control signal controlling the robot arm 12 so that the end effector 4 properly adhere the held object OBJh to another object, based on the calculated result of at least one of the position and the pose of the held object OBJh,. Specifically, for example, the control apparatus 3 may generate the robot control signal for controlling the robot arm 12 so that the end effector 4 (the held object OBJh held by the end effector 4) approaches another object to which the end effector 4 should adhere the held object OBJh, based on the calculated result of at least one of the position and the pose of the held object OBJh.

As described above, the welding process is one example of the placing process. In this case, the control apparatus 3 may generate the robot control signal controlling the robot arm 12 so that the end effector 4 properly weld the held object OBJh to another object, based on the calculated result of at least one of the position and the pose of the held object OBJh,. Specifically, for example, the control apparatus 3 may generate the robot control signal for controlling the robot arm 12 so that the end effector 4 (the held object OBJh held by the end effector 4) approaches another object to which the end effector 4 should weld the held object OBJh, based on the calculated result of at least one of the position and the pose of the held object OBJh.

As described above, the screw tightening process is one example of the placing process. In this case, the control apparatus 3 may generate the robot control signal controlling the robot arm 12 so that the end effector 4 properly tightening the held object OBJh into a screw hole formed in another object, based on the calculated result of at least one of the position and the pose of the held object OBJh,. Specifically, for example, the control apparatus 3 may generate the robot control signal for controlling the robot arm 12 so that the end effector 4 (the held object OBJh held by the end effector 4) approaches another object (especially, the screw hole) to which the end effector 4 should tighten the held object OBJh, based on the calculated result of at least one of the position and the pose of the held object OBJh.

As another example, in a case where the held object OBJh held by the end effector 4 is processed by the processing apparatus, the control apparatus 3 may generate the robot control signal for controlling the robot arm 12 so that the held object OBJh held by the end effector 4 has a desired position and pose relative to the processing apparatus, based on the calculated result of at least one of the position and the pose of the held object OBJh. Note that the desired position and pose of the held object OBJh relative to the processing apparatus may be set in advance.

As another example, in a case where the held object OBJh held by the end effector 4 is measured by the measurement apparatus, the control apparatus 3 may generate the robot control signal for controlling the robot arm 12 so that the held object OBJh held by the end effector 4 has a desired position and pose relative to the measurement apparatus, based on the calculated result of at least one of the position and the pose of the held object OBJh. Note that the desired position and pose of the held object OBJh relative to the measurement apparatus may be set in advance.

Thus, in the fourth modified example, the control apparatus 3 may generate the robot control signal based on the calculated result of at least one of the position and the pose of the held object OBJh. Therefore, it is more likely that the end effector 4 can properly perform the predetermined process, compared to a case where the robot control signal is generated without using the calculated result for the position and the pose of the held object OBJh. For example, even in a case where the pose of the held object OBJh held by the end effector 4 is clearly different from the desired pose (namely, the desired pose set in advance), the control apparatus 3 can calculate the actual pose (namely, the abnormal pose) of the held object OBJh, and therefore, the end effector 4 can properly perform the predetermined process by using the held object OBJh taking the abnormal pose.

### (4-4-2) Usage of Patial Model

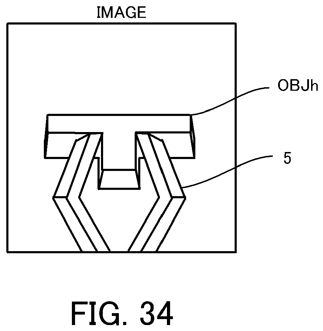

In a case where the end effector 4 holds the target object OBJh, it is likely that the end effector 4 covers a part of a surface of the target object OBJh. As a result, as illustrated in FIG. 34 that illustrates the image indicated by each of the image data IMG_2D and IMG_3D, it is likely that the end effector 4 also covers (in other words, hide) a part of the surface of the held object OBJh in the image indicated by each of the image data IMG_2D and IMG_3D. Namely, it is likely that a part of the held object OBJh is not captured in the image. Specifically, there is a possibility that a partial part, which is held by the end effector 4, of the held object OBJh is not captured in the image indicated by each of the image data IMG_2D and IMG_3D.

In this case, the control apparatus 3 may use at least one of the partial model, which is a part of the above-described template image, and the partial model TM3_P, which is a part of the above-described template model TM3, to calculate at least one of the position and the pose of the held object OBJh. For example, the control apparatus 3 may use, as the partial model, an image part of the template image that does not include an image of the partial part, which is held by the end effector 4, of the held object OBJh. For example, the control apparatus 3 may use, as the partial model, an image part of the template image that includes an image of a partial part, which is not held by the end effector 4, of the held object OBJh. For example, the control apparatus 3 may use, as the partial model TM3_P, a model part of the template model TM3 that does not include a three-dimensional model of the partial part, which is held by the end effector 4, of the held object OBJh. For example, the control apparatus 3 may use, as the partial model TM3_P, a model part of the template model TM3 that includes a three-dimensional model of the partial part, which is not held by the end effector 4, of the held object OBJh.

As a result, even in a case where a part of the held object OBJh held by the end effector 4 is not captured in the image indicated by each of the image data IMG_2D and IMG_3D, the control apparatus 3 can calculate at least one of the position and the pose of the held object OBJh.

In a case where at least one of the partial model that is a part of the above-described template image and the partial model TM3_P that is a part of the above-described template model TM3 is used, an initial setting operation described below may be performed before starting the robot control processing including the position pose computing. Note that an example of the initial setting operation performed in a case where the partial model TM3_P is used will be described in the below-described description for convenience of description. However, even in a case where a partial model that is part of the template image is used, the initial setting operation that is the same as the below-described initial setting operation may be performed.

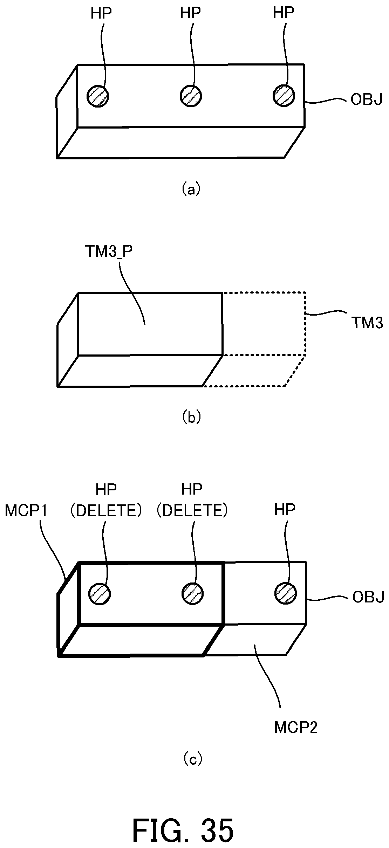

Specifically, first, as illustrated in FIG. 35(a), a plurality of holding points HP are designated for the target object OBJ. The plurality of holding points HP may be designated by the user. The plurality of holding points HP may be automatically designated by the control apparatus. The holding point HP is a part of the target object OBJ which the end effector 4 is allowed to actually hold in order to hold the target object OBJ. The end effector 4 may hold the target object OBJ by holding at least one of the plurality of holding points HP.

Furthermore, as illustrated in FIG. 35(b), the partial model TM3_P used by the position pose computing (specifically, the matching processing) for calculating at least one of the position and the pose of the held object OBJh is designated (alternatively, generated). The partial model TM3_P may be designated by the user, for example. Here, the user may designate the partial model TM3_P to satisfy a condition that the target object OBJ is properly detected by the matching processing using the partial model TM3_P. For example, the user may designate the partial model TM3_P to satisfy a condition that the matching similarity of the target object OBJ is sufficiently high (for example, much higher than the matching determination threshold value) by the matching processing using the partial model TM3_P. On the other hand, at a timing at which the initial setting operation is performed, information related to the position of the part of the target object OBJ actually held by the end effector 4 to hold the target object OBJ after the robot control processing starts is unknown to the user. Therefore, the user may not designate the partial model TM3_P that does not include the three-dimensional model of the partial part of the held object OBJh that is expected to be held by the end effector 4 in a case where the end effector 4 is assumed to hold the held object OBJh. The user may not designate the partial model TM3_P that does includes the three-dimensional model of the partial part of the held object OBJh that is expected not to be held by the end effector 4 in a case where the end effector 4 is assumed to hold the held object OBJh. Note that the partial model TM3_P may be automatically set by the control apparatus 3.

Then, as illustrated in FIG. 35(c), at least one holding point HP, which is set at the part of the target object OBJ corresponding to the partial model TM3_P designated by the user (alternatively, by the control apparatus 3) (it is referred to as a model corresponding part MCP1 in the below-described description), is deleted from among the plurality of holding points HP set in advance. In this case, the end effector 4 may be prohibited from holding the deleted holding point HP of the plurality of holding points HP. Therefore, the end effector 4 holds the target object OBJ by holding at least one remaining holding point HP, which has not been deleted, of the plurality of holding points HP.

Then, the above-described robot control processing starts. In this case, the control apparatus 3 first generates the control signal for controlling the robot arm 12 so that the end effector 4, which has not yet held the target object OBJ, holds the target object OBJ (specifically, holds the undeleted remaining holding point HP). Namely, the control apparatus 3 generates the control signal for controlling the robot arm 12 so that the end effector 4, which has not yet held the target object OBJ, approaches the target object OBJ. In this case, the imaging system 2 may generate the image data IMG_3D by imaging the target object OBJ that is not held by the end effector 4. Then, the control apparatus 3 may calculate at least one of the position and the pose of the target object OBJ by performing the position pose computing that includes the 3D matching processing using the three-dimensional position data WSD generated from the image data IMG_3D and the partial model TM3_P designated by the user. Note that the control apparatus 3 may calculate at least one of the position and the pose of the target object OBJ by performing the position pose computing that includes the 3D matching processing using the partial model TM3_P that is different from the partial model TM3_P designated by the user. The control apparatus 3 may calculate at least one of the position and the pose of the target object OBJ by performing the position pose computing that includes the 3D matching processing using the whole model TM3_W (namely, the template model TM3) that is different from the partial model TM3_P designated by the user. Then, control apparatus 3 generates the control signal for controlling the robot arm 12 so that the end effector 4 approaches the target object OBJ, based on the calculated result of at least one of the position and the pose of target object OBJ.

As a result, the end effector 4 holds the target object OBJ. Then, the control apparatus 3 calculates at least one of the position and the pose of the held object OBJh held by the end effector 4. In this case, the imaging system 2 may generate the image data IMG_3D by imaging the held object OBJh. Then, the control apparatus 3 may calculate at least one of the position and the pose of the held object OBJh by performing the position pose computing that includes the 3D matching processing using the three-dimensional position data WSD generated from the image data IMG_3D and the partial model TM3_P designated by the user.

Here, as described above, the end effector 4 holds a non-model corresponding part MCP2 of the target object OBJ (see FIG. 35(c)), which is different from the model corresponding part MCP1 corresponding to the partial model TM3_P used by the 3D matching processing. Therefore, the end effector 4 holding the held object OBJh does not hold the model corresponding part MCP1 of the held object OBJh. Therefore, it is unlikely that a part of the model corresponding part MCP1 of the held object OBJh is covered by the end effector 4 in the image indicated by the image data IMG_3D. Therefore, the three-dimensional position data WSD includes data indicating the three-dimensional position of the model corresponding part MCP1 of the held object OBJh. Therefore, the control apparatus 3 can properly detect the held object OBJh by performing the 3D matching processing using the three-dimensional position data WSD, which includes the data indicating the three-dimensional position of the model corresponding part MCP1 of the held object OBJh, and the partial model TM3_P, which corresponds to the model corresponding part MCP1 of the held object OBJh, of the template model TM3. Therefore, the control apparatus 3 can accurately calculate at least one of the position and the pose of the held object OBJh. As a result, it is more likely that the end effector 4 can properly perform the predetermined process, compared to a case where at least one of the position and the pose of the held object OBJh cannot be accurately calculated. Namely, the end effector 4 can properly perform the predetermined process by using the held object OBJh held by the end effector 4.

### (4-5) Fifth Modified Example

### (4-5-1) Generation of Position Pose Information POI based on Selection Data IMG_2D_select and WSD_select

In the above-described description, the position pose calculation unit 312 generates the position pose data POI based on at least one of the image data IMG_2D and the three-dimensional position data WSD at the step S3 in FIG. 4. In a fifth modified example, the position pose calculation unit 312 may generate the position pose data POI based on at least one of selection data IMG_2D_select and selection data WSD_select. Namely, the control apparatus 3 may generate the robot control signal for controlling the robot so that the end effector 4 approaches one target object OBJ to perform the one target object OBJ, which is selected as the process performed object from among the plurality of target objects OBJ contained in the container CB, based on at least one of the selection data IMG_2D_select and the selection data WSD_select.

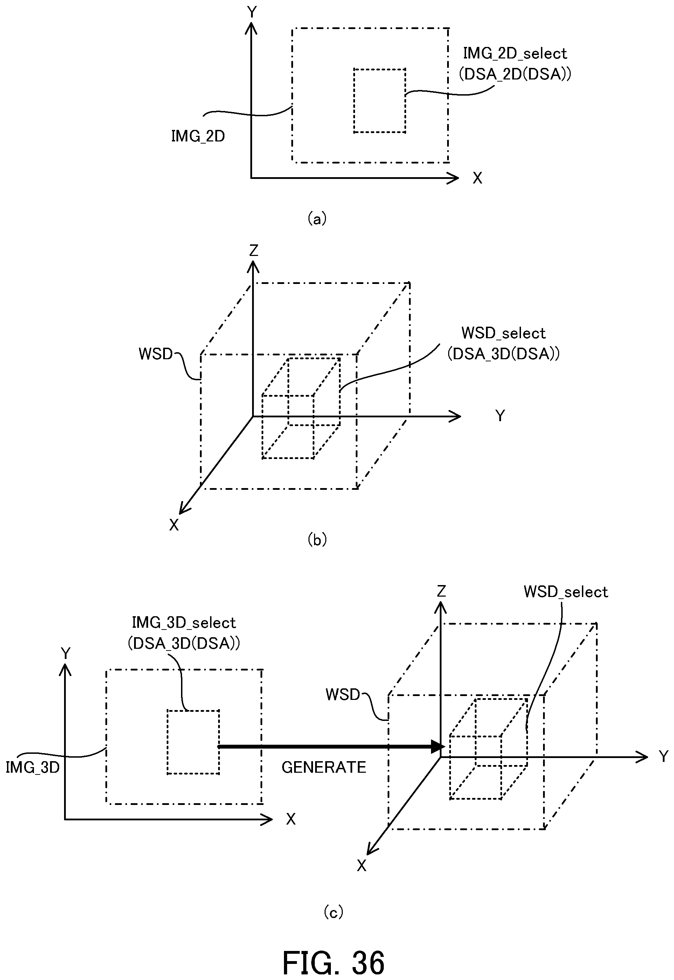

As illustrated in FIG. 36(a) that conceptionally illustrates the selection data IMG_2D_select, the selection data IMG_2D_select is a part of the image data IMG_2D. Therefore, the position pose calculation unit 312 may select a part of the image data IMG_2D as the selection data IMG_2D_select and generate the position pose data POI based on the selected selection data IMG_2D_select.

As illustrated in FIG. 36(b) that conceptually illustrates the selection data WSD_select, the selection data WSD_select is a part of the three-dimensional position data WSD. Therefore, the position pose calculation unit 312 may select a part of the three-dimensional position data WSD as the selection data WSD_select and generate the position pose data POI based on the selected selection data WSD_select. Alternatively, as illustrated in FIG. 36(c) that conceptually illustrates the selection data WSD_select, the three-dimensional position data generation unit 311 may select a part of the image data IMG_3D as selection data IMG_3D_select, then generates the selection data WSD_select that corresponds to a part of the three-dimensional position data WSD based on the selected selection data IMG_3D_select, and then, the position pose calculation unit 312 may generate the position pose data POI based on the selection data WSD_select generated by the three-dimensional position data generation unit 311.

Note that a processing for selecting a part of the image data IMG_3D as the selection data IMG_3D_select may be the same as a processing for selecting a part of the image data IMG_2D as the selection data IMG_2D_select. Therefore, in the below-described description, a description related to one of the processing for selecting a part of the image data IMG_3D as the selection data IMG_3D_select and the processing for selecting a part of the image data IMG_2D as the selection data IMG_2D_select may be used as a description related to the other one of the processing for selecting a part of the image data IMG_3D as the selection data IMG_3D_select and the processing for selecting a part of the image data IMG_2D as the selection data IMG_2D_select. For example, the below-described description related to the "processing for selecting a part of image data IMG_2D as selection data IMG_2D_select" may be used as the description related to the "processing for selecting a part of image data IMG_3D as selection data IMG_3D_select" by replacing "image data IMG_2D" and "selection data IMG_2D_select" with "image data IMG_3D" and "selection data IMG_3D_select", respectively.

The control apparatus 3 may select at least one of the selection data IMG_2D_select and the selection data WSD_select from at least one of the image data IMG_2D and the three-dimensional position data WSD based on a designation area DSA. In this case, the designation area DSA may be considered to directly or indirectly indicate a data part that should be selected as at least one of the selection data IMG_2D_select and the selection data WSD_select. For example, the designation area DSA may directly or indirectly indicate an area in which an image part, which should be included in the selection data IMG_2D_select, of the image indicated by the image data IMG_2D is distributed. For example, the designation area DSA may directly or indirectly indicate an area in which a point, which should be included in the selection data WSD_select, of the plurality of points indicated by the point cloud data that is the three-dimensional position data WSD is distributed. For example, the designation area DSA may directly or indirectly indicate an area in which a pixel (a depth pixel), which should be included in the selection data IMG_2D_select, of the plurality of pixels (depth pixels) indicated by the depth image data that is the three-dimensional position data WSD is distributed.

Here, considering that the position pose data POI is generated (namely, at least one of the position and the pose of the target object OBJ is calculated) based on at least one of the selection data IMG_2D_select and the selection data WSD_select, it is preferable that each of the selection data IMG_2D_select and the selection data WSD_select includes data related to the target object OBJ. Therefore, it is preferable that the designation area DSA is an area including at least a part of a space in which the target object OBJ is positioned. In other words, it is preferable that the designation area DSA is an area indicating at least a part of the space in which the target object OBJ is positioned. For example, in a case where the plurality of target objects OBJ are contained in the container CB, it is preferable that the designation area DSA is an area including at least a part of the containing space SP of the container CB in which the plurality of target objects OBJ are allowed to be contained.

The designation area DSA may be an area including at least one target object OBJ contained in the container CB. For example, in a case where the plurality of target objects OBJ are contained in the container CB, the designation area DSA may be an area including at least one of the plurality of target objects OBJ contained in the container CB.

Note that the designation area DSA may be an area including at least a part of a placement space of the placing apparatus T in which the plurality of target objects OBJ are allowed to be placed, in a case where the plurality of target objects OBJ are placed on the placing apparatus T (the placing member) that is different from the container CB. The designation area DSA may be an area including at least one target object OBJ placed on the placing apparatus T. For example, in a case where the plurality of target objects OBJ are placed on the placing apparatus T, the designation area DSA may be an area including at least one of the plurality of target objects OBJ placed on the placing apparatus T. In the below-described description using the terms of "container CB" and "containing" in the fifth modified example, the term of "container CB" may be replaced with the terms "placing apparatus T (placing member)" and "placement", respectively.

On the other hand, each of the selection data IMG_2D_select and the selection data WSD_select may not include data related to the non-target object that is different from the target object OBJ. This is because the calculated result of the position and the pose of the non-target object is not necessarily required to generate the robot control signal for controlling the robot 1 so that the end effector 4 performs the predetermined process on the target object OBJ. Note that at least one of at least a part of the end effector 4, at least a part of the robot arm 12, and the surrounding object (for example, the placing apparatus T such as the container CB) that is positioned around the robot 1 is one example of the non-target object, as described above. Therefore, the designation area DSA may be an area that does not include at least a part of a space in which the non-target object is positioned. For example, in a case where the plurality of target objects OBJ are contained in the container CB, the designation area DSA may be an area that does not include at least a part of the container CB that is the non-target object.

However, the designation area DSA may be an area including at least a part of the space in which the non-target object is positioned. For example, in order to control the robot arm 12 to move the end effector 4, the control apparatus 3 generates the robot control signal so that the end effector 4 does not interfere with any other object that is different from the end effector 4. In this case, in order to determine whether or not the end effector 4 interferes with any other object that is different from the end effector 4, the control apparatus 3 may calculate at least one of the position and the pose of the end effector 4 and at least one of the position and the pose of any other object that may interfere with the end effector 4. Therefore, the designation area DSA may be an area including at least a part of a space in which at least one of the end effector 4 and any other object that may interfere with the end effector 4 is positioned. In this case, at least one of the selection data IMG_2D_select and the selection data WSD_select includes data related to at least one of the end effector 4 and any other object that may interfere with the end effector 4. As a result, the control apparatus 3 may calculate the position and / or the pose of at least one of the end effector 4 and any other object that may interfere with the end effector 4 based on at least one of the selection data IMG_2D_select and the selection data WSD_select. and may determine whether or not the end effector 4 interferes with any other object that is different from the end effector 4 based on the calculated result of the position and / or the pose of at least one of the end effector 4 and any other object that may interfere with the end effector 4.

The designation area DSA may be designated by the user. Especially, an initial state of the designation area DSA may be designated by the user. For example, at least one of an initial position and an initial pose of the designation area DSA may be designated by the user as the initial state of the designation area DSA. Note that the designation area DSA in the initial state may be referred to as an initial designation area. However, the designation area DSA may be automatically set by the control apparatus 3. Especially, the initial state of the designation area DSA may be automatically set by the control apparatus 3. Specifically, at least one of the initial position and the initial pose of the designation area DSA may be automatically designated by the control apparatus 3 as the initial state of the designation area DSA.

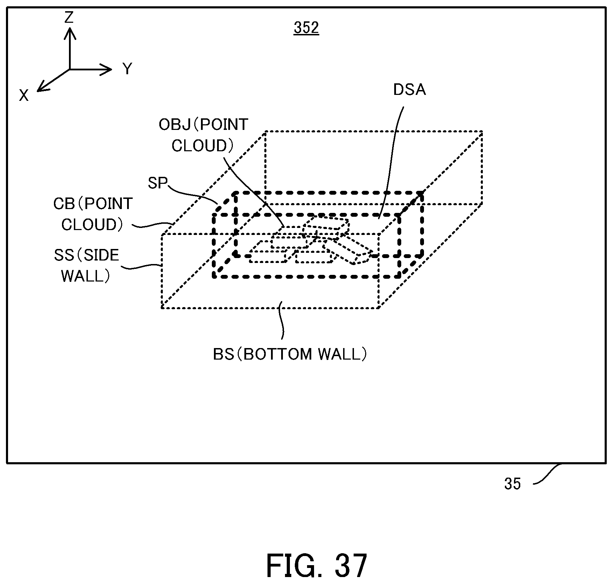

In a case where the user designates the designation area DSA, the output apparatus 35, which is configured to serve as the display apparatus, may display an area designation screen 352, which is operable by the user to ser the designation area DSA, as a GUI (Graphical User Interface), and the user may input an instruction for designating the DSA by using the input apparatus 34 through the area designation screen 352 displayed on the output apparatus 35. One example of the area designation screen 352 is illustrated in FIG. 37. As illustrated in FIG. 37, the area designation screen 352 may display the container CB positioned in a virtual three-dimensional space. For example, the area designation screen 352 may display a point cloud indicated by point cloud data corresponding to at least a part of the container CB, as one example of the container CB placed in the virtual three-dimensional space. Note that the illustration of the plurality of points included in the point cloud of the container CB is omitted in FIG. 37 for the clarity of the drawing.

In order to display the container CB, the imaging system 2 may generate the image data IMG_3D by imaging at least a part of the container CB, for example. In this case, the imaging system 2 may generate the image data IMG_3D by imaging at least a part of the container CB in which the target object OBJ is contained. Alternatively, the imaging system 2 may generate the image data IMG_3D by imaging at least a part of the container CB in which the target object OBJ is not contained. Then, the control apparatus 3 may generate the point cloud data of the container CB based on the image data IMG_3D. Note that a processing for generating the point cloud data of the container CB based on the image data IMG_3D may be the same as a processing for generating the point cloud data, which is one example of the three-dimensional position data WSD, based on the image data IMG_3D. Then, the control apparatus 3 may perform a coordinate transformation for transforming a coordinate of the point cloud indicated by the point cloud data from a coordinate in the 3D imaging coordinate system to a coordinate in a coordinate system of the virtual three-dimensional space. Then, the control apparatus 3 may control the output apparatus 35 to display the area designation screen 352 that includes the container CB, which is formed by the point cloud positioned at the coordinate obtained by the coordinate transformation, in the virtual three-dimensional space.

Alternatively, the control apparatus 3 may control the output apparatus 35 to display the area designation screen 352 in which a three-dimensional model (a container model) of the container CB that is different from the point cloud is displayed as one example of the container CB placed in the virtual three-dimensional space. The container model may be a CAD model of the container CB. Alternatively, the container model may be a point cloud model of the container CB. In a case where the container model (especially, the CAD model of the container) is used, the control apparatus 3 may calculate at least one of the position and the pose of the container CB based on at least one of the image data IMG_2D and IMG_3D generated by imaging at least a part of the container CB. Then, the control apparatus 3 may control the output apparatus 35 to display the area designation screen 352 in which the container model is positioned at a position corresponding to the calculated result of the position of the container CB in the virtual three-dimensional space. The control apparatus 3 may control the output apparatus 35 to display the area designation screen 352 in which the container model is positioned with a pose corresponding to the calculated result of the pose of the container CB in the virtual three-dimensional space. Alternatively, the control apparatus 3 may control the output apparatus 35 to display the area designation screen 352 in which the container model is positioned at a predetermined position with a predetermined pose in the virtual three-dimensional space, without calculating the position and the pose of the container CB. For example, the control apparatus 3 may control the output apparatus 35 to display the area designation screen 352 in which the container model is positioned at a position set by the user in the virtual three-dimensional space. For example, the control apparatus 3 may control the output apparatus 35 to display the area designation screen 352 in which the container model is positioned with a pose set by the user in the virtual three-dimensional space.

Then, the user may designate the designation area DSA in the area designation screen 352 (namely, in the virtual three-dimensional space defined in the area designation screen 352, the same applies in the below-described description).

As one example, the user may designate, as the designation area DSA, an area including at least a part of the containing space SP of the container CB in which the plurality of target objects are allowed to be contained (for example, a space surrounded by the point cloud indicated by the point cloud data corresponding to at least a part of the container CB) in the area designation screen 352. In this case, as illustrated in FIG. 37, the area designation screen 352 may display at least one target object OBJ contained in the containing space SP of the container CB, in addition to or instead of the container CB. For example, the control apparatus 3 may generate point cloud data of at least one target object OBJ contained in the containing space SP of the container CB based on the image data IMG_3D generated by the imaging system 2 imaging at least one target object OBJ contained in the containing space SP of the container CB. In this case, the imaging system 2 may image at least a part of the container CB in which the target object OBJ is contained. However, the imaging system 2 may generate the point cloud data of the image data IMG_3D generated by imaging at least a part of the container CB in which the target object OBJ is not contained. Then, the control apparatus 3 may perform the coordinate transformation for transforming the coordinate of the point cloud indicated by the point cloud data from the coordinate in the 3D imaging coordinate system to the coordinates in the coordinate system of virtual three-dimensional space. Then, the control apparatus 3 may control the output apparatus 35 to display the area designation screen 352 that includes at least one target object OBJ, which is formed by the point cloud positioned at the coordinate obtained by the coordinate transformation, in the virtual three-dimensional space. In this case, the user may designate, as the designation area DSA, an area including at least one target object OBJ contained in the container CB in the area designation screen 352. As another example, the user may designate, as the designation area DSA, an area that does not include at least a part of the non-target object that is different from the target object OBJ in the area designation screen 352. For example, since the container CB that is one example of the non-target object is displayed in the area designation screen 352, the user may designate, as the designation area DSA, an area that does not include at least a part of the container CB in the area designation screen 352.

For example, the user may designate, in the area designation screen 352, the position of the designation area DSA in the virtual three-dimensional space defined in the area designation screen 352. Note that the virtual three-dimensional space defined in the area designation screen 352 may be aligned with the 3D imaging coordinate system. Alternatively, the virtual three-dimensional space defined in the area designation screen 352 may be aligned with a coordinate system (for example, the global coordinate system) that is different from the 3D imaging coordinate system. The user may designate, in the area designation area 352, the pose of the designation area DSA in the virtual three-dimensional space defined in the area designation screen 352. For example, the user may designate, in the area designation screen 352, the size of the designation area DSA in the virtual three-dimensional space defined in the area designation screen 352.

Note that "the size of the designation area DSA" may mean a shape of the designation area DSA, a magnitude of the designation area DSA, or a volume of the designation area DSA. In this case, "the size of the designation area DSA" may be referred to as the shape of the designation area DSA, the size of the designation area DSA, or the volume of the designation area DSA. "The size of the designation area DSA" may be replaced with the shape of the designation area DSA, the size of the designation area DSA, or the volume of the designation area DSA.

Then, the control apparatus 3 may set the designation area DSA based on a designated result of the designation area DSA by the user. For example, the control apparatus 3 may set the designation area DSA in the global coordinate system (alternatively, in other coordinate systems such as the robot coordinate system) by performing a coordinate transformation based on the designated result of the designation area DSA by the user in the virtual three-dimensional space defined in the area specification screen 352 (for example, the designated result of the designation area DSA in the coordinate system of the virtual three-dimensional space aligned with the 3D imaging coordinate system).

Note that the designation area DSA is set relative to the container CB in the virtual three-dimensional space defined in the area designation screen 352 in the example illustrated in FIG. 37. However, the container CB (namely, the container model) in the virtual three-dimensional space defined in the area designation screen 352 corresponds to the container CB in a real space (for example, a space in the global coordinate system). Therefore, setting the designation area DSA relative to the container CB in the virtual three-dimensional space defined in the area designation screen 352 may be considered equivalent to setting the designation area DSA relative to the container CB in the real space (for example, the space in the global coordinate system).

The control apparatus 3 may set at least one of a three-dimensional designation area DSA (see FIG. 36(b)) that is usable to select the selection data WSD_select from the three-dimensional position data WSD and a two-dimensional designation area DSA (see FIG. 36(a) and FIG. 36(c)) that is usable to select the selection data IMG_2D_select from the image data IMG_2D. In this case, the control apparatus 3 may select a part of the three-dimensional position data WSD as the selection data WSD_select by using the three-dimensional designation area DSA that is usable to select the selection data WSD_select from the three-dimensional position data WSD. Furthermore, the control apparatus 3 may select a part of the image data IMG_2D as the selection data IMG_2D_select by using the two-dimensional designation area DSA that is usable to select the selection data IMG_2D_select from the image data IMG_2D.

Note that the three-dimensional designation area DSA that is usable to select the selection data WSD_select from the three-dimensional position data WSD is referred to as a designation area DSA_3D in the below-described description. Similarly, the two-dimensional designation area DSA that is usable to select the selection data IMG_2D_select from the image data IMG_2D is referred to as a designation area DSA_2D. Moreover, the designation area DSA means at least one of the three-dimensional designation area DSA_3D and the two-dimensional designation area DSA_2D in a case where there is no specific notation.

As a first example, the control apparatus 3 may set the designation area DSA_3D based on the selected result of the designation area DSA_3D by the user. Furthermore, the control apparatus 3 may set the designation area DSA_2D based on the set designation area DSA_3D. For example, the control apparatus 3 may project the designation area DSA_3D on a virtual two-dimensional plane corresponding to the image indicated by the image data IMG_2D to set the projected designation area DSA_3D as the designation area DSA_2D. For example, the control apparatus 3 may generate the designation area DSA_2D by performing a coordinate transformation for transforming the coordinate of the designation area DSA_3D. As one example, the control apparatus 3 may generate the designation area DSA_2D by performing the coordinate transformation for transforming the coordinate of the designation area DSA_3D from the coordinate of the 3D imaging coordinate system to the coordinate of the 2D imaging coordinate system.

In the first example described above, the control apparatus 3 sets the designation area DSA_2D based on the designation area DSA_3D. As a second example, the control apparatus 3 may set the designation area DSA_2D based on the designated result of the designation area DSA_2D. In this case, the area designation screen 352 may display the container CB in a virtual two-dimensional plane, in addition to or instead of displaying the container CB in the virtual three-dimensional space. For example, the area designation screen 352 may display the image indicated by the image data IMG_2D generated by the imaging system 2 imaging at least a part of the container CB. For example, the area designation screen 352 may display a two-dimensional model (a two-dimensional image) of the container CB. The two-dimensional model of the container CB may be a two-dimensional model generated by projecting the above-described three-dimensional container model on a virtual two-dimensional plane. In this case, the user may designate the designation area DSA_2D relative to the container CB displayed as the two-dimensional image, and the control apparatus 3 may set the designation area DSA_2D based on the designated result of the designation area DSA_2D in the virtual two-dimensional plane.

The designation area DSA may include a plurality of partial areas, each of which is usable as the designation area DSA. Namely, the designation area DSA including the plurality of partial areas may be set. In this case, at least a part of one partial area of the plurality of partial areas may be different from at least a part of another partial area of the plurality of partial areas. Note that the partial area included in the designation area DSA may be referred to as a partial designation area or a sub designation area. Alternatively, the partial area included in the designation area DSA may be referred to as the designation areas DSA because the partial area included in the designation area DSA is usable as the designation area DSA.

After the designation area DSA_3D is set, the position pose calculation unit 312 may select, as the selection data WSD_select, the data part of the three-dimensional position data WSD corresponding to the designation area DSA_3D. For example, as illustrated in FIG. 36(b) described above, the position pose calculation unit 312 may select, as the selection data WSD_select, the data part indicating the three-dimensional position of the point, which is included in the designation area DSA_3D, of the plurality of points indicated by the three-dimensional position data WSD (for example, the plurality of points included in the point cloud or the plurality of pixels included in the depth image). For example, the position pose calculation unit 312 may transform the designation area DSA_3D set in the global coordinate system to the designation area DSA_3D in the coordinate system of the three-dimensional position data WSD (for example, the 3D imaging coordinate system), and select the data part indicating the three-dimensional position of the point, which is included in the transformed designation area DSA_3D, as the selection data WSD_select. As a result, the position pose calculation unit 312 may generate the selection data WSD_select that selectively indicates the three-dimensional position of at least a part of the target object group, which includes at least a part of the plurality of target objects OBJ contained in the container CB. The position pose calculation unit 312 may generate the selection data WSD_select that does not include the data part indicating the three-dimensional position of at least a part of the non-target objects such as the container CB. The position pose calculation unit 312 may generate the selection data WSD_select from which the data part indicating the three-dimensional position of at least a part of the non-target objects such as the container CB is excluded.

Similarly, after the designation area DSA_2D is set, the position pose calculation unit 312 may select, as the selection data IMG_2D_select, the data part of the image data IMG_2D corresponding to the designation area DSA_2D. For example, as illustrated in FIG. 36(a) described above, the position pose calculation unit 312 may select the data part, which indicates the image part included in the designation area DSA_2D, of the image indicated by the image data IMG_2D as the selection data IMG_2D_select. As a result, the position pose calculation unit 312 may generate the selection data IMG_2D_select that selectively indicates the image of at least a part of the target object group, which includes at least a part of the plurality of objects OBJ contained in the container CB. The position pose calculation unit 312 may generate the selection data IMG_2D_select that does not include the data part indicating the image of at least a part of the non-target object such as the container CB. The position pose calculation unit 312 may generate the selection data IMG_2D_select from which the data part indicating the image of at least a part of the non-target object such as the container CB is excluded.

Thus, in the fifth modified example, the control apparatus 3 may use the selection data IMG_2D_select and the selection data WSD_select, instead of the image data IMG_2D and the three-dimensional position data WSD, to generate the position pose data POI of the target object OBJ. Here, the selection data IMG_2D_select and the selection data WSD_select are a part of the image data IMG_2D and a part of the three-dimensional position data WSD, respectively. Therefore, a data size of the selection data IMG_2D_select and a data size of the selection data WSD_select are smaller than a data size of the image data IMG_2D and a data size of the three-dimensional position data WSD, respectively. As a result, the position pose calculation unit 312 can reduce the time required to generate the position pose data POI, compared to a case where the position pose data POI is generated based on at least one of the image data IMG_2D and the three-dimensional position data WSD whose data size is relatively large.

Furthermore, the selection data IMG_2D_select and selection data WSD_select includes the data part related to at least a part of the plurality of target objects OBJ contained in the container CB. Therefore, the position pose calculation unit 312 can properly generate the position pose data POI indicating at least one of the position and the pose of the target object OBJ even in a case where the position pose data POI is generated based on the selection data IMG_2D_select and the selection data WSD_select, as with a case where the position pose data POI is generated based on at least one of the image data IMG_2D and the three-dimensional position data WSD.

Furthermore, the selection data IMG_2D_select and the selection data WSD_select do not include the data part related to at least a part of the non-target object that is different from the target object OBJ. Namely, the data part related to at least a part of the non-target object that is different from the target object OBJ is excluded from the selection data IMG_2D_select and the selection data WSD_select. Therefore, in a case where the position pose data POI is generated based on the selection data IMG_2D_select and the selection data WSD_select, it is less likely that the non-target objects is erroneously detected as the target object OBJ, compared to a case where the position pose data POI is generated based on at least one of the image data IMG_2D and the three-dimensional position data WSD. Therefore, it is less likely that the position pose calculation unit 312 erroneously generate the position pose data of the non-target objects as the position pose data POI of the target object OBJ. Therefore, the position pose calculation unit 312 can properly generate the position pose data POI indicating at least one of the position and the pose of target object OBJ.

Incidentally, in a case where the control apparatus 3 performs the resizing processing as described in the third modified example, the control apparatus 3 may generate first image data IMG_2D_low by performing the resizing processing on the image data IMG_2D, and then select a part of the first image data IMG_2D_low as first selection data IMG_2D_select. In this case, the control apparatus 3 may generate the position pose data POI based on the first selection data IMG_2D_select. Alternatively, the control apparatus 3 may select a part of the image data IMG_2D as second selection data IMG_2D_select, and then generate the second image data IMG_2D_low by performing the resizing processing on the second image data IMG_2D_select. In this case, the control apparatus 3 may generate the position pose data POI based on the second image data IMG_2D_low. Note that the second image data IMG_2D_low is typically the same as the first selection data IMG_2D_select, however, they may be partially different from each other. In both cases, both the effect achievable in the third modified example and the effect achievable in the fifth modified example are achievable.

Moreover, in a case where the control apparatus 3 performs the resizing processing as described in the third modified example, the control apparatus 3 may generate first three-dimensional position data WSD_low by performing the resizing processing on the three-dimensional position data WSD, and then select a part of the first three-dimensional position data WSD_low as first selection data WSD_select. In this case, the control apparatus 3 may generate the position pose data POI based on the first selection data WSD_select. Alternatively, the control apparatus 3 may select a part of the three-dimensional position data WSD as second selection data WSD_select, and then generate second three-dimensional position data WSD_low by performing the resizing processing on the second selection data WSD_select. In this case, the control apparatus 3 may generate the position pose data POI based on the second three-dimensional position data WSD_low. Note that the second three-dimensional position data WSD_low is typically the same as the first selection data WSD_select, however, they may be partially different from each other. In both cases, both the effect achievable in the third modified example and the effect achievable in the fifth modified example are achievable.

### (4-5-2) Change of Designation Area DSA based on at least one of Position and Pose of Container CB

As described above, the designation area DSA is set relative to the container CB. Here, there is a possibility that the container CB, in which the target object OBJ on which the end effector 4 performs the predetermined process, changes during a process for performing the robot control processing. For example, there is a possibility that the end effector 4 performs the predetermined process on the target object OBJ contained in a first container CB#11 that is positioned at a first position, and then perform the predetermined process on the target object OBJ contained in a second container CB#12 that is positioned at a second position different from the first position and that is different from the first container CB#11. Note that one reason why the first position at which the first container CB#11 is positioned is different from the second position at which the second container CB#12 is positioned is that the second container CB that should be positioned at the first position is mistakenly positioned at the second position. Another reason why the first position at which the first container CB#11 is positioned is different from the second position at which the second container CB#12 is positioned is that the second container CB that should be positioned at the first position is intentionally positioned at the second position. For example, there is a possibility that the end effector 4 performs the predetermined process on the target object OBJ contained in the first container CB#11 positioned at the first position, and then, performs the predetermined process on the target object OBJ contained in the second container CB#12 positioned at the second position after the first container CB#11 positioned at the first position is replaced with the second container CB#12 different from the first container CB#11. Note that the end effector 4 may perform the predetermined process on all of the plurality of target objects OBJ contained in the first container CB#11, and then perform the predetermined process on the target object OBJ contained in the second container CB#12 in this case. Alternatively, the end effector 4 may perform the predetermined process only on a part of the plurality of target objects OBJ contained in the first container CB#11, and then perform the predetermined process on the target object OBJ contained in the second container CB#12. The first container CB#11, which should be replaced, may remain positioned on the support surface S or the placing apparatus T, or may be removed from the support surface S or the placing apparatus T.

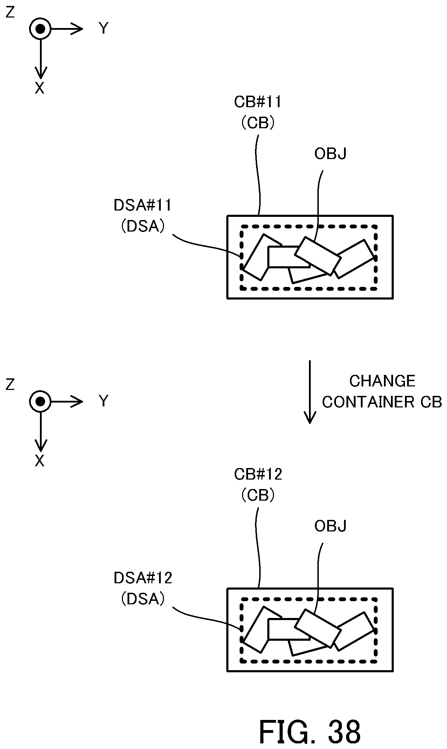

Here, FIG. 38 illustrates an example in which the position and the pose of the first container CB#11 are substantially the same as the position and the pose of the second container CB#12, respectively, in a situation where the container CB containing the target object OBJ, on which the end effector 4 should perform the predetermined process, has been changed from the first container CB#11 to the second container CB#12. Note that a state in which "the position and the pose of the first container CB#11 are substantially the same as the position and the pose of the second container CB#12, respectively" may include a state in which "the position and the pose of the first container CB#11 are literally exactly the same as the position and the pose of the second container CB#12, respectively". The state in which "the position and the pose of the first container CB#11 are substantially the same as the position and the pose of the second container CB#12, respectively" may include a state in which "the position of the first container CB#11 is not literally exactly the same as the position of the second container CB#12, but a difference between the position of the first container CB#11 and the position of the second container CB#12 is so small that the end effector 4 can properly perform the predetermined process on the target object OBJ even in a case where the designation area DSA is not changed as described below". The state in which "the position and the pose of the first container CB#11 are substantially the same as the position and the pose of the second container CB#12, respectively" may include a state in which "the pose of the first container CB#11 is not literally exactly the same as the pose of the second container CB#12, but a difference between the pose of the first container CB#11 and the pose of the second container CB#12 is so small that the end effector 4 can properly perform the predetermined process on the target object OBJ even in a case where the designation area DSA is not changed as described below". In this case, the designation area DSA#11 set relative to the first container CB#11 may be used as the designation area DSA#12 set relative to the second container CB#12. This is because the position and the pose of the first container CB#11 are substantially the same as the position and the pose of the second container CB#12, respectively, and therefore, it is likely that the position and the pose of the containing space SP of the first container CB#11 containing the target object OBJ are substantially the same as the position and the poser of the containing space SP of the second container CB#12 containing the target object OBJ. Therefore, in this case, the control apparatus 3 may use the designation area DSA#11 set relative to the first container CB#11 as the designation area DSA#12 set relative to the second container CB#12. Specifically, the control apparatus 3 may set the position and the pose of the designation area DSA#11 set relative to the first container CB#11 as the position and the pose of the designation area DSA#12 relative to the second container CB#12. Then, the control apparatus 3 may select at least one of the selection data IMG_2D_select and WSD_select by using the designation area DSA#12, and generate the position pose data POI of the target object OBJ contained in the second container CB#12 based on at least one of the selection data IMG_2D_select and WSD_select.

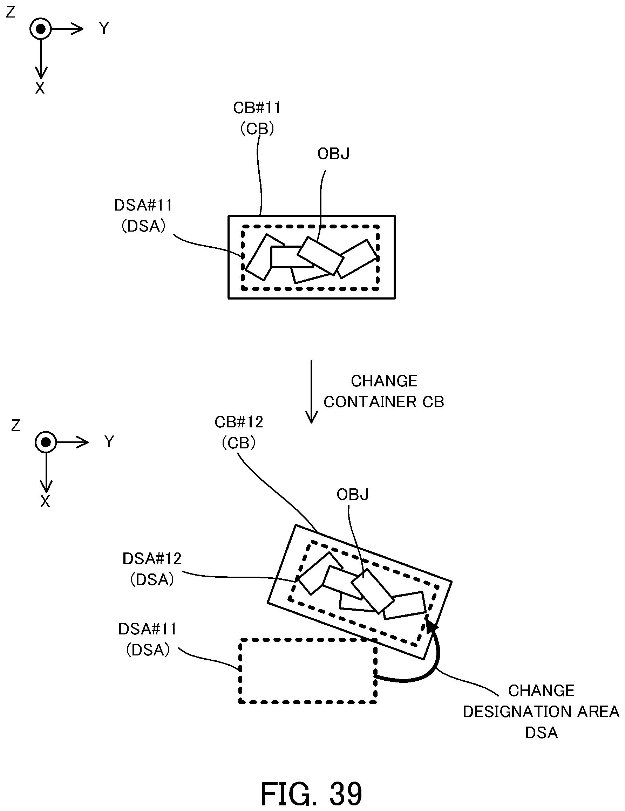

On the other hand, FIG. 39 illustrates an example in which the position of the first container CB#11 is different from the position of the second container CB#12 and / or the pose of the first container CB#11 is different from the pose of the second container CB#12 in a situation where the container CB containing the target object OBJ, on which the end effector 4 should perform the predetermined process, has been changed from the first container CB#11 to the second container CB#12. Note that a state in which "the position of the first container CB#11 is different from the position of the second container CB#12" may include a state in which "the difference between the position of the first container CB#11 and the position of the second container CB#12 is so large that the end effector 4 cannot properly perform the predetermined process on the target object OBJ unless the designation area DSA is changed as described below". A state in which "the pose of the first container CB#11 is different from the pose of the second container CB#12" may include a state in which "the difference between the pose of the first container CB#11 and the pose of the second container CB#12 is so large that the end effector 4 cannot properly perform the predetermined process on the target object OBJ unless the designation area DSA is changed as described below". In this case, there is a possibility that it is difficult to use the designation area DSA#11 set relative to the first container CB#11 as the designation area DSA#12 set relative to the second container CB#12. This is because the position of the first container CB#11 is different from the position of the second container CB#12 and / or the pose of the first container CB#11 is different from the pose of the second container CB#12, and as a result, it is likely that the position of the containing space SP of the first container CB#11 containing the target object OBJ is different from the position of the containing space SP of the second container CB#12 containing the target object OBJ and / or the pose of the containing space SP of the first container CB#11 containing the target object OBJ is different from the pose of the containing space SP of the second container CB#12 containing the target object OBJ. Therefore, in this case, the control apparatus 3 may change the designation area DSA#11 set relative to the first container CB#11 to the designation area DSA#12 relative to the second container CB#12, as illustrated in FIG. 39. Then, the control apparatus 3 may select at least one of the selection data IMG_2D_select and WSD_select by using the designation area DSA#12, and generate the position pose data POI of the target object OBJ contained in the second container CB#12 based on at least one of the selection data IMG_2D_select and WSD_select.

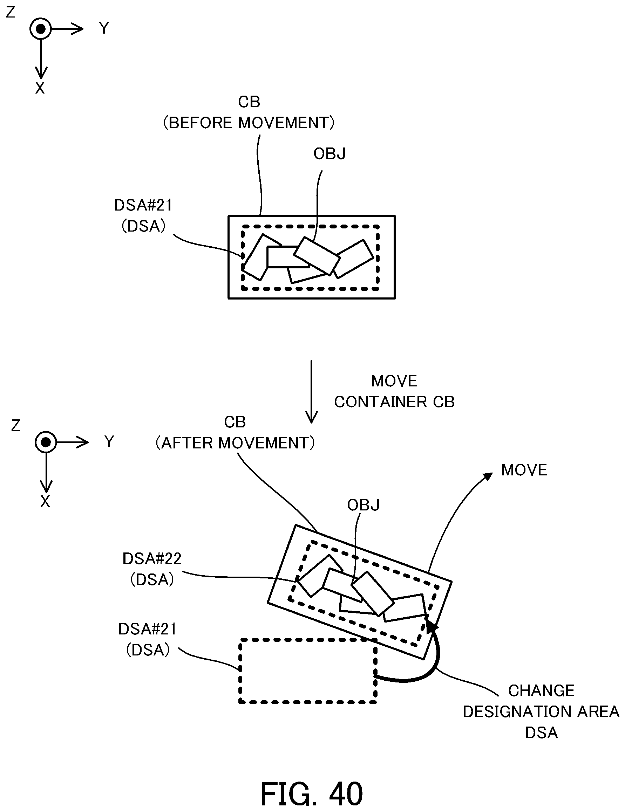

Note that there is a possibility that it is difficult to use the designation area DSA#21 set relative to the container CB that has not yet moved as the designation area DSA#22 set relative to the container CB that has already moved, not only in a case where the container CB containing the target object OBJ, on which the end effector 4 should perform the predetermined process, changes, but also in a case where the container CB containing the target object OBJ, on which the end effector 4 should perform the predetermined process, moves, as illustrated in FIG. 40. For example, there is a possibility that it is difficult to use the designation area DSA#21 set relative to the container CB that has not yet moved as the designation area DSA#22 set relative to the container CB that has already moved even in a case where the container CB moves by a replacement of the container CB. For example, there is a possibility that it is difficult to use the designation area DSA#21 set relative to the container CB that has not yet moved as the designation area DSA#22 set relative to the container CB that has already moved even in a case a transport apparatus moves the container CB positioned on the transport apparatus that is configured to transport the container CB. This is because the position of the container CB that has not yet moved is different from the position of the container CB that has already moved and / or the pose of the container CB that has not yet moved is different from the pose of the container CB that has already moved due to the movement of the container CB, and as a result, it is likely that the position of the containing space SP containing the target object OBJ in the container CB that has not yet moved is different from the position of the containing space SP containing the target object OBJ in the container CB that has already moved and / or the pose of the containing space SP containing the target object OBJ in the container CB that has not yet moved is different from the pose of the containing space SP containing the target object OBJ in the container CB that has already moved. Therefore, in this case, the control apparatus 3 may change the designation area DSA#21 set relative to the container CB that has not yet moved to the designation area DSA#22 relative to the container CB that has already moved, as illustrated in FIG. 40. Then, the control apparatus 3 may select at least one of the selection data IMG_2D_select and WSD_select by using the designation area DSA#22, and generate the position pose data POI of the target object OBJ contained in the container CB that has already moved based on at least one of the selection data IMG_2D_select and WSD_select.

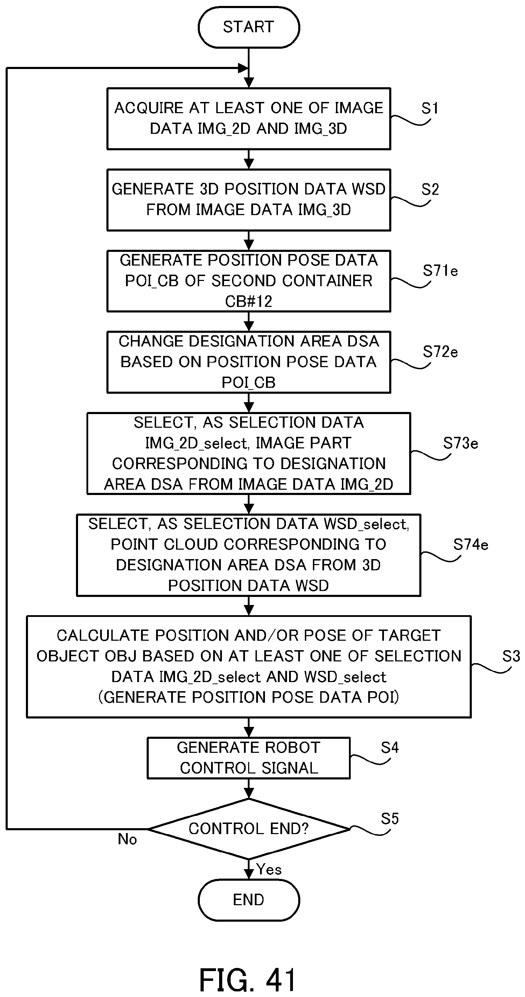

Next, with reference to FIG. 41, an example in which the designation area DSA#11 set relative to the first container CB#11 is changed to the designation area DSA#12 for the second container CB#12 will be described. FIG. 41 is a flowchart that illustrates a flow of the robot control processing that includes a processing for changing the designation area DSA#11 set relative to the first container CB#11 to the designation area DSA#12 for the second container CB#12. However, the below-described description may be used a description of an example in which the designation area DSA#21 set relative to the container CB that has not yet moved is changed to the designation area DSA#22 for the container CB that has already moved, replacing "the first container CB#11", "the second container CB#12", "the designation area DSA#11", and "the designation area DSA#12" with "the container that has not yet moved", "the container CB that has already moved", "the designation area DSA#21", and "the designation area DSA#22".

As illustrated in FIG. 41, even in the fifth modified example, the control apparatus 3 acquires at least one of the image data IMG_2D and IMG_3D from the imaging system 2 by using the communication apparatus 33 (the step S1). Furthermore, the three-dimensional position data generation unit 311 of the control apparatus 3b generates the three-dimensional position data WSD based on the acquired image data IMG_3D each time the control apparatus 3 acquires the image data IMG_3D (the step S2).

Then, the position pose calculation unit 312 generates position pose data POI_CB indicating at least one of the position and the pose of the second container CB#12 (a step S71e). Note that a processing for generating the position pose data POI_CB at the step S71e may be the same as the processing for calculating position pose data POI of the target object OBJ at the step S3. Namely, the position pose calculation unit 312 may generate the position pose data POI_CB of the second container CB#12 by performing the position pose computing that includes the matching processing using a template model of the second container CB#12 and at least one of the image data IMG_2D acquired at the step S1 and the three-dimensional position data WSD generated at the step S2. Note that the template model of the first container CB#11 may be used as the template model of the second container CB#12 in a case where the shape of the second container CB#12 is substantially the same as the shape of the first container CB#11. Namely, a common template model may be used as both the template model of the first container CB#11 and the template model of the second container CB#12.

However, in a case where the position pose data POI_CB is calculated, it is preferable that at least a part of the second container CB#12 is captured in the image indicated by at least one of the image data IMG_2D and IMG_3D acquired at the step S1 includes at least a part of the second container CB#12. Therefore, the imaging system 2 may image at least a part of the second container CB#12, in addition to the target object OBJ contained in the second container CB#12, in order to generate at least one of the image data IMG_2D and IMG_3D acquired by the control apparatus 3 at the step S1. As a result, the three-dimensional position data WSD generated at the step S2 indicates the three-dimensional position of at least a part of the second container CB#12.

Alternatively, in a case where there is a fiducial member (for example, a marker) whose relative position and / or relative pose relative to the second container CB#12 is known, the imaging system 2 may image at least a part of the fiducial member in addition to or instead of imaging at least a part of the second container CB#12. Then, the control apparatus 3 may calculate at least one of a position and a pose of the fiducial member based on at least one of the image data IMG_2D and the image data IMG_3D (the three-dimensional position data WSD), and generate the position pose data POI_CB of the second container CB#12 based on a calculated result of at least one of the position and the pose of the fiducial member and known information related to at least one of the relative position and the relative the pose of the fiducial member relative to the second container CB#12.

Note that the control apparatus 3 may generate the position pose data POI_CB of the second container CB#12 based on at least one of the image data IMG_2D and IMG_3D that is different from at least one of the image data IMG_2D and IMG_3D acquired at the step S1. Namely, the control apparatus 3 may separately acquire at least one of the image data IMG_2D and IMG_3D that is mainly used to generate the position pose data POI_CB at the step S71e, in addition to at least one of the image data IMG_2D and IMG_3D that is mainly used to generate the position pose data POI of the target object OBJ at the step S3. In this case, the imaging system 2 may image the second container CB#12 to generate at least one of the image data IMG_2D and IMG_3D that is mainly used to generate the position pose data POI_CB at the step S71e, before imaging the target object OBJ contained in the second container CB#12 to generate at least one of the image data IMG_2D and IMG_3D that is mainly used to generate the position pose data POI of the target object OBJ at the step S3. In this case, the imaging system 2 may image the second container CB#12 from a position that is away from the second container CB#12 by a first distance to generate at least one of the image data IMG_2D and IMG_3D that is mainly used to generate the position pose data POI_CB at the step S71e. The first distance may be a distance satisfying a condition that a relatively wide range of the second container CB#12 is included in the imaging field of view of the imaging system 2 positioned at the location that is away from the second container CB#12 by the first distance. Then, the imaging system 2 may approach the second container CB#12, and then, image the target object OBJ contained in the second container CB#12 from a position that is away from the second container CB#12 by a second distance to generate at least one of the image data IMG_2D and IMG_3D that is mainly used to generate the position pose data POI of the target object OBJ. Since the imaging system 2 approaches the second container CB#12, the second distance may be shorter than the first distance. However, the imaging system 2 may image the second container CB#12 to generate at least one of the image data IMG_2D and IMG_3D that is mainly used to generate the position pose data POI_CB at the step S71e, after imaging the target object OBJ contained in the second container CB#12 to generate at least one of the image data IMG_2D and IMG_3D that is mainly used to generate the position pose data POI of the target object OBJ at the step S3.

In a case where the imaging system 2 images the second container CB#12 to generate at least one of the image data IMG_2D and IMG_3D that is mainly used to generate the position pose data POI_CB at the step S71e, the imaging system 2 may image the second container CB#12 as described below. As a first example, the imaging system 2 may image at least a part of the second container CB#12 that includes at least one corner part of four corner parts of the second container CB#12 (for example, four corner parts of the second container CB#12 in FIG. 39) in a case where the imaging system 2 observes the second container CB#12, which is positioned below the imaging system 2, from a position above the second container CB#12 (namely, observes the container CB#12, which is positioned at the -Z side, from the +Z side of the second container CB#12). In this case, the imaging system 2 may image at least a part of the second container CB#12 that includes at least a first corner part of the second container CB#12, or may image at least a part of the second container CB#12 that includes at least a second corner part of the second container CB#12 that is different from the first corner part after imaging at least a part of the second container CB#12 that includes at least the first corner part of the second container CB#12. As a second example, the imaging system 2 may image at least a part of the second container CB#12 that includes at least two corner parts, which are arranged along a diagonal direction, of the four corner parts of the second container CB#12 (for example, the four corner parts of the second container CB#12 in FIG. 39) in a case where the imaging system 2 observes the second container CB#12, which is positioned below the imaging system 2, from a position above the second container CB#12 (namely, observes the container CB#12, which is positioned at the -Z side, from the +Z side of the second container CB#12). In this case, the imaging system 2 may image at least a part of the second container CB#12 that includes at least a pair of third corner parts, which are arranged along the diagonal direction, of the second container CB#12, and then image at least a part of the second container CB#12 that includes at least a pair of fourth corner parts, which are different from a pair of the third corner parts and which are arranged along the diagonal direction, of the second container CB#12. As a third example, imaging system 2 may image the entire second container CB#12. In this case, the imaging system 2 may image the entire upper surface of the side wall SS of the second container CB#12.

Moreover, in the example illustrated in FIG. 41, the control apparatus 3 generates the positional pose data POI_CB of the second container CB#12 after generating the three-dimensional position data WSD. However, the control apparatus 3 may generate the positional pose data POI_CB of the second container CB#12 before generating the three-dimensional position data WSD. Alternatively, the control apparatus 3 may generate the three-dimensional position data WSD and the position pose data POI_CB of the second container CB#12 at the same timing.

Then, the position pose calculation unit 312 changes the designation area DSA#11 set relative to the first container CB#11 to the designation area DSA#12 for the second container CB#12, based on the position pose data POI_CB generated at the step S71e (a step S72e). Note that an example in which the designation area DSA#11 set relative to the first container CB#11 is the initial designation area set by the user (alternatively, automatically set by the control apparatus 3) as described above will be described for convenience of description in the below-described description.

Specifically, the position pose calculation unit 312 may change the designation area DSA#11, which includes at least a part of the containing space SP of the first container CB#11, to the designation area DSA#12, which includes at least a part of the containing space SP of the second container CB#12, based on the position pose data POI_CB. Namely, the position pose calculation unit 312 may newly set the designation area DSA#12 by changing the designation area DSA#11, which includes at least a part of the containing space SP of the first container CB#11, to the designation area DSA#12, which includes at least a part of the containing space SP of the second container CB#12, based on the position pose data POI_CB. Specifically, the position pose calculation unit 312 may move the designation area DSA#11 based on the position pose data POI_CB so that the designation area DSA#11, which includes at least a part of the containing space SP of the first container CB#11, is changed to the designation area DSA#12, which includes at least a part of the containing space SP of the second container CB#12, thereby set the moved designation area DSA#11 as the designation area DSA#12. The position pose calculation unit 312 may change at least one of the position and the pose of the designation area DSA#11 based on the position pose data POI_CB so that the designation area DSA#11, which includes at least a part of the containing space SP of the first container CB#11, is changed to the designation area DSA#12, which includes at least a part of the containing space SP of the second container CB#12, thereby set the designation area DSA#11, at least one of the position and the pose of which has been changed, as the designation area DSA#12. Thus, changing the designation area DSA may be considered to be equivalent to setting the designation area DSA.

In a case where the designation area DSA#11 is changed to the designation area DSA#12 that includes at least a part of the containing space SP of the second container CB#12, a state of the designation area DSA#11 is changed from a state in which the designation area DSA#11 includes at least a part of the containing space SP of the first container CB#11 to a state in which the designation area DSA#11 includes at least a part of the containing space SP of the second container CB#12. In this case, changing the designation area DSA#11 to the designation area DSA#12 may be considered to be equivalent to newly setting designation area DSA#12 by changing the designation area DSA#11 so that the designation area DSA#11 follows a change of at least one of the position and the pose of at least a part of the containing space SP.

In order to change the designation area DSA#11 to the designation area DSA#12 that includes at least a part of the containing space SP of the second container CB#12, the position pose calculation unit 312 may use the position pose data POI_CB of the first container CB#11 in addition to the position pose data POI_CB of the second container CB#12. Here, in a case where the designation area DSA#11 set relative to the first container CB#11 is the initial designation area set by the user (alternatively, automatically set by the control apparatus 3) as described above, at least one of the position and the pose of the first container CB#11 is known information to the control apparatus 3. This is because the calculated result or the input result of at least one of the position and the pose of the first container CB#11 is used to set the designation area DSA#11 that is the initial designation area as described above. Therefore, it can be said that the position pose data POI_CB of the first container CB#11 is known information to the control apparatus 3. However, in a case where the designation area DSA is set based on the three-dimensional position data WSD (for example, the point cloud indicated by the point cloud data) corresponding to at least a part of the container CB as described above, the control apparatus 3 may not calculate at least one of the position and the pose of the container CB in order to set the designation area DSA. Namely, the control apparatus 3 may not calculate at least one of the position and the pose of the first container CB#11 in order to set the designation area DSA#11. In this case, there is a possibility that at least one of the position and the pose of the first container CB#11 is not known information to the control apparatus 3. In this case, the control apparatus 3 may separately acquire information related to at least one of the position and the pose of the first container CB#11 (the position pose data POI_CB of the first container CB#11). Then, the position pose calculation unit 312 may calculate at least one of a position deviation amount, which is a difference between the position of the first container CB#11 and the position of the second container CB#12, and a pose deviation amount, which is a difference between the pose of the first container CB#11 and the pose of the second container CB#12, based on the position pose data POI_CB of the first container CB#11 and the position pose data POI_CB of the second container CB#12. Here, the positional deviation amount, which is the difference between the position of the first container CB#11 and the position of the second container CB#12, should be equivalent to a difference between the position of the containing space SP of the first container CB#11 and the position of the containing space SP of the second container CB#12. Similarly, the pose deviation amount, which is the difference between the pose of the first container CB#11 and the pose of the second container CB#12, should be equivalent to a difference between the pose of the containing space SP of the first container CB#11 and the pose of the containing space SP of the second container CB#12. In this case, the position pose calculation unit 312 may change the position of the designation area DSA#11, which includes at least a part of the containing space SP of the first container CB#11, by a change amount corresponding to the calculated position deviation amount, and may change the pose of the designation area DSA#11, which includes at least a part of the containing space SP of the first container CB#11, by a change amount corresponding to the calculated pose deviation amount. Namely, the position pose calculation unit 312 may change the position of DSA#11 (in this case, the initial position set by the user or the control apparatus 3) to a position based on the calculated position deviation amount, and may change the pose of the designation area DSA#11 (in this case, the initial pose set by the user or the control apparatus 3) to a pose based on the calculated pose deviation amount. As a result, the designation area DSA#12 that is obtained by changing the designation area DSA#11 includes at least a part of the containing space SP of the second container CB#12.

As described above, the control apparatus 3 may set both the three-dimensional designation area DSA_3D, which is usable to the select selection data WSD_select from the three-dimensional position data WSD, and the two-dimensional designation area DSA_2D, which is usable to select the selection data IMG_2D_select from the image data IMG_2D. In this case, the control apparatus 3 may set both a designation area DSA_3D, which is the three-dimensional designation area DSA, and a designation area DSA_2D, which is the two-dimensional designation area DSA_2D, as the designation areas DSA#11. In this case, the control apparatus 3 may newly set the designation area DSA_3D#12, which is the three-dimensional designation area DSA_3D, as the designation area DSA#12 by changing the position of the designation area DSA_3D#11 by the change amount corresponding to the position deviation amount (the three-dimensional position deviation amount) between the first container CB#11 and the second container CB#12 and changing the pose of the designation area DSA_3D#11 by the change amount corresponding to the pose deviation amount (the three-dimensional pose deviation amount) between the first container CB#11 and the second container CB#12. Furthermore, the control apparatus 3 may newly set the designation area DSA_2D#12, which is the two-dimensional designation area DSA_2D, as the designation area DSA#12 by changing (moving) the designation area DSA_2D#11 in a two-dimensional plane by a change amount (a movement distance) that is calculated by projecting, onto a virtual two-dimensional plane, a change amount (a movement distance) of at least one of the position and the pose for changing the designation area DSA_3D#11 to the designation area DSA_3D#12.

Alternatively, the control apparatus 3 may calculate the position deviation amount of (the two-dimensional position deviation amount) between the first container CB#11 and the second container CB#12 and the amount of postural deviation (two-dimensional postural deviation) and the pose deviation amount of (the two-dimensional pose deviation amount) between the first container CB#11 and the second container CB#12 in the two-dimensional plane corresponding to the image indicated by the image data IMG_2D based on the image data IMG_2D generated by imaging the first container CB#11 and the image data IMG_2D generated by imaging the second container CB#12, and newly set the two-dimensional designation area DSA_2D#12 by changing (moving) the two-dimensional designation area DSA_2D#11 in the two-dimensional plane based on the calculated positional deviation amount and pose deviation amount in the two-dimensional plane. In this case, the control apparatus 3 may not necessarily set the three-dimensional designation area DSA_3D#12 in order to set the two-dimensional designation area DSA_2D#12.

Alternatively, in order to change the designation area DSA#11 to the designation area DSA#12 that includes at least a part of the containing space SP of the second container CB#12, the position pose calculation unit 312 may calculate the position and the pose of at least a part of the containing space SP of the second container CB#12 based on the position pose data POI_CB of the second container CB#12. Then, the position pose calculation unit 312 may change the designation area DSA#11 to the designation area DSA#12, which includes at least a part of the containing space SP of the second container CB#12, based on the position and the pose of at least a part of the containing space SP of the second container CB#12. In this case, the position pose calculation unit 312 may not necessarily use the position pose data POI_CB of the first container CB#11 in order to change the designation area DSA#11 to the designation area DSA#12.

The position pose calculation unit 312 may change the designation area DSA#11 to the designation area DSA#12 so that the designation area DSA#12 includes at least a part of the second container CB#12. This is because the second container CB#12 is the non-target object that is different from the target object OBJ.

As a first example, the position pose calculation unit 312 may change the designation area DSA_3D#11 to the designation area DSA_3D#12 so that the data part, which corresponds to the designation area DSA#12, of the three-dimensional position data WSD generated at the step S2 does not include the data part indicating the three-dimensional position of at least a part of the second container CB#12. For example, as described above, the designation area DSA_3D#11 that is the initial designation area is set in the virtual three-dimensional space aligned with the 3D imaging coordinate system. Then, the designation area DSA_3D#11, which is set in the virtual three-dimensional space aligned with the 3D imaging coordinate system, is transformed to the designation area DSA_3D#12 in the global coordinate system (alternatively, the coordinate system different from the global coordinate system, such as the robot coordinate system) by the coordinate transformation. In this case, the position pose calculation unit 312 may transform the designation area DSA_3D#11 to the designation area DSA_3D#12 in the global coordinate system so that the designation area DSA_3D#12 does not include the plurality of points (for example, the points included in the point cloud or the pixels included in the depth image) indicating the three-dimensional position of at least a part of the second container CB#12. As a result, the data part indicating the three-dimensional position of at least a part of the second container CB#12 is excluded from the selection data WSD_select selected by using the designation area DSA_3D#12. In other words, the plurality of points indicating the three-dimensional position of at least a part of the second container CB#12 are excluded from the selection data WSD_select selected by using the designation area DSA_3D#12.

As a second example, the position pose calculation unit 312 may change the designation area DSA_2D#11 to the designation area DSA#_2D12 so that the data part, which corresponds to the designation area DSA_2D#12, of the image data IMG_2D acquired at the step S1 does not include the data part indicating the image of at least a part of the second container CB#12. For example, as described above, the initial designation area DSA_2D#11 is set in the virtual three-dimensional space aligned with the 3D imaging coordinate system. Then, the designation area DSA_2D#11, which is set in the virtual three-dimensional space aligned with the 3D imaging coordinate system, is transformed to the designation area DSA_2D#11 in the 2D imaging coordinate system by the coordinate transformation. Then, the designation area DSA_2D#11 in the 2D imaging coordinate system is transformed to the designation area DSA_2D#11 in the global coordinate system (alternatively, the coordinate system different from the global coordinate system, such as the robot coordinate system) by the coordinate transformation. In this case, the position pose calculation unit 312 may transform the designation area DSA_2D#11 to the designation area DSA_2D#12 in the global coordinate system so that the designation area DSA_2D#12 does not include the image of at least a part of the second container CB#12. As a result, the data part indicating the image of at least a part of the second container CB#12 is excluded from the selection data IMG_2D_select selected by using the designation area DSA_2D#12. In other words, the image of at least a part of the second container CB#12 is excluded from the selection data IMG_2D_select selected by using the designation area DSA_2D#12.

The position pose calculation unit 312 may change the designation area DSA#11 to the designation area DSA#12 so that the designation area DSA#12 includes at least one target object OBJ contained in the second container CB#12. For example, in a case where the plurality of target objects OBJ are contained in the second container CB#12, the position pose calculation unit 312 may change the designation area DSA#11 to the designation area DSA#12 so that the designation area DSA#12 includes at least one of the plurality of target objects OBJ contained in the second container CB#12. Note that it is likely that the designation area DSA#12 includes at least one target object OBJ contained in the second container CB#12 in a case where the designation area DSA#11 is changed to the designation area DSA#12 including at least a part of the containing space SP of the second container CB#12 as described above.

As a first example, the position pose calculation unit 312 may change the designation area DSA_3D#11 to the designation area DSA_3D#12 so that the data part, which corresponds to the designation area DSA_3D#12, of the three-dimensional position data WSD generated at the step S2 includes the data part indicating the three-dimensional position of at least one target object OBJ contained in the second container CB#12. For example, the position pose calculation unit 312 may change the designation area DSA_3D#11 to the designation area DSA_3D#12 so that the data part, which corresponds to the designation area DSA_3D#12, of the three-dimensional position data WSD generated at the step S2 includes the data part indicating the three-dimensional position of a part of the plurality of target objects OBJ contained in the second container CB#12. In other words, the position pose calculation unit 312 may change the designation area DSA_3D#11 to the designation area DSA_3D#12 in the global coordinate system so that the designation area DSA_3D#12 includes the plurality of points (for example, the points included in the point cloud or the pixels included in the depth image) indicating the three-dimensional position of at least one target object OBJ contained in the second container CB#12. For example, the position pose calculation unit 312 may change the designation area DSA_3D#11 to the designation area DSA_3D#12 in the global coordinate system so that the designation area DSA_3D#12 includes the plurality of points (for example, the points included in the point cloud or the pixels included in the depth image) indicating the three-dimensional position of at least a part of the plurality of target objects OBJ contained in the second container CB#12. As a result, the data part indicating the three-dimensional position of at least one target object OBJ contained in the second container CB#12 may be included in the selection data WSD_select selected by using the designation area DSA_3D#12. In other words, the plurality of points indicating the three-dimensional position of at least one target object OBJ contained in the second container CB#12 may be included in the selection data WSD_select selected by using the designation area DSA_3D#12.

As a second example, the position pose calculation unit 312 may change the designation area DSA_2D#11 to the designation area DSA_2D#12 so that the data part, which corresponds to the designation area DSA_2D#12, of the image data IMG_2D acquired at the step S1 includes the data part indicating the image of at least one target object OBJ contained in the second container CB#12. For example, the position pose calculation unit 312 may change the designation area DSA_2D#11 to the designation area DSA_2D#12 so that the data part, which corresponds to the designation area DSA_2D#12, of the image data IMG_2D acquired at the step S1 includes the data part indicating the image of at least a part of the plurality of target objects OBJ contained in the second container CB#12. In other words, the position pose calculation unit 312 may transform the designation area DSA_2D#11 to the designation area DSA_2D#12 in the global coordinate system so that the designation area DSA_2D#12 includes the image of at least one target object OBJ contained in the second container CB#12. For example, the position pose calculation unit 312 may transform the designation area DSA_2D#11 to the designation area DSA_2D#12 in the global coordinate system so that the designation area DSA_2D#12 includes the image of at least a part of the plurality of target objects OBJ contained in the second container CB#12. As a result, the data part indicating the image of at least one target object OBJ contained in the second container CB#12 may be included in the selection data IMG_2D_select selected by using the designation area DSA_2D#12. In other words, the image of at least one target object OBJ contained in the second container CB#12 may be included in the selection data IMG_2D_select selected by using the designation area DSA_2D#12.

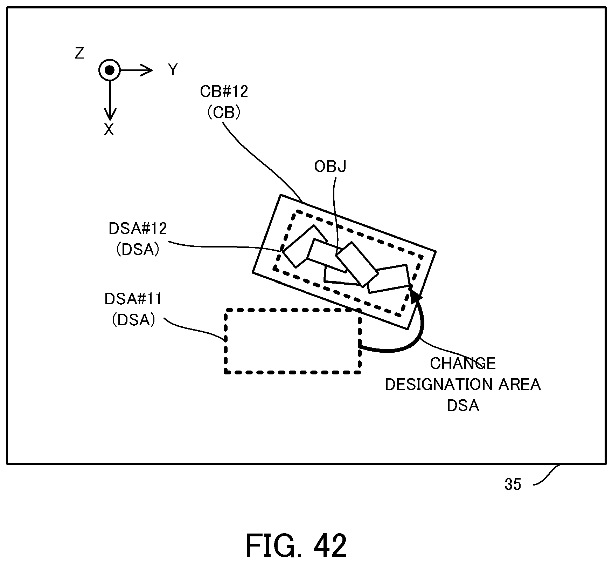

In a case where the designation area DSA#11 is changed to the designation area DSA#12, the control apparatus 3 may control the output apparatus 35, which is configured to serve as the display apparatus, to display the designation area DSA#11 before the change and the designation area DSA#12 after the change, as illustrated in FIG. 42. In this case, the user can intuitively recognize how the designation area DSA#11 changes. The user can intuitively recognize the designation area DSA#12 newly set by changing the designation area DSA#11.

In a case where the output apparatus 35 displays the designation area DSA#11 before the change and the designation area DSA#12 after the change, the control apparatus 3 may control the output apparatus 35 to display information related to a degree indicating how the designation area DSA#12 follows the containing space SP of the second container CB#12. For example, in a case where the designation area DSA#12 follows the containing space SP of the second container CB#12 and a likelihood of the following (for example, a degree of an overlapping between the designation area DSA#12 and the containing space SP of the second container CB#12) is higher than a predetermined threshold value, the control apparatus 3 may control the output apparatus 35 to display the designation area DSA#12 in a first color (for example, green). For example, in a case where the designation area DSA#12 follows the containing space SP of the second container CB#12 but the likelihood of the following is lower than the predetermined threshold value, the control apparatus 3 may control the output apparatus 35 to display the designation area DSA#12 in a second color (for example, yellow) that is different from the first color. For example, in a case where the designation area DSA#12 does not follow the containing space SP of the second container CB#12, the control apparatus 3 may control the output apparatus 35 to display the designation area DSA#12 in a third color (for example, red) that is different from both the first and second colors. In this case, the user can intuitively recognize whether or not the designation area DSA#11 is properly changed to follow the containing space SP.

Note that, the position pose calculation unit 312 may change the designation area DSA#11 including the plurality of partial areas to the designation area DSA#12 including the plurality of partial areas in a case where the designation area DSA includes the plurality of partial areas (partial designation areas) as described above. However, the position pose calculation unit 312 may change the designation area DSA#11 including the plurality of partial areas to the designation area DSA#12 including the single partial area. The position pose calculation unit 312 may change the designation area DSA#11 including the single partial area to the designation area DSA#12 including the plurality of partial areas.

Then, the position pose calculation unit 312 may select the data part, which corresponds to the designation area DSA_2D#12 newly set at the step S72e, of the image data IMG_2D as the selection data IMG_2D_select (a step S73e). Furthermore, the position pose calculation unit 312 may select the data part, which corresponds to the designation area DSA_3D#12 newly set at the step S72e, of the three-dimensional position data WSD as the selection data WSD_select (a step S74e). However, the position pose calculation unit 312 may not select the selection data IMG_2D_select. In this case, the robot control processing illustrated in FIG. 41 may not include the processing at the step S73e. Furthermore, the position pose calculation unit 312 may not select the selection data WSD_select. In this case, the robot control processing illustrated in FIG. 41 may not include the processing at the step S74e.

Then, the position pose calculation unit 312 generates the position pose data POI of at least one target object OBJ contained in the second container CB#12 based on at least one of the selection data IMG_2D_select selected at the step S73e and the selection data WSD_select selected at the step S74e (the step S3). Then, the signal generation unit 313 generates the robot control signal by using the position pose data POI generated at the step S3 (the step S4). Specifically, the signal generation unit 313 generates the robot control signal by using the position pose data POI generated at the step S3 so that the robot 1 (the end effector 4) performs the predetermined process on the target object OBJ contained in the second container CB#12. For example, the signal generation unit 313 generates the robot control signal, by using the position pose data POI generated at the step S3, for controlling the robot 1 (the end effector 4) so that the end effector 4 approaches the target object OBJ contained in the second container CB#12 (the step S4). The control apparatus 3 repeats a series of processing from the step S1 to the step S4 until it is determined that the robot control processing is ended (the step S5).

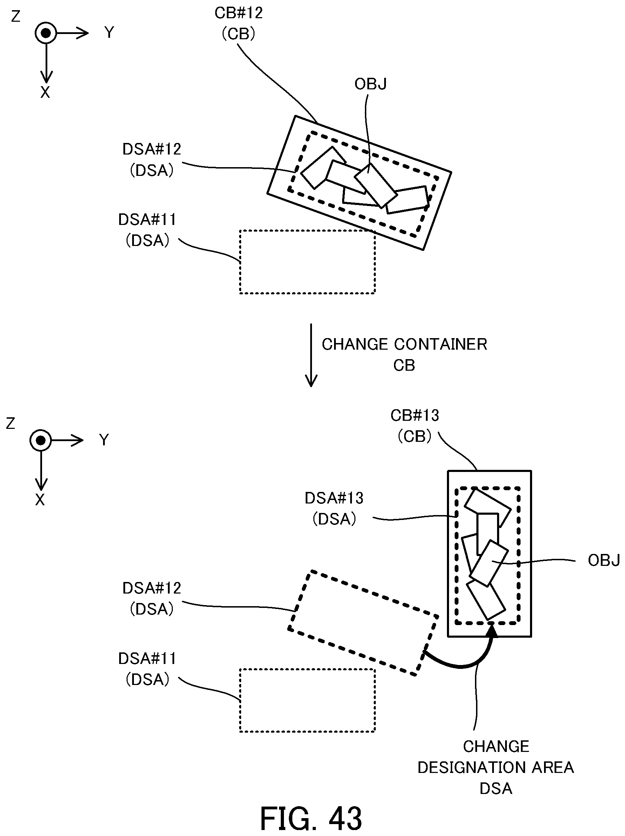

Thus, even in the fifth modified example, a series of processing from the step S1 to the step S4 is repeated even after the designation area DSA#11 is changed to the designation area DSA#12 at the step S72e (furthermore, after the end effector 4 performs the predetermined process on the target object OBJ contained in the second container CB#12), however, there is a possibility that the container CB containing the target object OBJ on which the end effector 4 should perform the predetermined process is changed again during the processing. For example, as illustrated in FIG. 43, there is a possibility that the end effector 4 performs the predetermined process on the target object OBJ contained in the second container CB#12, and then performs the predetermined process on the target object OBJ contained in a third container CB#13 that is different from the second container CB#12. Even in this case, the control apparatus 3 may not change the designation area DSA#12 in a case where the position and the pose of the second container CB#12 are the same as the position and the pose of the third container CB#13, respectively. Namely, the control apparatus 3 may use the designation area DSA#12 set relative to the second container CB#12 as the designation area DSA#13 for the third container CB#13. On the other hand, in a case where the position of the second container CB#12 is different from the position of the third container CB#13 and / or the pose of the second container CB#12 is different from the pose of the third container CB#13, the control apparatus 3 may change the designation area DSA#12. Specifically, the control apparatus 3 may generate the position pose data POI_CB of the third container CB#13 based on at least one of the image data IMG_2D and the image data IMG_3D (specifically, the three-dimensional position data WSD) generated by the imaging system 2 imaging at least a part of the third container CB#13 at the step S71e in FIG. 41. Then, as illustrated in FIG. 43, the control apparatus 3 may change the designation area DSA#12 set relative to the second container CB#12 to a designation area DSA#13 for the third container CB#13 based on the position pose data POI_CB of the third container CB#13 at the step S72e in FIG. 41. Note that the processing for changing the designation area DSA#12 to the designation area DSA#13 based on the position pose data POI_CB of the third container CB#13 may be the same as the processing for changing the designation area DSA#11 to the designation area DSA#12 based on the position pose data POI_CB of the second container CB#12. Namely, the above-described description of the processing for changing the designation area DSA#11 to the designation area DSA#12 based on the position pose data POI_CB of the second container CB#12 may be used as a description of the processing for changing the designation area DSA#12 to designation area DSA#13 based on the position pose data POI_CB of the third container CB#13 by replacing "the first container CB#11", "the second container CB#12", "the designation area DSA#11", and "the designation area DSA#12" with "the second container CB#12", "the third container CB#13", "the designation area DSA#12", and "the designation area DSA#13", respectively. Therefore, a detailed description of the processing for changing the designation area DSA#12 to the designation area DSA#13 based on the position pose data POI_CB of the third container CB#13 is omitted.

Alternatively, at the step S72e in FIG. 41, the control apparatus 3 may change the designation area DSA#11 set relative to the first container CB#12 to the designation area DSA#13 for the third container CB#13 based on the position pose data POI_CB of the third container CB#13, in addition to or instead of changing the designation area DSA#12 set relative to the second container CB#12 to the designation area DSA#13 for the third container CB#13. Note that the processing for changing the designation area DSA#11 to the designation area DSA#13 based on the position pose data POI_CB of the third container CB#13 may be the same as the processing for changing the designation area DSA#11 to the designation area DSA#12 based on the position pose data POI_CB of the second container CB#12. Namely, the above-described description of the processing for changing the designation area DSA#11 to the designation area DSA#12 based on the position pose data POI_CB of the second container CB#12 may be used as a description of the processing for changing the designation area DSA#11 to designation area DSA#13 based on the position pose data POI_CB of the third container CB#13 by replacing "the first container CB#11", "the second container CB#12", "the designation area DSA#11", and "the designation area DSA#12" with "the first container CB#11", "the third container CB#13", "the designation area DSA#11", and "the designation area DSA#13", respectively. Therefore, a detailed description of the processing for changing the designation area DSA#11 to the designation area DSA#13 based on the position pose data POI_CB of the third container CB#13 is omitted.

Note that the control apparatus 3 may perform the robot control processing illustrated in FIG. 41 to change a designation area DSA#22 set relative to the container CB that has not yet moved to a designation area DSA#23 for the container CB that has already moved not only in a case where the container CB changes but also in a case where the container CB (in this case, the second container CB#12), which contains the target object OBJ on which the end effector 4 should perform the predetermined process, moves. Note that the description of the robot control processing illustrated in FIG. 41 may be used as the description of the example in which the designation area DSA#22 set relative to the container CB, which has not yet moved, is changed to the designation area DSA#23 for the container CB, which has already moved, by replacing "the second container CB#12", "the third container CB#13", "the designation area DSA#12", and "the designation area DSA#13" with "the container CB that has not yet moved", "the container CB that has already moved", "the designation area DSA#22", and "the designation area DSA#23", respectively.

Thus, in the fifth modified example, the control apparatus 3 may change (specifically, move) the designation area DSA in a case where the container CB is changed or in a case where the container CB moves. Especially, the control apparatus 3 may change (specifically, move) the designation area DSA so that the designation area DSA follows the containing space SP of the container CB in which the target object OBJ is contained. As a result, compared to a case where the designation area DSA is not changed, it is more likely that the selection data IMG_2D_select and the selection data WSD_select include the data part related to at least a part of the plurality of target objects OBJ contained in the container CB in a case where the container CB is changed or the container CB moves. Furthermore, compared to a case where the designation area DSA is not changed, it is more likely that the data part related to at least a part of the non-target object different from the target object OBJ is excluded from the selection data IMG_2D_select and the selection data WSD_select in a case where the container CB is changed or the container CB moves. As a result, compared to a case where the designation area DSA is not changed, the position pose calculation unit 312 can generate the position pose data POI, which indicates at least one of the position and the pose of the target object OBJ, more properly and in a shorter time in a case where the container CB is changed or the container CB moves.

Note that the designation area DSA is set relative to the container CB in the global coordinate system (alternatively, any other coordinate system such as the robot coordinate system). Even in a case where the robot arm 12 moves in the global coordinate system, the control apparatus 3 may not change (move) the designation area DSA as long as at least one of the position and the pose of the container CB containing the target object OBJ is not changed. Therefore, the change (the movement) of the designation area DSA in the fifth modified example may be performed independently of the movement of the robot arm 12.

Furthermore, in the above-described description, the control apparatus 3 changes the designation area DSA based on the position pose data POI_CB of the container CB, and selects at least one of the selection data IMG_2D_select and WSD_select based on the changed designation area DSA. However, the control apparatus 3 may select at least one of the selection data IMG_2D_select and WSD_select based on the position pose data POI_CB of the container CB without using the designation area DSA. For example, the position pose data POI_CB of the container CB substantially indicates at least one of the position and the pose of the containing space SP of the container CB. In this case, the control apparatus 3 may calculate at least one of the position and the pose of the containing space SP of the container CB based on the position pose data POI_CB of the container CB, and may select at least one of the selection data IMG_2D_select and WSD_select, which includes the data part of at least a part of the containing space SP of the container CB, based on the calculated result of at least one of the position and the pose of the containing space SP of the container CB.

### (4-5-3) Change of Designation Area DSA based on Size of Container CB

As described above, there is a possibility that the container CB containing the target object OBJ, on which the end effector 4 should perform the predetermined process, is changed during the robot control processing.

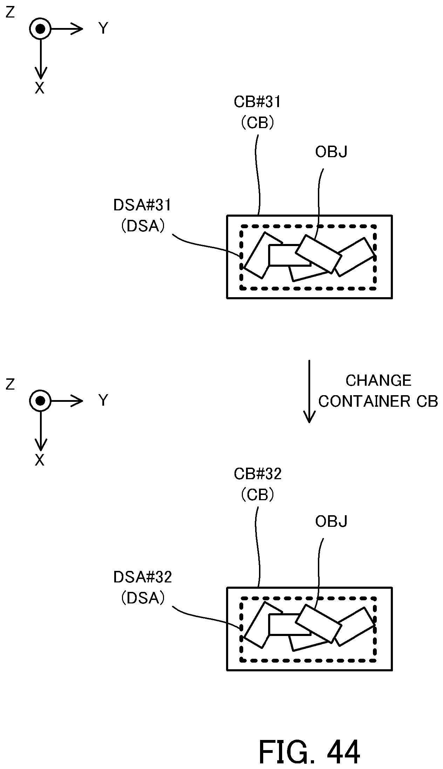

Here, FIG. 44 illustrates an example in which a size of a first container CB#31 is substantially the same as a size of a second container CB#32 in a situation where the container CB containing the target object OBJ, on which the end effector 4 should perform the predetermined process, is changed from the first container CB#31 to the second container CB#32. Note that "the size of the container CB" may mean an internal size of the container CB (namely, a size based on an inner wall surface of the container CB), or may mean an outer size of the container CB (namely, a size based on an outer wall surface of the container CB). Moreover, "the size of the container CB" may mean a shape of the container CB, a magnitude of the container CB, or a volume of the container CB. In this case, "the size of the container CB" may be referred to as the shape of the container CB, the magnitude of the container CB, or the volume of the container CB. "The size of the container CB" may be replaced with the shape of the container CB, the magnitude of the container CB, or the volume of the container CB. Moreover, a state in which "the size of the first container CB#31 is substantially the same as the size of the second container CB#32" may include a state in which "the size of the first container CB#31 is literally exactly the same as the size of the second container CB#32". The state in which "the size of the first container CB#31 is substantially the same as the size of the second container CB#32" may include a state in which "the size of the first container CB#31 is not literally exactly the same as the size of the second container CB#32, but a difference between the size of the first container CB#31 and the size of the second container CB#32 is so small that the end effector 4 can properly perform the predetermined process on the target object OBJ even in a case where the designation area DSA is not changed as described below". A state in which "the size of the first container CB#31 is different from the size of the second container CB#32 due to a manufacturing error occurring in manufacturing the containers CB having the same size as the first container CB#31 and the second container CB#32" is one example of the state in which "the size of the first container CB#31 is not literally exactly the same as the size of the second container CB#32, but a difference between the size of the first container CB#31 and the size of the second container CB#32 is so small that the end effector 4 can properly perform the predetermined process on the target object OBJ even in a case where the designation area DSA is not changed". In this case, the designation area DSA#31 set relative to the first container CB#31 may be used as the designation area DSA#32 set relative to the second container CB#32. This is because the size of the first container CB#11 is substantially the same as the size of the second container CB#32, and therefore, it is likely that the size of the containing space SP of the first container CB#31 containing the target object OBJ is substantially the same as the size of the containing space SP of the second container CB#32 containing the target object OBJ. Therefore, in this case, the control apparatus 3 may use the designation area DSA#31 set relative to the first container CB#31 as the designation area DSA#32 set relative to the second container CB#32. Specifically, the control apparatus 3 may set the position and the pose of the designation area DSA#31 set relative to the first container CB#31 as the position and the pose of the designation area DSA#32 for the second container CB#32. Then, the control apparatus 3 may generate the position pose data POI of the target object OBJ contained in the second container CB#32 by using the designation area DSA#32.

However, in a case where the position of the first container CB#31 is different from the position of the second container CB#32 and / or the pose of the first container CB#31 is different from the pose of the second container CB#32, there is a possibility that it is difficult to use the designation area DSA#31 set relative to the first container CB#31 as the designation area DSA#32 set relative to the second container CB#32 as described above. Therefore, in a case where the position of the first container CB#31 is different from the position of the second container CB#32 and / or the pose of the first container CB#31 is different from the pose of the second container CB#32 even in a case where the size of the first container CB#31 is substantially the same as the size of the second container CB#32, the control apparatus 3 may change the designation area DSA#31 to the designation area DSA#32 as described below. On the other hand, in a case where the size of the first container CB#31 is substantially the same as the size of the second container CB#32 and the position and the pose of the first container CB#31 are substantially the same as the position and the pose of the second container CB#32, respectively, the control apparatus 3 may use the designation area DSA#31 as the designation area DSA#32.

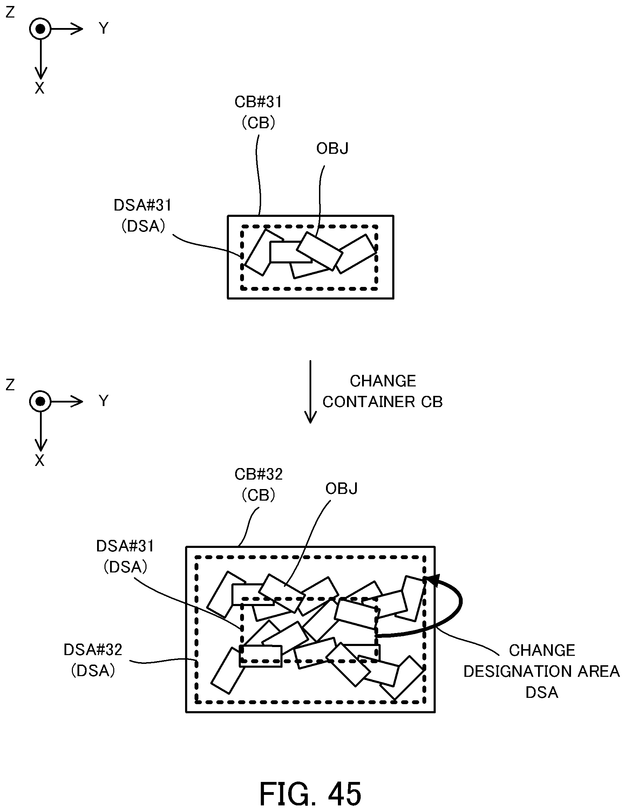

On the other hand, FIG. 45 illustrates an example in which the size of the first container CB#31 is different from the size of the second container CB#32 in a situation where the container CB containing the target object OBJ, on which the end effector 4 should perform the predetermined process, is changed from the first container CB#31 to the second container CB#32. Note that a state in which "the size of the first container CB#31 is different from the size of the second container CB#32" may include a state in which "the difference between the size of the first container CB#31 and the size of the second container CB#32 is so large that the end effector 4 cannot properly perform the predetermined process on the target object OBJ unless the designation area DSA is changed as described below". In this case, there is a possibility that it is difficult to use the designation area DSA#31 set relative to the first container CB#31 as the designation area DSA#32 set relative to the second container CB#32. This is because the size of the first container CB#11 is different from the size of the second container CB#12, and therefore, it is likely that the size of the containing space SP of the first container CB#31 containing the target object OBJ is different from the size of the containing space SP of the second container CB#32 containing the target object OBJ. Therefore, in this case, the control apparatus 3 may change the designation area DSA#31 set relative to the first container CB#31 to the designation area DSA#32 for the second container CB#32, as illustrated in FIG. 45. Then, the control apparatus 3 may generate the position pose data POI of the target object OBJ contained in the second container CB#32 by using the designation area DSA#32.

Note that an example in which the designation area DSA#31 set relative to the first container CB#31 is the initial designation area set by the user (alternatively, automatically set by the control apparatus 3) as described above will be described for convenience of description in the below-described description.

To change the designation area DSA#31 to the designation area DSA#32, the control apparatus 3 may use size information related to the size of the second container CB#32 at the step S72e in FIG. 41. Namely, the control apparatus 3 may change the designation area DSA#31 to the designation area DSA#32 based on the size information related to the size of the second container CB#32 at the step S72e in FIG. 41. The control apparatus 3 may change the designation area DSA#31 to the designation area DSA#32 based on the size information related to the size of the second container CB#32, in addition to or instead of the position pose data POI_CB of the container CB at the step S72e in FIG. 41.

As a first example, the control apparatus 3 may change the designation area DSA#31 to the designation area DSA#32 based on the size information related to the size of the second container CB#32 and the size of the first container CB#31. Specifically, the control apparatus 3 may calculate the difference between the size of the second container CB#32 and the size of the first container CB#31 based on the size information related to the size of the second container CB#32 and the size of the first container CB#31. Then, the control apparatus 3 may change the designation area DSA#31 to the designation area DSA#32 based on a calculated result of the difference between the size of the second container CB#32 and the size of the first container CB#31. For example, the control apparatus 3 may change the designation area DSA#31 to the designation area DSA#32 by changing the size of the designation area DSA#31 (a range of the designation area DSA#31) based on the calculated result of the difference between the size of second container CB#32 and the size of the first container CB#31. For example, the control apparatus 3 may change the designation area DSA#31 to the designation area DSA#32 by changing the size of the designation area DSA#31 (the range of the designation area DSA#31) by a change amount that is calculated based on the calculated result of the difference between the size of the second container CB#32 and the size of the first container CB#31. The control apparatus 3 may change the designation area DSA#31 to the designation area DSA#32 by changing the size of the designation area DSA#31 from a first size, which is an original size, to a second size, which is calculated based on the calculated result of the difference between the size of the second container CB#32 and the size of the first container CB#31.

As a second example, the control apparatus 3 may change the designation area DSA#31 to the designation area DSA#32 based on size information related to the difference between the size of the second container CB#32 and the size of the first container CB#31. Note that the size information related to the difference between the size of the second container CB#32 and the size of the first container CB#31 may be referred to as size difference information. Specifically, the control apparatus 3 may change the designation area DSA#31 to the designation area DSA#32 by changing the size of the designation area DSA#31 based on the size information related to the difference between the size of the second container CB#32 and the size of the first container CB#31. For example, the control apparatus 3 may change the designation area DSA#31 to the designation area DSA#32 by changing the size of the designation area DSA#31 by a change amount calculated based on the difference between the size of the second container CB#32 and the size of the first container CB#31 indicated by the size information.

The size information may be input to the control apparatus 3 by the user. Alternatively, the size information may be generated by the control apparatus 3. For example, the control apparatus 3 may calculate the size of the container CB by performing the position pose computing including the matching processing using the image data IMG_2D acquired at the step S1 in FIG. 41 (or the image data IMG_2D acquired by the imaging system 2 imaging the container CB at a timing different from the step S1), the three-dimensional position data WSD generated at the step S2 in FIG. 41 (or the three-dimensional position data WSD generated based on the image data IMG_3D acquired by the imaging system 2 imaging the container CB at a timing different from the step S1, and the template model of the container CB. Namely, the control apparatus 3 may generate the size information related to the size of the container CB by performing the position pose computing including the matching processing.

Even in a case where the control apparatus 3 changes the designation area DSA#31 to the designation area DSA#32 based on the size information related to the size of the container CB, the control apparatus 3 may change the designation area DSA#31 by using a method that is the same as a method in a case where the control apparatus 3 changes the designation area DSA#11 to the designation area DSA#12 based on the position pose data POI_CB of the container CB. Therefore, at least a part of the above-described description of the processing for changing the designation area DSA#11 to the designation area DSA#12 based on the position pose data POI_CB of the container CB may be used as a description of the processing for changing the designation area DSA#31 to the designation area DSA#32 based on the size information of the container CB by replacing "the position pose data POI_CB", "the designation area DSA#11", and "the designation area DSA#12" with "the size information", "the designation area DSA#31", and "the designation area DSA#32", respectively.

For example, the position pose calculation unit 312 may change the designation area DSA#31, which includes at least a part of the containing space SP of the first container CB#31, to the designation area DSA#32, which includes at least a part of the containing space SP of the second container CB#32, based on the size information. Namely, the position pose calculation unit 312 may newly set the designation area DSA#32 by changing the designation area DSA#31, which includes at least a part of the containing space SP of the first container CB#31, to the designation area DSA#32, which includes at least a part of the containing space SP of the second container CB#32, based on the size information. Specifically, the position pose calculation unit 312 may change the size of the designation area DSA#31 based on the size information so that the designation area DSA#31, which includes at least a part of the containing space SP of the first container CB#31, is changed to the designation area DSA#32, which includes at least a part of the containing space SP of the second container CB#32, thereby set the designation area DSA#31 whose size (range) has been changed as the designation area DSA#32.

In a case where the designation area DSA#31 is changed to the designation area DSA#32 that includes at least a part of the containing space SP of the second container CB#32, a state of the designation area DSA#31 is changed from a state in which the designation area DSA#31 includes at least a part of the containing space SP of the first container CB#31 to a state in which the designation area DSA#31 includes at least a part of the containing space SP of the second container CB#32. In this case, changing the designation area DSA#31 to the designation area DSA#32 may be considered to be equivalent to newly setting designation area DSA#32 by changing the designation area DSA#31 so that the designation area DSA#31 follows a change of the size of at least a part of the containing space SP.

Here, as illustrated in FIG. 45, there is a possibility that the designation area DSA#31 before the change includes a part of the containing space SP of the second container CB#32 included in the designation area DSA#32 before the change in some cases. However, since the size of the first container CB#31 is different from the size of the second container CB#32, there is a possibility that the designation area DSA#31 before the change does not include another part of the containing space SP of the second container CB#32. In this case, the processing for changing the designation area DSA#31 to the designation area DSA#32 may include a processing for changing the designation area DSA#31 to the designation area DSA#32 so that a partial space, which has not been included in the designation area DSA#31, of the containing space SP of the second container CB#32 is included in the designation area DSA#32. Namely, the control apparatus 3 may change the designation area DSA#31 to the designation area DSA#32 so that a partial space, which has not been included in the designation area DSA#31, of the containing space SP of the second container CB#32 is included in the designation area DSA#32. As a result, a proportion of a space part, which is included in the designation area DSA#32, of the containing space SP of the second container CB#32 is larger than a proportion of a space part, which is included in the designation area DSA#31, of the containing space SP of the second container CB#32. As a result, a possibility that at least one of the selection data IMG_2D_select and WSD_select, which is selected based on the designation area DSA#31, includes the data part related to the target object OBJ contained in the containing space SP of the second container CB#32 is higher than a possibility that at least one of the selection data IMG_2D_select and WSD_select, which is selected based on the designation area DSA#32, includes the data part related to the target object OBJ contained in the containing space SP of the second container CB#32. Therefore, the position pose calculation unit 312 can generate the position pose data POI, which indicates at least one of the position and the pose of target object OBJ, more properly and in a shorter time in a case where the size of the container CB is changed,.

As described above, the control apparatus 3 may set both the three-dimensional designation area DSA_3D, which is usable to select the selection data WSD_select from the three-dimensional position data WSD, and the two-dimensional designation area DSA_2D, which is usable to select the selection data IMG_2D_select from the image data IMG_2D. In this case, the control apparatus 3 may set both the designation area DSA_3D#31, which is the three-dimensional designation area DSA_3D, and the designation area DSA_2D#31, which is the two-dimensional designation area DSA_2D, as the designation areas DSA#31. In this case, the control apparatus 3 may newly set the designation area DSA_3D#32, which is the three-dimensional designation area DSA_3D, as the designation area DSA#32 by changing the size of the designation area DSA_3D#31 by a change amount corresponding to the difference between the size of the first container CB#31 and the size of the second container CB#32 (a three-dimensional size difference). Furthermore, the control apparatus 3 may newly set the designation area DSA_2D#32, which is the two-dimensional designation area DSA_2D, as the designation area DSA#32 by changing the size of the designation area DSA_2D#31 in a two-dimensional plane by a change amount that is calculated by projecting, onto a virtual two-dimensional plane, the change amount of the size for changing the designation area DSA_3D#31 to the designation area DSA_3D#32.

Alternatively, the control apparatus 3 may calculate the two-dimensional size difference between the first container CB#31 and the second container CB#32 from the size information (information related to the three-dimensional size difference between the first container CB#31 and the second container CB#32) input by the user or generated by the control apparatus 3, and newly set the two-dimensional designation area DSA_2D#32 by changing the size of the two-dimensional designation area DSA#31_2D in the two-dimensional plane based on the calculated two-dimensional size difference. Alternatively, since the size information input by the user or generated by the control apparatus 3 includes the information related to the three-dimensional size difference between the first container CB#31 and the second container CB#32, it can be said that it substantially includes the information related to the two-dimensional size difference between the first container CB#31 and the second container CB#32. In this case, the control apparatus 3 may newly set the two-dimensional designation area DSA_2D#32 by changing the size of the two-dimensional designation area DSA#31_2D in the two-dimensional plane based on the information related to the two-dimensional size difference between the first container CB#31 and the second container CB#32 included in the size information (information related to the three-dimensional size difference between the first container CB#31 and the second container CB#32) input by the user or generated by the control apparatus 3.

The position pose calculation unit 312 may change the designation area DSA#31 to the designation area DSA#32 so that the designation area DSA#32 does not include at least a part of the second container CB#32. This is because the second container CB#32 is the non-target object that is different from the target object OBJ.

As a first example, the position pose calculation unit 312 may change the designation area DSA_3D#31 to the designation area DSA_3D#32 so that the data part, which corresponds to the designation area DSA_3D#32, of the three-dimensional position data WSD generated at the step S2 does not include the data part indicating the three-dimensional position of at least a part of the second container CB#32. In other words, the position pose calculation unit 312 may change the designation area DSA_3D#31 to the designation area DSA_3D#32 in the global coordinate system so that the designation area DSA_3D#32 does not include the plurality of points (for example, the points included in the point cloud or the pixels included in the depth image) indicating the three-dimensional position of at least a part of the second container CB#32. As a result, the data part indicating the three-dimensional position of at least a part of the second container CB#32 is excluded from the selection data WSD_select selected by using the designation area DSA_3D#32. In other words, the plurality of points indicating the three-dimensional position of at least a part of the second container CB#32 are excluded from the selection data WSD_select selected by using the designation area DSA_3D#32.

As a second example, the position pose calculation unit 312 may change the designation area DSA_2D#31 to the designation area DSA_2D#32 so that the data part, which corresponds to the designation area DSA_2D#32, of the image data IMG_2D acquired at the step S1 does not include the data part indicating the image of at least a part of the second container CB#32. In other words, the position pose calculation unit 312 may change the designation area DSA_2D#31 to the designation area DSA_2D#32 in the global coordinate system so that the designation area DSA_2D#32 does not include the image of at least a part of the second container CB#32. As a result, the data part indicating the image of at least a part of the second container CB#32 is excluded from the selection data IMG_2D_select selected by using the designation area DSA_2D#32. In other words, the image of at least a part of the second container CB#32 is excluded from the selection data IMG_2D_select selected by using the designation area DSA_2D#32.

Here, as illustrated in FIG. 45, there is a possibility that even the designation area DSA#31 before the change does not include at least a part of the second container CB#32. Namely, there is a possibility that even the designation area DSA#32, which is the same as the designation area DSA#31 before the change, does not include at least a part of the second container CB#32. In a case where the control apparatus 3 may not change the designation area DSA#31 to the designation area DSA#32 so that the designation area DSA#32 does not include at least a part of the second container CB#32. As a result, the processing load of the control apparatus 3 is reduced and the required to perform the robot control processing is shortened by such an amount that the designation area DSA#31 may not be changed. However, even in this case, the control apparatus 3 may change the designation area DSA#31 to the designation area DSA#32 so that the designation area DSA#32 includes at least a part of the containing space SP of the second container CB (for example, the designation area DSA#32 includes at least one target object OBJ contained in the second container CB#32 as described below).

The position pose calculation unit 312 may change the designation area DSA#31 to the designation area DSA#32 so that the designation area DSA#32 includes at least one target object OBJ contained in the second container CB#32. For example, in a case where the plurality of target objects OBJ are contained in the second container CB#32, the position pose calculation unit 312 may change the designation area DSA#31 to the designation area DSA#32 so that the designation area DSA#32 includes at least one of the plurality of target objects OBJ contained in the second container CB#32. Note that it is likely that the designation area DSA#32 includes at least one target object OBJ contained in the second container CB#32 in a case where the designation area DSA#31 is changed to the designation area DSA#32 including at least a part of the containing space SP of the second container CB#32 as described above.

As a first example, the position pose calculation unit 312 may change the designation area DSA_3D#31 to the designation area DSA_3D#32 so that the data part, which corresponds to the designation area DSA_3D#32, of the three-dimensional position data WSD generated at the step S2 includes the data part indicating the three-dimensional position of at least one target object OBJ contained in the second container CB#32. For example, the position pose calculation unit 312 may change the designation area DSA_3D#31 to the designation area DSA_3D#32 so that the data part, which corresponds to the designation area DSA_3D#32, of the three-dimensional position data WSD generated at the step S2 includes the data part indicating the three-dimensional position of a part of the plurality of target objects OBJ contained in the second container CB#32. In other words, the position pose calculation unit 312 may change the designation area DSA_3D#31 to the designation area DSA_3D#32 in the global coordinate system so that the designation area DSA_3D#32 includes the plurality of points (for example, the points included in the point cloud or the pixels included in the depth image) indicating the three-dimensional position of at least one target object OBJ contained in the second container CB#32. For example, the position pose calculation unit 312 may change the designation area DSA_3D#31 to the designation area DSA_3D#32 in the global coordinate system so that the designation area DSA_3D#32 includes the plurality of points (for example, the points included in the point cloud or the pixels included in the depth image) indicating the three-dimensional position of at least a part of the plurality of target objects OBJ contained in the second container CB#32. As a result, the data part indicating the three-dimensional position of at least one target object OBJ contained in the second container CB#32 may be included in the selection data WSD_select selected by using the designation area DSA_3D#32. In other words, the plurality of points indicating the three-dimensional position of at least one target object OBJ contained in the second container CB#32 may be included in the selection data WSD_select selected by using the designation area DSA_3D#32.

As a second example, the position pose calculation unit 312 may change the designation area DSA_2D#31 to the designation area DSA_2D#32 so that the data part, which corresponds to the designation area DSA_2D#32, of the image data IMG_2D acquired at the step S1 includes the data part indicating the image of at least one target object OBJ contained in the second container CB#32. For example, the position pose calculation unit 312 may change the designation area DSA_2D#31 to the designation area DSA_2D#32 so that the data part, which corresponds to the designation area DSA_2D#32, of the image data IMG_2D acquired at the step S1 includes the data part indicating the image of at least a part of the plurality of target objects OBJ contained in the second container CB#32. In other words, the position pose calculation unit 312 may transform the designation area DSA_2D#31 to the designation area DSA_2D#32 in the global coordinate system so that the designation area DSA_2D#32 includes the image of at least one target object OBJ contained in the second container CB#32. For example, the position pose calculation unit 312 may transform the designation area DSA_2D#31 to the designation area DSA_2D#32 in the global coordinate system so that the designation area DSA_2D#32 includes the image of at least a part of the plurality of target objects OBJ contained in the second container CB#32. As a result, the data part indicating the image of at least one target object OBJ contained in the second container CB#12 may be included in the selection data IMG_2D_select selected by using the designation area DSA_2D#12. In other words, the image of at least one target object OBJ contained in the second container CB#12 may be included in the selection data IMG_2D_select selected by using the designation area DSA_2D#12.

In a case where the designation area DSA#31 is changed to the designation area DSA#32, the control apparatus 3 may control the output apparatus 35, which is configured to serve as the display apparatus, to display the designation area DSA#31 before the change and the designation area DSA#32 after the change. Note that the processing for displaying the designation area DSA#31 before the change and the designation area DSA#32 after the change may be the same as the above-described processing for displaying the designation area DSA#11 before the change and the designation area DSA#12 after the change. Therefore, the description of the above-described processing for displaying the designation area DSA#11 before the change and the designation area DSA#12 after the change may be used as a description of the processing for displaying the designation area DSA#31 before the change and the designation area DSA#32 after the change by replacing "the first container CB#11", "the second container CB#12", "the designation area DSA#11", and "the designation area DSA#12" with "the first container CB#31", "the second container CB#32", "the designation area DSA#31", and "the designation area DSA#32", respectively.

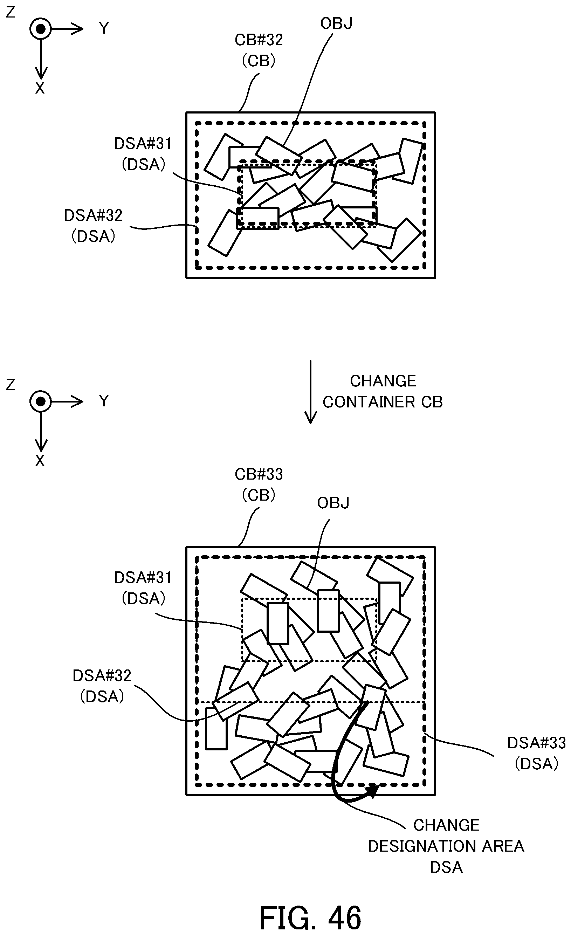

Thus, even in a case where the control apparatus 3 changes the designation area DSA based on the size information, a series of processing from the step S1 to the step S4 is repeated after the designation area DSA#31 is changed to the designation area DSA#32 at the step S72e in FIG. 41 (furthermore, after the end effector 4 performs the predetermined process on the target object OBJ contained in the second container CB#32), however, there is a possibility that the container CB containing the target object OBJ on which the end effector 4 should perform the predetermined process is changed again during the processing, as in a case where the control apparatus 3 changes the designation area based on the position pose data POI_CB. For example, as illustrated in FIG. 46, there is a possibility that the end effector 4 performs the predetermined process on the target object OBJ contained in the second container CB#32, and then performs the predetermined process on the target object OBJ contained in a third container CB#33 that is different from the second container CB#32. Even in this case, the control apparatus 3 may not change the designation area DSA#32 in a case where the size of the second container CB#32 is the same as the size of the third container CB#33. Namely, the control apparatus 3 may use the designation area DSA#32 set relative to the second container CB#32 as the designation area DSA#33 for the third container CB#33. On the other hand, in a case where the size of the second container CB#32 is different from the size of the third container CB#33, the control apparatus 3 may change the designation area DSA#32. Specifically, the control apparatus 3 may change the designation area DSA#32 set relative to the second container CB#32 to a designation area DSA#33 for the third container CB#33 based on the size information of the third container CB#33 at the step S72e in FIG. 41. Note that the processing for changing the designation area DSA#32 to the designation area DSA#33 based on the size information of the third container CB#33 may be the same as the processing for changing the designation area DSA#31 to the designation area DSA#32 based on the size information of the second container CB#32. Namely, the above-described description of the processing for changing the designation area DSA#31 to the designation area DSA#32 based on the size information of the second container CB#32 may be used as a description of the processing for changing the designation area DSA#32 to designation area DSA#33 based on the size information of the third container CB#33 by replacing "the first container CB#31", "the second container CB#32", "the designation area DSA#31", and "the designation area DSA#32" with "the second container CB#32", "the third container CB#33", "the designation area DSA#32", and "the designation area DSA#33", respectively. Therefore, a detailed description of the processing for changing the designation area DSA#32 to the designation area DSA#33 based on the size information of the third container CB#33 is omitted.

Alternatively, at the step S72e in FIG. 41, the control apparatus 3 may change the designation area DSA#31 set relative to the first container CB#32 to the designation area DSA#33 for the third container CB#33 based on the size information of the third container CB#33, in addition to or instead of changing the designation area DSA#32 set relative to the second container CB#32 to the designation area DSA#33 for the third container CB#33. Note that the processing for changing the designation area DSA#31 to the designation area DSA#33 based on the size information of the third container CB#33 may be the same as the processing for changing the designation area DSA#31 to the designation area DSA#32 based on the size information of the second container CB#32. Namely, the above-described description of the processing for changing the designation area DSA#31 to the designation area DSA#32 based on the size information of the second container CB#32 may be used as a description of the processing for changing the designation area DSA#31 to designation area DSA#33 based on the size information of the third container CB#33 by replacing "the first container CB#31", "the second container CB#32", "the designation area DSA#31", and "the designation area DSA#32" with "the first container CB#31", "the third container CB#33", "the designation area DSA#31", and "the designation area DSA#33", respectively. Therefore, a detailed description of the processing for changing the designation area DSA#31 to the designation area DSA#33 based on the size information of the third container CB#33 is omitted.

Thus, in the fifth modified example, the control apparatus 3 may change the designation area DSA (specifically, change the size of the designation area DSA) in a case where the size of the container CB changes. Especially, the control apparatus 3 may change the designation area DSA (specifically, change the size of the designation area DSA) so that the designation area DSA follows the containing space SP of the container CB in which the target object OBJ is contained. As a result, compared to a case where the designation area DSA is not changed, it is more likely that the selection data IMG_2D_select and the selection data WSD_select include the data part related to at least a part of the plurality of target objects OBJ contained in the container CB in a case where the size of the container CB changes. Furthermore, compared to a case where the designation area DSA is not changed, it is more likely that the data part related to at least a part of the non-target object different from the target object OBJ is excluded from the selection data IMG_2D_select and the selection data WSD_select in a case where the size of the container CB changes. As a result, compared to a case where the designation area DSA is not changed, the position pose calculation unit 312 can generate the position pose data POI, which indicates at least one of the position and the pose of the target object OBJ, more properly and in a shorter time in a case where the size of the container CB changes.

Furthermore, in the above-described description, the control apparatus 3 changes the designation area DSA based on the size information of the container CB, and selects at least one of the selection data IMG_2D_select and WSD_select based on the changed designation area DSA. However, the control apparatus 3 may select at least one of the selection data IMG_2D_select and WSD_select based on the size information of the container CB without using the designation area DSA. For example, the size information of the container CB substantially indicates the size of the containing space SP of the container CB. In this case, the control apparatus 3 may calculate the size of the containing space SP of the container CB based on the size information of the container CB, and may select at least one of the selection data IMG_2D_select and WSD_select, which includes the data part of at least a part of the containing space SP of the container CB, based on the calculated result of the size of the containing space SP of the container CB.

### (4-5-2) Selection of Select Data IMG_2D_select and WSD_select using Designation area DSA_exclude

In the above-described description, the control apparatus 3 sets the designation area DSA directly or indirectly indicating the data part that is included in at least one of the selection data IMG_2D_select and WSD_select. On the other hand, the control apparatus 3 may set the designation area DSA directly or indirectly indicating the data part that may not be included in at least one of the selection data IMG_2D_select and WSD_select, in addition to or instead of the designation area DSA directly or indirectly indicating the data part that is included in at least one of the selection data IMG_2D_select and WSD_select. Note that the designation area DSA directly or indirectly indicating the data part that may is included in at least one of the selection data IMG_2D_select and WSD_select is referred to as a "designation area DSA_include" in the below-described description, and the designation area DSA directly or indirectly indicating the data part that may not be included in at least one of the selection data IMG_2D_select and WSD_select is referred to as a "designation area DSA_exclude" to distinguish them.

For example, the designation area DSA_exclude may directly or indirectly indicate an area in which an image part, which may not be included in the selection data IMG_2D_select, of the image indicated by the image data IMG_2D is distributed. For example, the designation area DSA_exclude may directly or indirectly indicate an area in which a point, which may not be included in the selection data WSD_select, of the plurality of points (the point cloud) indicated by the point cloud data that is the three-dimensional position data WSD is distributed. For example, the designation area DSA_exclude may directly or indirectly indicate an area in which a pixel (a depth pixel), which may not be included in the selection data IMG_2D_select, of the plurality of pixels (depth pixels) indicated by the depth image data that is the three-dimensional position data WSD is distributed.

Here, considering that the position pose data POI is generated (namely, at least one of the position and the pose of the target object OBJ is calculated) based on at least one of the selection data IMG_2D_select and the selection data WSD_select, it is preferable that each of the selection data IMG_2D_select and the selection data WSD_select may not include data related to the non-target object. This is because the calculated result of the position and the pose of the non-target objects is not necessarily required to generate the robot control signal for controlling the robot 1 so that the end effector 4 performs the predetermined process on the target object OBJ as described above. Therefore, the designation area DSA_exclude may be an area including at least a part of a space in which the non-target object is positioned.

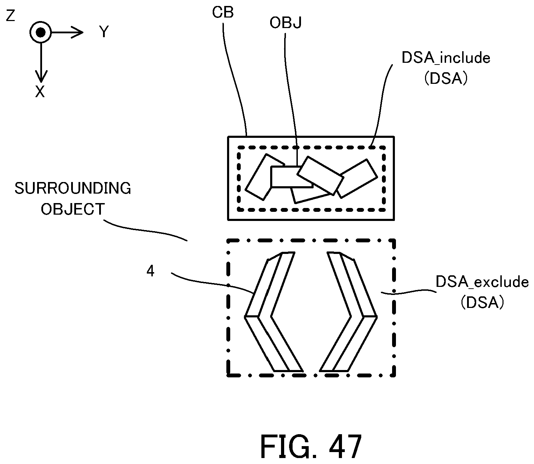

As described above, at least one of at least a part of the end effector 4, at least a part of the robot arm 12, and the surrounding object (for example, the container CB) that is an object positioned around the robot 1 is one example of the non-target object. Therefore, as illustrated in FIG. 47 that illustrates one example of the designation area DSA_exclude, the designation area DSA_exclude may include an area that includes at least a part of a space in which the end effector 4 is positioned. Although it is not illustrated, the designation area DSA_exclude may include an area that includes at least a part of a space in which the robot arm 12 is positioned. Although it is not illustrated, the designation area DSA_exclude may include an area that includes at least a part of a space in which the robot 1 is positioned. Although it is not illustrated, the designation area DSA_exclude may include an area that includes at least a part of a space in which the container CB is positioned.

The control apparatus 3 (alternatively, the user, the same applies in the below-described description) may set the designation area DSA_exclude, which includes at least a part of the space in which the non-target object is positioned, based on a base point of the non-target object. For example, the control apparatus 3 may calculate a position of the space in which the non-target object is positioned based on the base point of the non-target object and set the designation area DSA_exclude at that position.

The control apparatus 3 may calculate at least one of a position and a pose of the base point of the non-target object and set the designation area DSA_exclude based on the calculated result of at least one of the position and the pose of the base point of the non-target object. For example, the control apparatus 3 may calculate at least one of the position and the pose of the base point of the non-target object (namely, generate the position pose data indicating at least one of the position and the pose of the base point of the non-target object) by performing the position pose computing including the matching processing using the template model of the non-target object, calculate the position of the space in which the non-target object is positioned based on the calculated result of at least one of the position and the pose of the base point of the non-target object, and set the designation area DSA_exclude at that position.

The control apparatus 3 may acquire information related to at least one of the position and the pose of the base point of the non-target object, and set the designation area DSA_exclude based on the acquired information. For example, in a case where the non-target object includes at least one of the robot 1, the robot arm 12, and the end effector 4, the control apparatus 3 may acquire the information related to at least one of the position and the pose of the base point of the non-target object from the robot 1 (for example, the robot control apparatus 13), calculate the position of the space in which the non-target object is positioned based on the acquired information, and set the designation area DSA_exclude at that position.

In a case where the non-target object is the end effector 4, a tool center point (TCP: Tool Center Point) of the end effector 4 is one example of the base point of the non-target object (namely, the base point of the end effector 4). In a case where the non-target object is the end effector 4, a point whose position relative to the end effector 4 is known is one example of the base point of the non-target object (namely, the base point of the end effector 4). The point whose position relative to the end effector 4 is known may include a point on the end effector 4 or a point on a member or apparatus different from the end effector 4.

In a case where the non-target object is the robot 1, a point on a flange surface of the robot 1 is one example of the base point of the non-target object (namely, the base point of the robot 1). In a case where the non-target object is the robot 1, a point whose position relative to the robot 1 is known is one example of the base point of the non-target object (namely, the base point of the robot 1). The point whose position relative to the robot 1 is known may include a point on the robot 1 or a point on a member or apparatus different from the robot 1.

After the designation area DSA_exclude is set, the position pose calculation unit 312 may not select, as the selection data WSD_select, the data part of the three-dimensional position data WSD corresponding to the designation area DSA_exclude. Namely, the position pose calculation unit 312 may exclude the data part of the three-dimensional position data WSD corresponding to the designation area DSA_exclude from the selection data WSD_select. For example, the position pose calculation unit 312 may not select, as the selection data WSD_select, the data part indicating the three-dimensional position of the point, which is included in the designation area DSA_exclude, of the plurality of points indicated by the three-dimensional position data WSD (for example, the plurality of points included in the point cloud or the plurality of pixels included in the depth image). Namely, the position pose calculation unit 312 may exclude the data part indicating the three-dimensional position of the point, which is included in the designation area DSA_exclude, of the plurality of points indicated by the three-dimensional position data WSD from the selection data WSD_select. As a result, the position pose calculation unit 312 may generate the selection data WSD_select that does not include the data part indicating the three-dimensional position of at least a part of the non-target object. The position pose calculation unit 312 may generate the selection data WSD_select from which the data part indicating the three-dimensional position of at least a part of the non-target object is excluded.

Similarly, after the designation area DSA_exclude is set, the position pose calculation unit 312 may not select, as the selection data WSD_select, the data part of the image data IMG_2D corresponding to the designation area DSA_exclude. Namely, the position pose calculation unit 312 may exclude the data part of the image data IMG_2D corresponding to the designation area DSA_exclude from the selection data WSD_select. For example, the position pose calculation unit 312 may not select the data part, which indicates the image part included in the designation area DSA_exclude, of the image indicated by the image data IMG_2D as the selection data IMG_2D_select. Namely, the position pose calculation unit 312 may exclude the data part, which indicates the image part included in the designation area DSA_exclude, of the image indicated by the image data IMG_2D from the selection data IMG_2D_select. As a result, the position pose calculation unit 312 may generate the selection data IMG_2D_select that does not include the data part indicating the image of at least a part of the non -target object. The position pose calculation unit 312 may generate the selection data IMG_2D_select from which the data part indicating the image of at least a part of the non-target object is excluded.

Thus, in a case where the designation area DSA_exclude is used in addition to or instead of the designation area DSA_include, the control apparatus 3 can properly select at least one of the selection data IMG_2D_select and the selection data WSD_select that does not include the data part related to at least a part of the non-target object different from the target object OBJ. Namely, the control apparatus 3 can properly select at least one of the selection data IMG_2D_select and the selection data WSD_select from which the data part related to at least a part of the non-target object different from the target object OBJ has been excluded. Therefore, in a case where the designation area DSA_exclude is not used, it is less likely that the non-target object is mistakenly detected as the target object OBJ. Therefore, it is less likely that the position pose calculation unit 312 mistakenly generates the position pose data of the non-target object as the position pose data POI of the target object OBJ. Therefore, the position pose calculation unit 312 can properly generate the position pose data POI indicating at least one of the position and the pose of the target object OBJ.

Furthermore, the selection data IMG_2D_select and the selection data WSD_select are a part of the image data IMG_2D and a part of the three-dimensional position data WSD, respectively. Therefore, the data size of the selection data IMG_2D_select and the data size of the selection data WSD_select are smaller than the data size of the image data IMG_2D and the data size of the three-dimensional position data WSD, respectively. As a result, the position pose calculation unit 312 can reduce the time required to generate the position pose data POI, compared to a case where the position pose data POI is generated based on at least one of the image data IMG_2D and the three-dimensional position data WSD whose data size is relatively large.

Note that the control apparatus 3 may select at least one of the selection data IMG_2D_select and selection data WSD_select, which does not include the data part related to at least a part of the non-target object, based on at least one of the position and the pose of the base point of the non-target object, without setting the designation area DSA_exclude. For example, the control apparatus 3 may identify the data part related to at least a part of the non-target object based on at least one of the position and the pose of the base point of the non-target object, and then select at least one of the selection data IMG_2D_select and the selection data WSD_select that does not include the identified data part.

### (4-6) Other Modified Example

### (4-6-1) Modified Example of Robot Control Processing

In the above-described description, the control apparatus 3 (especially, the three-dimensional position data generation unit 311) generates the three-dimensional position data WSD from the image data IMG_3D. However, an apparatus that is different from the control apparatus 3 may generate the three-dimensional position data WSD from the image data IMG_3D. For example, the imaging system 2 that generates the image data IMG_3D may generate the three-dimensional position data WSD from the image data IMG_3D. In this case, the control apparatus 3 may acquire the three-dimensional position data WSD from the apparatus that is different from the control apparatus 3. The control apparatus 3 may calculate at least one of the position and the pose of the target object OBJ by using the three-dimensional position data WSD acquired from the apparatus that is different from the control apparatus 3.

### (4-6-2) Modified Example of Robot 1

In the above-described description, the end effector 4 (for example, the hand clipper or the vacuum clipper), which performs at least one of the holding process and the releasing process (for example, the placing process), is attached to the robot arm 12. However, the end effector 4 is not limited to an apparatus that performs at least one of the holding process and the releasing process, and may be an apparatus that performs another process on the target object OBJ.

As one example, a processing apparatus for processing the target object OBJ may be attached to the robot arm 12 as one example of the end effector 4. The processing apparatus may perform at least one of an additive manufacturing for adding a new build object to the target object OBJ, a subtractive manufacturing for removing a part of the target object OBJ, a welding processing for jointing two target objects OBJ, and a cutting processing for cutting the target object OBJ. The processing apparatus may process the target object OBJ by using a tool such as a cutting tool. In this case, the processing apparatus including the tool may be attached to the robot arm 12. Alternatively, the processing apparatus may process the target object OBJ by irradiating the target object OBJ with an energy beam (for example, light, electromagnetic wave, and charged particle beam). In this case, the processing apparatus including an irradiation apparatus that irradiates the target object OBJ with the energy beam may be attached to the robot arm 12.

The processing apparatus that is one example of the end effector 4 may perform soldering processing for soldering a component to the target object OBJ. The processing apparatus may solder the component to the target object OBJ by using a soldering copper. In this case, the processing apparatus including the soldering copper may be attached to the robot arm 12. Alternatively, the processing apparatus may solder the component to the target object OBJ by irradiating the solder with an energy beam (for example, light, electromagnetic wave, and charged particle beam). In this case, the processing apparatus including an irradiation apparatus that irradiates the target object OBJ with the energy beam may be attached to the robot arm 12.

As another example, a measurement apparatus for measuring the target object OBJ may be attached to the robot arm 12 as one example of the end effector 4. The measurement apparatus may be configured to measure a characteristic of the target object OBJ. At least one of a shape of the target object OBJ, a size of the target object OBJ, a distance from the measurement apparatus to the target object OBJ, a reflectance of the target object OBJ, a transmittance of the target object OBJ, and a temperature of the target object OBJ is one example of the characteristic of the target object OBJ. The measurement apparatus may be an existing contact type of measurement apparatus. For example, the measurement apparatus may measure the target object OBJ by using a touch probe. In this case, the measurement apparatus including the touch probe may be attached to the robot arm 12. Alternatively, the measurement apparatus may be an existing non-contact type of measurement apparatus. For example, the measurement apparatus may measure the target object OBJ by irradiating the target object OBJ with an energy beam (for example, light, electromagnetic wave, and charged particle beam). In this case, the measurement apparatus including an irradiation apparatus that irradiates the target object OBJ with the energy beam may be attached to the robot arm 12. Note that the measurement apparatus may be an imaging apparatus including one or more monocular cameras. As one example, the measurement apparatus may be a stereo camera including two monocular cameras.

In a case where at least one of the processing apparatus and the measurement apparatus is attached to the robot arm 12 as one example of the end effector 4, the control apparatus 3 may generate a control signal for controlling an operation of at least one of the processing apparatus and the measurement apparatus. For example, the control apparatus 3 may generate the control signal for controlling a rotation of the tool of the processing apparatus. For example, the control apparatus 3 may generate the control signal for controlling an ON / OFF of the energy beam by the irradiation apparatus of at least one of the processing apparatus and the measurement apparatus.

As another example, a discharging apparatus may be attached to the robot arm 12 as one example of the end effector 4. For example, the discharging apparatus may discharge at least one of an adhesive material, a seal material, a paint material, and a solder. The discharging apparatus may discharge at least one of the adhesive material, the seal material, the paint material, and the solder toward the target object OBJ. For example, the control apparatus 3 may generate a control signal for controlling at least one of ON / OFF of a discharge from the discharging apparatus and an discharged amount. Note that the discharging apparatus may be referred to as a processing apparatus, because it can be said that discharging at least one of the adhesive material, the seal material, the paint material, and the solder to the target object OBJ is processing the target object OBJ.

### (4-6-3) Modified Example of Imaging System 2

### (4-6-3-1) One Example of Specification of Imaging System 2

Specifications of the imaging system 2 may be set to satisfy a condition including specifications "(i) a Z-measurement resolution of the imaging system 2 is equal to or higher than a predetermined lower limit resolution, (ii) a FOV (Field of View) of the imaging system 2 is equal to or larger than a predetermined lower view angle, and (iii) a working distance (WD) of the imaging system 2 is equal to or larger than a predetermined lower limit distance". Note that the FOV of the imaging system 2 may mean a parameter indicating the imaging field of view of the imaging system 2 in terms of angle. The Z measurement resolution of the imaging system 2 may mean a minimum size of an object, which is recognizable by the imaging system 2 (in other words, which is recognizable from the three-dimensional position data WSD generated from the image data IMG_3D generated by the imaging system 2) in the Z-axis direction of the 2D imaging coordinate system or the 3D imaging coordinate system. The working distance of the imaging system 2 may mean a distance (especially, a lower limit distance) between a tip of an imaging lens of at least one of the imaging apparatus 21 and 22 and an object imaged by the imaging system 2.

Specifically, the FOV of the imaging system 2 is narrower as a convergence angle of the imaging system 2 is smaller. Note that the convergence angle of the imaging system 2 may mean an acute angle between an optical axis of the imaging lens of the imaging apparatus 21 and optical axis of the imaging lens of the imaging apparatus 22. Furthermore, the working distance of the imaging system 2 is longer as the convergence angle of the imaging system 2 is smaller. Therefore, the convergence angle of the imaging system 2 may be set to an angle satisfying a condition that "the FOV of the imaging system 2 is equal to or larger than the predetermined lower limit view angle and the working distance of the imaging system 2 is equal to or larger than the predetermined lower limit distance". For example, the convergence angle of the imaging system 2 may be set to an angle that is large to satisfy the condition that "the FOV of the imaging system 2 is equal to or larger than the predetermined lower limit view angle and the working distance of the imaging system 2 is equal to or larger than the predetermined lower limit distance".

On the other hand, there is a possibility that widening the FOV of the imaging system 2 while fixing a baseline length of the imaging system 2 results in the Z-resolution of the imaging system 2 being unnecessarily low. Note that the baseline length of the imaging system 2 may mean a distance between the imaging lens (an objective lens) of the imaging apparatus 21 and the imaging lens (an objective lens) of the imaging apparatus 22. Therefore, it is preferable to increase the baseline length of the imaging system 2 in order to set the Z resolution of the imaging system 2 to be equal to or higher than the predetermined lower limit resolution,. However, the size of the imaging system 2 is larger as the baseline length of the imaging system 2 is longer. Therefore, the baseline length of the imaging system 2 may be set to a length that prioritizes satisfying a primary condition that "the Z measurement resolution of the imaging system 2 is equal to or higher than the predetermined lower limit resolution" and that also satisfies a secondary condition that "the size of the imaging system 2 is not larger than necessary". Namely, the baseline length of the imaging system 2 may be set to a proper balanced length that satisfies both the primary condition that "the Z-measurement resolution of the imaging system 2 is equal to or higher than the predetermined lower limit resolution" and the secondary condition that "the size of the imaging system 2 is not larger than necessary".

Especially, in the present example embodiment, both the imaging system 2 and the end effector 4 are attached to the robot arm 12. In this case, as the size of the imaging system 2 is larger, it is more likely that the imaging system 2 attached to the end effector 4 collides with other object in a period during which the robot arm 12 moves the end effector 4 to perform the predetermined process. As a result, there is a possibility that the robot 1 abnormally stops before the end effector 4 completes the predetermined process. Namely, there is a possibility that the imaging system 2 prevents the predetermined process performed by the end effector 4. Therefore, in a case where the condition "the size of the imaging system 2 is not larger than necessary" is satisfied, it is less likely that the imaging system 2 prevents the predetermined process performed by the end effector 4, compared to a case where the condition "the size of the imaging system 2 is not larger than necessary" is not satisfied. Therefore, it is more likely that the end effector 4 can properly perform the predetermined process.

As a result, the specifications of the imaging system 2 can be set to satisfy the condition including the specifications "(i) the Z-measurement resolution of the imaging system 2 is equal to or higher than the predetermined lower limit resolution, (ii) the FOV (Field of View) of the imaging system 2 is equal to or larger than the predetermined lower view angle, and (iii) the working distance (WD) of the imaging system 2 is equal to or larger than the predetermined lower limit distance".

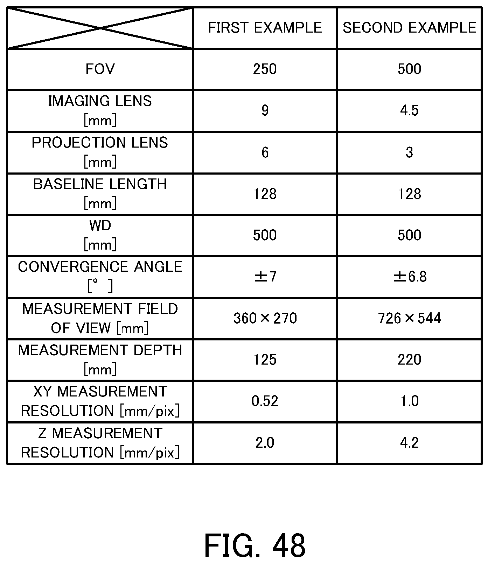

One example of the specifications of the imaging system 2, which is set to satisfy the condition including the specifications"(i) the Z-measurement resolution of the imaging system 2 is equal to or higher than the predetermined lower limit resolution, (ii) the FOV (Field of View) of the imaging system 2 is equal to or larger than the predetermined lower view angle, and (iii) the working distance (WD) of the imaging system 2 is equal to or larger than the predetermined lower limit distance" is illustrated in FIG. 48. FIG. 48 illustrates first and second examples of the specifications of the imaging system 2.

In the first example of the specifications of the imaging system 2, the field of view (FOV: Field Of View) of the imaging system 2 may be 250 degrees. A focal length of the imaging lens of each of the imaging apparatuses 21 and 22 may be 9 mm. A focal length of a projection lens of the projection apparatus 23 may be 6 mm. The baseline length of the imaging system 2 may be 128 mm. The working distance of the imaging system 2 may be 500 mm. The convergence angle of the imaging system 2 may be ±7°. A measurement field of view of the imaging system 2 may be 360 mm × 270 mm. A measurement depth of the imaging system 2 may be 125 mm. A XY measurement resolution of the imaging system 2 may be 0.52 mm/pixel. Note that the XY measurement resolution of the imaging system 2 may mean a minimum size of an object, which is recognizable by the imaging system 2 (in other words, which is recognizable from the three-dimensional position data WSD generated from the image data IMG_3D generated by the imaging system 2) in each of the X-axis direction and the Y-axis direction of the 2D imaging coordinate system or the 3D imaging coordinate system. The Z measurement resolution of the imaging system 2 may be 2.0 mm/pixel.

In the second example of the specifications of the imaging system 2, the field of view of the imaging system 2 may be 500 degrees. The focal length of the imaging lens of each of the imaging apparatuses 21 and 22 may be 4.5 mm. The focal length of a projection lens of the projection apparatus 23 may be 3 mm. The baseline length of the imaging system 2 may be 128 mm. The working distance of the imaging system 2 may be 500 mm. The convergence angle of the imaging system 2 may be ±6. 8°. The measurement field of view of the imaging system 2 may be 726 mm × 544 mm. The measurement depth of the imaging system 2 may be 220 mm. The XY measurement resolution of the imaging system 2 may be 1.0 mm/pixel. The Z measurement resolution of the imaging system 2 may be 4.2 mm/pixel.

### (4-6-3-2) Modified Example of Imaging Apparatuses 21 and 22 and Projection Apparatus 23

In the above-described description, the imaging system 2 includes the imaging apparatus 22 and the projection apparatus 23 to generate the image data IMG_3D. However, the imaging system 2 may not include the projection apparatus 23 to generate the image data IMG_3D. This is because the imaging apparatus 22 is the stereo camera as described above, and therefore, the three-dimensional position data WSD indicating the three-dimensional position of each of the plurality of points of the target object OBJ can be generated from the two image data IMG_3D generated by the two imaging elements of the stereo camera. In this case, the three-dimensional position data generation unit 311 may calculate the parallax by performing a matching for each part (for example, each pixel) between the images indicated by the two image data included in the image data IMG_3D, respectively, by using a known processing method, and generate the three-dimensional position data WSD by a known method based on a triangulation using the calculated parallax.

The imaging apparatus 22 may not be the stereo camera. For example, the imaging apparatus 22 may be a monocular camera that images the target object OBJ using a single imaging element. Even in this case, the target object OBJ, on which the projection pattern from the projection apparatus 23 is projected, is captured in the image indicated by the image data IMG_3D. In this case, the shape of the projection pattern captured in the image indicated by the image data IMG_3D reflects the three-dimensional shape of the target object OBJ on which the projection pattern is projected. Therefore, even in a case where the imaging apparatus 22 is not the stereo camera, the three-dimensional position data generation unit 311 can generate the three-dimensional position data WSD based on the projection pattern captured in the image indicated by the image data IMG_3D by using a known processing method.

The imaging system 2 may include the imaging apparatus 21 that is the monocular camera, but may not include the imaging apparatus 22 that is the stereo camera. In this case, the image data generated by the imaging apparatus 21 imaging the target object in a period during which the projection apparatus 23 does not project the desired projection pattern on the target object OBJ may be used as the image data IMG_2D. On the other hand, the image data generated by the imaging apparatus 21 imaging the target object in a period during which the projection apparatus 23 projects the desired projection pattern on the target object OBJ may be used as the image data IMG_3D. In this case, the image data IMG_3D may be monocular image data corresponding to a single image data (namely, including a single image).

The imaging system 2 may include the imaging apparatus 22 that is a stereo camera, but may not include the imaging apparatus 21. In this case, the image data generated by one of two monocular cameras of the imaging apparatus 22 imaging the target object OBJ may be used as the image data IMG_2D. On the other hand, the image data generated by both two monocular cameras of the imaging apparatus 22 imaging the target object OBJ may be used as the image data IMG_3D.

### (4-6-3-3) Modified Example of Arrangement Position of Imaging System 2

In the above-described description, both imaging apparatuses 21 and 22 are mounted on the robot 1 (especially, the robot arm 12). However, at least one of the imaging apparatuses 21 and 22 may be mounted on a part that is different from the robot 1 (especially, the robot arm 12). For example, at least one of the imaging apparatuses 21 and 22 may be positioned on a ceiling of a building in which the robot system SYS is positioned. For example, at least one of the imaging apparatuses 21 and 22 may be attached to a structure such as a column.

In the above-described description, the imaging system 2 is mounted on the robot 1 that includes the robot arm 12. However, the imaging system 2 may be mounted on a robot that does not include the robot arm 12. For example, the imaging system 2 may be mounted on the robot 1, which includes a support apparatus that is configured to support the imaging system 2 above target object OBJ. In this case, the imaging system 2 may be mounted on the support apparatus. The support apparatus may include a plurality of leg members each of which extends upwardly from the support surface S and a beam member that connects the plurality of leg members through upper ends or vicinity parts of the plurality of leg members. For example, the robot 1 may be configured to move the support apparatus. Note that the support apparatus may not be mounted on the robot 1.

### (4-6-3-4) Alternative of Imaging System 2

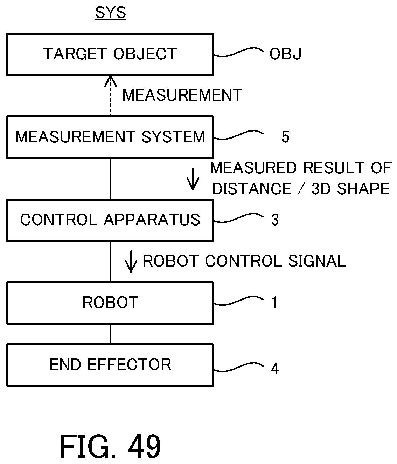

As illustrated in FIG. 49, the robot system SYS (alternatively, the robot system SYSb or SYSc, the same applies in the below-described description) may include a measurement system 5 that is configured to measure at least one of a distance to the target object OBJ and its three-dimensional shape, in addition to or instead of the imaging system 2 that is configured to image the target object OBJ. In this case, the control apparatus 3 (especially, the three-dimensional position data generation unit 311) may generate the three-dimensional position data WSD based on a measured result of at least one of the distance to the target object OBJ and its three-dimensional shape. Then, the control apparatus 3 (especially, the position pose calculation unit 312) may perform the matching processing (namely, the 3D matching processing) using the three-dimensional position data WSD, as in a case where the three-dimensional position data WSD is generated from the image data IMG_3D generated by the imaging system 2. For example, the robot system SYS may include the measurement system 5 and the imaging apparatus 21 that serves as the imaging system 2. In this case, the control apparatus 3 may perform the matching processing using both the three-dimensional position data WSD generated by the measurement of the measurement system 5 and the image data IMG_2D generated by the imaging of the imaging apparatus 21.

The measurement system 5 may be an existing system that is configured to optically measure at least one of the distance to the target object OBJ and its three-dimensional shape. For example, the measurement system 5 may be an existing system that is configured to measure of at least one of the distance to the target object OBJ and its three-dimensional shape with a non-contact method. For example, the measurement system 5 may be configured to optically measure at least one of the distance to target object OBJ and its three-dimensional shape by irradiating the target object OBJ with measurement electromagnetic wave and detect the electromagnetic wave returning to the measurement system 5 from the target object OBJ onto which the electromagnetic wave is irradiated. The measurement electromagnetic wave may be light (in this case, the light irradiated onto the target object OBJ may be referred to as measurement light) or radio wave (in this case, the radio wave irradiated onto the target object OBJ may be measurement wave). At least one of a TOF (Time Of Flight) type of measurement apparatus, a FMCW (Frequency Modulated Continuous Wave) type of measurement apparatus, an optical comb type of interferometer using light (an optical frequency comb) including frequency components arranged with equal intervals on the frequency axis as the measurement light, a triangulation-based measurement apparatus, and a millimeter-wave radar using millimeter waves as the measurement wave is one example of the measurement system 5. Note that at least one of the TOF type of measuring instrument and the FMCW type of measuring instrument may be referred to as LiDAR (Light Detection and Ranging). In a case where the measurement system 5 is this type of measurement sensor, the control apparatus 3 (especially, the three-dimensional position data generation unit 311) may generate the three-dimensional position data WSD, which is point cloud data, based on the measured result of the target object OBJ by the measurement sensor. Then, the control apparatus 3 (especially, the position pose calculation unit 312) may perform the matching processing (namely, the 3D matching processing) using the three-dimensional position data WSD, as in a case where the three-dimensional position data WSD is generated from the image data IMG_3D generated by the imaging system 2. Note that the measurement system 5 may be referred to as a measurement apparatus or a measurement sensor.

Note that imaging system 2 images the target object OBJ by using an imaging element of each of the imaging apparatuses 21 and 22 to detect returning light from the target object OBJ. Namely, both the imaging system 2 and the measurement system 5 detect the returning light from the target object OBJ. Therefore, the imaging system 2 and the measurement system 5 may collectively be referred to as a light detection system.

### (5) Supplementary Note

Regarding the above-described example embodiment, below described Supplementary notes are further disclosed.

### [Supplementary Note A1]

A control apparatus that generates a control signal for controlling a robot on which a process apparatus that performs a process on a target object and an imaging system are mounted and which moves the process apparatus and the imaging system, wherein
the control apparatus includes:
a computing apparatus that generates the control signal; and
a communication apparatus that outputs the control signal generated by the computing apparatus,
the computing apparatus:
   generates, as the control signal, a first control signal for controlling the robot so that a positional relationship between the target object and the imaging system changes to a second positional relationship different from a first positional relationship, based on second image data generated by the imaging system imaging the target object, in a case where it is determined, based on first image data generated by the imaging system imaging the target object when the positional relationship is the first positional relationship, that there is no target object on which the process apparatus can perform the process; and
   generates a second control signal as the control signal, based on at least one of position data indicating a position of the target object and pose data indicating a pose of the target object, which are generated based on third image data generated by the imaging system imaging the target object at the second positional relationship.

### [Supplementary Note A2]

The control apparatus according to the Supplementary Note A1, wherein
the first control signal is a signal for controlling the robot so as to change a position and a pose of the imaging system relative to the target object.

### [Supplementary Note A3]

The control apparatus according to the Supplementary Note A1 or A2, wherein
the first control signal is a signal for controlling the robot so as to change an imaging direction of the imaging system relative to the target object from a first direction to a second direction.

### [Supplementary Note A4]

The control apparatus according to the Supplementary Note A3, wherein
at least one of the first image data and the second image data is generated by the imaging system imaging the target object from the first direction.

### [Supplementary Note A5]

The control apparatus according to any one of the Supplementary Notes A1 to A4, wherein
the position data and the pose data indicating the position and the pose of the target object calculated based on the third image data are second position data and second pose data,
the computing apparatus:
   generates at least one of first position data indicating the position of the target object and first pose data indicating the pose of the target object, based on the second image data; and
   generates the first control signal based on position pose information, which indicates at least one of a relative position and pose between the target object and the imaging system and which is set in advance, and at least one of the first position data and the first pose data.

### [Supplementary Note A6]

The control apparatus according to the Supplementary Note A5, wherein
the position pose information is set by being input by a user in advance.

### [Supplementary Note A7]

The control apparatus according to any one of the Supplementary Notes A1 to A6, wherein
a proportion of the target object relative to an imaging field of view of the imaging system at the second positional relationship is larger than a proportion of the target object relative to the imaging field of view of the imaging system at the first positional relationship.

### [Supplementary Note A8]

The control apparatus according to the Supplementary Note A7, wherein
the first control signal is a signal for controlling the robot so that the proportion of the target object relative to the imaging field of view at the second positional relationship is larger than the proportion of the target object relative to the imaging field of view at the first positional relationship.

### [Supplementary Note A9]

The control apparatus according to any one of the Supplementary Notes A1 to A8, wherein
the computing apparatus:
determines based on first three-dimensional position data, which is generated from the first image data and which indicates a three-dimensional position of each of a plurality of points of the target object, that there is no target object on which the process apparatus can perform the process; and
calculates at least one of the position data and the pose data of the target object based on second three-dimensional position data, which is generated from the third image data and which indicates a three-dimensional position of each of a plurality of points of the target object, and
the number of points of the target object whose three-dimensional positions are indicated by the second three-dimensional position data is larger than the number of points of the target object whose three-dimensional positions are indicated by the first three-dimensional position data.

### [Supplementary Note A10]

The control apparatus according to the Supplementary Note A9, wherein
the first control signal is a signal for controlling the robot so that the number of points of the target object whose three-dimensional positions are indicated by the second three-dimensional position data is larger than the number of points of the target object whose three-dimensional positions are indicated by the first three-dimensional position data.

### [Supplementary Note A11]

The control apparatus according to any one of the Supplementary Notes A1 to A10, wherein
the first control signal is a signal for controlling the robot so as to rotationally move the imaging system around a predetermined rotational axis.

### [Supplementary Note A12]

The control apparatus according to any one of the Supplementary Notes A1 to A10, wherein
the first control signal is a signal for controlling the robot so as to rotationally move the imaging system so that an optical axis direction, which extends from the imaging system along an optical axis of the imaging system, changes relative to the target object.

### [Supplementary Note A13]

The control apparatus according to any one of the Supplementary Notes A1 to A12, wherein
the computing apparatus:
generates at least one of the position data and the pose data of the target object based on the third image data and partial model data indicating a part of a model of the target object; and
generates the second control signal based on the generated position data and pose data.

### [Supplementary Note A14]

The control apparatus according to any one of the Supplementary Notes A1 to A13, wherein
the position data and the pose data indicating the position and the pose of the target object calculated based on the third image data are second position data and second pose data,
the computing apparatus:
   generates at least one of first position data indicating the position of the target object and first pose data indicating the pose of the target object, based on the second image data and model data indicating a model of the target object; and
   generates the first control signal based on at least one of the generated first position data and first pose data.

### [Supplementary Note A15]

The control apparatus according to any one of the Supplementary Notes A1 to A12, wherein
the computing apparatus:
generates at least one of first position data indicating the position of the target object and first pose data indicating the pose of the target object, based on the second image data and model data indicating a model of the target object;
generates the first control signal based on at least one of the first position data and the first pose data;
generates at least one of the second position data and the second pose data as the position data and the pose data of the target object, based on the third image data and partial model data indicating a part of the model of the target object; and
generate the second control signal based on at least one of the generated second position data and second pose data.

### [Supplementary Note A16]

The control apparatus according to any one of the Supplementary Notes A13 to A15, wherein
a part of the model indicated by the partial model data is a part corresponding to an area at which a density of points, which represent a three-dimensional position of the target object that is indicated by three-dimensional position data generated from the third image data, is equal to or larger than a threshold value.

### [Supplementary Note A17]

The control apparatus according to any one of the Supplementary Notes A13 to A16, wherein
a part of the model indicated by the partial model data is a part acquired by removing, from the model, an area at which a density of points, which represent a three-dimensional position of the target object that is indicated by three-dimensional position data generated from the third image data, is smaller than a threshold value.

### [Supplementary Note A18]

The control apparatus according to any one of the Supplementary Notes A13 to A17, wherein
the partial model data is generated based on simulation image data that is generated by assuming a case where the imaging system images the target object when the target object and the imaging system are in a predetermined positional relationship.

### [Supplementary Note A19]

The control apparatus according to the Supplementary Note A18, wherein
the predetermined positional relationship is a positional relationship that is based on position pose information that indicates at least one of a relative position and pose between the target object and the imaging system and that is set in advance.

### [Supplementary Note A20]

The control apparatus according to the Supplementary Note A18 or A19, wherein
the partial model data is generated based on a contrast of an image indicated by the simulation image data.

### [Supplementary Note A21]

The control apparatus according to any one of the Supplementary Notes A18 to A20, wherein
the computing apparatus generates the partial model data based on the simulation image data.

### [Supplementary Note A22]

The control apparatus according to any one of the Supplementary Notes A18 to A21, wherein
a part of the model indicated by the partial model data generated based on the simulation image data is a part corresponding to an area at which a density of points, which represent a three-dimensional position of the target object that is indicated by three-dimensional position data generated from the third image data, is equal to or larger than a threshold value.

### [Supplementary Note A23]

The control apparatus according to any one of the Supplementary Notes A18 to A23, wherein
a part of the model indicated by the partial model data generated based on the simulation image data is a part acquired by removing, from the model, an area at which a density of points, which represent a three-dimensional position of the target object that is indicated by three-dimensional position data generated from the third image data, is smaller than a threshold value.

### [Supplementary Note A24]

The control apparatus according to any one of the Supplementary Notes A13 to A17, wherein
the computing apparatus generates the partial model data based on at least one of information related to an area removed from the model and information related to an area included in the model, which is input in advance by a user.

### [Supplementary Note A25]

The control apparatus according to any one of the Supplementary Notes A13 to A24, wherein
the computing apparatus calculates at least one of the position data and the pose data of the target object based on the three-dimensional position data, which is generated from the third image data and which indicates a three-dimensional position of each of a plurality of points of the target object, and the partial model data.

### [Supplementary Note A26]

The control apparatus according to any one of the Supplementary Notes A1 to A25, wherein
the second control signal is a signal for controlling the robot so that the process apparatus approaches the target object to perform the process on the target object.

### [Supplementary Note A27]

The control apparatus according to any one of the Supplementary Notes A1 to A26, wherein
the second image data is generated by the imaging system imaging the target object at the first positional relationship.

### [Supplementary Note A28]

The control apparatus according to any one of the Supplementary Notes A1 to A27, wherein
the second image data is generated by the imaging system imaging the target object at a positional relationship different from the second positional relationship.

### [Supplementary Note A29]

The control apparatus according to any one of the Supplementary Notes A1 to A28, wherein
the imaging system generates the second image data by imaging the target object after it is determined based on the first image data that there is no target object on which the process apparatus can perform the process.

### [Supplementary Note A30]

The control apparatus according to any one of the Supplementary Notes A1 to A29, wherein
the imaging system generates the second image data by imaging the target object before it is determined based on the first image data that there is no target object on which the process apparatus can perform the process.

### [Supplementary Note A31]

The control apparatus according to the Supplementary Note A30, wherein
the imaging system generates the second image data together with the first image data by imaging the target object at the first positional relationship.

### [Supplementary Note A32]

The control apparatus according to any one of the Supplementary Notes A1 to A31, wherein
determining by the computing apparatus that there is no target object on which the process apparatus can perform the process includes determining by the computing apparatus that a position pose computing processing of the target object based on the first image data is defect.

### [Supplementary Note A33]

The control apparatus according to any one of the Supplementary Notes A1 to A32, wherein
the imaging system includes a first imaging apparatus and a second imaging apparatus that is different from the first imaging apparatus,
the first imaging apparatus generates the first image data by imaging the target object at the first positional relationship,
the second imaging apparatus generates the second image data by imaging the target object, and
the first imaging apparatus generates the third image data by imaging the target object at the second positional relationship.

### [Supplementary Note A34]

The control apparatus according to the Supplementary Note A33, wherein
the first imaging apparatus is one of a stereo camera, which includes two monocular cameras, and a monocular camera, which is different from the two monocular cameras, and
the second imaging apparatus is the other one of the stereo camera and the monocular camera that is different from the two monocular cameras.

### [Supplementary Note A35]

The control apparatus according to the Supplementary Note A34, wherein
the first imaging apparatus is the stereo camera, and
the second imaging apparatus is the monocular camera that is different from the two monocular cameras.

### [Supplementary Note A36]

The control apparatus according to any one of the Supplementary Notes A1 to A34, wherein
the imaging system includes a stereo camera, which includes two monocular cameras, or a monocular camera.

### [Supplementary Note A37]

The control apparatus according to any one of the Supplementary Notes A33 to A36, wherein
the imaging system includes a projection apparatus that projects projection light onto the target object,
the first imaging apparatus generates the first image data by imaging the target object in at least a part of a period during which the projection apparatus projects onto the target object, and
the second imaging apparatus generates the second image data by imaging the target object in at least a part of a period during which the projection apparatus does not project onto the target object.

### [Supplementary Note A38]

The control apparatus according to the Supplementary Note A36, wherein
the imaging system includes the stereo camera,
the two monocular cameras of the stereo camera generate the first image data including two image data which are generated by the two monocular cameras imaging the target object at the first positional relationship, respectively, and
the two monocular cameras of the stereo camera generate the second image data including at least one of two image data generated by the two monocular cameras imaging the target object, respectively.

### [Supplementary Note A39]

The control apparatus according to the Supplementary Note A38, wherein
the two monocular cameras of the stereo camera generate the second image data including two image data generated by the two monocular cameras imaging the target object at the first positional relationship, respectively and
the second image data is the first image data.

### [Supplementary Note A40]

The control apparatus according to the Supplementary Note A36, wherein
the imaging system includes the monocular camera,
the monocular camera generates the first image data by imaging the target object at the first positional relationship, and
the monocular camera generates the second image data by imaging the target object.

### [Supplementary Note A41]

The control apparatus according to the Supplementary Note A40, wherein
the monocular camera generates the second image data by imaging the target object at the first positional relationship, and
the second image data is the first image data.

### [Supplementary Note A42]

The control apparatus according to the Supplementary Note A40, wherein
the imaging system includes a projection apparatus that projects projection light onto the target object,
the monocular camera generates the first image data by imaging the target object in at least a part of a period during which the projection apparatus projects onto the target object, and
the monocular camera generates the second image data by imaging the target object in at least a part of a period during which the projection apparatus does not project onto the target object.

### [Supplementary Note A43]

The control apparatus according to the Supplementary Note A33, wherein
the imaging system includes a stereo camera including two monocular cameras,
the two monocular cameras of the stereo camera generate the first image data including two image data which are generated by the two monocular cameras imaging the target object at the first positional relationship, respectively,
one of the two monocular cameras of the stereo camera generates the second image data by imaging the target object, and
the two monocular cameras of the stereo camera generate the third image data including two image data which are generated by the two monocular cameras imaging the target object at the second positional relationship, respectively.

### [Supplementary Note A44]

The control apparatus according to the Supplementary Note A43, wherein
the second image data is one of the two image data that are the first image data.

### [Supplementary Note A45]

The control apparatus according to the Supplementary Note A43, wherein
the imaging system includes a stereo camera including two monocular cameras,
one of the two monocular cameras of the stereo camera generates the first image data by imaging the target object at the first positional relationship,
the two monocular cameras of the stereo camera generate the second image data including two image data which are generated by the two monocular cameras imaging the target object, respectively, and
one of the two monocular cameras of the stereo camera generates the third image data by imaging the target object at the second positional relationship.

### [Supplementary Note A46]

The control apparatus according to the Supplementary Note A45, wherein
the first image data is one of the two image data that are the second image data.

### [Supplementary Note A47]

The control apparatus according to any one of the Supplementary Notes A1 to A4, wherein
the position data and the pose data indicating the position and the pose of the target object calculated based on the third image data are second position data and second pose data,
the computing apparatus:
   generates at least one of first position data indicating the position of the target object and first pose data indicating the pose of the target object, based on the second image data;
   generates the first control signal based on position pose information, which indicates a relative position and pose between the target object and the imaging system and which is set in advance, and at least one of the generated first position data and first pose data.

### [Supplementary Note A48]

The control apparatus according to the Supplementary Note A47, wherein
the target object moves in at least a part of a period from a timing at which the second image data is generated to a timing at which the third image data is generated.

### [Supplementary Note A49]

A control system including:
the control apparatus according to any one of the Supplementary Notes A1 to A48; and
the imaging system.

### [Supplementary Note A50]

A robot system including:
the control apparatus according to any one of the Supplementary Notes A1 to A48;
the imaging system; and
the robot.

### [Supplementary Note A51]

A control method that generates a control signal for controlling a robot on which a process apparatus that performs a process on a target object and an imaging system are mounted and which moves the process apparatus and the imaging system, wherein
the control method includes:
generating, as the control signal, a first control signal for controlling the robot so that a positional relationship between the target object and the imaging system changes to a second positional relationship different from a first positional relationship, based on second image data generated by the imaging system imaging the target object, in a case where it is determined, based on first image data generated by the imaging system imaging the target object when the positional relationship is the first positional relationship, that there is no target object on which the process apparatus can perform the process; and
generating a second control signal as the control signal, based on at least one of position data indicating a position of the target object and pose data indicating a pose of the target object, which are generated based on third image data generated by the imaging system imaging the target object at the second positional relationship.

### [Supplementary Note A52]

A computer program that allows a computer to execute the control method according to the Supplementary Note A51.

### [Supplementary Note B1]

A control apparatus that generates a control signal for controlling a robot on which a process apparatus that performs a process on a target object and an imaging system are mounted and which moves the process apparatus and the imaging system, wherein
the control apparatus includes:
a computing apparatus that generates the control signal; and
a communication apparatus that outputs the control signal generated by the computing apparatus,
the computing apparatus generates, as the control signal, a first control signal for controlling the robot so that the imaging system changes to at least one of a second position, which is different from a first position, and a second pose, which is different from a first pose, based on second image data generated by the imaging system imaging a second target object group including a plurality of target objects, in a case where it is determined, based on first image data generated by the imaging system imaging a first target object group including a plurality of target objects when the imaging system is at the first position and the first pose, that there is no target object on which the process apparatus can perform the process in the first target object group.

### [Supplementary Note B2]

The control apparatus according to the Supplementary Note B1, wherein
the first control signal is a signal for controlling the robot so as to change at least one of a position and a pose of the imaging system relative to one target object of the second target object group.

### [Supplementary Note B3]

The control apparatus according to the Supplementary Note B1 or B2, wherein
the first control signal is a signal for controlling the robot so as to change an imaging direction of the imaging system relative to one target object of the second target object group from a first direction to a second direction.

### [Supplementary Note B4]

The control apparatus according to the Supplementary Note B3, wherein
the first target object group includes the one target object, and
the first image data is generated by the imaging system imaging the one target object from the first direction.

### [Supplementary Note B5]

The control apparatus according to the Supplementary Note B3 or B4, wherein
the second image data is generated by the imaging system imaging the one target object from the first direction.

### [Supplementary Note B6]

The control apparatus according to any one of the Supplementary Notes B1 to B5, wherein
the first control signal is a signal for controlling the robot so that a proportion of one target object of the second target object group included in an imaging field of view of the imaging system after the imaging system has moved by a control of the robot based on the first control signal is larger than a proportion of the one target object included in the imaging field of view before the imaging system moves by the control of the robot based on the first control signal.

### [Supplementary Note B7]

The control apparatus according to the Supplementary Note B1 or B2, wherein
the first control signal is a signal for controlling the robot so as to move the imaging system to at least one of a position and a pose at which one target object of the second target object group can be imaged from a first direction, and
the computing apparatus generates, as the control signal, a second control signal for controlling the robot so as to move the imaging system to at least one of a position and a pose at which the one target object can be imaged from a second direction different from the first direction, after the imaging system has moved to at least one of the position and the pose at which the one target object can be imaged from the first direction by the control of the robot based on the first control signal.

### [Supplementary Note B8]

The control apparatus according to any one of the Supplementary Notes B1 to B7, wherein
at least one target object of the second target object group is the same as at least one target object of the first target object group.

### [Supplementary Note B9]

The control apparatus according to any one of the Supplementary Notes B1 to B8, wherein
the computing apparatus generates the first control signal based on at least one of third position data and third pose data, which indicate a position and a pose of one target object of the second target object group, respectively, and which are generated based on the second image data, and relative position pose information, which indicates at least one of a relative position and pose between the target object and the imaging system and which is set in advance.

### [Supplementary Note B10]

The control apparatus according to the Supplementary Note B9, wherein
the relative position pose information is set by being input by a user in advance.

### [Supplementary Note B11]

The control apparatus according to any one of the Supplementary Notes B1 to B10, wherein
the computing apparatus generates, as the control signal, a second control signal for controlling the robot so that the imaging system changes to at least one of a fourth position, which is different from the second position, and a fourth pose, which is different from the second pose, in a case where it is determined, based on third image data generated by the imaging system imaging a third target object group including a plurality of target objects at at least one of the second position and the second pose, that there is no target object on which the process apparatus can perform the process in the third target object group.

### [Supplementary Note B12]

The control apparatus according to the Supplementary Note B11, wherein
the computing apparatus generates the second control signal without using new image data as an imaged result by the imaging system.

### [Supplementary Note B13]

The control apparatus according to the Supplementary Note B11 or B12, wherein
the computing apparatus:
generates the first control signal based on at least one of third position data and third pose data, which indicate a position and a pose of one target object of the second target object group, respectively, and which are generated based on the second image data, and position pose information, which indicates at least one of a relative position and pose between the target object and the imaging system and which is set in advance; and
generates the second control signal based on change information that indicates at least one of a direction and an amount for changing at least one of a relative position and pose between the target object and the imaging system and that is set in advance.

### [Supplementary Note B14]

The control apparatus according to the Supplementary Note B13, wherein
the change information is set by being input by a user in advance.

### [Supplementary Note B15]

The control apparatus according to any one of the Supplementary Notes B11 to 14, wherein
the computing apparatus generates a third control signal as the control signal, based on at least one of fifth position data and fifth pose data that indicate a position and a pose of one target object of a fourth target object group including a plurality of target objects, respectively, and that are generated based on fourth image data generated by the imaging system imaging the fourth target object group at at least one of the fourth position and the fourth pose.

### [Supplementary Note B16]

The control apparatus according to the Supplementary Note B15, wherein
the third control signal is a signal for controlling the robot so that the process apparatus approaches the one target object of the fourth target object group to perform the process on the target object.

### [Supplementary Note B17]

The control apparatus according to the Supplementary Note B15 or B16, wherein
the computing apparatus:
generates at least one of the fifth position data and the fifth pose data of the one target object of the fourth target object group based on the fourth image data and partial model data indicating a part of a model of the target object; and
generates the third control signal based on at least one of the generated fifth position data and fifth pose data.

### [Supplementary Note B18]

The control apparatus according to the Supplementary Note B17, wherein
a part of the model indicated by the partial model data is a part corresponding to an area at which a density of points, which represent a three-dimensional position of the one target object of the fourth target object group that is indicated by three-dimensional position data generated from the fourth image data, is equal to or larger than a threshold value.

### [Supplementary Note B19]

The control apparatus according to the Supplementary Note B17 or B18, wherein
a part of the model indicated by the partial model data is a part acquired by removing, from the model, an area at which a density of points, which represent a three-dimensional position of the one target object of the fourth target object group that is indicated by three-dimensional position data generated from the fourth image data, is smaller than a threshold value.

### [Supplementary Note B20]

The control apparatus according to any one of the Supplementary Notes B15 to B19, wherein
the computing apparatus generates the first control signal based on the second image data and model data indicating the model of the target object.

### [Supplementary Note B21]

The control apparatus according to any one of the Supplementary Notes B15 to B20, wherein
the computing apparatus determines that there is no target object on which the process apparatus can perform the process, as a result of determining based on the first image data and model data indicating the model of the target object whether or not the process apparatus can perform the process on the at least one target object of the first target object group.

### [Supplementary Note B22]

The control apparatus according to any one of the Supplementary Notes B15 to B21, wherein
the computing apparatus:
determines that there is no target object on which the process apparatus can perform the process in the third target object group, as a result of determining based on the third image data and first partial model data indicating a part of a model of the target object whether or not the process apparatus can perform the process on at least one target object of the third target object group;
generates at least one of the fifth position data and the fifth pose data of the one target object of the fourth target object group based on the fourth image data and second partial model data indicating a part of the model; and
generates the third control signal based on at least one of the generated fifth position data and fifth pose data.

### [Supplementary Note B23]

The control apparatus according to the Supplementary Note B22, wherein
the first partial model data and the second partial model data are the same data indicating the same part of the model.

### [Supplementary Note B24]

The control apparatus according to the Supplementary Note B22, wherein
the second partial model data is data indicating a part of the model that partially overlaps with or is different from a part of the model indicated by the first partial model data.

### [Supplementary Note B25]

The control apparatus according to any one of the Supplementary Notes B22 to B24, wherein
the third target object group includes a second target object as the target object,
the one target object of the fourth target object group is a fourth target object,
the computing apparatus:
   determines that there is no second target object on which the process apparatus can perform the process in the third target object group, as a result of determining based on the third image data and the first partial model data whether or not the process apparatus can perform the process on the second target object that is one target object of the third target object group; and
   generates the third control signal based on at least one of the fifth position data and the fifth pose data of the fourth target object generated based on the second partial model data and the fourth image data.

### [Supplementary Note B26]

The control apparatus according to the Supplementary Note B25, wherein
the fourth target object is the second target object.

### [Supplementary Note B27]

The control apparatus according to the Supplementary Note B25, wherein
the fourth target object is the target object that is different from the second target object.

### [Supplementary Note B28]

The control apparatus according to any one of the Supplementary Notes B25 to B27, wherein
the computing apparatus:
generates the first control signal based on at least one of third position data and third pose data, which indicate a position and a pose of a first target object that is one target object of the second target object group and which are generated based on the second image data; and
generates the second control signal for controlling the robot so as to change at least one of a position and a pose of the imaging system relative to a third target object that is one target object of the third target object group.

### [Supplementary Note B29]

The control apparatus according to the Supplementary Note B28, wherein
the fourth target object is the target object that is the same as the first target object, the second target object, and the third target object.

### [Supplementary Note B30]

The control apparatus according to the Supplementary Note B28, wherein
the fourth target object is the target object that is different from at least one of the target object of the first target object, the second target object, and the third target object.

### [Supplementary Note B31]

The control apparatus according to any one of the Supplementary Notes B22 to B30, wherein
the second partial model data is data indicating a part of the model that partially overlaps with or is different from a part of the model indicated by the first partial model data,
the first partial model data is generated based on first simulation image data generated by assuming that the imaging system images the target object when the target object and the imaging system are in a first positional relationship, and
the second partial model data is generated based on second simulation image data generated by assuming that the imaging system images the target object when the target object and the imaging system are in a second positional relationship that is different from the first positional relationship.

### [Supplementary Note B32]

The control apparatus according to the Supplementary Note B31, wherein
the computing apparatus:
generates the first partial model data based on the first simulation image data; and
generates the second partial model data based on the second simulation image data.

### [Supplementary Note B33]

The control apparatus according to the Supplementary Note B31 or B32, wherein
each of the first positional relationship and the second positional relationship is a positional relationship based on relative position pose information, which indicates at least one of a relative position and pose between the target object and the imaging system and which is set in advance.

### [Supplementary Note B34]

The control apparatus according to the Supplementary Note B33, wherein
the first positional relationship is a positional relationship based on the relative position pose information, and
the second positional relationship is a positional relationship based on the relative position pose information and change information that indicates at least one of a direction and an amount for changing at least one of a relative position and pose between the target object and the imaging system and that is set in advance.

### [Supplementary Note B35]

The control apparatus according to any one of the Supplementary Notes B22 to B30, wherein
the second partial model data is data indicating a part of the model that partially overlaps with or is different from a part of the model indicated by the first partial model data, and
the computing apparatus:
   generates the first partial model data based on at least one of first removal information related to an area removed from the model and first inclusion information related to an area included in the model, which is input in advance by a user; and
   generates the second partial model data based on at least one of second removal information and second inclusion information, which is input in advance by a user.

### [Supplementary Note B36]

The control apparatus according to any one of the Supplementary Notes B21 to B24, wherein
the imaging system includes a first imaging apparatus and a second imaging apparatus that is different from the first imaging apparatus,
the first imaging apparatus generates the first image data and the third image data,
the second imaging apparatus generates the second image data,
the first imaging apparatus is one of a stereo camera, which includes two monocular cameras, and a monocular camera, which is different from the two monocular cameras, and
the second imaging apparatus is the other one of the stereo camera and the monocular camera that is different from the two monocular cameras.

### [Supplementary Note B37]

The control apparatus according to any one of the Supplementary Notes B25 to B35, wherein
the imaging system includes a first imaging apparatus and a second imaging apparatus that is different from the first imaging apparatus,
the first imaging apparatus generates the first image data, the third image data, and the fourth image data,
the second imaging apparatus generates the second image data,
the first imaging apparatus is one of a stereo camera, which includes two monocular cameras, and a monocular camera, which is different from the two monocular cameras, and
the second imaging apparatus is the other one of the stereo camera and the monocular camera that is different from the two monocular cameras.

### [Supplementary Note B38]

The control apparatus according to the Supplementary Note B36 or B37, wherein
the first imaging apparatus is the stereo camera, and
the second imaging apparatus is the monocular camera that is different from the two monocular cameras.

### [Supplementary Note B39]

The control apparatus according to any one of the Supplementary Notes B21 to B23, wherein
the computing apparatus generates, as the control signal, a fourth control signal for controlling the robot so that the imaging system changes from at least one of the fourth position and the fourth pose to at least one of a fifth position and a fifth pose, which indicate a position and a pose for re-imaging, respectively, and which are set in advance, in a case where it is determined, based on fourth image data generated by the imaging system imaging a fourth target object group including a plurality of target objects when the imaging system is at at least one of the fourth position and the fourth pose, that there is no target object on which the process apparatus can perform the process in the fourth target object group.

### [Supplementary Note B40]

The control apparatus according to the Supplementary Note B39, wherein
the computing apparatus generates the fourth control signal without using new image data as an imaged result by the imaging system.

### [Supplementary Note B41]

The control apparatus according to the Supplementary Note B40, wherein
the fourth control signal is a signal for controlling the robot so that at least half or more of the target objects of a fifth target object group included in an imaging field of view of the imaging system at at least one of the fifth position and the fifth pose become target objects different from the target objects of the fourth target object group included in the imaging field of view at at least one of the fourth position and the fourth pose.

### [Supplementary Note B42]

The control apparatus according to the Supplementary Note B41, wherein
the fourth control signal is a signal for controlling the robot so that all of the target objects of the fifth target object group included in the imaging field of view of the imaging system at at least one of the fifth position and the fifth pose become target objects different from the target objects of the fourth target object group included in the imaging field of view at at least one of the fourth position and the fourth pose.

### [Supplementary Note B43]

The control apparatus according to any one of the Supplementary Notes B39 to B42, wherein
the computing apparatus sets at least one of the fifth position and the fifth pose based on re-imaging position pose information that indicates at least one of a position and a pose for re-imaging with the imaging system and that is input by the user in advance.

### [Supplementary Note B44]

The control apparatus according to any one of the Supplementary Notes B39 to B42, wherein
the computing apparatus sets at least one of the fifth position and the fifth pose based on an imaging field of view of the imaging system.

### [Supplementary Note B45]

The control apparatus according to the Supplementary Note B44, wherein
at least the plurality of target objects of the fourth target object group and the plurality of target objects of the fifth target object are in a container, and
the computing apparatus sets at least one of the fifth position and the fifth pose based on the imaging field of view and a size of the container.

### [Supplementary Note B46]

The control apparatus according to any one of the Supplementary Notes B39 to B45, wherein
the computing apparatus generates a fifth control signal as the control signal, based on at least one of sixth position data and sixth pose data, which indicate a position and a pose of one target object of a fifth target object group including a plurality of target objects, respectively, and which are generated based on fifth image data generated by the imaging system imaging the fifth target object group at at least one of the fifth position and the fifth pose.

### [Supplementary Note B47]

The control apparatus according to the Supplementary Note B46, wherein
the fifth control signal is a signal for controlling the robot so that the process apparatus approaches the one target object of the fifth target object group to perform the process on the target object.

### [Supplementary Note B48]

The control apparatus according to the Supplementary Note B46 or B47, wherein
the imaging system includes a first imaging apparatus and a second imaging apparatus that is different from the first imaging apparatus,
the first imaging apparatus generates the first image data, the third image data, the fourth image data, and the firth image data,
the second imaging apparatus generates the second image data,
the first imaging apparatus is one of a stereo camera, which includes two monocular cameras, and a monocular camera, which is different from the two monocular cameras, and
the second imaging apparatus is the other one of the stereo camera and the monocular camera that is different from the two monocular cameras.

### [Supplementary Note B49]

The control apparatus according to any one of the Supplementary Notes B1 to B48, wherein
the imaging system includes a stereo camera, which includes two monocular cameras, or a monocular camera.

### [Supplementary Note B50]

A control system including:
the control apparatus according to any one of the Supplementary Notes B1 to B49; and
the imaging system.

### [Supplementary Note B51]

A robot system including:
the control apparatus according to any one of the Supplementary Notes B1 to B49; and
the imaging system; and
the robot.

### [Supplementary Note B52]

A control method that generates a control signal for controlling a robot on which a process apparatus that performs a process on a target object and an imaging system are mounted and which moves the process apparatus and the imaging system, wherein
the control method includes: generating, as the control signal, a first control signal for controlling the robot so that the imaging system changes to at least one of a second position, which is different from a first position, and a second pose, which is different from a first pose, based on second image data generated by the imaging system imaging a second target object group including a plurality of target objects, in a case where it is determined, based on first image data generated by the imaging system imaging a first target object group including a plurality of target objects when the imaging system is at the first position and the first pose, that there is no target object on which the process apparatus can perform the process in the first target object group.

### [Supplementary Note B53]

A computer program that allows a computer to execute the control method according to the Supplementary Note B52.

### [Supplementary Note C1]

A control apparatus that generates a control signal for controlling a robot on which a process apparatus that performs a process on a target object and an imaging system are mounted and which moves the process apparatus and the imaging system, wherein
the control apparatus includes:
a computing apparatus that generates the control signal; and
a communication apparatus that outputs the control signal generated by the computing apparatus,
the computing apparatus:
   generates, as the control signal, a first control signal for controlling the robot so that the imaging system changes to at least one of a second position, which is different from a first position, and a second pose, which is different from a first pose, based on second image data generated by the imaging system imaging a second target object group including a plurality of target objects, in a case where it is determined, based on first image data generated by the imaging system imaging a first target object group including a plurality of target objects when the imaging system is at the first position and the first pose, that there is no target object on which the process apparatus can perform the process in the first target object group; and
   generates a second control signal as the control signal, based on at least one of position data and pose data, which indicate a position and a pose of one target object of a third target object group including a plurality of target objects, respectively, and which are generated based on third image data generated by the imaging system imaging the third target object group at at least one of the second position and the second pose.

### [Supplementary Note C2]

The control apparatus according to the Supplementary Note C1, wherein
at least one target object of the second target object group is the same as at least one target object of the third target object group.

### [Supplementary Note C3]

The control apparatus according to Supplementary Note C1 or C2, wherein
the one target object of the third target object group, for which at least one of the position data and the pose data is generated, is the same as one target object of the second target object group.

### [Supplementary Note C4]

The control apparatus according to any one of the Supplementary Notes C1 to C3, wherein
the one target object of the third target object group is a second target object,
at least one of the position data and the pose data of the second target object, which is generated based on the third image data, is at least one of second position data and second pose data, and
the computing apparatus generates the first control signal based on at least one of first position data and first pose data, which indicate a position and a pose of a first target object that is one target object of the second target object group, respectively, and which is generated based on the second image data, and position pose information, which indicates a relative position and pose between the target object and the imaging system and which is set in advance.

### [Supplementary Note C5]

The control apparatus according to the Supplementary Note C4, wherein
the first target object, for which at least one of the first position data and the first pose data is generated, is the second target object, for which at least one of the second position data and the second pose data is generated.

### [Supplementary Note C6]

The control apparatus according to the Supplementary Note C4, wherein
the first target object, for which at least one of the first position data and the first pose data is generated, is the target object of the third target object group that is different from the second target object, for which at least one of the second position data and the second pose data is generated.

### [Supplementary Note C7]

The control apparatus according to any one of the Supplementary Notes C4 to C6, wherein
the computing apparatus:
selects the first target object from the second target object group based on the second image data; and
generates the first control signal based on at least one of the first position data and the first pose data of the first target object, which are generated based on the second image data, and the position pose information.

### [Supplementary Note C8]

The control apparatus according to the Supplementary Note C7, wherein
the computing apparatus selects the first target object from the second target object group based on a similarity, which is calculated based on model data indicating a model of the target object and the second image data, between the model and an image of each of the plurality of target objects of the second target object group indicated by the second image data.

### [Supplementary Note C9]

The control apparatus according to the Supplementary Note C7 or C8, wherein
the computing apparatus selects the first target object from the second target object group based on a similarity, which is calculated based on model data that indicates a model of the target object and three-dimensional position data that is generated from the second image data and that indicates a three-dimensional position of each of a plurality of points of each of the plurality of target objects of the second target object group, between the model and a plurality of points, which indicate a three-dimensional position of each of the plurality of target objects of the second target object group indicated by the three-dimensional position data.

### [Supplementary Note C10]

The control apparatus according to any one of the Supplementary Notes C4 to C9, wherein
the computing apparatus:
selects the second target object from the third target object group based on the third image data, and
generates the second control signal based on at least one of the second position data and the second pose data of the second target object, which are generated based on the third image data.

### [Supplementary Note C11]

The control apparatus according to the Supplementary Note C10, wherein
the computing apparatus selects the second target object from the third target object group based on a similarity, which is calculated based on model data that indicates a model of the target object and three-dimensional position data that is generated from the third image data and that indicates a three-dimensional position of each of a plurality of points of each of the plurality of target objects of the third target object group, between the model and a plurality of points, which indicate a three-dimensional position of each of the plurality of target objects of the second target object group indicated by the three-dimensional position data.

### [Supplementary Note C12]

The control apparatus according to the Supplementary Note C10 or C11, wherein
the computing apparatus selects the second target object from the third target object group based on a similarity, which is calculated based on model data indicating a model of the target object and the third image data, between the model and an image of each of the plurality of target objects of the third target object group indicated by the third image data.

### [Supplementary Note C13]

The control apparatus according to any one of the Supplementary Notes C4 to C12, wherein
the position pose information is set by being input by a user in advance.

### [Supplementary Note C14]

The control apparatus according to any one of the Supplementary Notes C1 to C13, wherein
a proportion of the one target object of the third target object group to an imaging field of view of the imaging system at the second positional relationship is larger than a proportion of the target object, whose proportion to the imaging field of view at the first positional relationship is the maximum, to the imaging field of view.

### [Supplementary Note C15]

The control apparatus according to the Supplementary Note C14, wherein
the first control signal is a signal for controlling the robot so that the proportion of the one target object of the third target object group to the imaging field of view of the imaging system at the second positional relationship is larger than a proportion of the target object, whose proportion to the imaging field of view at the first positional relationship is the maximum, to the imaging field of view..

### [Supplementary Note C16]

The control apparatus according to any one of the Supplementary Notes C1 to C15, wherein
the computing apparatus:
determines that there is no target object on which the process apparatus can perform the process, based on first three-dimensional position data that is generated from the first image data and that indicates a three-dimensional position of each of a plurality of points of each of the plurality of target objects of the first target object group;
calculates at least one of the position data and the pose data based on second three-dimensional position data that is generated from the third image data and indicates a three-dimensional position of each of a plurality of points of the one target object of the third target object group; and
the number of points of the one target object of the third target object group whose three-dimensional position is indicated by the second three-dimensional position data is larger than the number of points indicating a three-dimensional position of the target object that has the maximum number of point whose three-dimensional positions are indicated by the first three-dimensional position data.

### [Supplementary Note C17]

The control apparatus according to the Supplementary Note C16, wherein
the first control signal is a signal for controlling the robot so that the number of points of the one target object of the third target object group whose three-dimensional position is indicated by the second three-dimensional position data is larger than the number of points indicating a three-dimensional position of the target object that has the maximum number of point whose three-dimensional positions are indicated by the first three-dimensional position data

### [Supplementary Note C18]

The control apparatus according to any one of the Supplementary Notes C1 to C17, wherein
the second control signal is a signal for controlling the robot so that the process apparatus approaches the one target object of the third target object group to perform the process on the one target object of the third target object group.

### [Supplementary Note C19]

The control apparatus according to any one of the Supplementary Notes C1 to C18, wherein
the second image data is generated by the imaging system imaging the second target object group at at least one of the first position and the first pose.

### [Supplementary Note C20]

The control apparatus according to any one of the Supplementary Notes C1 to C19, wherein
the second image data is generated by the imaging system imaging the second target object group at at least one of a position and a pose different from at least one of the second position and the second pose.

### [Supplementary Note C21]

The control apparatus according to any one of the Supplementary Notes C1 to C20, wherein
the imaging system generates the second image data by imaging the second target object group after it is determined based on the first image data that there is no target object on which the process apparatus can perform the process in the first target object group.

### [Supplementary Note C22]

The control apparatus according to any one of the Supplementary Notes C1 to C20, wherein
the imaging system generates the second image data by imaging the second target object group before it is determined based on the first image data that there is no target object on which the process apparatus can perform the process in the first target object group.

### [Supplementary Note C23]

The control apparatus according to any one of the Supplementary Notes C1 to C22, wherein
the imaging system includes a first imaging apparatus and a second imaging apparatus that is different from the first imaging apparatus,
the first imaging apparatus generates the first image data by imaging the first target object group at the first position and the first pose, and generates the third image data by imaging the third target object group at at least one of the second position and the second pose,
the second imaging apparatus generates the second image data by imaging the second target object group,
the first imaging apparatus is one of a stereo camera, which includes two monocular cameras, and a monocular camera, which is different from the two monocular cameras, and
the second imaging apparatus is the other one of the stereo camera and the monocular camera that is different from the two monocular cameras.

### [Supplementary Note C24]

The control apparatus according to any one of the Supplementary Notes C1 to C23, wherein
the imaging system includes a stereo camera, which includes two monocular cameras, or a monocular camera.

### [Supplementary Note C25]

A control system including:
the control apparatus according to any one of the Supplementary Notes C1 to C24; and
the imaging system.

### [Supplementary Note C26]

A robot system including:
the control apparatus according to any one of the Supplementary Notes C1 to C24; and
the imaging system; and
the robot.

### [Supplementary Note C27]

A control method that generates a control signal for controlling a robot on which a process apparatus that performs a process on a target object and an imaging system are mounted and which moves the process apparatus and the imaging system, wherein
the control method includes:
generating, as the control signal, a first control signal for controlling the robot so that the imaging system changes to at least one of a second position, which is different from a first position, and a second pose, which is different from a first pose, based on second image data generated by the imaging system imaging a second target object group including a plurality of target objects, in a case where it is determined, based on first image data generated by the imaging system imaging a first target object group including a plurality of target objects when the imaging system is at the first position and the first pose, that there is no target object on which the process apparatus can perform the process in the first target object group; and
generating a second control signal as the control signal, based on at least one of position data and pose data, which indicate a position and a pose of one target object of a third target object group including a plurality of target objects, respectively, and which are generated based on third image data generated by the imaging system imaging the third target object group at at least one of the second position and the second pose.

### [Supplementary Note C28]

A computer program that allows a computer to execute the control method according to the Supplementary Note C27.

### [Supplementary Note D1]

A control apparatus that generates a control signal for controlling a robot on which a process apparatus that performs a process on a target object and an imaging system are mounted and which moves the process apparatus and the imaging system, wherein
the control apparatus includes:
a computing apparatus that generates the control signal based on first three-dimensional position data, which is generated from an imaged result of a first object group including a plurality of target objects by an imaging system and which indicates a three-dimensional position of each of a plurality of points of the first object group, and second three-dimensional position data, which has less three-dimensional position data than the first three-dimensional position data and which indicates a three-dimensional position of each of a plurality of points of the first object group; and
a communication apparatus that outputs the control signal generated by the computing apparatus,
the computing apparatus:
   generates at least one of a plurality of first position data and first pose data, which indicates at least one of positions and poses of respective target objects of a second object group including a plurality of target objects of the first object group, respectively, based on the second three-dimensional position data;
   generates at least one of second position data and second pose data, which indicates at least one of the position and the pose of one target object of the second object group, based on the first three-dimensional position data and at least one of the plurality of generated first position data and first pose data; and
   generates the control signal based on at least one of the generated second position data and second pose data.

### [Supplementary Note D2]

The control apparatus according to the Supplementary Note D1, wherein
the target object is movable.

### [Supplementary Note D3]

The control apparatus according to the Supplementary Note D1 or D2, wherein
the target object moves in at least a part of a period from a timing at which at least one of the plurality of first position data and first pose data is generated to a timing at which at least one of the second position data and the second pose data is generated.

### [Supplementary Note D4]

The control apparatus according to the Supplementary Note D2 or D3, wherein
at least one of the position and the pose of the one target object indicated by at least one of the plurality of first position data and first pose data is different from at least one of the position and the pose of the one target object indicated by at least one of the second position data and the second pose data.

### [Supplementary Note D5]

The control apparatus according to the Supplementary Note D1, wherein
the computing apparatus generates at least one of the second position data and the second pose data, which indicates at least one of the position and the pose of one target object of the second object group, based on the first three-dimensional position data and at least one of the plurality of generated first position data and first pose data.

### [Supplementary Note D6]

The control apparatus according to the Supplementary Note D5, wherein
the target object is configured to be stationary.

### [Supplementary Note D7]

The control apparatus according to the Supplementary Note D5 or D6, wherein
the target object is stationary in at least a part of a period from a timing at which at least one of the plurality of first position data and first pose data is generated to a timing at which at least one of the second position data and the second pose data is generated.

### [Supplementary Note D8]

The control apparatus according to any one of the Supplementary Notes D1 to D7, wherein
the computing apparatus generates at least one of the first position data and the first pose data of each target object of the second object group based on partial three-dimensional model data, which indicates a part of a three-dimensional model of the target object, and the second three-dimensional position data.

### [Supplementary Note D9]

The control apparatus according to the Supplementary Note D8, wherein
the computing apparatus generates at least one of the first position data and the first pose data of each target object of the second object group based on a plurality of partial three-dimensional model data, which indicate different parts of the three-dimensional model, respectively, and the second three-dimensional position data.

### [Supplementary Note D10]

The control apparatus according to the Supplementary Note D9, wherein
a priority, which is used to generate the first position data and the first pose data, is assigned to each of the plurality of partial three-dimensional model data.

### [Supplementary Note D11]

The control apparatus according to the Supplementary Note D9 or D10, wherein
the plurality of partial three-dimensional model data include first partial three-dimensional model data and second partial three-dimensional model data, and
the computing apparatus performs a second position pose computing processing of at least one target object of the first object group based on the second partial three-dimensional model data and the second three-dimensional position data after a first position pose computing processing of a plurality of target objects of the first target object group based on the first partial three-dimensional model data and the second three-dimensional position data.

### [Supplementary Note D12]

The control apparatus according to the Supplementary Note D10, wherein
the plurality of partial three-dimensional model data include first partial three-dimensional model data to which a first priority is assigned as the priority and second partial three-dimensional model data to which a second priority lower than the first priority is assigned, and
the computing apparatus performs a second position pose computing processing of at least one target object of the first object group based on the second partial three-dimensional model data, to which the second priority lower than the first priority is assigned, and the second three-dimensional position data, in a case where the number of the target objects, for which the first position pose computing processing based on the first partial three-dimensional model data to which the first priority is assigned and the second three-dimensional position data is good, is smaller than a threshold value.

### [Supplementary Note D13]

The control apparatus according to the Supplementary Note D12, wherein
the target object for which the first position pose computing processing is good includes the target object whose similarity, which is calculated based on the first partial three-dimensional model data and the second three-dimensional position data, between a part of the three-dimensional model indicated by the first partial three-dimensional model data and a plurality of points indicating a three-dimensional position of each target object of the first object group indicated by the second three-dimensional position data is equal to or larger than a threshold value.

### [Supplementary Note D14]

The control apparatus according to any one of the Supplementary Notes D11 to D13, wherein
at least one of the first position data and the first pose data of each target object of the second object group include: at least one of the first position data and the first pose data of a plurality of target objects of the second object group, which is generated by the first position pose computing processing; and at least one of the first position data and the first pose data of at least one target object of the second object group, which is generated by the second position pose computing processing.

### [Supplementary Note D15]

The control apparatus according to any one of the Supplementary Notes D11 to D14, wherein
the computing apparatus generates at least one of the second position data and the second pose data based on at least one of the first position data and the first pose data of a plurality of target objects of the second object group, which is generated by the first position pose computing processing, at least one of the first position data and the first pose data of at least one target object of the second object group, which is generated by the second position pose computing processing, and the first three-dimensional position data.

### [Supplementary Note D16]

The control apparatus according to any one of the Supplementary Notes D11 to D15, wherein
the computing apparatus generates at least one of the second position data and the second pose data based on at least one of the first position data and the first pose data of a plurality of target objects of the second object group, which is generated by the first position pose computing processing, at least one of the first position data and the first pose data of at least one target object of the second object group, which is generated by the second position pose computing processing, the first three-dimensional position data, the first partial three-dimensional model data, and the second partial three-dimensional model data.

### [Supplementary Note D17]

The control apparatus according to any one of the Supplementary Notes D11 to D16, wherein
the computing apparatus selects the one target object from the second object group based on at least one of the first position data and the first pose data of a plurality of target objects of the second object group, which is generated by the first position pose computing processing, at least one of the first position data and the first pose data of at least one target object of the second object group, which is generated by the second position pose computing processing, and the first three-dimensional position data.

### [Supplementary Note D18]

The control apparatus according to any one of the Supplementary Notes D11 to D17, wherein
the computing apparatus:
calculates a first similarity between a part of the three-dimensional model indicated by the first partial three-dimensional model data and a plurality of points indicating a three-dimensional position of each target object of the first object group indicated by the second three-dimensional position data, based on the first partial three-dimensional model data and the second three-dimensional position data; and
calculates a second similarity between a part of the three-dimensional model indicated by the second partial three-dimensional model data and a plurality of points indicating a three-dimensional position of each target object of the first object group indicated by the second three-dimensional position data, based on the second partial three-dimensional model data and the second three-dimensional position data,
the first similarity corresponding to the target object, at least one of the first position data and the first pose data of which are calculated by the first position pose computing processing, is equal to or larger than a threshold value, and
the second similarity corresponding to the target object, at least one of the first position data and the first pose data of which are calculated by the second position pose computing processing, is equal to or larger than a threshold value.

### [Supplementary Note D19]

The control apparatus according to any one of the Supplementary Notes D11 to D18, wherein
the computing apparatus:
selects respective parts of the first three-dimensional position data as a plurality of first interested data, each of which includes data corresponding to at least a part of a plurality of points of each of a plurality of target objects of the second object group, based on at least one of the plurality of first position data and first pose data generated by the first position pose computing processing;
selects at least a part of the first three-dimensional position data as at least one second interested data, which includes data corresponding to at least a part of a plurality of points of at least one target object of the second object group, based on at least one of the first position data and the pose data generated by the second position pose computing processing; and
selects the one target object from the second object group based on the first partial three-dimensional model data, the second partial three-dimensional model data, the plurality of first interested data, and the at least one second interested data.

### [Supplementary Note D20]

The control apparatus according to the Supplementary Note D19, wherein
the computing apparatus selects the one target object from the second object group based on a similarity between a plurality of points, which indicate a three-dimensional position of each of the plurality of target objects of the second object group indicated by each of the plurality of first interested data, and a part of the three-dimensional model indicated by the first partial three-dimensional model data, and a similarity between a plurality of points, which indicate a three-dimensional position of at least one target object of the second object group indicated by the at least one second interested data, and a part of the three-dimensional model indicated by the second partial three-dimensional model data.

### [Supplementary Note D21]

The control apparatus according to the Supplementary Note D19 or D20, wherein
the computing apparatus generates at least one of the second position data and the second pose data based on one first interested data, which corresponds to the selected one target object, of the plurality of first interested data and the first partial three-dimensional model data.

### [Supplementary Note D22]

The control apparatus according to the Supplementary Note D19 or D20, wherein
the computing apparatus generates at least one of the second position data and the second pose data based on one second interested data, which corresponds to the selected one target object, of the at least one interested data and the second partial three-dimensional model data.

### [Supplementary Note D23]

The control apparatus according to any one of the Supplementary Notes D1 to D14, wherein
the computing apparatus generates at least one of the second position data and the second pose data based on partial three-dimensional model data indicating a part of the three-dimensional model of the target object, at least one of the plurality of generated first position data and first pose data, and the first three-dimensional position data.

### [Supplementary Note D24]

The control apparatus according to the Supplementary Note D23, wherein
the computing apparatus generates at least one of the second position data and the second pose data based on a plurality of partial three-dimensional model data, which indicate different parts of the three-dimensional model, respectively, at least one of the plurality of generated first position data and first pose data, and the first three-dimensional position data.

### [Supplementary Note D25]

The control apparatus according to the Supplementary Note D23 or D24, wherein
the computing apparatus:
selects the one target object from the second object group based on a plurality of partial three-dimensional model data, which indicate different parts of the three-dimensional model, respectively, at least one of the plurality of generated first position data and first pose data, and the first three-dimensional position data; and
generates at least one of the second position data and the second pose data based on at least one of one first position data and first pose data, which corresponds to the selected one target object, of at least one of the plurality of first position data and first pose data, and one partial three-dimensional model data of the plurality of partial three-dimensional model data.

### [Supplementary Note D26]

The control apparatus according to the Supplementary Note D1, wherein
the computing apparatus:
selects the one target object from the second object group based on at least one of the plurality of generated first position data and first pose data, and the first three-dimensional position data; and
generates at least one of the second position data and the second pose data based on at least one of the first position data and the first pose data of the selected one target object, and the first three-dimensional position data.

### [Supplementary Note D27]

The control apparatus according to the Supplementary Note D26, wherein
the computing apparatus:
selects respective parts of the first three-dimensional position data as a plurality of interested data, each of which includes data corresponding to at least a part of a plurality of points of each target object of the second object group imaged by the imaging system, based on the plurality of generated first position data and first pose data; and
selects the one target object from the second object group based on model data indicating a three-dimensional model of the target object and the plurality of selected interested data.

### [Supplementary Note D28]

The control apparatus according to the Supplementary Note D27, wherein
the computing apparatus selects the one target object from the second object group based on a similarity between a plurality of points, which indicate a three-dimensional position of each target object of the second object group indicated by each of the plurality of interested data, and the three-dimensional model.

### [Supplementary Note D29]

The control apparatus according to the Supplementary Note D27 or D28, wherein
the computing apparatus generates at least one of the second position data and the second pose data based on the model data and the interested data corresponding to the one target object.

### [Supplementary Note D30]

The control apparatus according to any one of the Supplementary Notes D1 and D26 to D29, wherein
the computing apparatus:
selects respective parts of the first three-dimensional position data as a plurality of interested data, each of which includes data corresponding to at least a part of a plurality of points of each target object of the second object group imaged by the imaging system, based on at least one of the plurality of generated first position data and first pose data; and
generates at least one of the second position data and the second pose data, which indicate the position and the pose of the one target object of the second object group, based on the plurality of interested data.

### [Supplementary Note D31]

The control apparatus according to any one of the Supplementary Notes D1 to D30, wherein
the imaging system includes a stereo camera, and
the computing apparatus generates the first three-dimensional position data and the second three-dimensional position data based on stereo image data generated as an imaged result by the stereo camera.

### [Supplementary Note D32]

The control apparatus according to the Supplementary Note D31, wherein
the computing apparatus:
generates depth image data in which distance information is associated with each pixel, based on the stereo image data; and
generates the first three-dimensional position data and the second three-dimensional position data based on the depth image data.

### [Supplementary Note D33]

The control apparatus according to the Supplementary Note D31, wherein
the computing apparatus:
generates first depth image data in which distance information is associated with each pixel, based on the stereo image data;
generates second depth image data by reducing some pixel data of the generated first depth image data;
generates the first three-dimensional position data based on the first depth image data; and
generates the second three-dimensional position data based on the second depth image data.

### [Supplementary Note D34]

The control apparatus according to the Supplementary Note D31, wherein
the computing apparatus generates the second three-dimensional position data by reducing some data indicating a three-dimensional position of the first three-dimensional position data.

### [Supplementary Note D35]

The control apparatus according to the Supplementary Note D31, wherein
first stereo image data and second stereo image data whose pixel data is less than the first stereo image data are generated as the imaged results by the stereo camera, and
the computing apparatus:
   generates the first three-dimensional position data based on the first stereo image data; and
   generates the second three-dimensional position data based on the second stereo image data.

### [Supplementary Note D36]

A control system including:
the control apparatus according to any one of the Supplementary Notes D1 to D35; and
the imaging system.

### [Supplementary Note D37]

A robot system including:
the control apparatus according to any one of the Supplementary Notes D1 to D35; and
the imaging system; and
the robot.

### [Supplementary Note D38]

A control method that generates a control signal for controlling a robot on which a process apparatus that performs a process on a target object and an imaging system are mounted and which moves the process apparatus and the imaging system, wherein
the control method includes generating the control signal based on first three-dimensional position data, which is generated from an imaged result of a first object group including a plurality of target objects by an imaging system and which indicates a three-dimensional position of each of a plurality of points of the first object group, and second three-dimensional position data, which has less three-dimensional position data than the first three-dimensional position data and which indicates a three-dimensional position of each of a plurality of points of the first object group,
the generating the control signal includes:
   generating at least one of a plurality of first position data and first pose data, which indicate positions and poses of respective target objects of a second object group including a plurality of target objects of the first object group, respectively, based on the second three-dimensional position data;
   generating at least one of second position data and second pose data, which indicate the position and the pose of one target object of the second object group, based on at least one of the plurality of generated first position data and first pose data and the first three-dimensional position data; and
   generating the control signal based on at least one of the generated second position data and second pose data.

### [Supplementary Note D39]

A computer program that allows a computer to execute the control method according to the Supplementary Note D38.

### [Supplementary Note E1]

A control apparatus that generates a control signal for controlling a robot on which a process apparatus that performs a process on a target object and an imaging system are mounted and which moves the process apparatus and the imaging system, wherein
the control apparatus includes:
a computing apparatus that generates the control signal based on first image data, which is generated from an imaged result of a first object group including a plurality of target objects by an imaging system, and second image data, which has less pixel data than the first image data and which includes the plurality of target objects; and
a communication apparatus that outputs the control signal generated by the computing apparatus,
the computing apparatus:
   generates at least one of a plurality of first position data and first pose data, which indicates at least one of positions and poses of respective target objects of a second object group including a plurality of target objects of the first object group, respectively, based on the second image data;
   generates at least one of second position data and second pose data, which indicates at least one of the position and the pose of one target object of the second object group, based on the first image data and at least one of the plurality of generated first position data and first pose data; and
   generates the control signal based on at least one of the generated second position data and second pose data.

### [Supplementary Note E2]

The control apparatus according to the Supplementary Note E1, wherein
the target object is movable.

### [Supplementary Note E3]

The control apparatus according to the Supplementary Note E1 or E2, wherein
the target object moves in at least a part of a period from a timing at which at least one of the plurality of first position data and first pose data is generated to a timing at which at least one of the second position data and the second pose data is generated.

### [Supplementary Note E4]

The control apparatus according to the Supplementary Note E2 or E3, wherein
at least one of the position and the pose of the one target object indicated by at least one of the plurality of first position data and first pose data is different from at least one of the position and the pose of the one target object indicated by at least one of the second position data and the second pose data.

### [Supplementary Note E5]

The control apparatus according to the Supplementary Note E1, wherein
the computing apparatus generates at least one of the second position data and the second pose data, which indicates at least one of the position and the pose of one target object of the second object group, based on the first image data and at least one of the plurality of generated first position data and first pose data.

### [Supplementary Note E6]

The control apparatus according to the Supplementary Note E5, wherein
the target object is configured to be stationary.

### [Supplementary Note E7]

The control apparatus according to the Supplementary Note E5 or E6, wherein
the target object is stationary in at least a part of a period from a timing at which at least one of the plurality of first position data and first pose data is generated to a timing at which at least one of the second position data and the second pose data is generated.

### [Supplementary Note E8]

The control apparatus according to any one of the Supplementary Notes E1 to E7, wherein
the computing apparatus generates at least one of the first position data and the first pose data of each target object of the second object group based on partial model data, which indicates a part of a model of the target object, and the second image data.

### [Supplementary Note E9]

The control apparatus according to the Supplementary Note E8, wherein
the computing apparatus generates at least one of the first position data and the first pose data of each target object of the second object group based on a plurality of partial model data, which indicate different parts of the model, respectively, and the second image data.

### [Supplementary Note E10]

The control apparatus according to the Supplementary Note E9, wherein
a priority, which is used to generate the first position data and the first pose data, is assigned to each of the plurality of partial model data.

### [Supplementary Note E11]

The control apparatus according to the Supplementary Note E9 or E10, wherein
the plurality of partial model data include first partial model data and second partial model data, and
the computing apparatus performs a second position pose computing processing of at least one target object of the first object group based on the second partial model data and the second image data after a first position pose computing processing of a plurality of target objects of the first target object group based on the first partial model data and the second image data.

### [Supplementary Note E12]

The control apparatus according to the Supplementary Note E10, wherein
the plurality of partial model data include first partial model data to which a first priority is assigned as the priority and second partial model data to which a second priority lower than the first priority is assigned, and
the computing apparatus performs a second position pose computing processing of at least one target object of the first object group based on the second partial model data, to which the second priority lower than the first priority is assigned, and the second image data, in a case where the number of the target objects, for which the first position pose computing processing based on the first partial model data to which the first priority is assigned and the second image data is good, is smaller than a threshold value.

### [Supplementary Note E13]

The control apparatus according to the Supplementary Note E12, wherein
the target object for which the first position pose computing processing is good includes the target object whose similarity, which is calculated based on the first partial model data and the second image data, between a part of the model indicated by the first partial model data and an image of each target object of the first object group indicated by the second image data is equal to or larger than a threshold value.

### [Supplementary Note E14]

The control apparatus according to any one of the Supplementary Notes E11 to E13, wherein
at least one of the first position data and the first pose data of each target object of the second object group include: at least one of the first position data and the first pose data of a plurality of target objects of the second object group, which is generated by the first position pose computing processing; and at least one of the first position data and the first pose data of at least one target object of the second object group, which is generated by the second position pose computing processing.

### [Supplementary Note E15]

The control apparatus according to any one of the Supplementary Notes E11 to E14, wherein
the computing apparatus generates at least one of the second position data and the second pose data based on at least one of the first position data and the first pose data of a plurality of target objects of the second object group, which is generated by the first position pose computing processing, at least one of the first position data and the first pose data of at least one target object of the second object group, which is generated by the second position pose computing processing, and the first image data.

### [Supplementary Note E16]

The control apparatus according to any one of the Supplementary Notes E11 to E15, wherein
the computing apparatus generates at least one of the second position data and the second pose data based on at least one of the first position data and the first pose data of a plurality of target objects of the second object group, which is generated by the first position pose computing processing, at least one of the first position data and the first pose data of at least one target object of the second object group, which is generated by the second position pose computing processing, the first image data, the first partial model data, and the second partial model data.

### [Supplementary Note E17]

The control apparatus according to any one of the Supplementary Notes E11 to E16, wherein
the computing apparatus selects the one target object from the second object group based on at least one of the first position data and the first pose data of a plurality of target objects of the second object group, which is generated by the first position pose computing processing, at least one of the first position data and the first pose data of at least one target object of the second object group, which is generated by the second position pose computing processing, and the first image data.

### [Supplementary Note E18]

The control apparatus according to any one of the Supplementary Notes E11 to E17, wherein
the computing apparatus:
calculates a first similarity between a part of the model indicated by the first partial model data and an image of each target object of the first object group indicated by the second image data, based on the first partial model data and the second image data; and
calculates a second similarity between a part of the model indicated by the second partial model data and an image of each target object of the first object group indicated by the second image data, based on the second partial model data and the second image data,
the first similarity corresponding to the target object, at least one of the first position data and the first pose data of which are calculated by the first position pose computing processing, is equal to or larger than a threshold value, and
the second similarity corresponding to the target object, at least one of the first position data and the first pose data of which are calculated by the second position pose computing processing, is equal to or larger than a threshold value.

### [Supplementary Note E19]

The control apparatus according to any one of the Supplementary Notes E11 to E18, wherein
the computing apparatus:
selects respective parts of the first image data as a plurality of first interested data, each of which includes data corresponding to at least a part of an image of each of a plurality of target objects of the second object group, based on at least one of the plurality of first position data and first pose data generated by the first position pose computing processing;
selects at least a part of the first image data as at least one second interested data, which includes data corresponding to at least a part of an image of at least one target object of the second object group, based on at least one of the first position data and the pose data generated by the second position pose computing processing; and
selects the one target object from the second object group based on the first partial model data, the second partial model data, the plurality of first interested data, and the at least one second interested data.

### [Supplementary Note E20]

The control apparatus according to the Supplementary Note E19, wherein
the computing apparatus selects the one target object from the second object group based on a similarity between an image of each of the plurality of target objects of the second object group indicated by each of the plurality of first interested data and a part of the model indicated by the first partial model data, and a similarity between an image of at least one target object of the second object group indicated by the at least one second interested data, and a part of the model indicated by the second partial model data.

### [Supplementary Note E21]

The control apparatus according to the Supplementary Note E19 or E20, wherein
the computing apparatus generates at least one of the second position data and the second pose data based on one first interested data, which corresponds to the selected one target object, of the plurality of first interested data and the first partial model data.

### [Supplementary Note E22]

The control apparatus according to the Supplementary Note E19 or E20, wherein
the computing apparatus generates at least one of the second position data and the second pose data based on one second interested data, which corresponds to the selected one target object, of the at least one interested data and the second partial model data.

### [Supplementary Note E23]

The control apparatus according to any one of the Supplementary Notes E1 to E14, wherein
the computing apparatus generates at least one of the second position data and the second pose data based on partial model data indicating a part of the model of the target object, at least one of the plurality of generated first position data and first pose data, and the first image data.

### [Supplementary Note E24]

The control apparatus according to the Supplementary Note E23, wherein
the computing apparatus generates at least one of the second position data and the second pose data based on a plurality of partial model data, which indicate different parts of the model, respectively, at least one of the plurality of generated first position data and first pose data, and the first image data.

### [Supplementary Note E25]

The control apparatus according to the Supplementary Note E23 or E24, wherein
the computing apparatus:
selects the one target object from the second object group based on a plurality of partial model data, which indicate different parts of the model, respectively, at least one of the plurality of generated first position data and first pose data, and the first image data; and
generates at least one of the second position data and the second pose data based on at least one of one first position data and first pose data, which corresponds to the selected one target object, of at least one of the plurality of first position data and first pose data, and one partial model data of the plurality of partial model data.

### [Supplementary Note E26]

The control apparatus according to the Supplementary Note E1, wherein
the computing apparatus:
selects the one target object from the second object group based on at least one of the plurality of generated first position data and first pose data, and the first image data; and
generates at least one of the second position data and the second pose data based on at least one of the first position data and the first pose data of the selected one target object, and the first image data.

### [Supplementary Note E27]

The control apparatus according to the Supplementary Note E26, wherein
the computing apparatus:
selects respective parts of the first image data as a plurality of interested data, each of which includes data corresponding to at least a part of an image of each target object of the second object group imaged by the imaging system, based on the plurality of generated first position data and first pose data; and
selects the one target object from the second object group based on model data indicating a model of the target object and the plurality of selected interested data.

### [Supplementary Note E28]

The control apparatus according to the Supplementary Note E27, wherein
the computing apparatus selects the one target object from the second object group based on a similarity between an image of each target object of the second object group indicated by each of the plurality of interested data and the model.

### [Supplementary Note E29]

The control apparatus according to the Supplementary Note E27 or E28, wherein
the computing apparatus generates at least one of the second position data and the second pose data based on the model data and the interested data corresponding to the one target object.

### [Supplementary Note E30]

The control apparatus according to any one of the Supplementary Notes E1 and E26 to E29, wherein
the computing apparatus:
selects respective parts of the first image data as a plurality of interested data, each of which includes data corresponding to at least a part of an image of each target object of the second object group imaged by the imaging system, based on at least one of the plurality of generated first position data and first pose data; and
generates at least one of the second position data and the second pose data, which indicate the position and the pose of the one target object of the second object group, based on the plurality of interested data.

### [Supplementary Note E31]

The control apparatus according to any one of the Supplementary Notes E1 to E30, wherein
the imaging system includes a monocular camera,
the first image data is monocular image data generated as an imaged result by the monocular camera, and
the computing apparatus generates the second image data based on the monocular image data.

### [Supplementary Note E32]

The control apparatus according to the Supplementary Note E31, wherein
the computing apparatus generates the second image data by reducing some pixel data of the monocular image data.

### [Supplementary Note E33]

The control apparatus according to the Supplementary Note E31, wherein
first monocular image data and second monocular image data whose pixel data is less than the first monocular image data are generated as the imaged result by the monocular camera,
the first image data is the first monocular image data, and
the second image data is the second monocular image data.

### [Supplementary Note E34]

A control system including:
the control apparatus according to any one of the Supplementary Notes E1 to E33; and
the imaging system.

### [Supplementary Note E35]

A robot system including:
the control apparatus according to any one of the Supplementary Notes E1 to E33; and
the imaging system; and
the robot.

### [Supplementary Note E36]

A control method that generates a control signal for controlling a robot on which a process apparatus that performs a process on a target object and an imaging system are mounted and which moves the process apparatus and the imaging system, wherein
the control method includes generating the control signal based on first image data, which is generated from an imaged result of a first object group including a plurality of target objects by an imaging system, and second image data, which has less image data than the first image data and which includes a plurality of target objects,
the generating the control signal includes:
   generating at least one of a plurality of first position data and first pose data, which indicate positions and poses of respective target objects of a second object group including a plurality of target objects of the first object group, respectively, based on the second image data;
   generating at least one of second position data and second pose data, which indicate the position and the pose of one target object of the second object group, based on at least one of the plurality of generated first position data and first pose data and the first image data; and
   generating the control signal based on at least one of the generated second position data and second pose data.

### [Supplementary Note E37]

A computer program that allows a computer to execute the control method according to the Supplementary Note E36.

### [Supplementary Note F1]

A control apparatus that generates a control signal for controlling a robot on which a process apparatus that performs a process on a target object and an imaging system are mounted and which moves the process apparatus and the imaging system, wherein
the control apparatus includes:
a computing apparatus that generates the control signal; and
a communication apparatus that outputs the control signal generated by the computing apparatus,
the computing apparatus:
   generates first position data indicating a position of at least one first target object and first pose data indicating a pose of the at least one first target object, based on first image data that is generated by the imaging system imaging the at least one first target object, which is the target object, when the imaging system is at a first position and a first pose;
   generates, as the control signal, a first control signal for controlling the robot so that the process apparatus approaches the at least one first target object to perform the process on the at least one first target object, based on at least one of the first position data and the first pose data;
   generates, as the control signal, a second control signal for controlling the robot so that the imaging system changes to at least one of a second position, which is different from the first position, and a second pose, which is different from the first pose, after the process apparatus has finished the process on the at least one first target object;
   generates at least one of second position data indicating a position of at least one second target object and second pose data indicating a pose of the at least one second target object, based on second image data that is generated by the imaging system imaging the at least one second target object, which is the target object, at at least one of the second position and the second pose; and
   generates, as the control signal, a third control signal for controlling the robot so that the process apparatus approaches the at least one second target object to perform the process on the at least one second target object, based on at least one of the generated second position data and second pose data.

### [Supplementary Note F2]

The control apparatus according to the Supplementary Note F1, wherein
at least half of an imaging field of view of the imaging system when the imaging system is at at least one of the second position and the second pose does not overlap with the imaging field of view of the imaging system when the imaging system is at at least one of the first position and the first pose.

### [Supplementary Note F2]

The control apparatus according to the Supplementary Note F1 or F2, wherein
an imaging field of view of the imaging system when the imaging system is at at least one of the second position and the second pose does not overlap with the imaging field of view of the imaging system when the imaging system is at at least one of the first position and the first pose.

### [Supplementary Note F4]

The control apparatus according to any one of the Supplementary Notes F1 to F3, wherein
the computing apparatus:
generates at least one of the first position data indicating the position of the one first target object and the first pose data indicating the pose of the one first target object, based on the first image data that is generated by the imaging system imaging the one first target object when the imaging system is at at least one of the first position and the first pose; and
generates the first control signal for controlling the robot so that the process apparatus approaches the one first target object to perform the process on the one first target object, based on at least one of the first position data and the first pose data.

### [Supplementary Note F5]

The control apparatus according to any one of the Supplementary Notes F1 to F3, wherein
the computing apparatus:
generates at least one of the first position data indicating positions of a plurality of first target objects and the first pose data indicating poses of the plurality of first target objects, based on the first image data that is generated by the imaging system imaging the plurality of first target objects when the imaging system is at at least one of the first position and the first pose; and
generates the first control signal for controlling the robot so that the process apparatus sequentially approaches the plurality of first target objects to sequentially perform the process on the plurality of first target objects, based on at least one of the first position data and the first pose data.

### [Supplementary Note F6]

The control apparatus according to any one of the Supplementary Notes F1 to F5, wherein
generates at least one of the second position data indicating the position of the one second target object and the second pose data indicating the pose of the one second target object, based on the second image data that is generated by the imaging system imaging the one second target object when the imaging system is at at least one of the second position and the second pose; and
generates the second control signal for controlling the robot so that the process apparatus approaches the one second target object to perform the process on the one second target object, based on at least one of the second position data and the second pose data.

### [Supplementary Note F7]

The control apparatus according to any one of the Supplementary Notes F1 to F5, wherein
generates at least one of the second position data indicating positions of a plurality of second target objects and the second pose data indicating poses of the plurality of second target objects, based on the second image data that is generated by the imaging system imaging the plurality of second target objects when the imaging system is at at least one of the second position and the second pose; and
generates the second control signal for controlling the robot so that the process apparatus sequentially approaches the plurality of second target objects to sequentially perform the process on the plurality of second target objects, based on at least one of the second position data and the second pose data.

### [Supplementary Note F8]

The control apparatus according to any one of the Supplementary Notes F1 to F7, wherein
the number of the first target objects on which the process apparatus performs the process is set by a user in advance.

### [Supplementary Note F9]

The control apparatus according to any one of the Supplementary Notes F1 to F8, wherein
the number of the second target objects on which the process apparatus performs the process is set by a user in advance.

### [Supplementary Note F10]

The control apparatus according to any one of the Supplementary Notes F1 to F9, wherein
the computing apparatus sets the number of the first target objects on which the process apparatus performs the process, based on the first image data.

### [Supplementary Note F11]

The control apparatus according to any one of the Supplementary Notes F1 to F10, wherein
the computing apparatus sets the number of the second target objects on which the process apparatus performs the process, based on the second image data.

### [Supplementary Note F12]

The control apparatus according to any one of the Supplementary Notes F1 to F11, wherein
the imaging system includes a stereo camera including two monocular cameras.

### [Supplementary Note F13]

The control apparatus according to any one of the Supplementary Notes F1 to F12, wherein
the imaging system includes a monocular camera.

### [Supplementary Note F14]

The control apparatus according to any one of the Supplementary Notes F1 to F13, wherein
the imaging system includes:
a first imaging apparatus that includes a stereo camera including two monocular cameras; and
a second imaging apparatus that includes a monocular camera,
the first image data is generated by at least one of the first and second imaging apparatuses imaging the at least one first target object when the imaging system is at at least one of the first position and the first pose, and
the second image data is generated by at least one of the first and second imaging apparatuses imaging the at least one second target object when the imaging system is at at least one of the second position and the second pose.

### [Supplementary Note F15]

A control system including:
the control apparatus according to any one of the Supplementary Notes F1 to F14; and
the imaging system.

### [Supplementary Note F16]

A robot system including:
the control apparatus according to any one of the Supplementary Notes F1 to F14;
the imaging system; and
the robot.

### [Supplementary Note F17]

A control method that generates a control signal for controlling a robot on which a process apparatus that performs a process on a target object and an imaging system are mounted and which moves the process apparatus and the imaging system, wherein
the control method includes:
generating first position data indicating a position of at least one first target object and first pose data indicating a pose of the at least one first target object, based on first image data that is generated by the imaging system imaging the at least one first target object, which is the target object, when the imaging system is at a first position and a first pose;
generating, as the control signal, a first control signal for controlling the robot so that the process apparatus approaches the at least one first target object to perform the process on the at least one first target object, based on at least one of the first position data and the first pose data;
generating, as the control signal, a second control signal for controlling the robot so that the imaging system changes to at least one of a second position, which is different from the first position, and a second pose, which is different from the first pose, after the process apparatus has finished the process on the at least one first target object;
generating at least one of second position data indicating a position of at least one second target object and second pose data indicating a pose of the at least one second target object, based on second image data that is generated by the imaging system imaging the at least one second target object, which is the target object, at at least one of the second position and the second pose; and
generating, as the control signal, a third control signal for controlling the robot so that the process apparatus approaches the at least one second target object to perform the process on the at least one second target object, based on at least one of the generated second position data and second pose data.

### [Supplementary Note F18]

A computer program that allows a computer to execute the control method according to the Supplementary Note F17.

### [Supplementary Note G1]

A control apparatus that generates at least one of position data and pose data of a target object held by a holding apparatus mounted on a robot, based on image data, which is generated by an imaging system imaging the target object held by the holding apparatus, and partial model data, which indicates a part of a model of the target object.

### [Supplementary Note G2]

The control apparatus according to the Supplementary Note G1, wherein
the control apparatus generates at least one of the position data and the pose data based on the image data and the partial model data in a period during which the robot moves the target object held by the holding apparatus.

### [Supplementary Note G3]

The control apparatus according to the Supplementary Note G1 or G2, wherein
the image data is generated by the imaging system imaging the target object held by the holding apparatus in a period during which the robot moves the target object held by the holding apparatus.

### [Supplementary Note G4]

The control apparatus according to any one of the Supplementary Notes G1 to G3, wherein
the holding apparatus holds an area of the target object that is different from a part of the target object corresponding to a part of the model indicated by the partial model data.

### [Supplementary Note G5]

The control apparatus according to the Supplementary Note G4, wherein
the control apparatus generates a first control signal for controlling the robot so that the holding apparatus approaches the target object, which is not held by the holding apparatus yet, to hold the area of the target object by the holding apparatus.

### [Supplementary Note G6]

The control apparatus according to the Supplementary Note G5, wherein
the image data is second image data,
the position data is second position data,
the pose data is second pose data, and
the control apparatus generates the first control signal based on at least one of first position data and first pose data, which are generated based on first image data generated by the imaging system imaging the target object that is not held by the holding apparatus yet, of the target object that is not held by the holding apparatus yet.

### [Supplementary Note G7]

The control apparatus according to the Supplementary Note G6, wherein
the control apparatus generates the first position data and the first pose data based on the first image data and the partial model data.

### [Supplementary Note G8]

The control apparatus according to any one of the Supplementary Notes G1 to G6, wherein
the position data of the target object held by the holding apparatus is second position data,
the pose data of the target object held by the holding apparatus is second pose data, and
the control apparatus generates a second control signal for controlling the robot based on the second position data and the second pose data.

### [Supplementary Note G8]

The control apparatus according to the Supplementary Note G7, wherein
the second control signal is a signal for controlling the robot to perform an process on the target object held by the holding apparatus.

### [Supplementary Note G9]

The control apparatus according to any one of the Supplementary Notes G1 to G8, wherein
the imaging system includes at least one of a monocular camera and a stereo camera that includes two monocular cameras different from the monocular camera.

### [Supplementary Note G10]

The control apparatus according to any one of the Supplementary Notes G1 to G9, wherein
the imaging system is mounted on the robot and moves together with the holding apparatus in accordance with a control of the robot.

### [Supplementary Note G11]

The control apparatus according to any one of the Supplementary Notes G1 to G9, wherein
the imaging system is mounted on a position different from the robot.

### [Supplementary Note G12]

The control apparatus according to any one of the Supplementary Notes G1 to G9 and G11, wherein
the imaging system is mounted on a fixed object.

### [Supplementary Note G13]

A control system including:
the control apparatus according to any one of the Supplementary Notes G1 to G12; and
the imaging system.

### [Supplementary Note G14]

A robot system, including:
the control apparatus according to any one of the Supplementary Notes G1 to G12;
the imaging system; and
the robot.

### [Supplementary Note G15]

A control method that generates at least one of position data and pose data of a target object held by a holding apparatus mounted on a robot, based on image data, which is generated by an imaging system imaging the target object held by the holding apparatus, and partial model data, which indicates a part of a model of the target object.

### [Supplementary Note G16]

A computer program that allows a computer to execute the control method according to the Supplementary Note G15.

### [Supplementary Note H1]

A control apparatus that generates a control signal for controlling a robot on which a process apparatus that performs a process on a target object placed on a placing member is mounted and which moves the process apparatus, wherein
the control apparatus includes:
a computing apparatus that generates the control signal; and
a communication apparatus that outputs the control signal generated by the computing apparatus,
the computing apparatus:
   generates position pose data indicating at least one of a position and a pose of the placing member, based on first image data that is generated by an imaging system imaging at least a part of the placing member;
   generates three-dimensional position data indicating a three-dimensional position of each of a plurality of points of an object group that includes a target object group including at least a part of a plurality of target objects placed on the placing member, based on second image data that is generated by the imaging system imaging the object group;
   selects a part of the three-dimensional position data as selection data, based on the position pose data; and
   generates the control signal for controlling the robot so that the process apparatus approaches one target object of the target object group to perform the process on the one target object by the process apparatus, based on the selection data.

### [Supplementary Note H2]

The control apparatus according to the Supplementary Note H1, wherein
the object group includes at least the target object group and at least a part of the container.

### [Supplementary Note H3]

The control apparatus according to the Supplementary Note H1 or H2, wherein
the selected selection data does not include data indicating a three-dimensional position of each of a plurality of points of at least a part of the container.

### [Supplementary Note H4]

The control apparatus according to any one of the Supplementary Notes H1 to H3, wherein
the selected selection data includes data indicating a three-dimensional position of each of a plurality of points of at least a part of the target object group.

### [Supplementary Note H5]

The control apparatus according to any one of the Supplementary Notes H1 to H4, wherein
the computing apparatus:
sets a designation area, which includes at least a part of a space of the placing member on which a plurality of target objects are placed, based on the position pose data; and
selects a part of the three-dimensional position data as the selection data corresponding to the designation area.

### [Supplementary Note H6]

The control apparatus according to the Supplementary Note H5, wherein
the object group includes at least the target object group and at least a part of the placing member, and
the set designation area does not include a plurality of points, which is indicated by the three-dimensional position data, of at least a part of the placing member.

### [Supplementary Note H7]

The control apparatus according to the Supplementary Note H5 or H6, wherein
the set designation area includes a plurality of points, which is indicated by the three-dimensional position data, of at least a part of the target object group placed on the placing member.

### [Supplementary Note H8]

The control apparatus according to any one of the Supplementary Notes H5 to H7, wherein
the placing member is a first placing member,
the designation area is a first designation area,
the computing apparatus:
   changes a second designation area, which includes at least a part of a space of a second placing member which is different from the first placing member and on which a plurality of target objects are placed, to the first designation area, based on the position pose data; and
   selects a part of the three-dimensional position data as the selection data corresponding to the first designation area.

### [Supplementary Note H9]

The control apparatus according to the Supplementary Note H8, wherein
the computing apparatus changes the second designation area to the first designation area by changing at least one of a position and a pose of the second designation area, based on the position pose data.

### [Supplementary Note H10]

The control apparatus according to the Supplementary Note H8 or H9, wherein
the object group includes at least the target object group and at least a part of the first placing member, and
the computing apparatus changes the second designation area to the first designation area based on the position pose data so that the first designation area does not include a plurality of points, which is indicated by the three-dimensional position data, of at least a part of the first placing member.

### [Supplementary Note H11]

The control apparatus according to any one of the Supplementary Notes H8 to H10, wherein
the computing apparatus changes the second designation area to the first designation area based on the position pose data so that the first designation area includes a plurality of points, which is indicated by the three-dimensional position data, of at least a part of the target object group contained in the first placing member.

### [Supplementary Note H12]

The control apparatus according to any one of the Supplementary Notes H8 to H11, wherein
at least one of a position and a pose of the first placing member is different from at least one of a position and a pose of the second placing member.

### [Supplementary Note H13]

The control apparatus according to any one of the Supplementary Notes H5 to H7, wherein
the placing member is a first placing member,
the designation area is a first designation area,
the computing apparatus:
   sets at least one of a position and a pose of a second designation area, which includes at least a part of a space of a second placing member different from the first placing member on which a plurality of target objects are placed, as at least one of a position and a pose of the first designation area, based on the position pose data; and
   selects a part of the three-dimensional position data as the selection data corresponding to the first designation area.

### [Supplementary Note H14]

The control apparatus according to the Supplementary Note H13, wherein
the position and the pose of the first placing member are substantially the same as the position and the pose of the second placing member.

### [Supplementary Note H15]

The control apparatus according to any one of the Supplementary Notes H8 to H14, wherein
the second designation area is an initial designation area set in advance.

### [Supplementary Note H16]

The control apparatus according to the Supplementary Note H15, wherein
the second designation area is designated by a user in advance.

### [Supplementary Note H17]

The control apparatus according to the Supplementary Note H15 or H16, wherein
the second placing member is a placing member that is used to set the second designation area.

### [Supplementary Note H18]

The control apparatus according to any one of the Supplementary Notes H15 to H17, wherein
the computing apparatus changes the second designation area to the first designation area by changing the second predetermined area from an initial position pose, which indicates at least one of an initial position and an initial pose of the second designation area, to a first position pose, which indicates at least one of a first position and a first pose, based on the position pose data.

### [Supplementary Note H19]

The control apparatus according to any one of the Supplementary Notes H8 to H14, wherein
the process apparatus performs the process on a plurality of target objects contained in the second placing member before the process apparatus performs the process on the target object contained in the first placing member.

### [Supplementary Note H20]

The control apparatus according to the Supplementary Note H19, wherein
the first placing member in which a plurality of target objects are contained is replaced with the second placing member after the process apparatus performs the process on a plurality of target objects contained in the second placing member.

### [Supplementary Note H21]

The control apparatus according to the Supplementary Note H19 or H20, wherein
the position pose data is first position pose data, and
the second designation area is set based on second position pose data, which indicates at least one of a position and a pose of the second placing member and which is generated based on third image data generated by the imaging system imaging at least a part of the second placing member, before the process apparatus performs the process on the target object contained in the first placing member.

### [Supplementary Note H22]

The control apparatus according to the Supplementary Note H21, wherein
the target object group is a first target object group,
the object group is a first object group,
the three-dimensional position data is first three-dimensional position data,
the selection data is first selection data,
the control signal is a first control signal,
before the process apparatus performs the process on the target object contained in the first placing member, the computing apparatus:
   selects, as the second selection data corresponding to the second designation area, a part of second three-dimensional position data, which indicates a three-dimensional position of each of a plurality of points of a second object group that includes a second target object group including at least a part of a plurality of target objects contained in the second placing member and which is generated based on fourth image data generated by the imaging system imaging the second object group; and
   generates a second control signal for controlling the robot so that the process apparatus approaches one target object of the second target object group to perform the process on the one target object, based on the second selection data.

### [Supplementary Note H23]

The control apparatus according to the Supplementary Note H21 or H22, wherein
the computing apparatus changes the second designation area to the first designation area by changing the second predetermined area from a second position pose, which indicates at least one of a second position and a second pose of the second designation area, to a third position pose, which indicates at least one of a third position and a third pose, based on the first position pose data.

### [Supplementary Note H24]

The control apparatus according to any one of the Supplementary Notes H5 to H7, H13, and H14, wherein
the placing member is a first placing member,
the designation area is a first designation area,
the computing apparatus:
   sets a second designation area, which includes at least a part of a space of a second placing member different from the first placing member on which a plurality of target objects are placed, as the first designation area, based on the position pose data; and
   selects a part of the three-dimensional position data as the selection data corresponding to the first designation area.

### [Supplementary Note H25]

The control apparatus according to any one of the Supplementary Notes H8 to H24, wherein
a size of the second placing member is substantially the same as a size of the first placing member.

### [Supplementary Note H26]

The control apparatus according to any one of the Supplementary Notes H1 to H7, wherein
the computing apparatus selects a part of the three-dimensional position data as the selection data, based on size information related to a size of the placing member.

### [Supplementary Note H27]

The control apparatus according to the Supplementary Note H26, wherein
the computing apparatus:
sets a designation area, which includes at least a part of a space of the placing member on which a plurality of target objects are placed, based on the size information; and
selects a part of the three-dimensional position data as the selection data corresponding to the designation area.

### [Supplementary Note H28]

The control apparatus according to any one of the Supplementary Notes H8 to H23, wherein
the computing apparatus:
changes a second designation area, which includes at least a part of a space of a second placing member different from the first placing member in which a plurality of target objects are contained, to the first designation area, based on the position pose data and size difference information related to a difference between a size of the first placing member and a size of the second placing member; and
selects a part of the three-dimensional position data as the selection data corresponding to the first designation area.

### [Supplementary Note H29]

The control apparatus according to the Supplementary Note H28, wherein
the computing apparatus changes the second designation area to the first designation area by changing a size of the second designation area and at least one of a position and a pose of the second designation area, based on the size difference information and the position pose data.

### [Supplementary Note H30]

The control apparatus according to the Supplementary Note H28 or H29, wherein
the object group includes at least the target object group and at least a part of the first placing member, and
the computing apparatus changes the second designation area to the first designation area based on the size difference information and the position pose data so that the first designation area does not include a plurality of points, which indicated by the three-dimensional position data, of at least a part of the first placing member.

### [Supplementary Note H31]

The control apparatus according to any one of the Supplementary Notes H28 to H30, wherein
the computing apparatus changes the second designation area to the first designation area based on the size difference information and the position pose data so that the first designation area includes a plurality of points, which indicated by the three-dimensional position data, of at least a part of the target object group placed on the first placing member.

### [Supplementary Note H32]

The control apparatus according to any one of the Supplementary Notes H28 to H31, wherein
the computing apparatus changes the second designation area to the first designation area by changing the second designation area from an initial size to a first size based on the size difference information, and changing the second designation area from an initial position pose, which indicates at least one of an initial position and an initial pose of the second designation area, to a first position pose, which indicates at least one of a first position and a first pose, based on the position pose data.

### [Supplementary Note H33]

The control apparatus according to any one of the Supplementary Notes H28 to H32, wherein
the computing apparatus changes the second designation area to the first designation area by changing the second designation area from a second size to a third size based on the size difference information, and changing the second designation area from a second position pose, which indicates at least one of a second position and a second pose of the second designation area, to a third position pose, which indicates at least one of a third position and a third pose, based on the position pose data.

### [Supplementary Note H34]

The control apparatus according to any one of the Supplementary Notes H28 to H33, wherein
the size of the second placing member is different from the size of the first placing member.

### [Supplementary Note H35]

The control apparatus according to any one of the Supplementary Notes H8 to H25 and H28 to H34, wherein
the position pose data is first position pose data,
after the process apparatus performs the process on a plurality of target objects contained in the first placing member, the computing apparatus:
   generates third position pose data indicating at least one of a position and a pose of a third placing member which is different from the first placing member and the second placing member and on which a plurality of target objects are placed, based on fifth image data that is generated by the imaging system imaging at least a part of the third placing member; and
   changes the second designation area to a third designation area, which includes at least a part of a space of the third placing member on which a plurality of target objects are placed, based on the third position pose data.

### [Supplementary Note H36]

The control apparatus according to any one of the Supplementary Notes H8 to H25 and H28 to H34, wherein
the position pose data is first position pose data,
after the process apparatus performs the process on a plurality of target objects contained in the first placing member, the computing apparatus:
   generates third position pose data indicating at least one of a position and a pose of a third placing member which is different from the first placing member and the second placing member and on which a plurality of target objects are placed, based on fifth image data that is generated by the imaging system imaging at least a part of the third placing member; and
   changes the first designation area to a third designation area, which includes at least a part of a space of the third placing member on which a plurality of target objects are placed, based on the third position pose data.

### [Supplementary Note H37]

The control apparatus according to the Supplementary Note H35 or H36, wherein
the target object group is a first target object group,
the object group is a first object group,
the three-dimensional position data is first three-dimensional position data,
the selection data is first selection data,
the computing apparatus:
   selects, as third selection data corresponding to the third designation area, a part of third three-dimensional position data, which indicates a three-dimensional position of each of a plurality of points of a third object group that includes a third target object group including at least a part of a plurality of target objects placed on the third placing member and which is generated based on sixth image data generated by the imaging system imaging the third object group; and
   generates a third control signal for controlling the robot so that the process apparatus approaches one target object of the third target object group to perform the process on the one target object, based on the third selection data.

### [Supplementary Note H38]

The control apparatus according to the Supplementary Note H37, wherein
the third object group includes at least the third target object group and at least a part of the third placing member, and
the third designation area does not include a plurality of points, which is indicated by the third three-dimensional position data, of at least a part of the third placing member.

### [Supplementary Note H39]

The control apparatus according to the Supplementary Note H37 or H38, wherein
the third designation area includes a plurality of points, which is indicated by the third three-dimensional position data, of at least a part of the third target object group contained in the third placing member.

### [Supplementary Note H40]

The control apparatus according to any one of the Supplementary Notes H5 to H25 and H28 to H39, wherein
the designation area includes a plurality of partial areas, and
at least a part of one partial area of the plurality of partial areas is different from another partial area of the plurality of partial areas.

### [Supplementary Note H41]

The control apparatus according to any one of the Supplementary Notes H1 to H40, wherein
the computing apparatus selects a part of the three-dimensional position data as the selection data, based on robot position pose data, which indicates at least one of a position and a pose of a base point of the process apparatus, and the position pose data.

### [Supplementary Note H42]

The control apparatus according to any one of the Supplementary Notes H5 to H25 and H28 to H40, wherein
the designation area is a first designation area,
the computing apparatus:
   sets a fourth designation area, which includes at least a part of the process apparatus in a space in which the robot is positioned, based on robot position pose data indicating at least one of a position and a pose of a base point of the process apparatus; and
   selects a part of the three-dimensional position data as the selection data that does not correspond to the fourth designation area and that corresponds to the first designation area.

### [Supplementary Note H43]

The control apparatus according to the Supplementary Note H41 or H42, wherein
the selection data does not include data indicating a three-dimensional position of each of a plurality of points of at least a part of the process apparatus and data indicating a three-dimensional position of each of a plurality of points of at least a part of the placing member.

### [Supplementary Note H44]

The control apparatus according to any one of the Supplementary Notes H41 to H43, wherein
the selection data includes data indicating a three-dimensional position of each of a plurality of points of at least a part of the target object group.

### [Supplementary Note H45]

The control apparatus according to any one of the Supplementary Notes H41 to H44, wherein
the base point of the process apparatus is a tool center point of the process apparatus.

### [Supplementary Note H46]

The control apparatus according to any one of the Supplementary Notes H1 to H45, wherein
the process apparatus is a holding apparatus that is configured to hold the target object.

### [Supplementary Note H47]

The control apparatus according to any one of the Supplementary Notes H1 to H45, wherein
the computing apparatus selects a first data part of the three-dimensional position data as the selection data and does not select a second data part, which is different from the first data part, of the three-dimensional position data as the selection data based on the position pose data.

### [Supplementary Note H48]

The control apparatus according to any one of the Supplementary Notes H1 to H47, wherein
the computing apparatus:
sets a fifth designation area, which includes an area that is different from a space of the placing member on which a plurality of target objects are placed, based on the position pose data; and
selects a part of the three-dimensional position data as the selection data corresponding to an area excluding the fifth designation area.

### [Supplementary Note H49]

The control apparatus according to any one of the Supplementary Notes H1 to H48, wherein
the computing apparatus:
sets a sixth designation area, which is a designation area including at least a part of a space of the placing member on which a plurality of target objects are placed, and a fifth designation area, which is a designation area including at least a part of an area different from the space, based on the position pose data; and
selects a part of the three-dimensional position data as the selection data that corresponds to the sixth designation area and that does not correspond to an area excluding the fifth designation area.

### [Supplementary Note H50]

The control apparatus according to any one of the Supplementary Notes H1 to H49, wherein
the imaging system is mounted on the robot.

### [Supplementary Note H51]

The control apparatus according to any one of the Supplementary Notes H1 to H50, wherein
the placing member includes a container in which the target object is contained.

### [Supplementary Note H52]

A control system including:
the control apparatus according to any one of the Supplementary Notes H1 to H51; and
the imaging system.

### [Supplementary Note H53]

A robot system including:
the control apparatus according to any one of the Supplementary Notes H1 to H51; and
the imaging system; and
the robot.

### [Supplementary Note H54]

A control method that generates a control signal for controlling a robot on which a process apparatus that performs a process on a target object placed on a placing member is mounted and which moves the process apparatus, wherein
the control method includes:
generating position pose data indicating at least one of a position and a pose of the placing member, based on first image data that is generated by the imaging system imaging at least a part of the placing member;
generating three-dimensional position data indicating a three-dimensional position of each of a plurality of points of an object group that includes a target object group including at least a part of a plurality of target objects placed on the placing member, based on second image data that is generated by the imaging system imaging the object group;
selecting a part of the three-dimensional position data as selection data, based on the position pose data; and
generating the control signal for controlling the robot so that the process apparatus approaches one target object of the target object group to perform the process on the one target object by the process apparatus, based on the selection data.

### [Supplementary Note H55]

A computer program that allows a computer to execute the control method according to the Supplementary Note H54.

### [Supplementary Note I1]

A control apparatus that generates a control signal for controlling a robot on which a process apparatus that performs a process on a target object placed on a placing member is mounted and which moves the process apparatus, wherein
the control apparatus includes:
a computing apparatus that generates the control signal; and
a communication apparatus that outputs the control signal generated by the computing apparatus,
the computing apparatus:
   generates position pose data indicating at least one of a position and a pose of the placing member, based on first image data that is generated by an imaging system imaging at least a part of the placing member;
   acquires second image data that is generated by the imaging system imaging an object group, which includes a target object group including at least a part of a plurality of target objects placed on the placing member;
   selects a part of the second image data as selection data, based on the position pose data; and
   generates the control signal for controlling the robot so that the process apparatus approaches one target object of the target object group to perform the process on the one target object by the process apparatus, based on the selection data.

### [Supplementary Note I2]

A control system including:
the control apparatus according to the Supplementary Note I1; and
the imaging system.

### [Supplementary Note I3]

A robot system including:
the control apparatus according to the Supplementary Note I1; and
the imaging system; and
the robot.

### [Supplementary Note I4]

A control method that generates a control signal for controlling a robot on which a process apparatus that performs a process on a target object placed on a placing member is mounted and which moves the process apparatus, wherein
the control method includes:
generating position pose data indicating at least one of a position and a pose of the placing member, based on first image data that is generated by an imaging system imaging at least a part of the placing member;
acquiring second image data that is generated by the imaging system imaging an object group, which includes a target object group including at least a part of a plurality of target objects placed on the placing member;
selecting a part of the second image data as selection data, based on the position pose data; and
generating the control signal for controlling the robot so that the process apparatus approaches one target object of the target object group to perform the process on the one target object by the process apparatus, based on the selection data.

### [Supplementary Note I5]

A computer program that allows a computer to execute the control method according to the Supplementary Note I4.

### [Supplementary Note J1]

A control apparatus that generates a control signal for controlling a robot on which a process apparatus that performs a process on a target object placed on a placing member is mounted and which moves the process apparatus, wherein
the control apparatus includes:
a computing apparatus that generates the control signal; and
a communication apparatus that outputs the control signal generated by the computing apparatus,
the computing apparatus:
   generates three-dimensional position data indicating a three-dimensional position of each of a plurality of points of an object group that includes a target object group including at least a part of a plurality of target objects placed on the placing member, based on image data that is generated by an imaging system imaging the object group;
   selects a part of the three-dimensional position data as selection data, based on size information related to a size of the placing member; and
   generates the control signal for controlling the robot so that the process apparatus approaches one target object of the target object group to perform the process on the one target object by the process apparatus, based on the selection data.

### [Supplementary Note J2]

The control apparatus according to the Supplementary Note J1, wherein
the computing apparatus:
sets a designation area, which includes at least a part of a space of the placing member on which a plurality of target objects are placed, based on the size information; and
selects a part of the three-dimensional position data as the selection data corresponding to the designation area.

### [Supplementary Note J3]

The control apparatus according to the Supplementary Note J2, wherein
the placing member is a first placing member,
the designation area is a first designation area,
the computing apparatus:
   changes a second designation area, which includes at least a part of a space of a second placing member which is different from the first placing member and on which a plurality of target objects are placed, to the first designation area, based on size difference information related to a difference between a size of the first placing member and a size of the second placing member; and
   selects a part of the three-dimensional position data as the selection data corresponding to the first designation area.

### [Supplementary Note J4]

The control apparatus according to the Supplementary Note J3, wherein
the computing apparatus changes the second designation area to the first designation area by changing a size of the second designation area, based on the size difference information.

### [Supplementary Note J5]

The control apparatus according to the Supplementary Note J3 or J4, wherein
the object group includes at least the target object group and at least a part of the first placing member, and
the computing apparatus changes the second designation area to the first designation area based on the size difference information so that the first designation area does not include a plurality of points, which is indicated by the three-dimensional position data, of at least a part of the first placing member.

### [Supplementary Note J6]

The control apparatus according to any one of the Supplementary Notes J3 to J5, wherein
the computing apparatus changes the second designation area to the first designation area based on the size difference information so that the first designation area includes a plurality of points, which is indicated by the three-dimensional position data, of at least a part of the target object group placed on the first placing member.

### [Supplementary Note J7]

The control apparatus according to any one of the Supplementary Notes J3 to J6, wherein
the computing apparatus changes the second designation area to the first designation area by changing the second designation area from an initial size to a first size based on the size difference information.

### [Supplementary Note J8]

The control apparatus according to any one of the Supplementary Notes J3 to J7, wherein
the computing apparatus changes the second designation area to the first designation area by changing the second designation area from a second size to a third size based on the size difference information.

### [Supplementary Note J9]

The control apparatus according to any one of the Supplementary Notes J3 to J8, wherein
the size of the second placing member is different from the size of the first placing member.

### [Supplementary Note J10]

A control system including:
the control apparatus according to any one of the Supplementary Notes J1 to J9; and
the imaging system.

### [Supplementary Note J11]

A robot system including:
the control apparatus according to any one of the Supplementary Notes J1 to J9; and
the imaging system; and
the robot.

### [Supplementary Note J12]

A control method that generates a control signal for controlling a robot on which a process apparatus that performs a process on a target object placed on a placing member is mounted and which moves the process apparatus, wherein
the control method includes:
generating three-dimensional position data indicating a three-dimensional position of each of a plurality of points of an object group that includes a target object group including at least a part of a plurality of target objects placed on the placing member, based on second image data that is generated by the imaging system imaging the object group;
selecting a part of the three-dimensional position data as selection data, based on size information related to a size of the placing member; and
generating the control signal for controlling the robot so that the process apparatus approaches one target object of the target object group to perform the process on the one target object by the process apparatus, based on the selection data.

### [Supplementary Note J13]

A computer program that allows a computer to execute the control method according to the Supplementary Note J12.

### [Supplementary Note K1]

A control apparatus that generates a control signal for controlling a robot on which a process apparatus that performs a process on a target object placed on a placing member is mounted and which moves the process apparatus, wherein
the control apparatus includes:
a computing apparatus that generates the control signal; and
a communication apparatus that outputs the control signal generated by the computing apparatus,
the computing apparatus:
   acquires image data generated by an imaging system imaging an object group that includes a target object group including at least a part of a plurality of target objects placed on the placing member;
   selects a part of the image data as selection data, based on size information related to a size of the placing member; and
   generates the control signal for controlling the robot so that the process apparatus approaches one target object of the target object group to perform the process on the one target object by the process apparatus, based on the selection data.

### [Supplementary Note K2]

A control system including:
the control apparatus according to the Supplementary Note K1; and
the imaging system.

### [Supplementary Note K3]

A robot system including:
the control apparatus according to the Supplementary Note K1; and
the imaging system; and
the robot.

### [Supplementary Note K4]

A control method that generates a control signal for controlling a robot on which a process apparatus that performs a process on a target object placed on a placing member is mounted and which moves the process apparatus, wherein
the control method includes:
acquiring image data generated by an imaging system imaging an object group that includes a target object group including at least a part of a plurality of target objects placed on the placing member;
selecting a part of the image data as selection data, based on size information related to a size of the placing member; and
generating the control signal for controlling the robot so that the process apparatus approaches one target object of the target object group to perform the process on the one target object by the process apparatus, based on the selection data.

### [Supplementary Note K5]

A computer program that allows a computer to execute the control method according to the Supplementary Note K4.

### [Supplementary Note L1]

A control apparatus that generates a control signal for controlling a robot on which a process apparatus that performs a process on a target object is mounted and which moves the process apparatus, wherein
the control apparatus includes:
a computing apparatus that generates the control signal; and
a communication apparatus that outputs the control signal generated by the computing apparatus,
the computing apparatus:
   generates three-dimensional position data indicating a three-dimensional position of each of a plurality of points of an object group that includes a target object group including at least a part of a plurality of target objects placed on the placing member, based on image data that is generated by an imaging system imaging the object group;
   selects a part of the three-dimensional position data as selection data, based on robot position pose data that indicates at least one of a position and a pose of a base point of the process apparatus; and
   generates the control signal for controlling the robot so that the process apparatus approaches one target object of the target object group to perform the process on the one target object by the process apparatus, based on the selection data.

### [Supplementary Note L2]

The control apparatus according to the Supplementary Note L1, wherein
the computing apparatus:
sets a designation area, which includes at least a part of a space of the placing member on which a plurality of target objects are placed, based on position pose data indicating at least one of a position and a pose of the placing member,
sets a second designation area, which includes at least a part of the process apparatus in a space in which the robot is positioned, based on robot position pose data indicating at least one of a position and a pose of a base point of the process apparatus; and
selects a part of the three-dimensional position data as the selection data that does not correspond to the second designation area and that corresponds to the first designation area.

### [Supplementary Note L3]

The control apparatus according to the Supplementary Note L1 or L2, wherein
the selection data does not include data indicating a three-dimensional position of each of a plurality of points of at least a part of the process apparatus and data indicating a three-dimensional position of each of a plurality of points of at least a part of the placing member.

### [Supplementary Note L4]

The control apparatus according to any one of the Supplementary Notes L1 to L3, wherein
the selection data includes data indicating a three-dimensional position of each of a plurality of points of at least a part of the target object group.

### [Supplementary Note L5]

The control apparatus according to any one of the Supplementary Notes L1 to L4, wherein
the base point of the process apparatus is a tool center point of the process apparatus.

### [Supplementary Note L6]

A control system including:
the control apparatus according to any one of the Supplementary Notes L1 to L5; and
the imaging system.

### [Supplementary Note L7]

A robot system including:
the control apparatus according to any one of the Supplementary Notes L1 to L5; and
the imaging system; and
the robot.

### [Supplementary Note L8]

A control method that generates a control signal for controlling a robot on which a process apparatus that performs a process on a target object is mounted and which moves the process apparatus, wherein
the control method includes:
generating three-dimensional position data indicating a three-dimensional position of each of a plurality of points of an object group that includes a target object group including at least a part of a plurality of target objects placed on the placing member, based on image data that is generated by an imaging system imaging the object group;
selecting a part of the three-dimensional position data as selection data, based on robot position pose data that indicates at least one of a position and a pose of a base point of the process apparatus; and
generating the control signal for controlling the robot so that the process apparatus approaches one target object of the target object group to perform the process on the one target object by the process apparatus, based on the selection data.

### [Supplementary Note L9]

A computer program that allows a computer to execute the control method according to the Supplementary Note L8.

### [Supplementary Note M1]

A control apparatus that generates a control signal for controlling a robot on which a process apparatus that performs a process on a target object is mounted and which moves the process apparatus, wherein
the control apparatus includes:
a computing apparatus that generates the control signal; and
a communication apparatus that outputs the control signal generated by the computing apparatus,
the computing apparatus:
   acquires image data that is generated by the imaging system imaging an object group, which includes a target object group including at least a part of a plurality of target objects placed on the placing member;
   selects a part of the image data as selection data, based on based on robot position pose data that indicates at least one of a position and a pose of a base point of the process apparatus; and
   generates the control signal for controlling the robot so that the process apparatus approaches one target object of the target object group to perform the process on the one target object by the process apparatus, based on the selection data.

### [Supplementary Note M2]

A control system including:
the control apparatus according to the Supplementary Note M1; and
the imaging system.

### [Supplementary Note M3]

A robot system including:
the control apparatus according to the Supplementary Note M1; and
the imaging system; and
the robot.

### [Supplementary Note M4]

A control method that generates a control signal for controlling a robot on which a process apparatus that performs a process on a target object placed on a placing member is mounted and which moves the process apparatus, wherein
the control method includes:
acquiring image data that is generated by the imaging system imaging an object group, which includes a target object group including at least a part of a plurality of target objects placed on the placing member;
selecting a part of the image data as selection data, based on based on robot position pose data that indicates at least one of a position and a pose of a base point of the process apparatus; and
generating the control signal for controlling the robot so that the process apparatus approaches one target object of the target object group to perform the process on the one target object by the process apparatus, based on the selection data.

### [Supplementary Note M5]

A computer program that allows a computer to execute the control method according to the Supplementary Note M4.

### [Supplementary Note N1]

A control apparatus that generates a control signal for controlling a robot on which a process apparatus that performs a process on a target object and an imaging system are mounted and which moves the process apparatus and the imaging system, wherein
the control apparatus includes:
a computing apparatus that generates the control signal; and
a communication apparatus that outputs the control signal generated by the computing apparatus,
in a case where it is determined, based on an imaged result of a target object group including a plurality of target objects by the imaging system, that the process apparatus cannot perform the process on at least one target object of the target object group, the computing apparatus generates the control signal for controlling the robot so as to change at least one of a position and a pose of the imaging system relative to one target object of the target object group.

### [Supplementary Note N2]

The control apparatus according to the Supplementary Note N1, wherein
the determining that the process apparatus cannot perform the process on at least one target object of the target object group includes determining that the number of the target objects, on which the process apparatus cannot perform the process, in the first target object group is equal to or larger than a predetermined threshold value.

### [Supplementary Note N3]

The control apparatus according to the Supplementary Note N1 or N2, wherein
the determining that the process apparatus cannot perform the process on at least one target object of the target object group includes determining that there is no target object, on which the process apparatus can perform the process, in the first target object group.

### [Supplementary Note N4]

The control apparatus according to any one of the Supplementary Notes N1 to N3, wherein
the control signal is a signal for controlling the robot so as to change an imaging direction of the imaging system relative to the one target object.

### [Supplementary Note N5]

The control apparatus according to the Supplementary Note N4, wherein
the control signal is a signal for controlling the robot so as to change the imaging direction of the imaging system relative to the one target object from an imaging direction in which the imaging system images the one target object to acquire the imaged result.

### [Supplementary Note N6]

The control apparatus according to any one of the Supplementary Notes N1 to N5, wherein
the control signal is a signal for controlling the robot so that a proportion of the one target object included in an imaging field of view of the imaging system after the imaging system has moved by a control of the robot based on the control signal is larger than a proportion of the one target object included in the imaging field of view before the imaging system moves by the control of the robot based on the control signal.

### [Supplementary Note N7]

The control apparatus according to any one of the Supplementary Notes N1 to N6, wherein
the control signal is a first control signal,
the first control signal is a signal for controlling the robot to move the imaging system to at least one of a position and a pose at which the one target object can be imaged from a first direction, and
the computing apparatus generates a second control signal for controlling the robot so that the imaging system moves to at least one of a position and a pose at which the one target object can be imaged from a second direction different from the first direction after the imaging system has moved to at least one of the position and the pose at which the one target object can be imaged from the first direction by the control of the robot based on the first control signal.

### [Supplementary Note N8]

The control apparatus according to the Supplementary Note N7, wherein
the target object group is a first target object group,
in a case where it is determined, based on an imaged result of a second target object group that includes a plurality of target objects and that includes the one target object by the imaging system, that the process apparatus cannot perform the one target object after the imaging system has moved by the control of the robot based on the first control signal, the computing apparatus generates, as the second control signal, the control signal for controlling the robot so as to change at least one of a position and a pose of the imaging system relative to the one target object.

### [Supplementary Note N9]

The control apparatus according to the Supplementary Note N7 or N8, wherein
the computing apparatus generates the second control signal without using new image data as an imaged result by the imaging system.

### [Supplementary Note N10]

The control apparatus according to any one of claims N7 to N9, wherein
the computing apparatus generates the third control signal based on change information that indicates at least one of a direction and an amount for changing at least one of a relative position and pose between the target object and the imaging system and that is set in advance.

### [Supplementary Note N11]

The control apparatus according to the Supplementary Note N10, wherein
the change information is set by being input by a user in advance.

### [Supplementary Note N12]

The control apparatus according to any one of the Supplementary Notes N7 to N11, wherein
in a case where it is determined, based on an imaged result of a third target object group that includes at least a part of the plurality of target objects and that includes the one target object of the second target object group by the imaging system, that the process apparatus can perform the one target object after the imaging system has moved by the control of the robot based on the second control signal, the computing apparatus generates, as the control signal, a third control signal for controlling the robot so that the process apparatus approaches the one target object.

### [Supplementary Note N13]

The control apparatus according to the Supplementary Note N12, wherein
the third control signal is a signal for controlling the robot so that the process apparatus approaches the one target object of the third target object group to perform the process on the one target object of the third target object group.

### [Supplementary Note N14]

The control apparatus according to the Supplementary Note N12 or N13, wherein
the computing apparatus:
generates position pose data, which indicates at least one of a position and a pose of the one target object of the third target object group, based on partial model data indicating a part of a model of the target object and an imaged result of the third target object group by the imaging system; and
generates the third control signal based on the generated position pose data.

### [Supplementary Note N15]

The control apparatus according to the Supplementary Note N14, wherein
a part of the model indicated by the partial model data is a part corresponding to an area at which a density of points, which represent a three-dimensional position of the one target object of the third target object group that is indicated by three-dimensional position data generated from an imaged result of the third target object group by the imaging system, is equal to or larger than a threshold value.

### [Supplementary Note N16]

The control apparatus according to the Supplementary Note N14 or N15, wherein
a part of the model indicated by the partial model data is a part acquired by removing, from the model, an area at which a density of points, which represent a three-dimensional position of the one target object of the third target object group that is indicated by three-dimensional position data generated from an imaged result of the third target object group by the imaging system, is smaller than a threshold value.

### [Supplementary Note N17]

The control apparatus according to any one of the Supplementary Notes N7 to N16, wherein
in a case where it is determined, based on an imaged result of a third target object group that includes at least a part of the plurality of target objects and that includes the one target object of the second target object group by the imaging system, that the process apparatus cannot perform at least one target object of the third target object group after the imaging system has moved by the control of the robot based on the second control signal, the computing apparatus generates, as the control signal, a fourth control signal for controlling the robot so as to change at least one of a position and a pose of the imaging system relative to one target object of the third target object group.

### [Supplementary Note N18]

The control apparatus according to any one of the Supplementary Notes N1 to N17, wherein
at least one of the position and the pose of the imaging system changed by the control of the robot based on the control signal is different from at least one of the position and the pose of the imaging system when the imaging system has imaged the target object group to acquire the imaged result.

### [Supplementary Note N19]

The control apparatus according to any one of the Supplementary Notes N1 to N18, wherein
the control signal is a signal for controlling the robot so as to change, relative to the one target object, at least one of the position and the pose of the imaging system when the imaging system has imaged the target object group to acquire the imaged result.

### [Supplementary Note N20]

The control apparatus according to any one of the Supplementary Notes N1 to N19, wherein
the target object group is a first target object group,
the computing apparatus generates the control signal for controlling the robot so as to change at least one of a position and a pose of the imaging system relative to the one target object, based on an imaged result of a fourth target object group, which includes a plurality of target objects and which includes the one target object of the first target object group, by the imaging system, in response to the determination.

### [Supplementary Note N21]

The control apparatus according to the Supplementary Note N20, wherein
the computing apparatus generates the control signal for controlling the robot so as to change at least one of the position and the pose of the imaging system relative to the one target object, based on at least one of a position and a pose of the one target object, which is calculated based on the imaged result of the fourth target object group by the imaging system, in response to the determination.

### [Supplementary Note N22]

The control apparatus according to the Supplementary Note N20 or N21, wherein
the computing apparatus generates the control signal for controlling the robot so as to change at least one of the position and the pose of the imaging system relative to the one target object, based on at least one of a position and a pose of the one target object, which is calculated based on the imaged result of the fourth target object group by the imaging system, and relative position pose information, which indicates at least one of a relative position and pose between the target object and the imaging system, in response to the determination.

### [Supplementary Note N23]

The control apparatus according to the Supplementary Note N22, wherein
the relative position pose information is set by being input by a user in advance.

### [Supplementary Note N24]

The control apparatus according to any one of the Supplementary Notes N20 to N23, wherein
the fourth target object group is the first target object group.

### [Supplementary Note N25]

The control apparatus according to any one of the Supplementary Notes N1 to 24, wherein
the control signal is a first control signal,
the target object group is a first target object group,
in a case where it is determined, based on an imaged result of a second target object group that includes a plurality of target objects and that includes the one target object by the imaging system, that the process apparatus can perform the one target object after the imaging system has moved by the control of the robot based on the first control signal, the computing apparatus generates, as the control signal, a fifth control signal for controlling the robot so that the process apparatus approaches the one target object.

### [Supplementary Note N26]

The control apparatus according to the Supplementary Note N25, wherein
in a case where it is determined that the process apparatus can perform the one target object, the computing apparatus generates the fifth control signal based on at least one of a position and a pose of the one target object that is calculated based on the imaged result of the second target object group.

### [Supplementary Note N27]

The control apparatus according to the Supplementary Note N25 or 26, wherein
the computing apparatus:
calculates at least one of a position and a pose of the one target object based on the imaged result of the second target object group and partial model data indicating a part of a model of the target object in a case where it is determined that the process apparatus can perform the one target object; and
generates the fifth control signal based on at least one of the calculated position and pose of the one target object.

### [Supplementary Note N28]

A control system including:
the control apparatus according to any one of the Supplementary Notes N1 to N27; and
the imaging system.

### [Supplementary Note N29]

A robot system including:
the control apparatus according to any one of the Supplementary Notes N1 to N27; and
the imaging system; and
the robot.

### [Supplementary Note N30]

A control method that generates a control signal for controlling a robot on which a process apparatus that performs a process on a target object and an imaging system are mounted and which moves the process apparatus and the imaging system, wherein
in a case where it is determined, based on an imaged result of a target object group including a plurality of target objects by the imaging system, that the process apparatus cannot perform the process on at least one target object of the target object group, the computing method generates the control signal for controlling the robot so as to change at least one of a position and a pose of the imaging system relative to one target object of the target object group.

### [Supplementary Note N31]

A computer program that allows a computer to execute the control method according to the Supplementary Note N30.

At least a part of the feature of each example embodiment described above is allowed to be combined with at least another part of the feature of each example embodiment described above. A part of the feature of each example embodiment described above may not be used. Moreover, the disclosures of all publications and United States patents that are cited in each example embodiment described above are incorporated in the disclosures of the present application by reference if it is legally permitted.

The present invention is allowed to be changed, if desired, without departing from the essence or spirit of the invention which can be read from the claims and the entire specification, and a control apparatus, a control system, a robot system, a control method, and a computer program, which involve such changes, are also intended to be within the technical scope of the present invention.

### Description of Reference Codes

SYS robot system
1 robot
12 robot arm
13 robot control apparatus
2 imaging system
21, 22 imaging apparatus
3 control apparatus
31 computing apparatus
311 three-dimensional position data generation unit
312 position pose calculation unit
313 signal generation unit
314b movement control unit
316c re-sizing unit
317c pre-processing unit
33 communication unit
4 end effector
OBJ target object
W workpiece
T placing apparatus
IMG_2D, IMG_2D_low, IMG_3D, IMG_3D_low image data
WSD, WSD_low three-dimensional position data
IMG_2D_ROI, WSD_ROI interested data
POI, POI_low position pose data
TM3 template model
TM3_W whole model
TM3_P partial model
RTP reset position
RTA reset pose

## Claims

1. A control apparatus that generates a control signal for controlling a robot on which a process apparatus that performs a process on a target object and an imaging system are mounted and which moves the process apparatus and the imaging system, wherein
the control apparatus comprises:
a computing apparatus that generates the control signal; and
a communication apparatus that outputs the control signal generated by the computing apparatus,
the computing apparatus:
generates, as the control signal, a first control signal for controlling the robot so that a positional relationship between the target object and the imaging system changes to a second positional relationship different from a first positional relationship, based on second image data generated by the imaging system imaging the target object, in a case where it is determined, based on first image data generated by the imaging system imaging the target object when the positional relationship is the first positional relationship, that there is no target object on which the process apparatus can perform the process; and
generates a second control signal as the control signal, based on position data and pose data indicating a position and a pose of the target object, which are generated based on third image data generated by the imaging system imaging the target object at the second positional relationship.

2. The control apparatus according to claim 1, wherein
the first control signal is a signal for controlling the robot so as to change a position and a pose of the imaging system relative to the target object.

3. The control apparatus according to claim 1 or 2, wherein
the first control signal is a signal for controlling the robot so as to change an imaging direction of the imaging system relative to the target object from a first direction to a second direction.

4. The control apparatus according to claim 3, wherein
at least one of the first image data and the second image data is generated by the imaging system imaging the target object from the first direction.

5. The control apparatus according to any one of claims 1 to 4, wherein
the position data and the pose data indicating the position and the pose of the target object calculated based on the third image data are second position data and second pose data,
the computing apparatus:
generates first position data and first pose data indicating the position and the pose of the target object, based on the second image data; and
generates the first control signal based on the first position data, the first pose data, and position pose information that indicates a relative position and pose between the target object and the imaging system and that is set in advance.

6. The control apparatus according to claim 2, wherein
the position pose information is set by being input by a user in advance.

7. The control apparatus according to any one of claims 1 to 6, wherein
a proportion of the target object relative to an imaging field of view of the imaging system at the second positional relationship is larger than a proportion of the target object relative to the imaging field of view of the imaging system at the first positional relationship.

8. The control apparatus according to claim 7, wherein
the first control signal is a signal for controlling the robot so that the proportion of the target object relative to the imaging field of view at the second positional relationship is larger than the proportion of the target object relative to the imaging field of view at the first positional relationship.

9. The control apparatus according to any one of claims 1 to 8, wherein
the computing apparatus:
determines based on first three-dimensional position data, which is generated from the first image data and which indicates a three-dimensional position of each of a plurality of points of the target object, that there is no target object on which the process apparatus can perform the process; and
calculates the position data and the pose data of the target object based on second three-dimensional position data, which is generated from the third image data and which indicates a three-dimensional position of each of a plurality of points of the target object, and
the number of points of the target object whose three-dimensional positions are indicated by the second three-dimensional position data is larger than the number of points of the target object whose three-dimensional positions are indicated by the first three-dimensional position data.

10. The control apparatus according to claim 9, wherein
the first control signal is a signal for controlling the robot so that the number of points of the target object whose three-dimensional positions are indicated by the second three-dimensional position data is larger than the number of points of the target object whose three-dimensional positions are indicated by the first three-dimensional position data.

11. The control apparatus according to any one of claims 1 to 10, wherein
the first control signal is a signal for controlling the robot so as to rotationally move the imaging system around a predetermined rotational axis.

12. The control apparatus according to any one of claims 1 to 10, wherein
the first control signal is a signal for controlling the robot so as to rotationally move the imaging system so that an optical axis direction, which extends from the imaging system along an optical axis of the imaging system, changes relative to the target object.

13. The control apparatus according to any one of claims 1 to 12, wherein
the computing apparatus:
generates the position data and the pose data of the target object based on the third image data and partial model data indicating a part of a model of the target object; and
generates the second control signal based on the generated position data and pose data.

14. The control apparatus according to any one of claims 1 to 13, wherein
the position data and the pose data indicating the position and the pose of the target object calculated based on the third image data are second position data and second pose data,
the computing apparatus:
generates first position data and first pose data indicating the position and the pose of the target object, based on the second image data and model data indicating a model of the target object; and
generates the first control signal based on the generated first position data and first pose data.

15. The control apparatus according to any one of claims 1 to 12, wherein
the computing apparatus:
generates first position data and first pose data indicating the position and the pose of the target object, based on the second image data and model data indicating a model of the target object;
generates the first control signal based on the first position data and the first pose data;
generates the second position data and the second pose data as the position data and the pose data of the target object, based on the third image data and partial model data indicating a part of the model of the target object; and
generates the second control signal based on the generated second position data and second pose data.

16. The control apparatus according to any one of claims 13 to 15, wherein
a part of the model indicated by the partial model data is a part corresponding to an area at which a density of points, which represent a three-dimensional position of the target object that is indicated by three-dimensional position data generated from the third image data, is equal to or larger than a threshold value.

17. The control apparatus according to any one of claims 13 to 16, wherein
a part of the model indicated by the partial model data is a part acquired by removing, from the model, an area at which a density of points, which represent a three-dimensional position of the target object that is indicated by three-dimensional position data generated from the third image data, is smaller than a threshold value.

18. The control apparatus according to any one of claims 13 to 17, wherein
the partial model data is generated based on simulation image data that is generated by assuming a case where the imaging system images the target object when the target object and the imaging system are in a predetermined positional relationship.

19. The control apparatus according to claim 18, wherein
the predetermined positional relationship is a positional relationship that is based on position pose information that indicates a relative position and pose between the target object and the imaging system and that is set in advance.

20. The control apparatus according to claim 18 or 19, wherein
the partial model data is generated based on a contrast of an image indicated by the simulation image data.

21. The control apparatus according to any one of claims 18 to 20, wherein
the computing apparatus generates the partial model data based on the simulation image data.

22. The control apparatus according to any one of claims 13 to 17, wherein
the computing apparatus generates the partial model data based on at least one of information related to an area removed from the model and information related to an area included in the model, which is input in advance by a user.

23. The control apparatus according to any one of claims 13 to 22, wherein
the computing apparatus calculates the position data and the pose data of the target object based on the three-dimensional position data, which is generated from the third image data and which indicates a three-dimensional position of each of a plurality of points of the target object, and the partial model data.

24. The control apparatus according to any one of claims 1 to 23, wherein
the second control signal is a signal for controlling the robot so that the process apparatus approaches the target object to perform the process on the target object.

25. The control apparatus according to any one of claims 1 to 24, wherein
the second image data is generated by the imaging system imaging the target object at the first positional relationship.

26. The control apparatus according to any one of claims 1 to 25, wherein
the second image data is generated by the imaging system imaging the target object at a positional relationship different from the second positional relationship.

27. The control apparatus according to any one of claims 1 to 26, wherein
the imaging system generates the second image data by imaging the target object after it is determined based on the first image data that there is no target object on which the process apparatus can perform the process.

28. The control apparatus according to any one of claims 1 to 26, wherein
the imaging system generates the second image data by imaging the target object before it is determined based on the first image data that there is no target object on which the process apparatus can perform the process.

29. The control apparatus according to claim 28, wherein
the imaging system generates the second image data together with the first image data by imaging the target object at the first positional relationship.

30. The control apparatus according to any one of claims 1 to 29, wherein
determining by the computing apparatus that there is no target object on which the process apparatus can perform the process includes determining by the computing apparatus that a position pose computing processing of the target object based on the first image data is defect.

31. The control apparatus according to any one of claims 1 to 30, wherein
the imaging system includes a first imaging apparatus and a second imaging apparatus that is different from the first imaging apparatus,
the first imaging apparatus generates the first image data by imaging the target object at the first positional relationship,
the second imaging apparatus generates the second image data by imaging the target object, and
the first imaging apparatus generates the third image data by imaging the target object at the second positional relationship.

32. The control apparatus according to claim 31, wherein
the first imaging apparatus is one of a stereo camera, which includes two monocular cameras, and a monocular camera, which is different from the two monocular cameras, and
the second imaging apparatus is the other one of the stereo camera and the monocular camera that is different from the two monocular cameras.

33. The control apparatus according to claim 32, wherein
the first imaging apparatus is the stereo camera, and
the second imaging apparatus is the monocular camera that is different from the two monocular cameras.

34. The control apparatus according to any one of claims 1 to 30, wherein
the imaging system includes a stereo camera, which includes two monocular cameras, or a monocular camera.

35. The control apparatus according to claim 34, wherein
the imaging system includes the stereo camera,
the two monocular cameras of the stereo camera generate the first image data including two image data which are generated by the two monocular cameras imaging the target object at the first positional relationship, respectively, and
the two monocular cameras of the stereo camera generate the second image data including at least one of two image data generated by the two monocular cameras imaging the target object, respectively.

36. The control apparatus according to claim 35, wherein
the two monocular cameras of the stereo camera generate the second image data including two image data generated by the two monocular cameras imaging the target object at the first positional relationship, respectively and
the second image data is the first image data.

37. The control apparatus according to claim 34, wherein
the imaging system includes the monocular camera,
the monocular camera generates the first image data by imaging the target object at the first positional relationship, and
the monocular camera generates the second image data by imaging the target object.

38. The control apparatus according to claim 37, wherein
the monocular camera generates the second image data by imaging the target object at the first positional relationship, and
the second image data is the first image data.

39. The control apparatus according to any one of claims 1 to 4, wherein
the position data and the pose data indicating the position and the pose of the target object calculated based on the third image data are second position data and second pose data,
the computing apparatus:
generates first position data and first pose data indicating the position and the pose of the target object, based on the second image data; and
generates the first control signal based on the first position data, the first pose data, and position pose information that indicates a relative position and pose between the target object and the imaging system and that is set in advance.

40. A control system comprising:
the control apparatus according to any one of claims 1 to 39; and
the imaging system.

41. A robot system comprising:
the control apparatus according to any one of claims 1 to 39;
the imaging system; and
the robot.

42. A control method that generates a control signal for controlling a robot on which a process apparatus that performs a process on a target object and an imaging system are mounted and which moves the process apparatus and the imaging system, wherein
the control method comprises:
generating, as the control signal, a first control signal for controlling the robot so that a positional relationship between the target object and the imaging system changes to a second positional relationship different from a first positional relationship, based on second image data generated by the imaging system imaging the target object, in a case where it is determined, based on first image data generated by the imaging system imaging the target object when the positional relationship is the first positional relationship, that there is no target object on which the process apparatus can perform the process; and
generating a second control signal as the control signal, based on position data and pose data indicating a position and a pose of the target object, which are generated based on third image data generated by the imaging system imaging the target object at the second positional relationship.

43. A computer program that allows a computer to execute the control method according to claim 42.

44. A control apparatus that generates a control signal for controlling a robot on which a process apparatus that performs a process on a target object and an imaging system are mounted and which moves the process apparatus and the imaging system, wherein
the control apparatus comprises:
a computing apparatus that generates the control signal; and
a communication apparatus that outputs the control signal generated by the computing apparatus,
the computing apparatus generates, as the control signal, a first control signal for controlling the robot so that the imaging system changes to a second position and a second pose, which are different from a first position and a first pose, based on second image data generated by the imaging system imaging a second target object group including a plurality of target objects, in a case where it is determined, based on first image data generated by the imaging system imaging a first target object group including a plurality of target objects when the imaging system is at the first position and the first pose, that there is no target object on which the process apparatus can perform the process in the first target object group.

45. The control apparatus according to claim 44, wherein
the first control signal is a signal for controlling the robot so as to change a position and a pose of the imaging system relative to one target object of the second target object group.

46. The control apparatus according to claim 44 or 45, wherein
the first control signal is a signal for controlling the robot so as to change an imaging direction of the imaging system relative to one target object of the second target object group from a first direction to a second direction.

47. The control apparatus according to claim 46, wherein
the first target object group includes the one target object, and
the first image data is generated by the imaging system imaging the one target object from the first direction.

48. The control apparatus according to claim 46 or 47, wherein
the second image data is generated by the imaging system imaging the one target object from the first direction.

49. The control apparatus according to any one of claims 44 to 48, wherein
the first control signal is a signal for controlling the robot so that a proportion of one target object of the second target object group included in an imaging field of view of the imaging system after the imaging system has moved by a control of the robot based on the first control signal is larger than a proportion of the one target object included in the imaging field of view before the imaging system moves by the control of the robot based on the first control signal.

50. The control apparatus according to claim 44 or 45, wherein
the first control signal is a signal for controlling the robot so as to move the imaging system to a position and a pose at which one target object of the second target object group can be imaged from a first direction, and
the computing apparatus generates, as the control signal, a second control signal for controlling the robot so as to move the imaging system to a position and a pose at which the one target object can be imaged from a second direction different from the first direction, after the imaging system has moved to the position and the pose at which the one target object can be imaged from the first direction by the control of the robot based on the first control signal.

51. The control apparatus according to any one of claims 44 to 50, wherein
at least one target object of the second target object group is the same as at least one target object of the first target object group.

52. The control apparatus according to any one of claims 44 to 51, wherein
the computing apparatus generates the first control signal based on third position data and third pose data, which indicate a position and a pose of one target object of the second target object group and which are generated based on the second image data, and relative position pose information, which indicates a relative position and pose between the target object and the imaging system and which is set in advance.

53. The control apparatus according to claim 52, wherein
the relative position pose information is set by being input by a user in advance.

54. The control apparatus according to any one of claims 44 to 53, wherein
the computing apparatus generates, as the control signal, a second control signal for controlling the robot so that the imaging system changes to a fourth position and a fourth pose, which are different from the second position and the second pose, in a case where it is determined, based on third image data generated by the imaging system imaging a third target object group including a plurality of target objects at the second position and the second pose, that there is no target object on which the process apparatus can perform the process in the third target object group.

55. The control apparatus according to claim 54, wherein
the computing apparatus generates the second control signal without using new image data as an imaged result by the imaging system.

56. The control apparatus according to claim 54 or 55, wherein
the computing apparatus:
generates the first control signal based on third position data and third pose data, which indicate a position and a pose of one target object of the second target object group and which are generated based on the second image data, and position pose information, which indicates a relative position and pose between the target object and the imaging system and which is set in advance; and
generates the second control signal based on change information that indicates at least one of a direction and an amount for changing at least one of a relative position and pose between the target object and the imaging system and that is set in advance.

57. The control apparatus according to claim 56, wherein
the change information is set by being input by a user in advance.

58. The control apparatus according to any one of claims 54 to 57, wherein
the computing apparatus generates a third control signal as the control signal, based on fifth position data and fifth pose data that indicate a position and a pose of one target object of a fourth target object group including a plurality of target objects and that are generated based on fourth image data generated by the imaging system imaging the fourth target object group at the fourth position and the fourth pose.

59. The control apparatus according to claim 58, wherein
the third control signal is a signal for controlling the robot so that the process apparatus approaches the one target object of the fourth target object group to perform the process on the target object.

60. The control apparatus according to claim 58 or 59, wherein
the computing apparatus:
generates the fifth position data and the fifth pose data of the one target object of the fourth target object group based on the fourth image data and partial model data indicating a part of a model of the target object; and
generates the third control signal based on the generated fifth position data and fifth pose data.

61. The control apparatus according to claim 60, wherein
a part of the model indicated by the partial model data is a part corresponding to an area at which a density of points, which represent a three-dimensional position of the one target object of the fourth target object group that is indicated by three-dimensional position data generated from the fourth image data, is equal to or larger than a threshold value.

62. The control apparatus according to claim 60 or 61, wherein
a part of the model indicated by the partial model data is a part acquired by removing, from the model, an area at which a density of points, which represent a three-dimensional position of the one target object of the fourth target object group that is indicated by three-dimensional position data generated from the fourth image data, is smaller than a threshold value.

63. The control apparatus according to any one of claims 58 to 62, wherein
the computing apparatus generates the first control signal based on the second image data and model data indicating the model of the target object.

64. The control apparatus according to any one of claims 58 to 63, wherein
the computing apparatus determines that there is no target object on which the process apparatus can perform the process, as a result of determining based on the first image data and model data indicating the model of the target object whether or not the process apparatus can perform the process on the at least one target object of the first target object group.

65. The control apparatus according to any one of claims 58 to 64, wherein
the computing apparatus:
determines that there is no target object on which the process apparatus can perform the process in the third target object group, as a result of determining based on the third image data and first partial model data indicating a part of a model of the target object whether or not the process apparatus can perform the process on at least one target object of the third target object group;
generates the fifth position data and the fifth pose data of the one target object of the fourth target object group based on the fourth image data and second partial model data indicating a part of the model; and
generates the third control signal based on the generated fifth position data and fifth pose data.

66. The control apparatus according to claim 62, wherein
the first partial model data and the second partial model data are the same data indicating the same part of the model.

67. The control apparatus according to claim 65, wherein
the second partial model data is data indicating a part of the model that partially overlaps with or is different from a part of the model indicated by the first partial model data.

68. The control apparatus according to any one of claims 65 to 67, wherein
the third target object group includes a second target object as the target object,
the one target object of the fourth target object group is a fourth target object,
the computing apparatus:
determines that there is no second target object on which the process apparatus can perform the process in the third target object group, as a result of determining based on the third image data and the first partial model data whether or not the process apparatus can perform the process on the second target object that is one target object of the third target object group; and
generates the third control signal based on the fifth position data and the fifth pose data of the fourth target object generated based on the second partial model data and the fourth image data.

69. The control apparatus according to claim 68, wherein
the fourth target object is the second target object.

70. The control apparatus according to claim 68, wherein
the fourth target object is the target object that is different from the second target object.

71. The control apparatus according to any one of claims 68 to 70, wherein
the computing apparatus:
generates the first control signal based on third position data and third pose data, which indicate a position and a pose of a first target object that is one target object of the second target object group and which are generated based on the second image data; and
generates the second control signal for controlling the robot so as to change a position and a pose of the imaging system relative to a third target object that is one target object of the third target object group.

72. The control apparatus according to claim 71, wherein
the fourth target object is the target object that is the same as the first target object, the second target object, and the third target object.

73. The control apparatus according to claim 71, wherein
the fourth target object is the target object that is different from at least one of the target object of the first target object, the second target object, and the third target object.

74. The control apparatus according to any one of claims 65 to 73, wherein
the second partial model data is data indicating a part of the model that partially overlaps with or is different from a part of the model indicated by the first partial model data,
the first partial model data is generated based on first simulation image data generated by assuming that the imaging system images the target object when the target object and the imaging system are in a first positional relationship, and
the second partial model data is generated based on second simulation image data generated by assuming that the imaging system images the target object when the target object and the imaging system are in a second positional relationship that is different from the first positional relationship.

75. The control apparatus according to claim 74, wherein
the computing apparatus:
generates the first partial model data based on the first simulation image data; and
generates the second partial model data based on the second simulation image data.

76. The control apparatus according to claim 74 or 75, wherein
each of the first positional relationship and the second positional relationship is a positional relationship based on relative position pose information, which indicates a relative position and pose between the target object and the imaging system and which is set in advance.

77. The control apparatus according to claim 76, wherein
the first positional relationship is a positional relationship based on the relative position pose information, and
the second positional relationship is a positional relationship based on the relative position pose information and change information that indicates at least one of a direction and an amount for changing at least one of a relative position and pose between the target object and the imaging system and that is set in advance.

78. The control apparatus according to any one of claims 65 to 73, wherein
the second partial model data is data indicating a part of the model that partially overlaps with or is different from a part of the model indicated by the first partial model data, and
the computing apparatus:
generates the first partial model data based on at least one of first removal information related to an area removed from the model and first inclusion information related to an area included in the model, which is input in advance by a user; and
generates the second partial model data based on at least one of second removal information and second inclusion information, which is input in advance by a user.

79. The control apparatus according to any one of claims 54 to 57, wherein
the imaging system includes a first imaging apparatus and a second imaging apparatus that is different from the first imaging apparatus,
the first imaging apparatus generates the first image data and the third image data,
the second imaging apparatus generates the second image data,
the first imaging apparatus is one of a stereo camera, which includes two monocular cameras, and a monocular camera, which is different from the two monocular cameras, and
the second imaging apparatus is the other one of the stereo camera and the monocular camera that is different from the two monocular cameras.

80. The control apparatus according to any one of claims 58 to 78, wherein
the imaging system includes a first imaging apparatus and a second imaging apparatus that is different from the first imaging apparatus,
the first imaging apparatus generates the first image data, the third image data, and the fourth image data,
the second imaging apparatus generates the second image data,
the first imaging apparatus is one of a stereo camera, which includes two monocular cameras, and a monocular camera, which is different from the two monocular cameras, and
the second imaging apparatus is the other one of the stereo camera and the monocular camera that is different from the two monocular cameras.

81. The control apparatus according to claim 79 or 80, wherein
the first imaging apparatus is the stereo camera, and
the second imaging apparatus is the monocular camera that is different from the two monocular cameras.

82. The control apparatus according to any one of claims 54 to 56, wherein
the computing apparatus generates, as the control signal, a fourth control signal for controlling the robot so that the imaging system changes from the fourth position and the fourth pose to a fifth position and a fifth pose, which indicate a position and a pose for re-imaging and which are set in advance, in a case where it is determined, based on fourth image data generated by the imaging system imaging a fourth target object group including a plurality of target objects when the imaging system is at the fourth position and the fourth pose, that there is no target object on which the process apparatus can perform the process in the fourth target object group.

83. The control apparatus according to claim 82, wherein
the computing apparatus generates the fourth control signal without using new image data as an imaged result by the imaging system.

84. The control apparatus according to claim 83, wherein
the fourth control signal is a signal for controlling the robot so that at least half or more of the target objects of a fifth target object group included in an imaging field of view of the imaging system at the fifth position and the fifth pose become target objects different from the target objects of the fourth target object group included in the imaging field of view at the fourth position and the fourth pose.

85. The control apparatus according to claim 84, wherein
the fourth control signal is a signal for controlling the robot so that all of the target objects of the fifth target object group included in the imaging field of view of the imaging system at the fifth position and the fifth pose become target objects different from the target objects of the fourth target object group included in the imaging field of view at the fourth position and the fourth pose.

86. The control apparatus according to any one of claims 82 to 85, wherein
the computing apparatus sets the fifth position and the fifth pose based on re-imaging position pose information that indicates a position and a pose for re-imaging with the imaging system and that is input by the user in advance.

87. The control apparatus according to any one of claims 82 to 85, wherein
the computing apparatus sets the fifth position and the fifth pose based on an imaging field of view of the imaging system.

88. The control apparatus according to claim 87, wherein
at least the plurality of target objects of the fourth target object group and the plurality of target objects of the fifth target object are in a container, and
the computing apparatus sets the fifth position and the fifth pose based on the imaging field of view and a size of the container.

89. The control apparatus according to any one of claims 82 to 88, wherein
the computing apparatus generates a fifth control signal as the control signal, based on sixth position data and sixth pose data, which indicate a position and a pose of one target object of a fifth target object group including a plurality of target objects and which are generated based on fifth image data generated by the imaging system imaging the fifth target object group at the fifth position and the fifth pose.

90. The control apparatus according to claim 89, wherein
the fifth control signal is a signal for controlling the robot so that the process apparatus approaches the one target object of the fifth target object group to perform the process on the target object.

91. The control apparatus according to claim 89 or 90, wherein
the imaging system includes a first imaging apparatus and a second imaging apparatus that is different from the first imaging apparatus,
the first imaging apparatus generates the first image data, the third image data, the fourth image data, and the firth image data,
the second imaging apparatus generates the second image data,
the first imaging apparatus is one of a stereo camera, which includes two monocular cameras, and a monocular camera, which is different from the two monocular cameras, and
the second imaging apparatus is the other one of the stereo camera and the monocular camera that is different from the two monocular cameras.

92. The control apparatus according to any one of claims 44 to 91, wherein
the imaging system includes a stereo camera, which includes two monocular cameras, or a monocular camera.

93. A control system comprising:
the control apparatus according to any one of claims 44 to 92; and
the imaging system.

94. A robot system comprising:
the control apparatus according to any one of claims 44 to 92;
the imaging system; and
the robot.

95. A control method that generates a control signal for controlling a robot on which a process apparatus that performs a process on a target object and an imaging system are mounted and which moves the process apparatus and the imaging system, wherein
the control method comprises: generating, as the control signal, a first control signal for controlling the robot so that the imaging system changes to a second position and a second pose, which are different from a first position and a first pose, based on second image data generated by the imaging system imaging a second target object group including a plurality of target objects, in a case where it is determined, based on first image data generated by the imaging system imaging a first target object group including a plurality of target objects when the imaging system is at the first position and the first pose, that there is no target object on which the process apparatus can perform the process in the first target object group.

96. A computer program that allows a computer to execute the control method according to claim 95.

97. A control apparatus that generates a control signal for controlling a robot on which a process apparatus that performs a process on a target object and an imaging system are mounted and which moves the process apparatus and the imaging system, wherein
the control apparatus comprises:
a computing apparatus that generates the control signal based on first three-dimensional position data, which is generated from an imaged result of a first object group including a plurality of target objects by an imaging system and which indicates a three-dimensional position of each of a plurality of points of the first object group, and second three-dimensional position data, which has less three-dimensional position data than the first three-dimensional position data and which indicates a three-dimensional position of each of a plurality of points of the first object group; and
a communication apparatus that outputs the control signal generated by the computing apparatus,
the computing apparatus:
generates a plurality of first position data and first pose data, which indicate positions and poses of respective target objects of a second object group including a plurality of target objects of the first object group, respectively, based on the second three-dimensional position data;
generates second position data and second pose data, which indicate the position and the pose of one target object of the second object group, based on the plurality of generated first position data and first pose data and the first three-dimensional position data; and
generates the control signal based on the generated second position data and second pose data.

98. The control apparatus according to claim 97, wherein
the computing apparatus generates the first position data and the first pose data of each target object of the second object group based on partial three-dimensional model data, which indicates a part of a three-dimensional model of the target object, and the second three-dimensional position data.

99. The control apparatus according to claim 98, wherein
the computing apparatus generates the first position data and the first pose data of each target object of the second object group based on a plurality of partial three-dimensional model data, which indicate different parts of the three-dimensional model, respectively, and the second three-dimensional position data.

100. The control apparatus according to claim 99, wherein
a priority, which is used to generate the first position data and the first pose data, is assigned to each of the plurality of partial three-dimensional model data.

101. The control apparatus according to claim 99 or 100, wherein
the plurality of partial three-dimensional model data include first partial three-dimensional model data and second partial three-dimensional model data, and
the computing apparatus performs a second position pose computing processing of at least one target object of the first object group based on the second partial three-dimensional model data and the second three-dimensional position data after a first position pose computing processing of a plurality of target objects of the first target object group based on the first partial three-dimensional model data and the second three-dimensional position data.

102. The control apparatus according to claim 100, wherein
the plurality of partial three-dimensional model data include first partial three-dimensional model data to which a first priority is assigned as the priority and second partial three-dimensional model data to which a second priority lower than the first priority is assigned, and
the computing apparatus performs a second position pose computing processing of at least one target object of the first object group based on the second partial three-dimensional model data, to which the second priority lower than the first priority is assigned, and the second three-dimensional position data, in a case where the number of the target objects, for which the first position pose computing processing based on the first partial three-dimensional model data to which the first priority is assigned and the second three-dimensional position data is good, is smaller than a threshold value.

103. The control apparatus according to claim 102, wherein
the target object for which the first position pose computing processing is good includes the target object whose similarity, which is calculated based on the first partial three-dimensional model data and the second three-dimensional position data, between a part of the three-dimensional model indicated by the first partial three-dimensional model data and a plurality of points indicating a three-dimensional position of each target object of the first object group indicated by the second three-dimensional position data is equal to or larger than a threshold value.

104. The control apparatus according to any one of claims 101 to 103, wherein
the first position data and the first pose data of each target object of the second object group include: the first position data and the first pose data of a plurality of target objects of the second object group, which is generated by the first position pose computing processing; and the first position data and the first pose data of at least one target object of the second object group, which is generated by the second position pose computing processing.

105. The control apparatus according to any one of claims 101 to 104, wherein
the computing apparatus generates the second position data and the second pose data based on the first position data and the first pose data of a plurality of target objects of the second object group, which is generated by the first position pose computing processing, the first position data and the first pose data of at least one target object of the second object group, which is generated by the second position pose computing processing, and the first three-dimensional position data.

106. The control apparatus according to any one of claims 101 to 105, wherein
the computing apparatus generates the second position data and the second pose data based on the first position data and the first pose data of a plurality of target objects of the second object group, which is generated by the first position pose computing processing, the first position data and the first pose data of at least one target object of the second object group, which is generated by the second position pose computing processing, the first three-dimensional position data, the first partial three-dimensional model data, and the second partial three-dimensional model data.

107. The control apparatus according to any one of claims 101 to 106, wherein
the computing apparatus selects the one target object from the second object group based on the first position data and the first pose data of a plurality of target objects of the second object group, which is generated by the first position pose computing processing, the first position data and the first pose data of at least one target object of the second object group, which is generated by the second position pose computing processing, and the first three-dimensional position data.

108. The control apparatus according to any one of claims 101 to 107, wherein
the computing apparatus:
calculates a first similarity between a part of the three-dimensional model indicated by the first partial three-dimensional model data and a plurality of points indicating a three-dimensional position of each target object of the first object group indicated by the second three-dimensional position data, based on the first partial three-dimensional model data and the second three-dimensional position data; and
calculates a second similarity between a part of the three-dimensional model indicated by the second partial three-dimensional model data and a plurality of points indicating a three-dimensional position of each target object of the first object group indicated by the second three-dimensional position data, based on the second partial three-dimensional model data and the second three-dimensional position data,
the first similarity corresponding to the target object whose first position data and first pose data are calculated by the first position pose computing processing is equal to or larger than a threshold value, and
the second similarity corresponding to the target object whose first position data and first pose data are calculated by the second position pose computing processing is equal to or larger than a threshold value.

109. The control apparatus according to any one of claims 101 to 108, wherein
the computing apparatus:
selects respective parts of the first three-dimensional position data as a plurality of first interested data, each of which includes data corresponding to at least a part of a plurality of points of each of a plurality of target objects of the second object group, based on the plurality of first position data and first pose data generated by the first position pose computing processing;
selects at least a part of the first three-dimensional position data as at least one second interested data, which includes data corresponding to at least a part of a plurality of points of at least one target object of the second object group, based on at least one first position data and first pose data generated by the second position pose computing processing; and
selects the one target object from the second object group based on the first partial three-dimensional model data, the second partial three-dimensional model data, the plurality of first interested data, and the at least one second interested data.

110. The control apparatus according to claim 109, wherein
the computing apparatus selects the one target object from the second object group based on a similarity between a plurality of points, which indicate a three-dimensional position of each of the plurality of target objects of the second object group indicated by each of the plurality of first interested data, and a part of the three-dimensional model indicated by the first partial three-dimensional model data, and a similarity between a plurality of points, which indicate a three-dimensional position of at least one target object of the second object group indicated by the at least one second interested data, and a part of the three-dimensional model indicated by the second partial three-dimensional model data.

111. The control apparatus according to claim 109 or 110, wherein
the computing apparatus generates the second position data and the second pose data based on one first interested data, which corresponds to the selected one target object, of the plurality of first interested data and the first partial three-dimensional model data.

112. The control apparatus according to claim 109 or 110, wherein
the computing apparatus generates the second position data and the second pose data based on one second interested data, which corresponds to the selected one target object, of the at least one interested data and the second partial three-dimensional model data.

113. The control apparatus according to any one of claims 97 to 104, wherein
the computing apparatus generates the second position data and the second pose data based on partial three-dimensional model data indicating a part of the three-dimensional model of the target object, the plurality of generated first position data and first pose data, and the first three-dimensional position data.

114. The control apparatus according to claim 113, wherein
the computing apparatus generates the second position data and the second pose data based on a plurality of partial three-dimensional model data, which indicate different parts of the three-dimensional model, respectively, the plurality of generated first position data and first pose data, and the first three-dimensional position data.

115. The control apparatus according to claim 113 or 114, wherein
the computing apparatus:
selects the one target object from the second object group based on a plurality of partial three-dimensional model data, which indicate different parts of the three-dimensional model, respectively, the plurality of generated first position data and first pose data, and the first three-dimensional position data; and
generates the second position data and the second pose data based on one first position data and first pose data, which corresponds to the selected one target object, of the plurality of first position data and first pose data, and one partial three-dimensional model data of the plurality of partial three-dimensional model data.

116. The control apparatus according to claim 97, wherein
the computing apparatus:
selects the one target object from the second object group based on the plurality of generated first position data and first pose data and the first three-dimensional position data; and
generates the second position data and the second pose data based on the first position data and the first pose data of the selected one target object and the first three-dimensional position data.

117. The control apparatus according to claim 116, wherein
the computing apparatus:
selects respective parts of the first three-dimensional position data as a plurality of interested data, each of which includes data corresponding to at least a part of a plurality of points of each target object of the second object group imaged by the imaging system, based on the plurality of generated first position data and first pose data; and
selects the one target object from the second object group based on model data indicating a three-dimensional model of the target object and the plurality of selected interested data.

118. The control apparatus according to claim 117, wherein
the computing apparatus selects the one target object from the second object group based on a similarity between a plurality of points, which indicate a three-dimensional position of each target object of the second object group indicated by each of the plurality of interested data, and the three-dimensional model.

119. The control apparatus according to claim 117 or 118, wherein
the computing apparatus generates the second position data and the second pose data based on the model data and the interested data corresponding to the one target object.

120. The control apparatus according to any one of claims 97 and 116 to 119, wherein
the computing apparatus:
selects respective parts of the first three-dimensional position data as a plurality of interested data, each of which includes data corresponding to at least a part of a plurality of points of each target object of the second object group imaged by the imaging system, based on the plurality of generated first position data and first pose data; and
generates the second position data and the second pose data, which indicate the position and the pose of the one target object of the second object group, based on the plurality of interested data.

121. The control apparatus according to any one of claims 97 to 120, wherein
the imaging system includes a stereo camera, and
the computing apparatus generates the first three-dimensional position data and the second three-dimensional position data based on stereo image data generated as an imaged result by the stereo camera.

122. The control apparatus according to claim 121, wherein
the computing apparatus:
generates depth image data in which distance information is associated with each pixel, based on the stereo image data; and
generates the first three-dimensional position data and the second three-dimensional position data based on the depth image data.

123. The control apparatus according to claim 121, wherein
the computing apparatus:
generates first depth image data in which distance information is associated with each pixel, based on the stereo image data;
generates second depth image data by reducing some pixel data of the generated first depth image data;
generates the first three-dimensional position data based on the first depth image data; and
generates the second three-dimensional position data based on the second depth image data.

124. The control apparatus according to claim 121, wherein
the computing apparatus generates the second three-dimensional position data by reducing some data indicating a three-dimensional position of the first three-dimensional position data.

125. The control apparatus according to claim 121, wherein
first stereo image data and second stereo image data whose pixel data is less than the first stereo image data are generated as the imaged results by the stereo camera, and
the computing apparatus:
generates the first three-dimensional position data based on the first stereo image data; and
generates the second three-dimensional position data based on the second stereo image data.

126. A control system comprising:
the control apparatus according to any one of claims 97 to 125; and
the imaging system.

127. A robot system comprising:
the control apparatus according to any one of claims 97 to 125; and
the imaging system; and
the robot.

128. A control method that generates a control signal for controlling a robot on which a process apparatus that performs a process on a target object and an imaging system are mounted and which moves the process apparatus and the imaging system, wherein
the control method comprises generating the control signal based on first three-dimensional position data, which is generated from an imaged result of a first object group including a plurality of target objects by an imaging system and which indicates a three-dimensional position of each of a plurality of points of the first object group, and second three-dimensional position data, which has less three-dimensional position data than the first three-dimensional position data and which indicates a three-dimensional position of each of a plurality of points of the first object group,
the generating the control signal includes:
generating a plurality of first position data and first pose data, which indicate positions and poses of respective target objects of a second object group including a plurality of target objects of the first object group, respectively, based on the second three-dimensional position data;
generating second position data and second pose data, which indicate the position and the pose of one target object of the second object group, based on the plurality of generated first position data and first pose data and the first three-dimensional position data; and
generating the control signal based on the generated second position data and second pose data.

129. A computer program that allows a computer to execute the control method according to claim 128.

130. A control apparatus that generates a control signal for controlling a robot on which a process apparatus that performs a process on a target object contained in a container and an imaging system are mounted and which moves the process apparatus and the imaging system,
wherein
the control apparatus comprises:
a computing apparatus that generates the control signal; and
a communication apparatus that outputs the control signal generated by the computing apparatus,
the computing apparatus:
generates position pose data indicating at least one of a position and a pose of the container, based on first image data that is generated by the imaging system imaging at least a part of the container;
generates three-dimensional position data indicating a three-dimensional position of each of a plurality of points of an object group that includes a target object group including at least a part of a plurality of target objects contained in the container, based on second image data that is generated by the imaging system imaging the object group;
selects a part of the three-dimensional position data as selection data, based on the position pose data; and
generates the control signal for controlling the robot so that the process apparatus approaches one target object of the target object group to perform the process on the one target object by the process apparatus, based on the selection data.

131. The control apparatus according to claim 130, wherein
the object group includes at least the target object group and at least a part of the container.

132. The control apparatus according to claim 130 or 131, wherein
the selected selection data does not include data indicating a three-dimensional position of each of a plurality of points of at least a part of the container.

133. The control apparatus according to any one of claims 130 to 132, wherein
the selected selection data includes data indicating a three-dimensional position of each of a plurality of points of at least a part of the target object group.

134. The control apparatus according to any one of claims 130 to 133, wherein
the computing apparatus:
sets a designation area, which includes at least a part of a space of the container in which a plurality of target objects are contained, based on the position pose data; and
selects a part of the three-dimensional position data as the selection data corresponding to the designation area.

135. The control apparatus according to claim 134, wherein
the object group includes at least the target object group and at least a part of the container, and
the set designation area does not include a plurality of points, which is indicated by the three-dimensional position data, of at least a part of the container.

136. The control apparatus according to claim 134 or 135, wherein
the set designation area includes a plurality of points, which is indicated by the three-dimensional position data, of at least a part of the target object group contained in the container.

137. The control apparatus according to any one of claims 134 to 136, wherein
the container is a first container,
the designation area is a first designation area,
the computing apparatus:
changes a second designation area, which includes at least a part of a space of a second container which is different from the first container and in which a plurality of target objects are contained, to the first designation area, based on the position pose data; and
selects a part of the three-dimensional position data as the selection data corresponding to the first designation area.

138. The control apparatus according to claim 137, wherein
the computing apparatus changes the second designation area to the first designation area by changing at least one of a position and a pose of the second designation area, based on the position pose data.

139. The control apparatus according to claim 137 or 138, wherein
the object group includes at least the target object group and at least a part of the first container, and
the computing apparatus changes the second designation area to the first designation area based on the position pose data so that the first designation area does not include a plurality of points, which is indicated by the three-dimensional position data, of at least a part of the first container.

140. The control apparatus according to any one of claims 137 to 139, wherein
the computing apparatus changes the second designation area to the first designation area based on the position pose data so that the first designation area includes a plurality of points, which is indicated by the three-dimensional position data, of at least a part of the target object group contained in the first container.

141. The control apparatus according to any one of claims 137 to 140, wherein
at least one of a position and a pose of the first container is different from at least one of a position and a pose of the second container.

142. The control apparatus according to any one of claims 134 to 135, wherein
the container is a first container,
the designation area is a first designation area,
the computing apparatus:
sets at least one of a position and a pose of a second designation area, which includes at least a part of a space of a second container different from the first container in which a plurality of target objects are contained, as at least one of a position and a pose of the first designation area, based on the position pose data; and
selects a part of the three-dimensional position data as the selection data corresponding to the first designation area.

143. The control apparatus according to claim 142, wherein
the position and the pose of the first container are substantially the same as the position and the pose of the second container.

144. The control apparatus according to any one of claims 137 to 143, wherein
the second designation area is an initial designation area set in advance.

145. The control apparatus according to claim 144, wherein
the second designation area is designated by a user in advance.

146. The control apparatus according to claim 144 or 145, wherein
the second container is a container that is used to set the second designation area.

147. The control apparatus according to any one of claims 144 to 146, wherein
the computing apparatus changes the second designation area to the first designation area by changing the second predetermined area from an initial position pose, which indicates at least one of an initial position and an initial pose of the second designation area, to a first position pose, which indicates at least one of a first position and a first pose, based on the position pose data.

148. The control apparatus according to any one of claims 137 to 143, wherein
the process apparatus performs the process on a plurality of target objects contained in the second container before the process apparatus performs the process on the target object contained in the first container.

149. The control apparatus according to claim 148, wherein
the first container in which a plurality of target objects are contained is replaced with the second container after the process apparatus performs the process on a plurality of target objects contained in the second container.

150. The control apparatus according to claim 148 or 149, wherein
the position pose data is first position pose data, and
the second designation area is set based on second position pose data, which indicates at least one of a position and a pose of the second container and which is generated based on third image data generated by the imaging system imaging at least a part of the second container, before the process apparatus performs the process on the target object contained in the first container.

151. The control apparatus according to claim 150, wherein
the target object group is a first target object group,
the object group is a first object group,
the three-dimensional position data is first three-dimensional position data,
the selection data is first selection data,
the control signal is a first control signal,
before the process apparatus performs the process on the target object contained in the first container, the computing apparatus:
selects, as the second selection data corresponding to the second designation area, a part of second three-dimensional position data, which indicates a three-dimensional position of each of a plurality of points of a second object group that includes a second target object group including at least a part of a plurality of target objects contained in the second container and which is generated based on fourth image data generated by the imaging system imaging the second object group; and
generates a second control signal for controlling the robot so that the process apparatus approaches one target object of the second target object group to perform the process on the one target object, based on the second selection data.

152. The control apparatus according to claim 150 or 151, wherein
the computing apparatus changes the second designation area to the first designation area by changing the second predetermined area from a second position pose, which indicates at least one of a second position and a second pose of the second designation area, to a third position pose, which indicates at least one of a third position and a third pose, based on the first position pose data.

153. The control apparatus according to any one of claims 134 to 136, 142, and 143,
wherein
the container is a first container,
the designation area is a first designation area,
the computing apparatus:
sets a second designation area, which includes at least a part of a space of a second container different from the first container in which a plurality of target objects are contained, as the first designation area, based on the position pose data; and
selects a part of the three-dimensional position data as the selection data corresponding to the first designation area.

154. The control apparatus according to any one of claims 137 to 153, wherein
a size of the second container is substantially the same as a size of the first container.

155. The control apparatus according to any one of claims 130 to 136, wherein
the computing apparatus selects a part of the three-dimensional position data as the selection data, based on size information related to a size of the container.

156. The control apparatus according to claim 155, wherein
the computing apparatus:
sets a designation area, which includes at least a part of a space of the container in which a plurality of target objects are contained, based on the size information; and
selects a part of the three-dimensional position data as the selection data corresponding to the designation area.

157. The control apparatus according to any one of claims 137 to 152, wherein
the computing apparatus:
changes a second designation area, which includes at least a part of a space of a second container different from the first container in which a plurality of target objects are contained, to the first designation area, based on the position pose data and size difference information related to a difference between a size of the first container and a size of the second container; and
selects a part of the three-dimensional position data as the selection data corresponding to the first designation area.

158. The control apparatus according to claim 157, wherein
the computing apparatus changes the second designation area to the first designation area by changing a size of the second designation area and at least one of a position and a pose of the second designation area, based on the size difference information and the position pose data.

159. The control apparatus according to claim 157 or 158, wherein
the object group includes at least the target object group and at least a part of the first container, and
the computing apparatus changes the second designation area to the first designation area based on the size difference information and the position pose data so that the first designation area does not include a plurality of points, which indicated by the three-dimensional position data, of at least a part of the first container.

160. The control apparatus according to any one of claims 157 to 159, wherein
the computing apparatus changes the second designation area to the first designation area based on the size difference information and the position pose data so that the first designation area includes a plurality of points, which indicated by the three-dimensional position data, of at least a part of the target object group contained in the first container.

161. The control apparatus according to any one of claims 157 to 160, wherein
the computing apparatus changes the second designation area to the first designation area by changing the second designation area from an initial size to a first size based on the size difference information, and changing the second designation area from an initial position pose, which indicates at least one of an initial position and an initial pose of the second designation area, to a first position pose, which indicates at least one of a first position and a first pose, based on the position pose data.

162. The control apparatus according to any one of claims 157 to 161, wherein
the computing apparatus changes the second designation area to the first designation area by changing the second designation area from a second size to a third size based on the size difference information, and changing the second designation area from a second position pose, which indicates at least one of a second position and a second pose of the second designation area, to a third position pose, which indicates at least one of a third position and a third pose, based on the position pose data.

163. The control apparatus according to any one of claims 157 to 162, wherein
the size of the second container is different from the size of the first container.

164. The control apparatus according to any one of claims 137 to 154 and 157 to 163,
wherein
the position pose data is first position pose data,
after the process apparatus performs the process on a plurality of target objects contained in the first container, the computing apparatus:
generates third position pose data indicating at least one of a position and a pose of a third container which is different from the first container and the second container and in which a plurality of target objects are contained, based on fifth image data that is generated by the imaging system imaging at least a part of the third container; and
changes the second designation area to a third designation area, which includes at least a part of a space of the third container in which a plurality of target objects are contained, based on the third position pose data.

165. The control apparatus according to any one of claims 137 to 154 and 157 to 163,
wherein
the position pose data is first position pose data,
after the process apparatus performs the process on a plurality of target objects contained in the first container, the computing apparatus:
generates third position pose data indicating at least one of a position and a pose of a third container which is different from the first container and the second container and in which a plurality of target objects are contained, based on fifth image data that is generated by the imaging system imaging at least a part of the third container; and
changes the first designation area to a third designation area, which includes at least a part of a space of the third container in which a plurality of target objects are contained, based on the third position pose data.

166. The control apparatus according to claim 164 or 165, wherein
the target object group is a first target object group,
the object group is a first object group,
the three-dimensional position data is first three-dimensional position data,
the selection data is first selection data,
the computing apparatus:
selects, as third selection data corresponding to the third designation area, a part of third three-dimensional position data, which indicates a three-dimensional position of each of a plurality of points of a third object group that includes a third target object group including at least a part of a plurality of target objects contained in the third container and which is generated based on sixth image data generated by the imaging system imaging the third object group; and
generates a third control signal for controlling the robot so that the process apparatus approaches one target object of the third target object group to perform the process on the one target object, based on the third selection data.

167. The control apparatus according to claim 166, wherein
the third object group includes at least the third target object group and at least a part of the third container, and
the third designation area does not include a plurality of points, which is indicated by the third three-dimensional position data, of at least a part of the third container.

168. The control apparatus according to claim 166 or 167, wherein
the third designation area includes a plurality of points, which is indicated by the third three-dimensional position data, of at least a part of the third target object group contained in the third container.

169. The control apparatus according to any one of claims 134 to 154 and 157 to 168,
wherein
the designation area includes a plurality of partial areas, and
at least a part of one partial area of the plurality of partial areas is different from another partial area of the plurality of partial areas.

170. The control apparatus according to any one of claims 130 to 169, wherein
the computing apparatus selects a part of the three-dimensional position data as the selection data, based on robot position pose data, which indicates at least one of a position and a pose of a base point of the process apparatus, and the position pose data.

171. The control apparatus according to any one of claims 134 to 154 and 157 to 169,
wherein
the designation area is a first designation area,
the computing apparatus:
sets a fourth designation area, which includes at least a part of the process apparatus in a space in which the robot is positioned, based on robot position pose data indicating at least one of a position and a pose of a base point of the process apparatus; and
selects a part of the three-dimensional position data as the selection data that does not correspond to the fourth designation area and that corresponds to the first designation area.

172. The control apparatus according to claim 170 or 171, wherein
the selection data does not include data indicating a three-dimensional position of each of a plurality of points of at least a part of the process apparatus and data indicating a three-dimensional position of each of a plurality of points of at least a part of the container.

173. The control apparatus according to any one of claims 170 to 172, wherein
the selection data includes data indicating a three-dimensional position of each of a plurality of points of at least a part of the target object group.

174. The control apparatus according to any one of claims 170 to 173, wherein
the base point of the process apparatus is a tool center point of the process apparatus.

175. The control apparatus according to any one of claims 130 to 174, wherein
the process apparatus is a holding apparatus that is configured to hold the target object.

176. A control system comprising:
the control apparatus according to any one of claims 130 to 175; and
the imaging system.

177. A robot system comprising:
the control apparatus according to any one of claims 130 to 175;
the imaging system; and
the robot.

178. A control method that generates a control signal for controlling a robot on which a process apparatus that performs a process on a target object and an imaging system are mounted and which moves the process apparatus and the imaging system, wherein
the control method generates the control signal for controlling the robot on which the process apparatus that performs the process on the target object contained in a container and the imaging system are mounted and which moves the process apparatus and the imaging system,
the control method comprises:
generating position pose data indicating at least one of a position and a pose of the container, based on first image data that is generated by the imaging system imaging at least a part of the container;
generating three-dimensional position data indicating a three-dimensional position of each of a plurality of points of an object group that includes a target object group including at least a part of a plurality of target objects contained in the container, based on second image data that is generated by the imaging system imaging the object group;
selecting a part of the three-dimensional position data as selection data, based on the position pose data; and
generating the control signal for controlling the robot so that the process apparatus approaches one target object of the target object group to perform the process on the one target object by the process apparatus, based on the selection data.

179. A computer program that allows a computer to execute the control method according to claim 178.

180. A control apparatus that generates a control signal for controlling a robot on which a process apparatus that performs a process on a target object and an imaging system are mounted and which moves the process apparatus and the imaging system, wherein
the control apparatus comprises:
a computing apparatus that generates the control signal; and
a communication apparatus that outputs the control signal generated by the computing apparatus,
in a case where it is determined, based on an imaged result of a target object group including a plurality of target objects by the imaging system, that the process apparatus cannot perform the process on at least one target object of the target object group, the computing apparatus generates the control signal for controlling the robot so as to change at least one of a position and a pose of the imaging system relative to one target object of the target object group.
